# EUROPEAN PATENT SPECIFICATION

(11) **EP 0 153 145 B1**
(45) Date of publication and mention of the grant of the patent: **08.06.1988**
(21) Application number: 85300954.6
(22) Date of filing: 13.02.1985
(51) Int. Cl.: G03G 5/06, C09B 35/00

(54) **Photoreceptor**
Photorezeptor
Photorécepteur

(30) Priority: 13.02.1984 JP 24658/84; 19.03.1984 JP 53237/84; 27.03.1984 JP 60418/84; 10.04.1984 JP 72376/84; 10.04.1984 JP 72377/84; 11.04.1984 JP 73820/84
(43) Date of publication of application: 28.08.1985
(73) Proprietor: KONICA CORPORATION, Tokyo 163 (JP)
(72) Inventor: Hirose, Naohiro, Hachioji-shi Tokyo (JP); Sasaki, Osamu, Hachioji-shi Tokyo (JP); Takizawa, Yoshio, Hachioji-shi Tokyo (JP)
(74) Representative: Ellis-Jones, Patrick George Armine

(56) References cited:
- DE-A- 3 049 184
- PATENTS ABSTRACTS OF JAPAN, vol. 8, no. 42 (P-256) [1479], 23rd February 1984; & JP - A - 58 194 035 (KONISHIROKU SHASHIN KOGYO K.K.) 11-11-1983

## Description

This invention relates to a photoreceptor, particularly to a photoreceptor having a photosensitive layer containing an azo compound.

In the prior art, as electrophotographic receptors, there have widely been employed inorganic photoreceptors having photosensitive layers composed mainly of inorganic photoconductive compounds such as selenium, zinc oxide, cadmium sulfide, silicon. However, these do not necessarily have satisfactory sensitivity, heat stability, humidity resistance or durability properties. For example, the characteristics of selenium are deteriorated as a photoreceptor when crystallized and it can only be manufactured with difficulty; heat or fingerprints may cause crystallization which results in its deterioration of performance as a photoreceptor. Problems are also involved with cadmium sulfide with respect to humidity resistance or durability, while zinc oxide has durability problems.

In order to overcome the drawbacks possessed by inorganic photoreceptors, organic photoreceptors having photosensitive layers composed mainly of various organic photoconductive compounds have been investigated. For example, Japanese Patent Publication No. 10496/1975 discloses an organic photoreceptor having a photosensitive layer containing poly-N-vinylcarbazole and 2,4,7-trinitro-8-fluorenone. However, this photoreceptor does not necessarily have satisfactory sensitivity and durability properties. To improve such drawbacks, it has been attempted to develop an organic photoreceptor with higher performance by having the carrier generating function and the carrier transporting function assigned to different materials. Many studies have been made of such a photoreceptor, of the so-called function separation type, since the respective materials can be selected from a broad range of materials and photoreceptors having any desired performance can be prepared with relative ease.

A large number of compounds have been proposed for use in such a photoreceptor. As an example of an inorganic compound as the carrier generating material, Japanese Patent Publication No. 16198/1968 discloses an amorphous selenium, which can be employed in combination with an organic photoconductive compound. However, the carrier generating layer comprising the amorphous selenium still has the drawback of being crystallized by heat and has deteriorated characteristics as a photoreceptor.

Proposals have also been made to use organic dyes as the carrier generating material. For example, photoreceptors containing bisazo compounds or trisazo compounds in the photosensitive layer are disclosed in Japanese Unexamined Patent Publications Nos. 22834/1979, 46558/1979, 46237/1981 and 196241/1982. However, these bisazo compounds or trisazo compounds do not necessarily have satisfactory sensitivity, residual potential or repeated use stability characteristics, and the range of carrier transporting materials which can be selected for use with them is limited, thus failing to satisfy sufficiently the wide range of requirements demanded by an electrophotographic process.

Further, recourse has recently been made to gas lasers such as an Ar laser or He-Ne laser or semiconductor lasers as the light source for the photoreceptor. These lasers are characterized by a capability of ON/OFF time series, and are expected to be promising as the light source for a copying having an image processing function, typically an intelligent copier, as well as for a printer for computer output. Among these, semiconductor lasers are attracting attention, because they require no electrical signal/light signal transducing element such as an acousatic optical element, and also because they can be made in small scale and have light weight. However, these semiconductor lasers have a low output as compared with gas lasers and the wavelength is longer (about 780 nm or longer), and therefore the photoreceptor of the prior art, which has a spectral sensitivity of a shorter wavelength, can not be used as such as a photoreceptor using a semiconductor laser as the light source.

Moreover, an electrophotographic photosensitive member containing bisazo compounds in the photosensitive layer is disclosed in Japanese Unexamined Patent Publication No. 194035/1983 (equivalent to copending U.S. Patent Application Serial No. 549,589). However, the bisazo compound used in a photoreceptor of the present invention has better dispersibility and coating characteristics than those of the _{b} above application, and the photoreceptor of the present invention has better electrified potential, durability and sensitivity than the above.

The present invention seeks to provide a photoreceptor containing a specific azo compound which is stable to heat and light, and also excellent in carrier generating ability.

It also seeks to provide a photoreceptor which has high sensitivity and low residual potential, and excellent durability characteristics which do not change even when the photoreceptor is repeatedly used.

It further seeks to provide a photoreceptor containing an azo compound which can act effectively as the carrier generating material even when combined with a variety of carrier transporting materials, and a photoreceptor having sufficient sensitivity in practice even to a long wavelength light source such as a semiconductor laser.

Accordingly the present invention provides a photoreceptor comprising a support and a photosensitive layer which comprises an azo compound of formula (I): 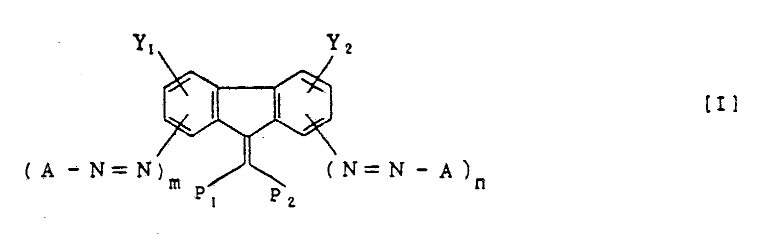 wherein
P, and P₂ are independently a halogen atom, a hydrogen atom, an alkyl group, an alkoxy group, an aryl group, an acetylamido group, an alkylsulfonyl group, 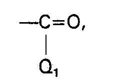 wherein Q, is an alkyl group, an alkoxy group, a phenyl group, an amino group, a hydroxy group or a hydrogen atom, or 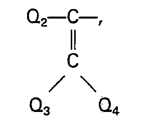 wherein Q₂, Q₃ and Q₄ independently are a halogen atom, a hydrogen atom, an alkyl group, an alkoxy group, a phenyl group, an acyl group, an ester group, a hydroxy group or a vinyl group, wherein anyone or more of said alkyl group, alkoxy group, aryl group, amino group, acetylamido group, alkylsulfonyl group and vinyl group may have a substituent;
Y₁ and Y₂ independently are a hydrogen atom, a halogen atom, a cyano group, a hydroxy group, an alkyl group or an alkoxy group;
m and n each independently represents an integer of from 0 to 2 with the proviso that m and n cannot be both 0;
each A independently represents a group of formula: 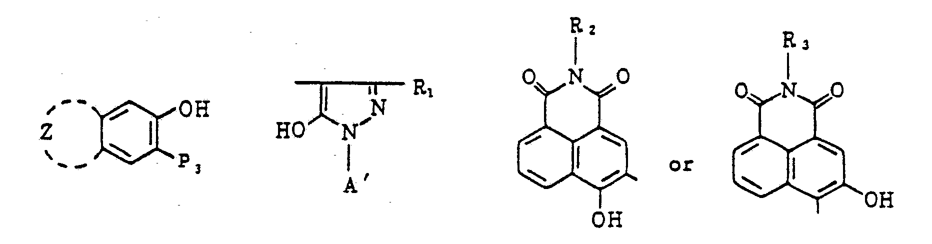 wherein
Z is a group which, together with the carbons to which it is attached, forms a substituted or unsubstituted aromatic hydrocarbon ring or a substituted or unsubstituted aromatic heterocyclic ring, P₃ is a substituted or unsubstituted carbamoyl group or a substituted or unsubstituted sulfamoyl group, R₁ is a hydrogen atom, a substituted or unsubstituted alkyl group, a substituted or unsubstituted amino group, a substituted or unsubstituted carbamoyl group, a carboxyl group or an ester group thereof or a cyano group, A' is a substituted or unsubstituted aryl group, and R₂ and R₃ independently are a substituted or unsubstituted alkyl group, a substituted or unsubstituted aralkyl group or a substituted or unsubstituted aryl group.

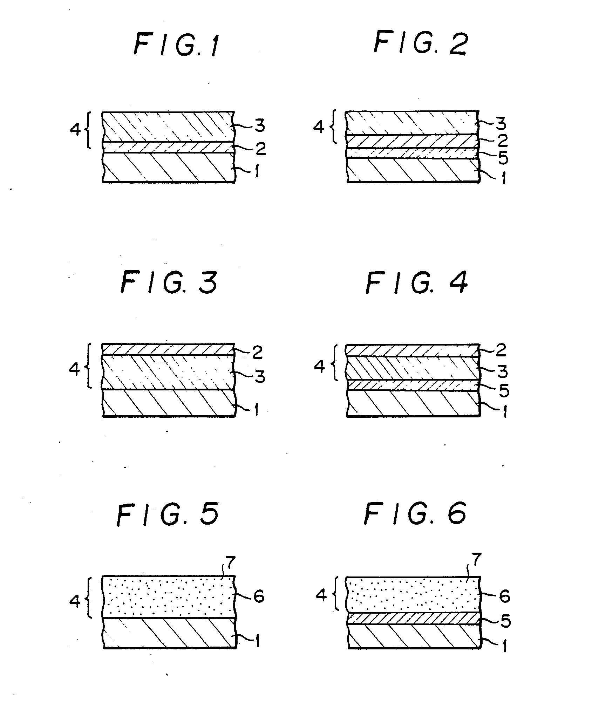

Figs. 1 through 6 show schematically sectional views of some examples of mechanical construction of photoreceptors of the invention.

In the above formula, P₃ is preferably a substituted or unsubstituted carbamoyl group of the formula: 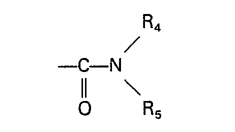 or a substituted or unsubstituted sulfamoyl group of the formula: 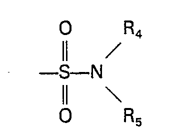 wherein
R₄ represents a hydrogen atom, a substituted or unsubstituted alkyl group having 1 to 4 carbon atoms, a substituted or unsubstituted aralkyl group or a substituted or unsubstituted phenyl group; Rₛ represents a hydrogen atom, a substituted or unsubstituted alkyl group having 1 to 4 carbon atoms, a substituted or unsubstituted aromatic hydrocarbon group (e.g. a substituted or unsubstituted phenyl group, substituted or unsubstituted naphthyl group, or a substituted or unsubstituted aromatic heterocyclic group (e.g. a substituted or unsubstituted carbazolyl group, or a substituted or unsubstituted dibenzofuryl group).

The substituents on these groups include, for example, a substituted or unsubstituted alkyl group having 1 to 4 carbon atoms (e.g. methyl, ethyl, isopropyl, t-butyl or trifluoromethyl), a substituted or unsubstituted aralkyl group (e.g. benzyl or phenethyl), a halogen atom (chlorine, bromine, fluorine or iodine), a substituted or unsubstituted alkoxy group having 1 to 4 carbon atoms (e.g. methoxy, ethoxy, isopropoxy, t-butoxy or 2-chloroethoxy), a hydroxy group, a substituted or unsubstituted aryloxy group (e.g. p-chlorophenoxy or 1-naphthoxy), an acyloxy group (e.g. acetyloxy or p-cyanobenzoyloxy), a carboxyl group or an ester group thereof (e.g. ethoxycarbonyl or m-bromophenoxycarbonyl), a carbamoyl group (e.g. amonocarbonyl, t-butylaminocarbonyl or anilinocarbonyl), an acyl group (e.g. acetyl or o-nitrobenzoyl), a sulfo group, a sulfamoyl group (e.g. aminosulfonyl, t-butylaminosulfonyl or p-tolylaminosulfonyl), an amino group, an acylamino group (e.g. acetylamino or benzoylamino), a sulfonamido group (e.g. methanesulfonamido or p-toluenesulfonamido), a cyano group and a nitro group. Preferred groups are a substituted or unsubstituted alkyl group having 1 to 4 carbon atoms (e.g. methyl, ethyl, isopropyl, n-butyl or trifluoromethyl), a halogen atom (chlorine, bromine, fluorine or iodine), a substituted or unsubstituted alkoxy group having 1 to 4 carbon atoms (e.g. methoxy, ethoxy, t-butoxy or 2-chloroethoxy), a cyano group and a nitro group.

Z is a group which, together with the carbons to which it is attached, forms a substituted or unsubstituted aromatic hydrocarbon ring or a substituted or unsubstituted aromatic heterocyclic ring, for example a substituted or unsubstituted benzene ring, a substituted or unsubstituted naphthalene ring, a substituted or unsubstituted indole ring or a substituted or unsubstituted carbazole ring.

Examples of substituents for Z are those mentioned as the substituents for R₄ and Rₛ, but are preferably a halogen atom (chlorine, bromine, fluorine or iodine), a sulfo group or a sulfamoyl group (e.g. aminosulfonyl or p-tolylaminosulfonyl).

R, is preferably a hydrogen atom, a substituted or unsubstituted alkyl group having 1 to 4 carbon atoms (e.g. methyl, ethyl, isopropyl, t-butyl or trifluoromethyl) or a cyano group.

A' is preferably a substituted or unsubstituted phenyl group. Examples of substituents for A' are those as mentioned for R₄ and R₅, but are preferably a halogen atom (chlorine, bromine, fluorine or iodine), a substituted or unsubstituted alkyl group having 1 to 4 carbon atoms (e.g. methyl, ethyl, isopropyl, t-butyl or trifluoromethyl) or a substituted or unsubstituted alkoxy group having 1 to 4 carbon atoms (e.g. methoxy, ethoxy, isopropoxy, t-butoxy or 2-chloroethoxy).

R₂ and R₃ preferably each independently are a substituted or unsubstituted alkyl group having 1 to 4 carbon atoms (e.g. methyl, ethyl, isopropyl, t-butyl or trifluoromethyl) or a substituted or unsubstituted phenyl group (e.g. phenyl, p-methoxyphenyl or m-chlorophenyl).

The azo compounds of formula [I] include those compounds shown in Embodiments A through F as described in detail below.

### Embodiment A

The azo compound may be of formula [IA]: 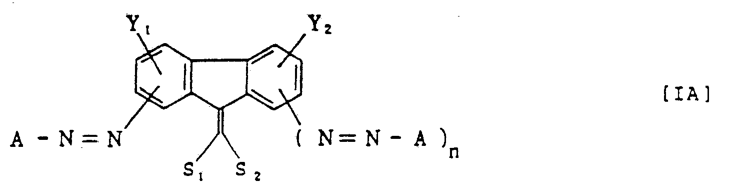 wherein S₁ and S₂ independently are an alkyl group, an ester group or a substituted or unsubstituted benzene ring; and Y₁, Y₂, n and A are as defined in formula [I].

Preferred compounds of formula [IA] having good sensitivity and stability to heat and light are of formula [IA]-II: 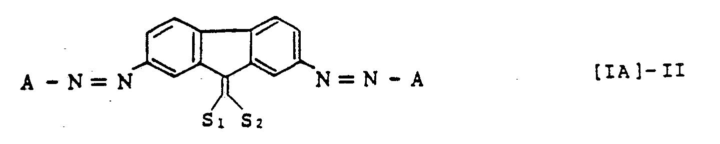 wherein S₁, S₂ and A are as defined in formula [IA].

Specific examples of useful azo compounds of formula [IA] include, for example, those of formula:

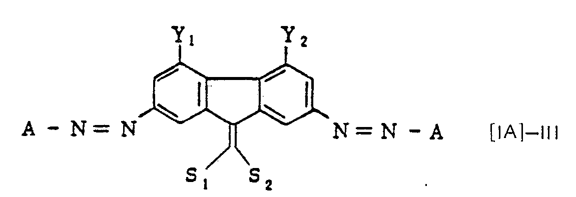

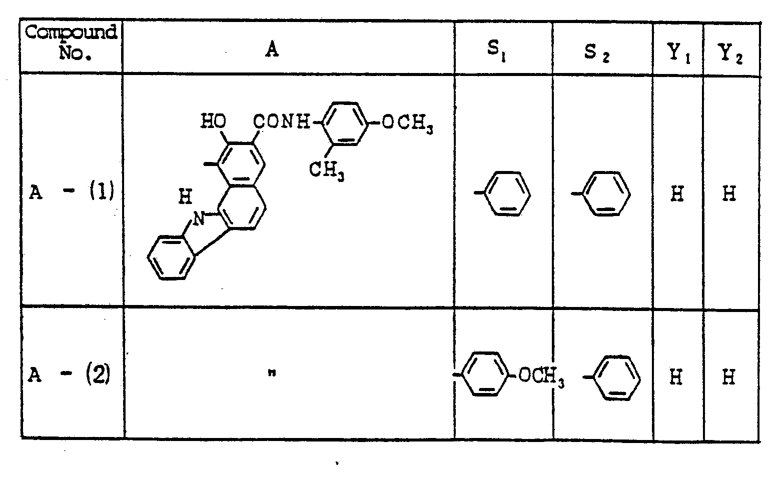

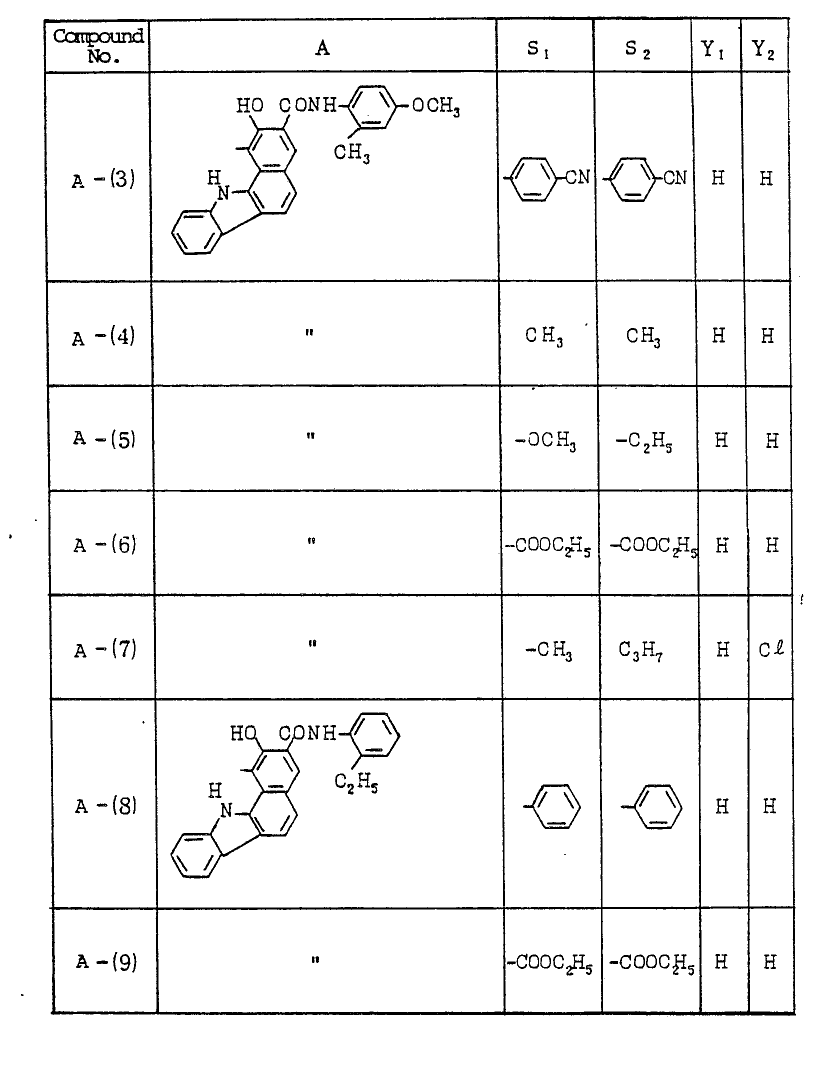

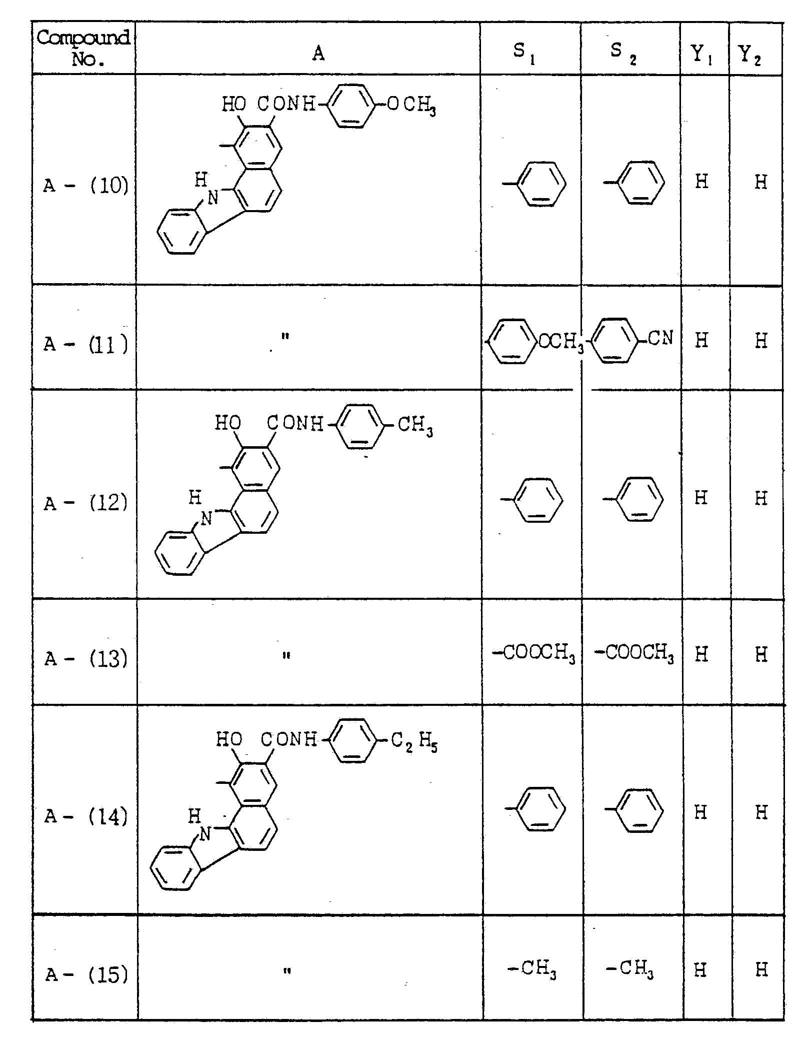

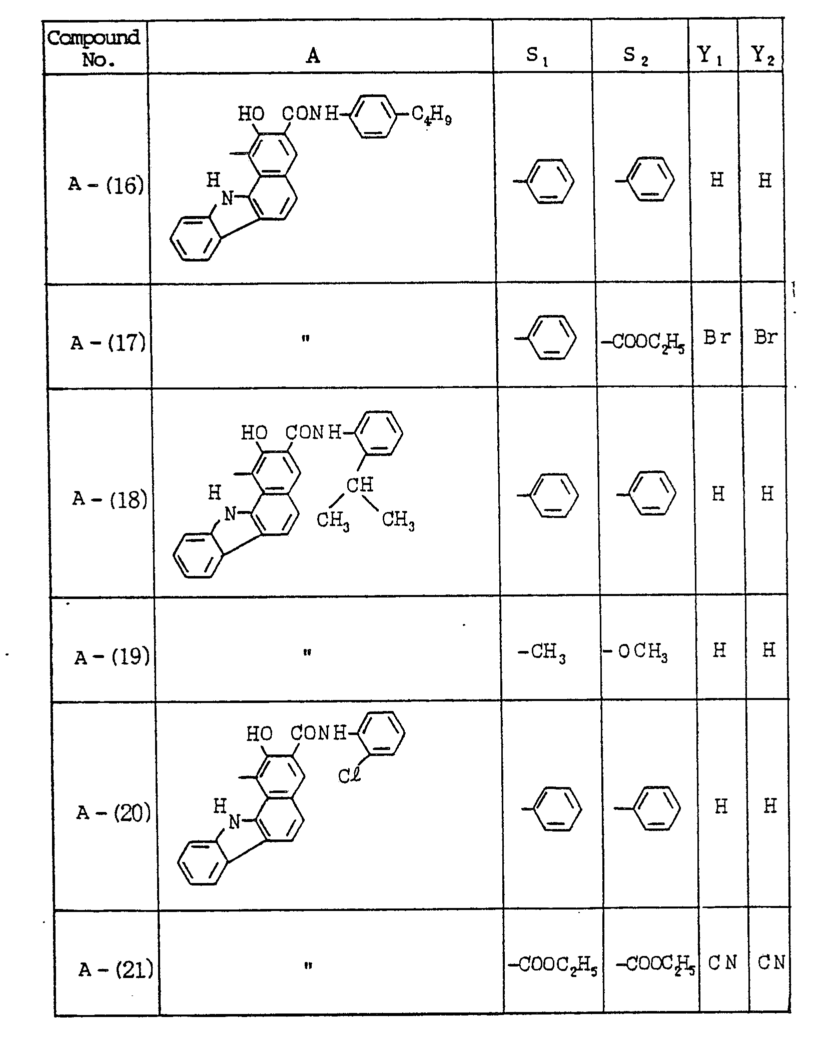

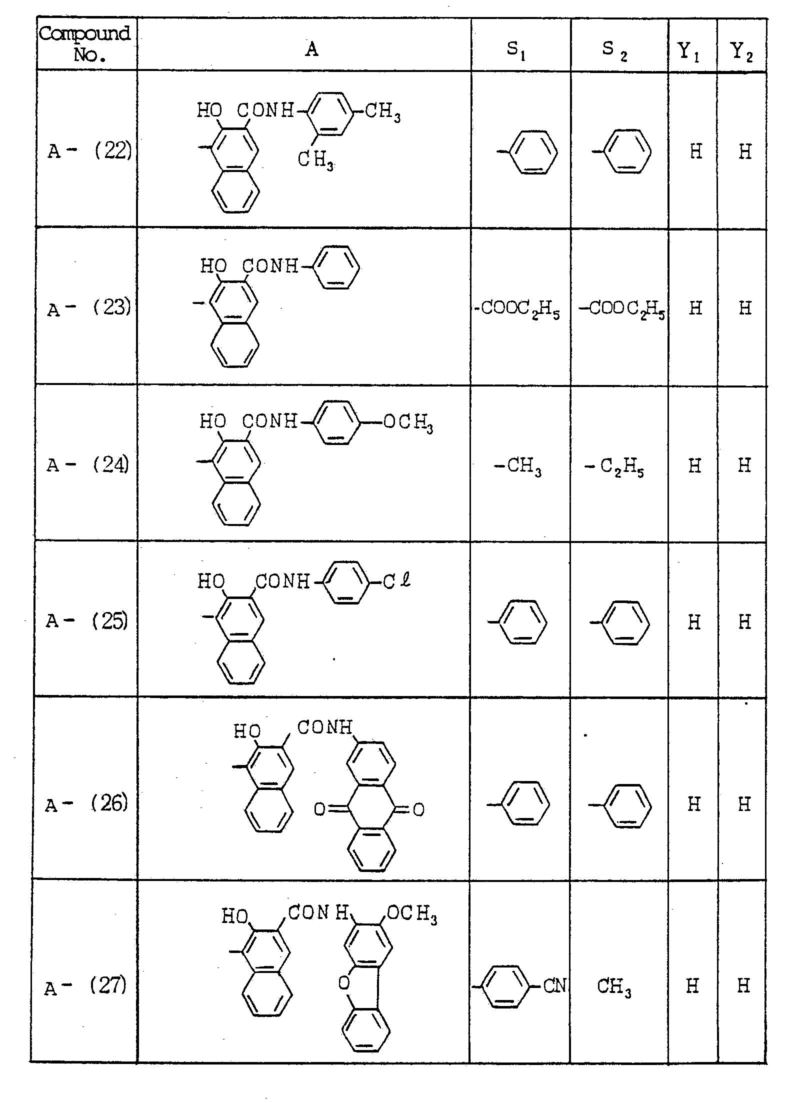

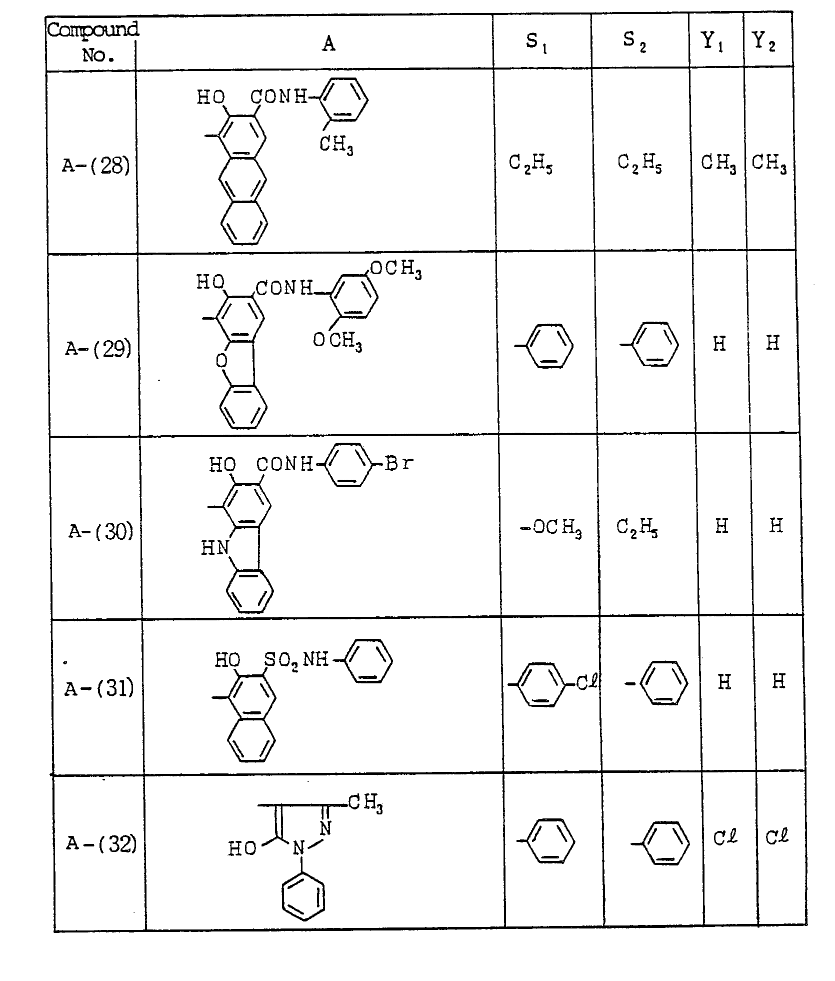

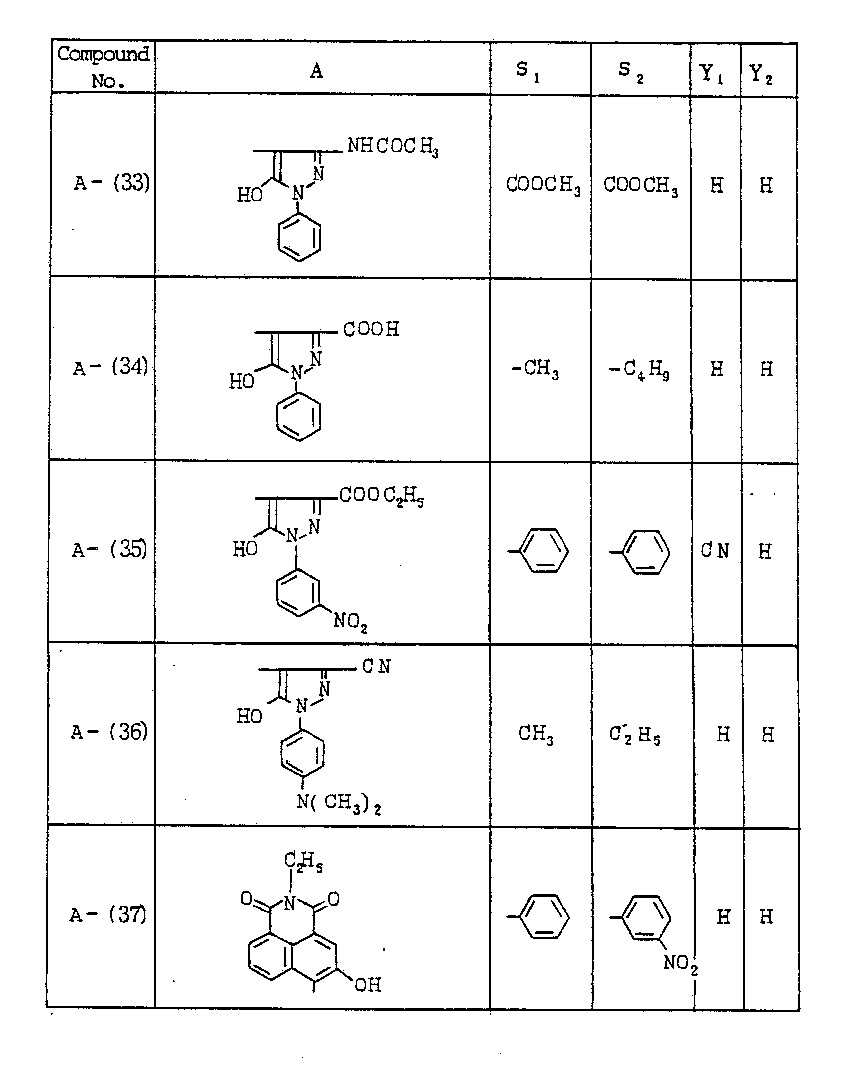

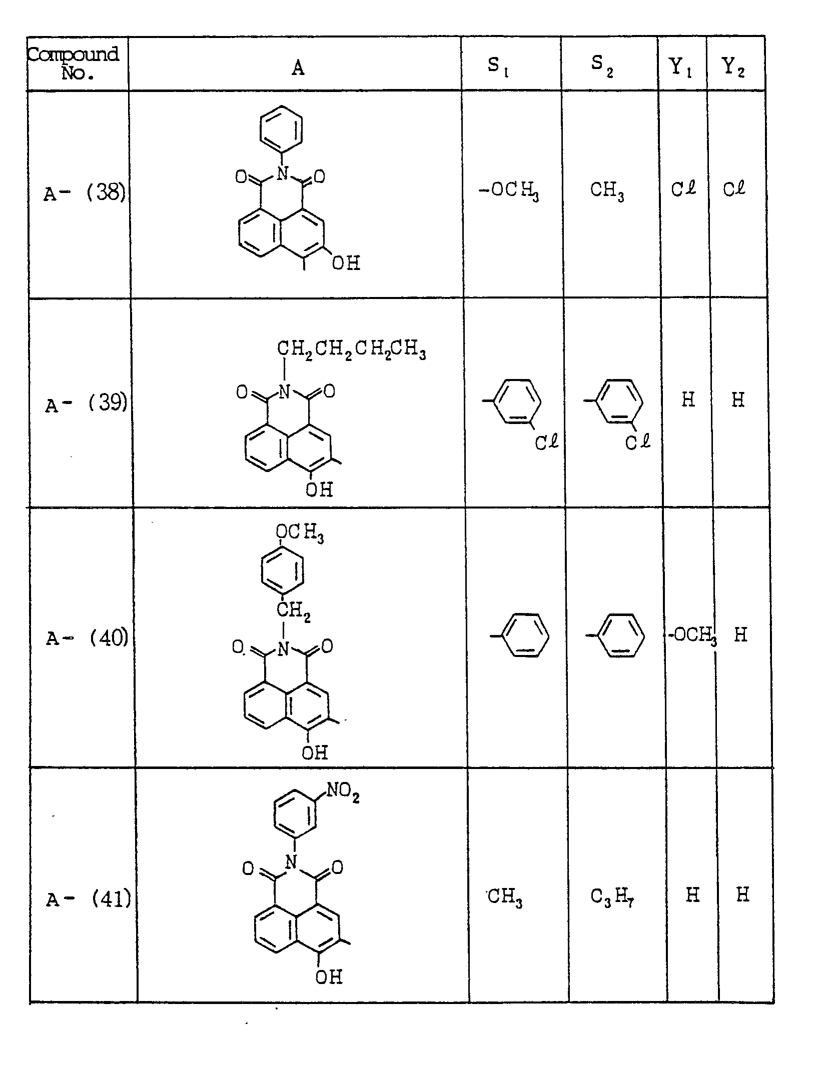

Those having the formula [IA]-IV

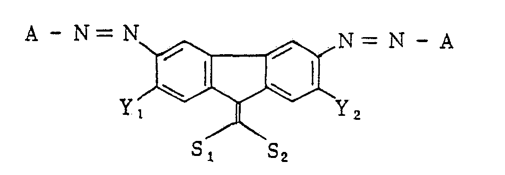

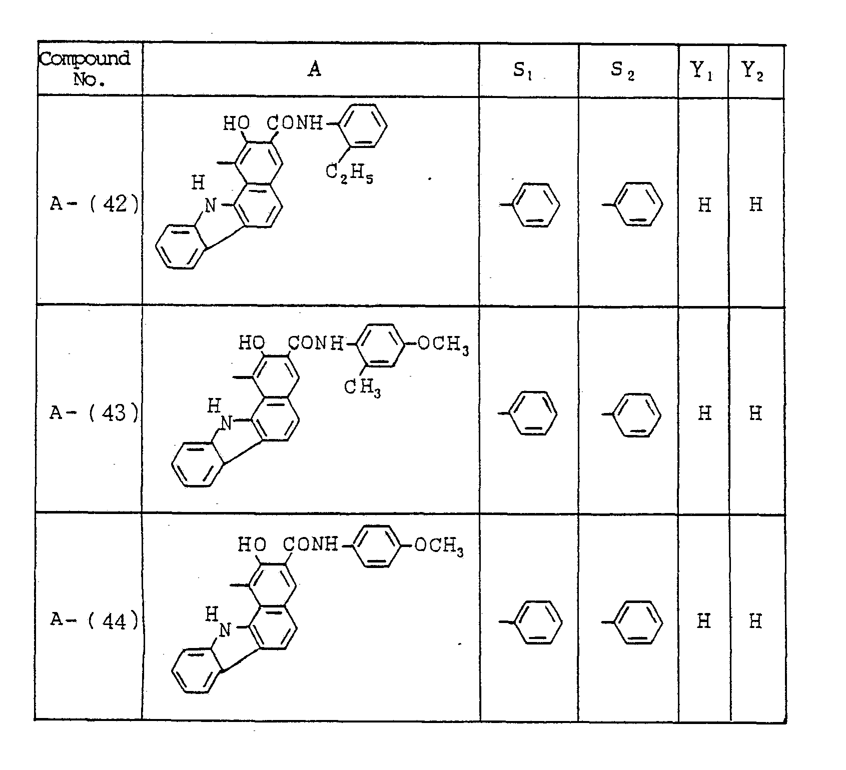

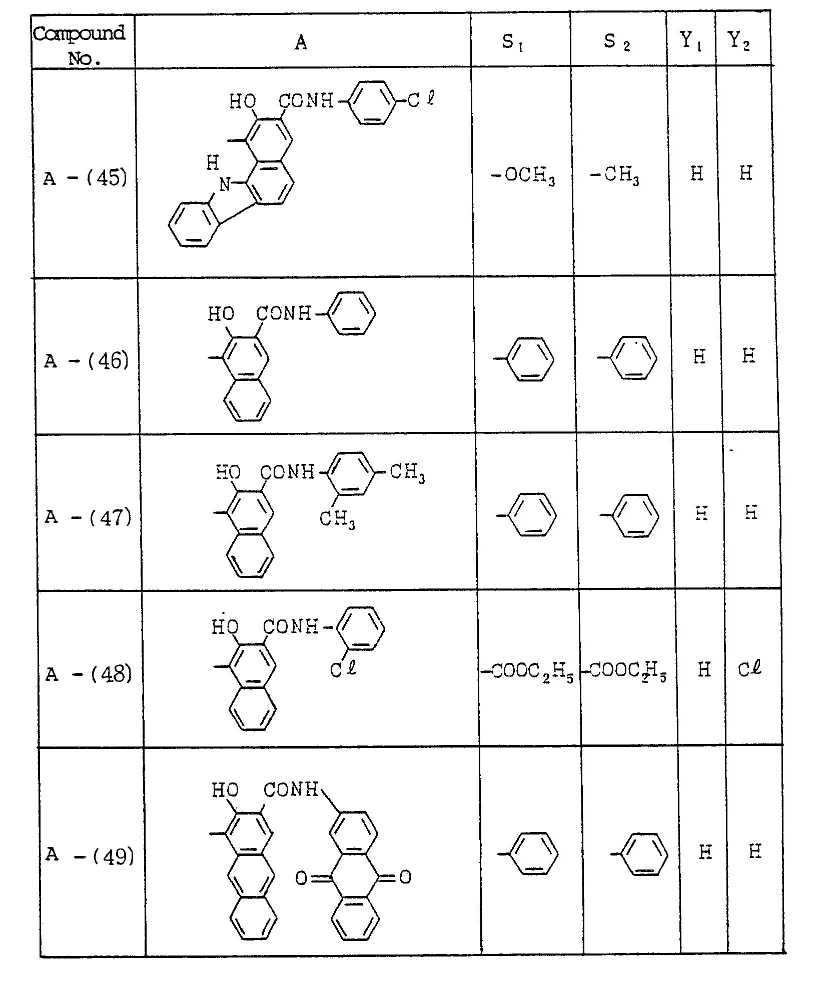

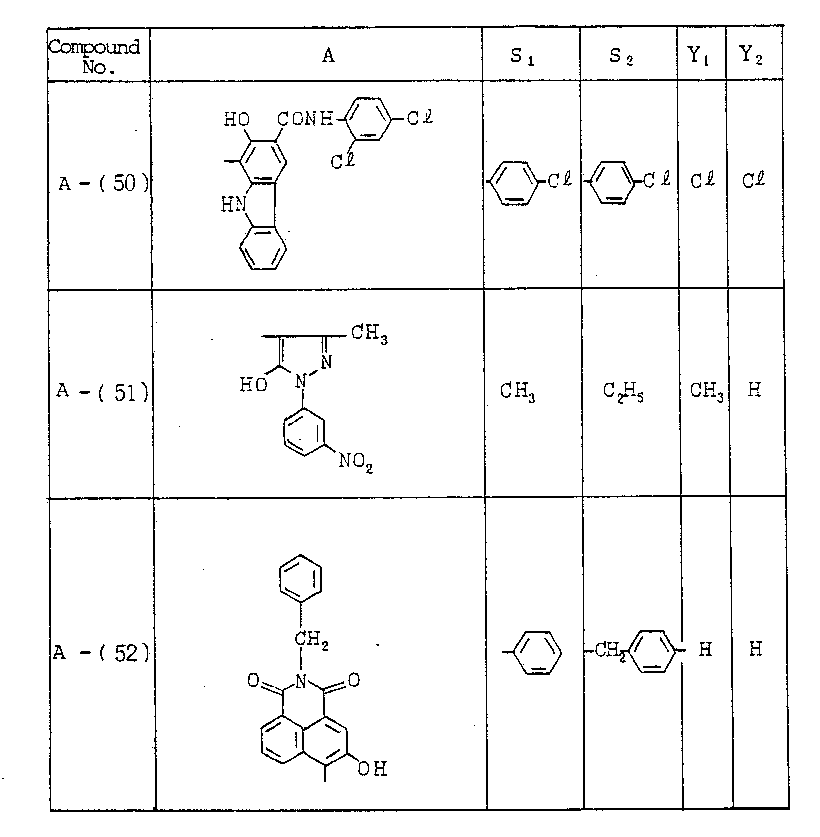

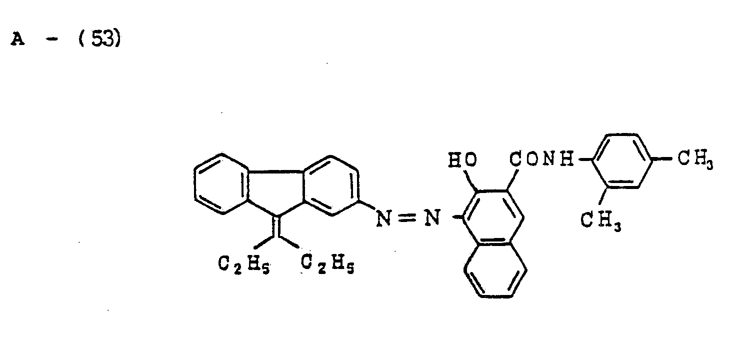

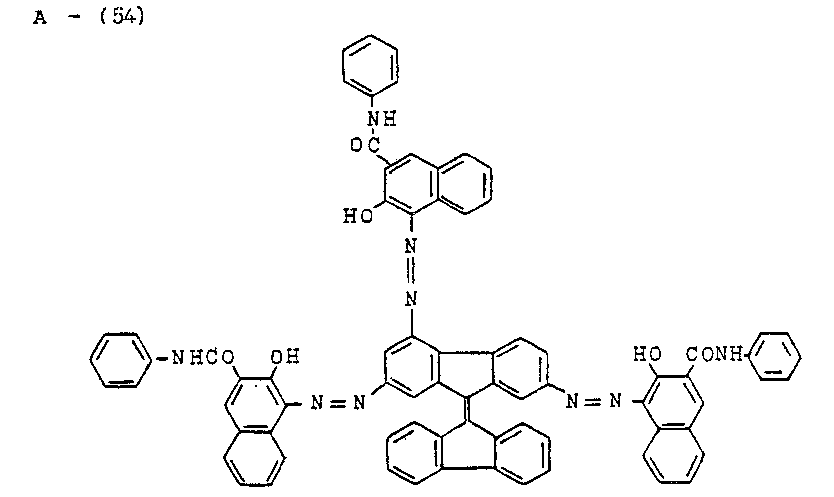

The azo compounds described above can be synthesized easily according to a known method. A typical example is shown below.

### Synthesis Example 1

### [Synthesis of compound of formula A-(1)]

The synthesis route is schematically shown below:

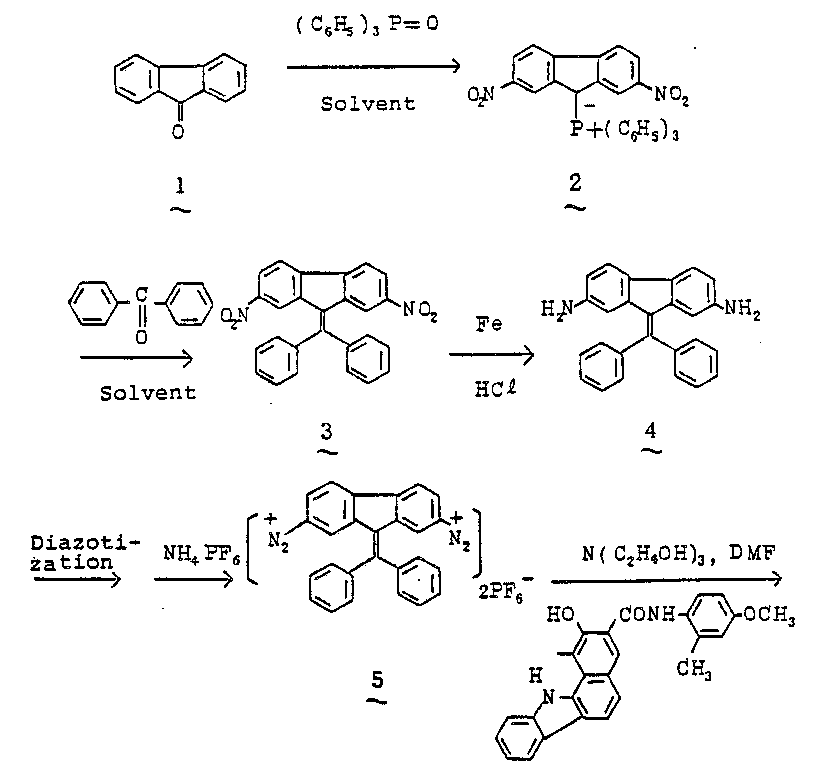

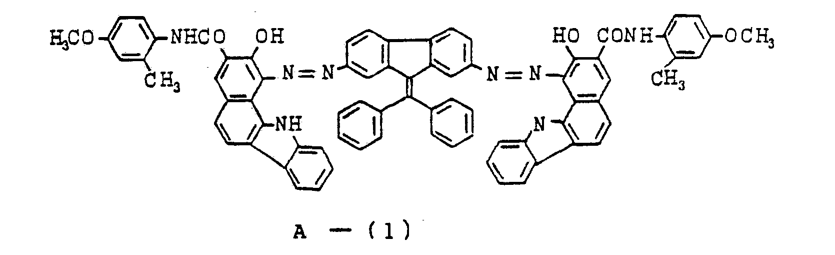

2,7-Dinitrofluorenone 1 (produced by Tokyo Kasei K.K.) was reacted with triphenylphosphine to produce a nitrio derivative 2, which was then reacted with benzophenone to form a dinitro derivative 3 (Journal of Chemistry, 24, 282, 1959), followed by reduction with iron to prepare a diamino derivative 4. The diamino derivative 4 (36.0 g, 0.1 mole) was dispersed by adding it to a mixture of 1 liter of conc. HCI and 1 liter of water. A solution of 13.8 g (0.2 mole) of sodium nitrite dissolved in 0.1 liter of water was added dropwise at 5°C under ice-cooling. After completion of the addition, the reaction mixture was filtered, and 1 liter of an aqueous 50% ammonium hexafluorophosphate solution was added to the filtrate. The resultant precipitate was recovered by filtration, washed with water and thoroughly dried. The salt obtained was dissolved in 1.5 liters of N,N-dimethylformamide (DMF) to provide a tetrazonium salt solution to be used in the subsequent reaction.

As the next step, 79.3 g (0.2 mole) of 2-hydroxy-3-(4-methoxy-2-methylphenylcarbamoyl)-benzo[a]-carbazole (Naphthol AS-SR, produced by Hoechst AG) and 60 g of triethanolamine were dissolved in 4 liters of N,N-dimethylformamide, and the tetrazonium salt solution as prepared above was added dropwise under ice-cooling to the resultant solution, followed further by stirring for 2 hours to carry out the reaction. The crystals formed were recovered by filtration, and the crystals were washed twice with 5 liters of N,N-dimethylformamide and twice with 5 liters of acetone, followed by drying, to obtain 43.5 g of the desired bisazo compound A-(1) (Yield: 37%). From the analytical results of m.p. 300°C or higher, FD-MS spectrum which indicates a peak of M⁺ at m/Z 1175 and the elemental analysis of C ⁼ 77.66%, N = 9.48%, H = 4.67% (Caicd. values, C = 77.55%, N = 9.54%, H = 4.63%), it can be understood that the desired substance was synthesized.

### Embodiment B

The compound may be of formula [IB]: 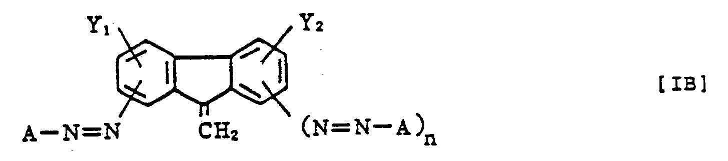 wherein Y_{I}, Y₂, n and A are as defined in formula [I].

The detailed description for the preferred groups Y₁, Y₂ and A as given for the embodiment [IA] are also applicable for this embodiment.

Preferred compounds having good sensitivity and stability to heat and light are of formula [IB]―II: 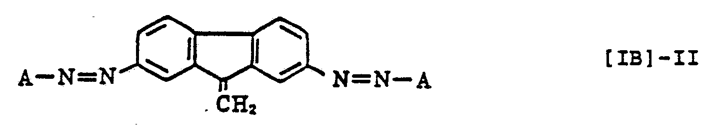 wherein A is as defined above.

Examples of azo compounds of formula [IB] include, for example, those of formula:

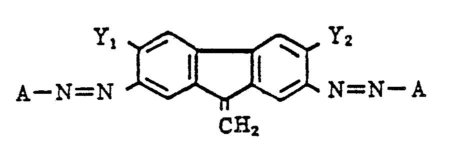

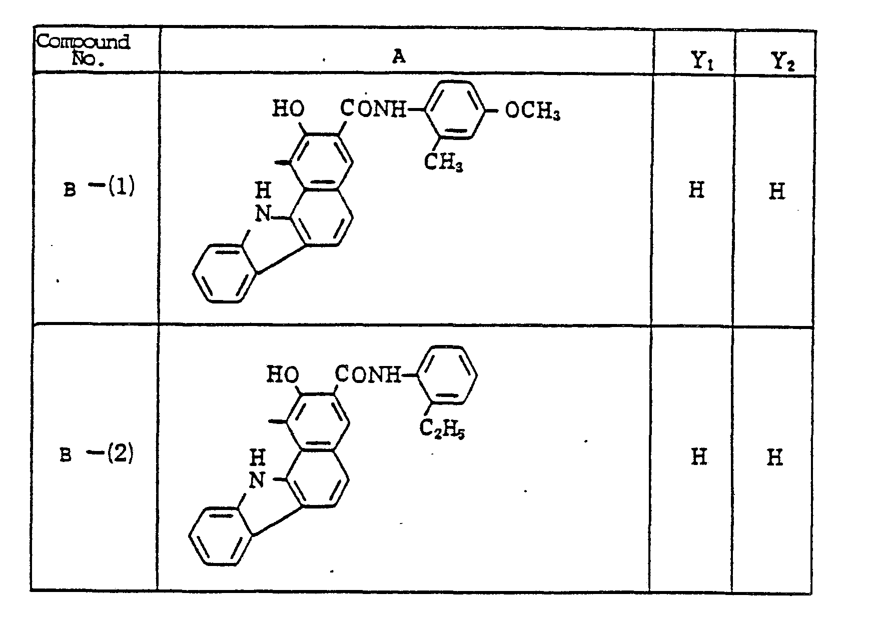

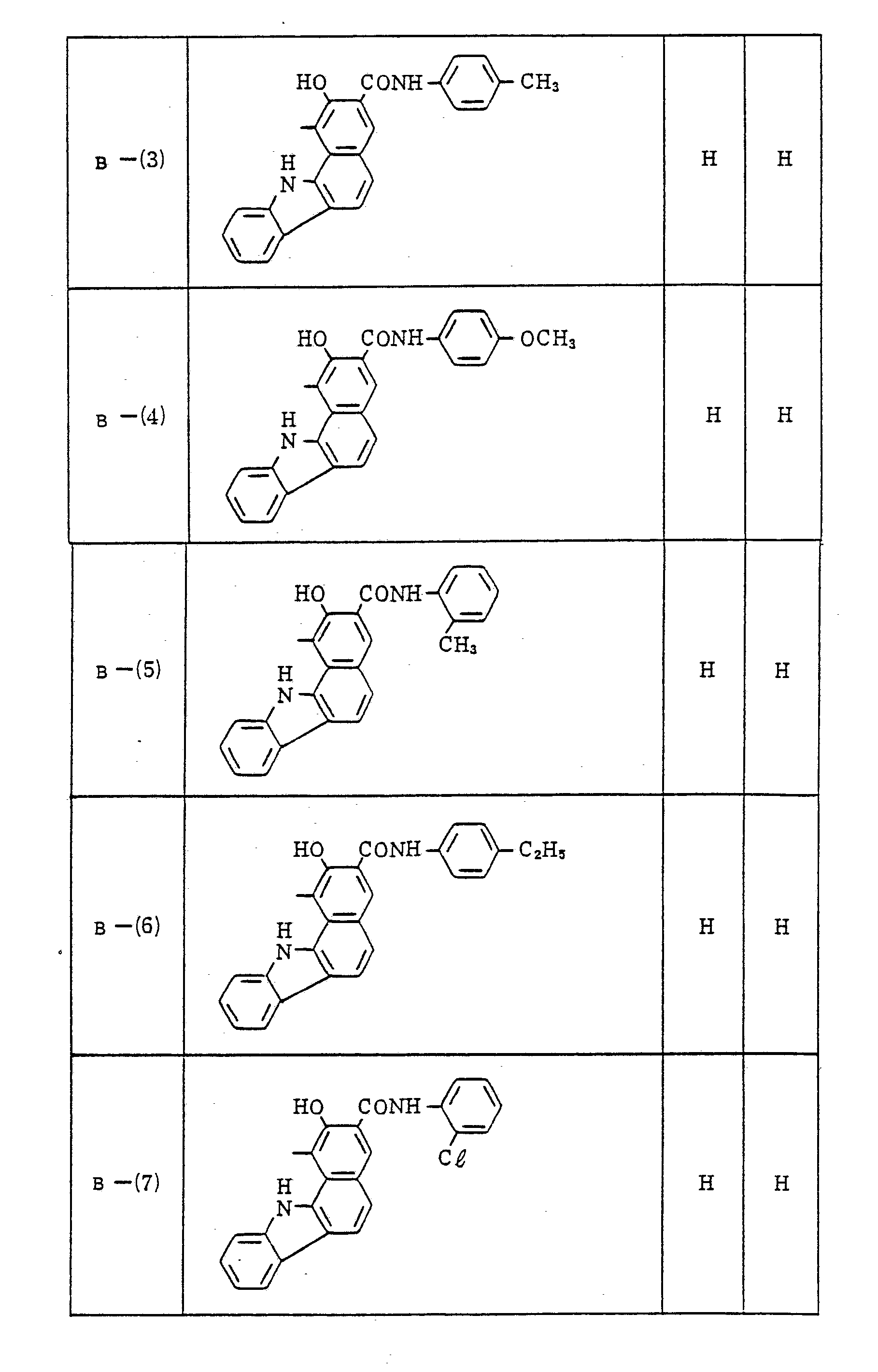

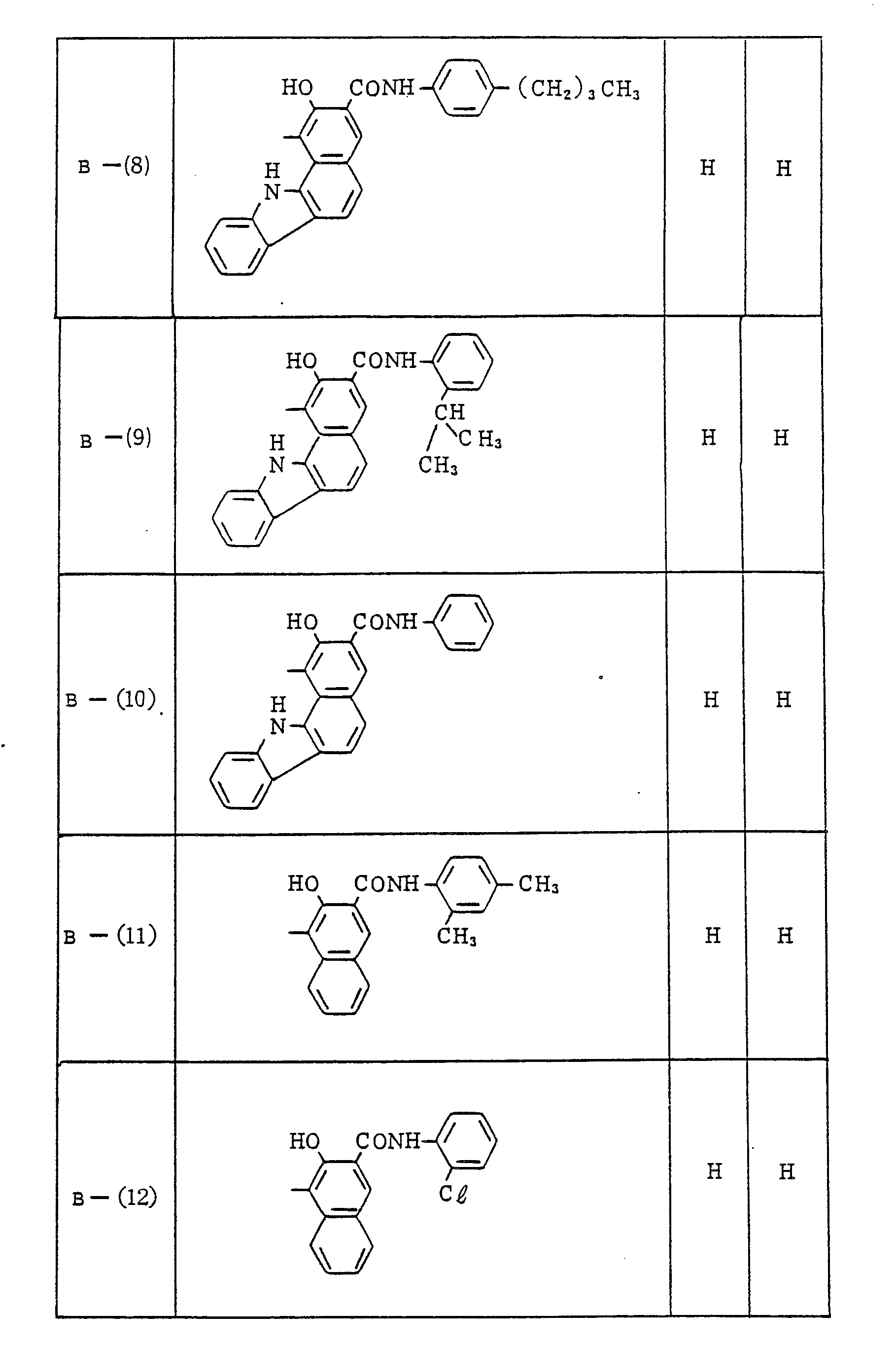

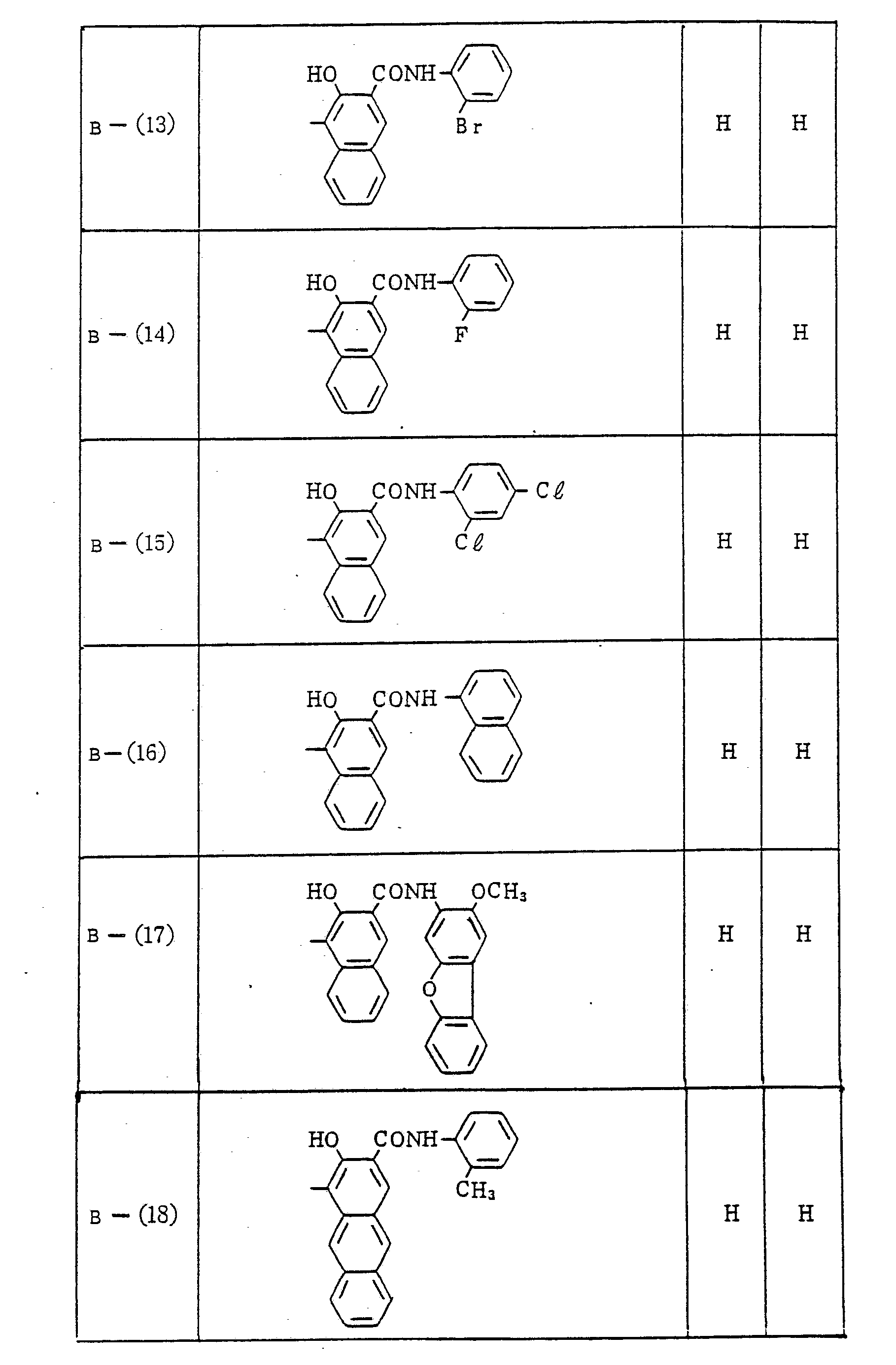

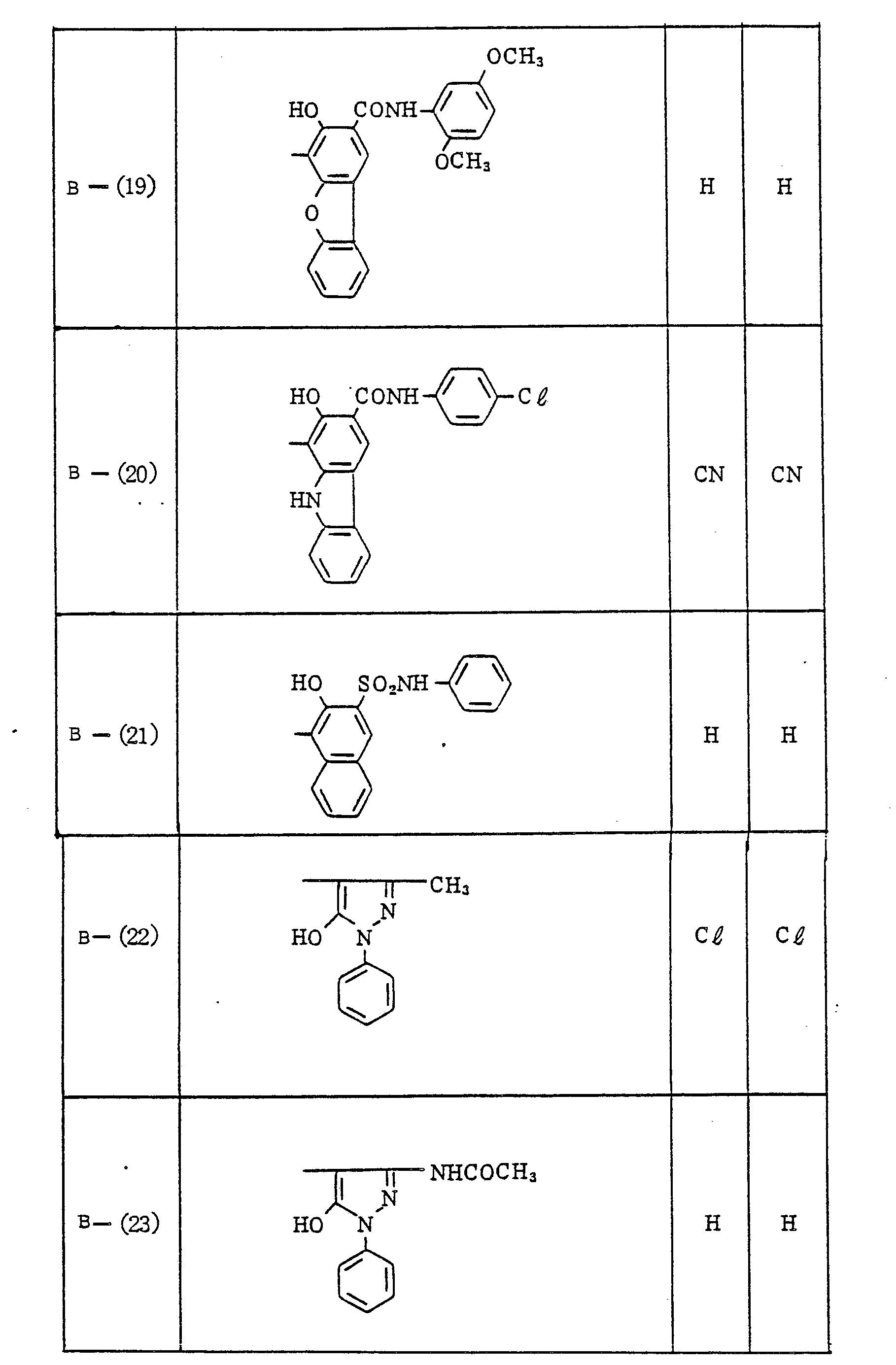

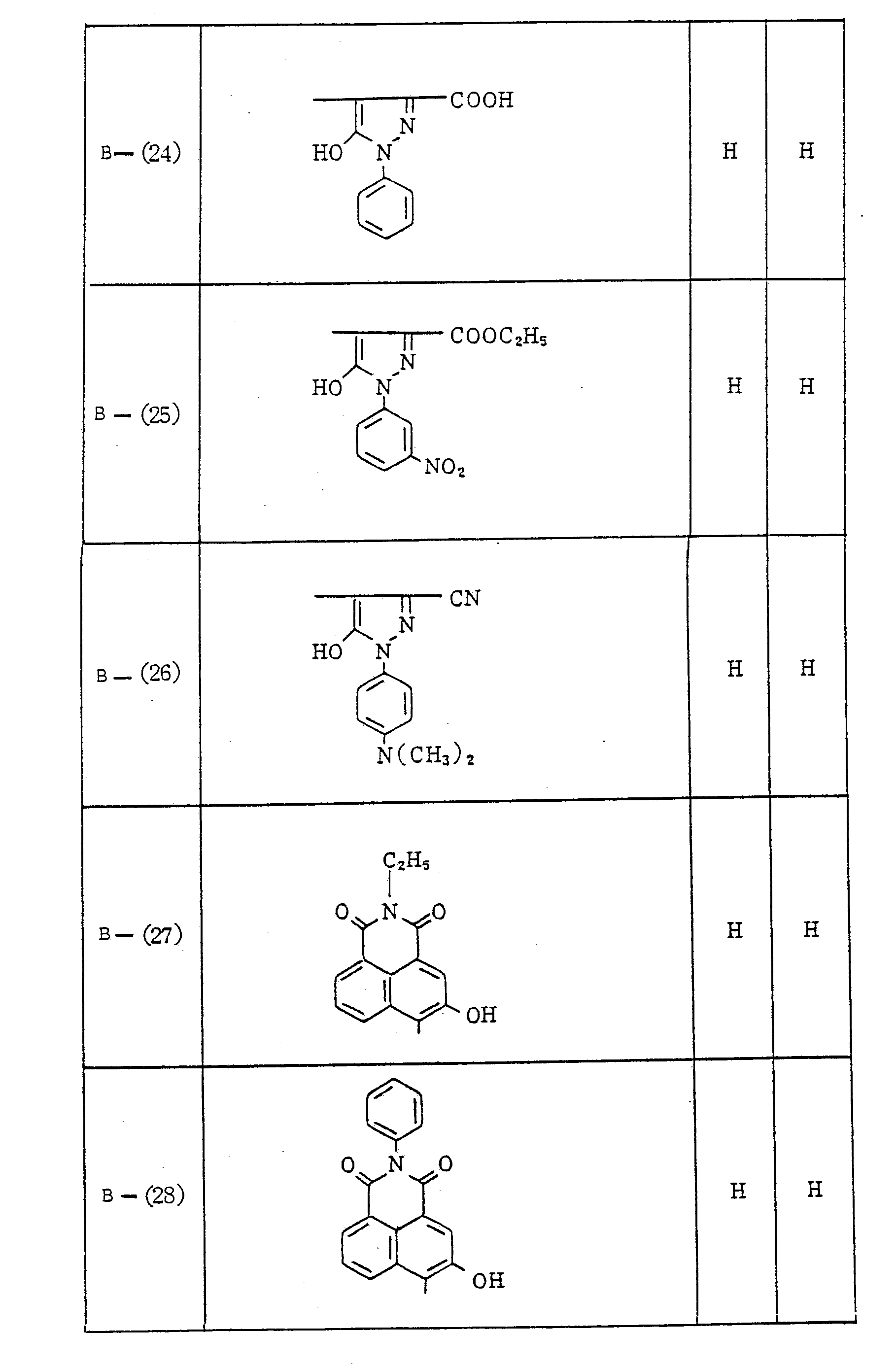

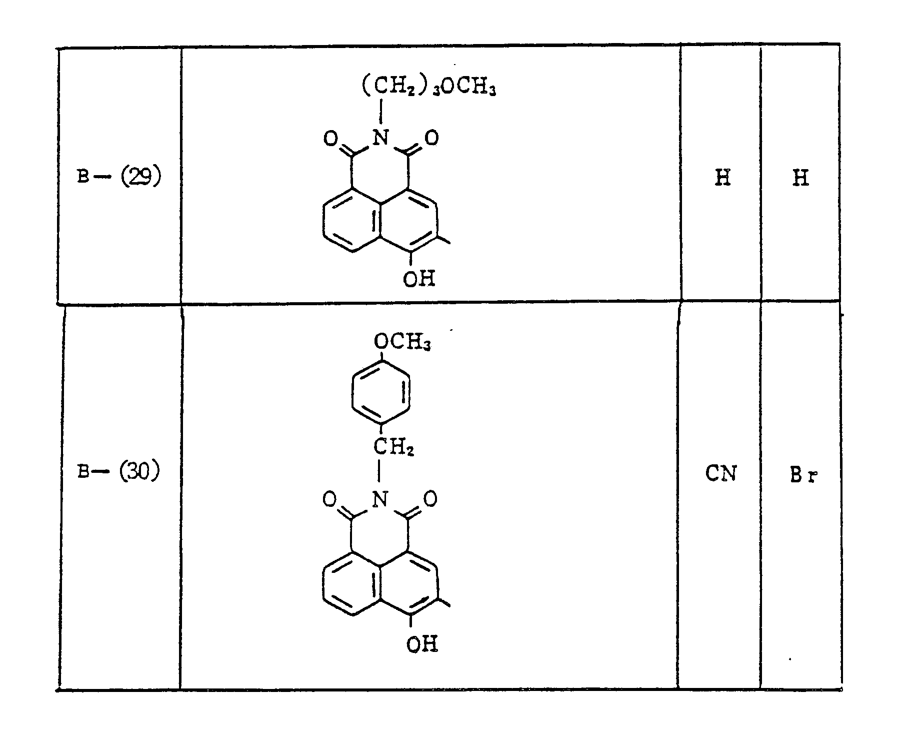

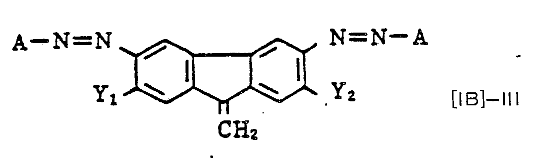

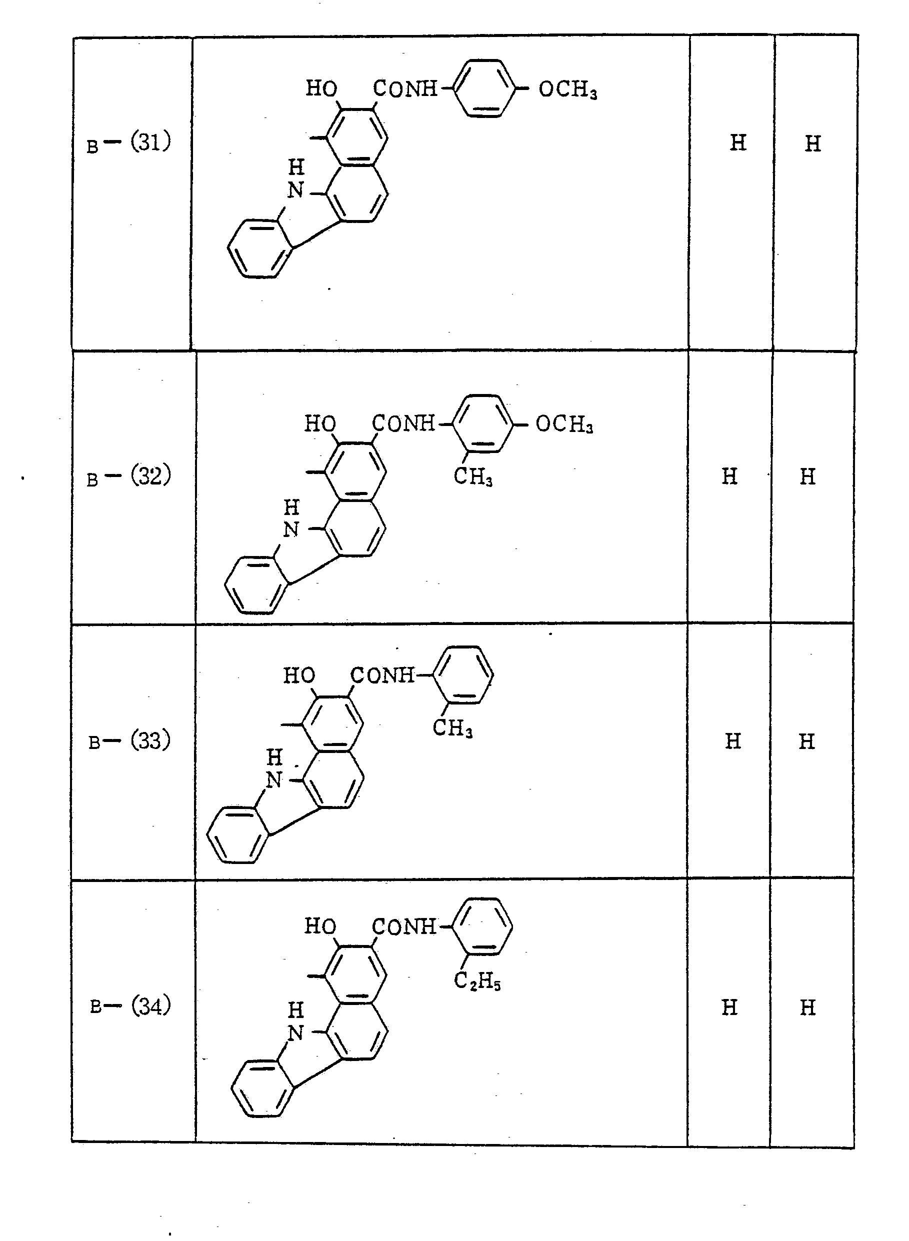

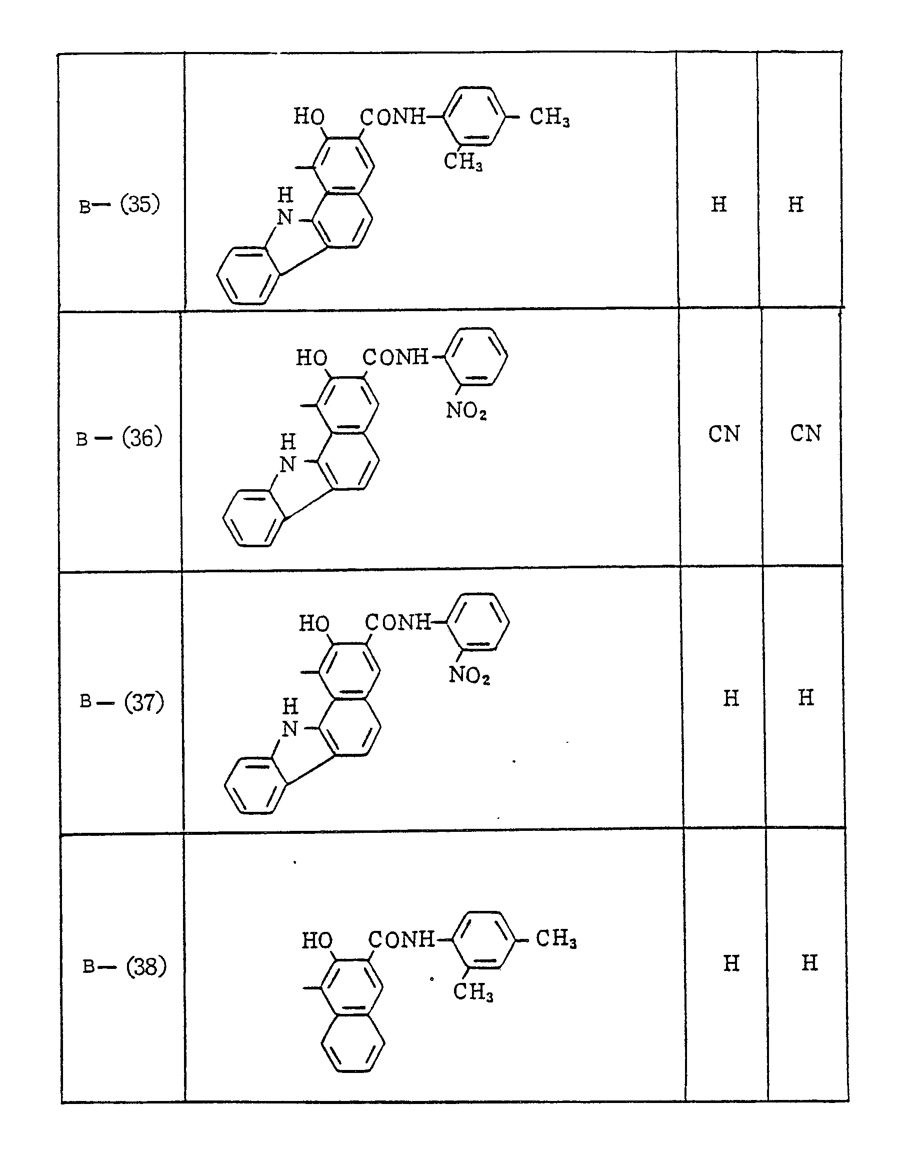

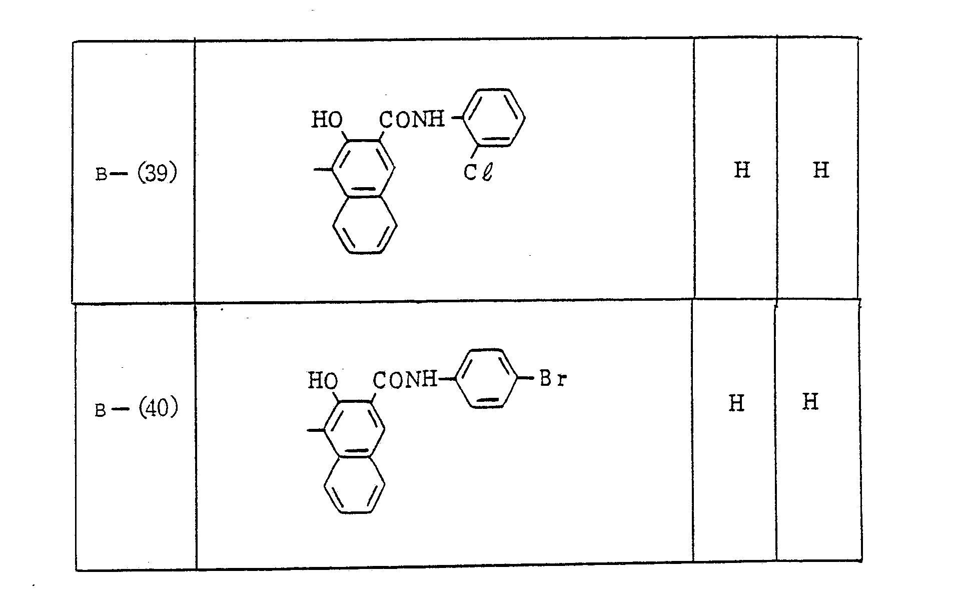

### Others:

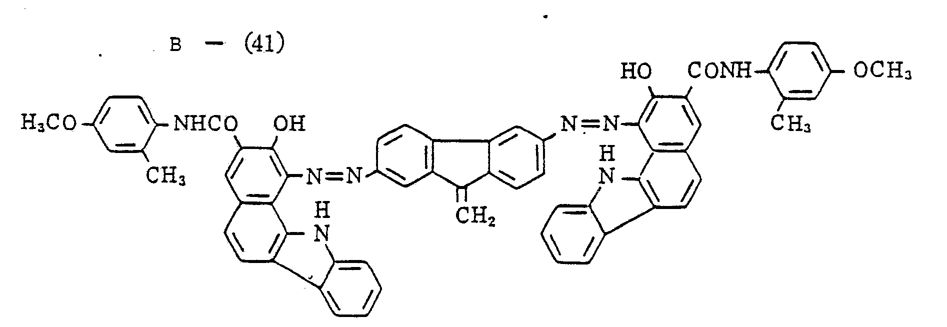

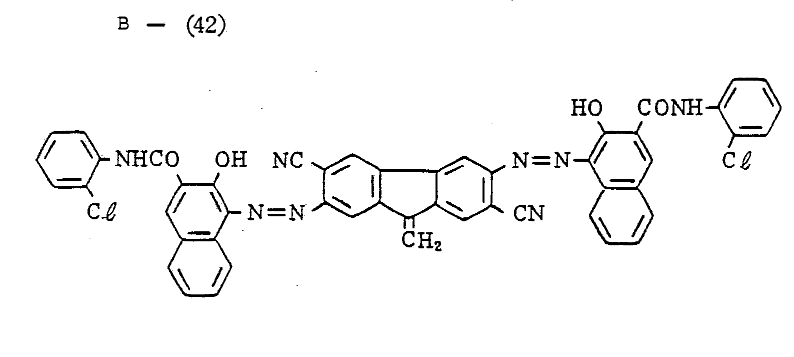

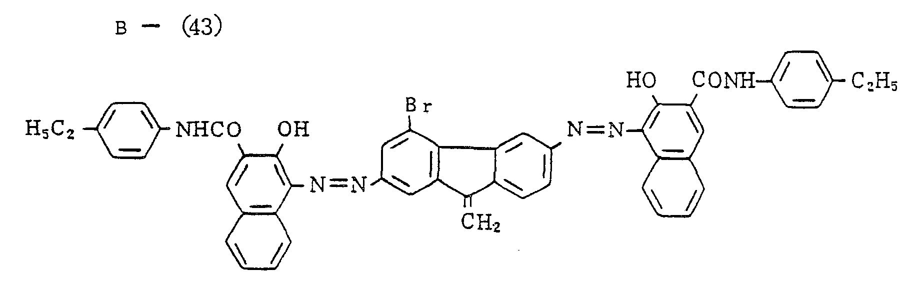

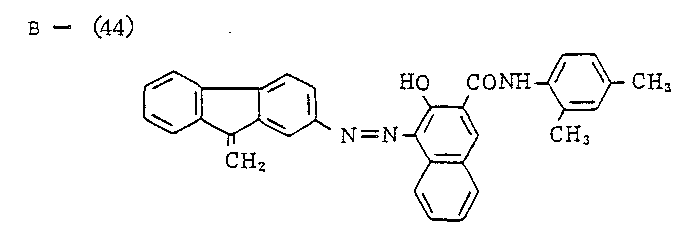

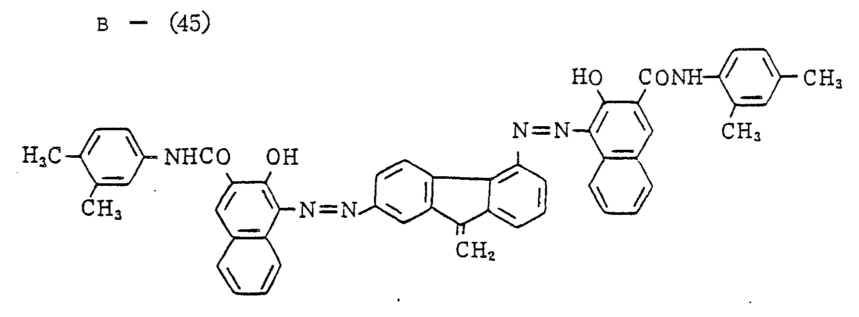

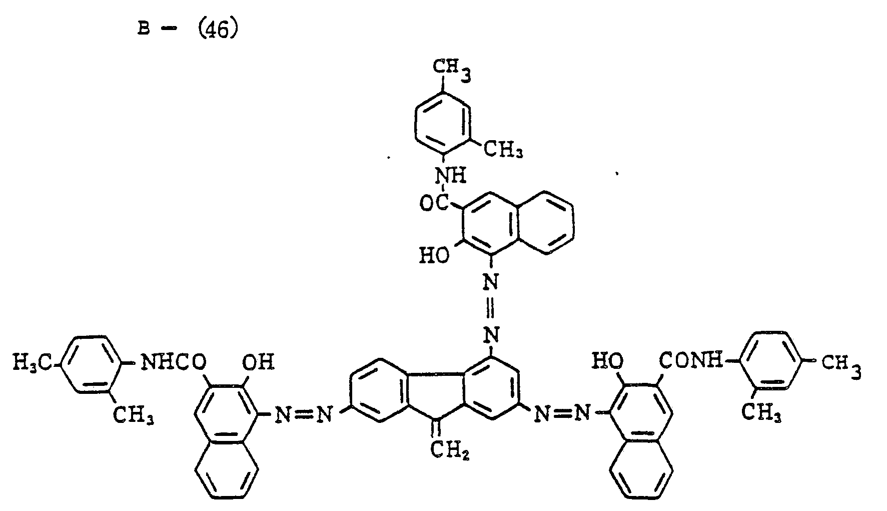

The azo compounds described above can be synthesized easily according to a known method. A typical example is shown below.

### Synthesis Example 2

### [Synthesis of compound of formula 8-(1)]

The synthesis route is schematically shown below:

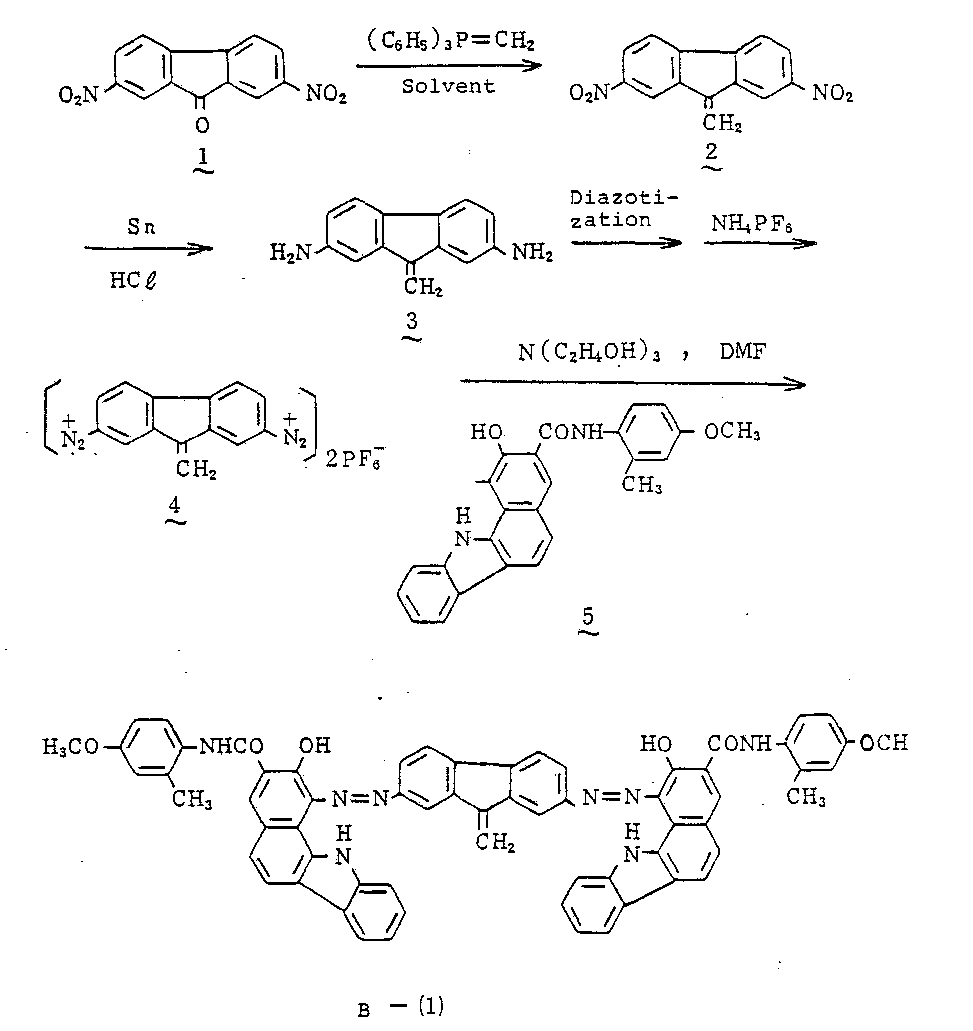

2,7-Dinitrofluorenone 1 (produced by Tokyo Kasei K.K.) was reacted with triphenylphosphinemethylene (Journal of American Chemical Society, 80, 4386, 1958) to prepare a dinitro derivative 2, which was then reduced with tin to form a diamino derivative 3. The diamino derivative 3 (21 g, 0.1 mole) was dispersed by addirrg it to a mixture of 1 liter of conc. HCI and 0.5 liter of water. A solution of 14 g (0.2 mole) of sodium nitrite dissolved in 0.5 liter of water was added dropwise at 5°C under ice-cooling. After completion of the reaction, the reaction mixture was filtered, and 1 liter of an aqueous 50% ammonium hexafluorophosphate solution was added to the filtrate. The resultant precipitate was recovered by filtration, washed with water and thoroughly dried. The salt obtained was dissolved in 1.5 liters of N,N-dimethylformamide (DMF) to provide a tetrazonium salt solution to be used in the subsequent reaction.

As the next step, 80 g (0.2 mole) of 2-hydroxy-3-(4-methoxy-2-methylphenylcarbamoyl)-benzo[a]carbazole (Naphthol AS-SR, produced by Hoechst AG) and 60 g of triethanolamine were dissolved in 4 liters of N,N-dimethylformamide, and the tetrazonium salt solution as prepared above was added dropwise under ice-cooling to the resultant solution, followed further by stirring for 2 hours to allow the reaction to proceed. The crystals formed were recovered by filtration, and they were washed twice with 5 liters of N,N-dimethylformamide and twice with 5 liters of acetone, followed by drying, to obtain 31 g of the desired bisazo compound B-(1) (Yield: 30%). From the analytical results of m.p. 300°C or higher, FD-MS spectrum which indicates a peak of M⁺ at m/Z 1022, IR spectrum which indicates a peak at 1680 cm⁻¹ (absorption by amide), and the elemental analysis of C = 73.80%, N = 10.80%, H = 6.29% (Calcd. values, C = 73.82%, N = 10.76%, H = 6.20%), it was confirmed that the desired substance was synthesized.

### Embodiment C

The compoundd may be.of formula [IC]: 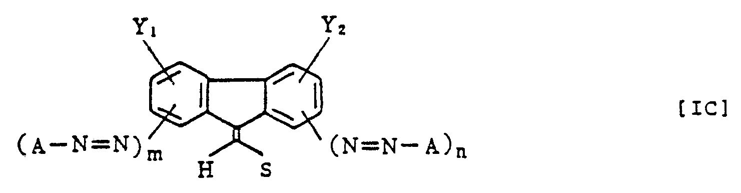 wherein S is a substituted or unsubstituted benzene ring or an alkyl group; and Y₁, Y₂, m, n and A are as defined in formula [I].

The detailed description for the preferred groups Y_{I}, Y₂ and A as given for embodiment [IA] are also applicable for this embodiment.

Preferred compounds having good sensitivity and stability to heat and light are of formula [IC]-II: 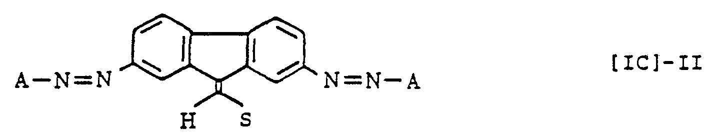 wherein A and S are as defined above.

Specific examples of useful azo compounds of formula [IC] include, for example, those of formula:

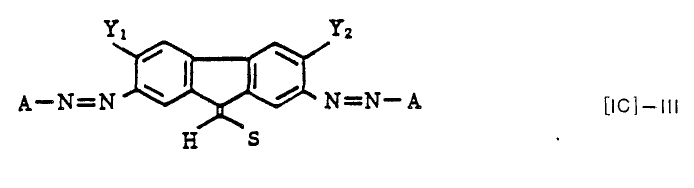

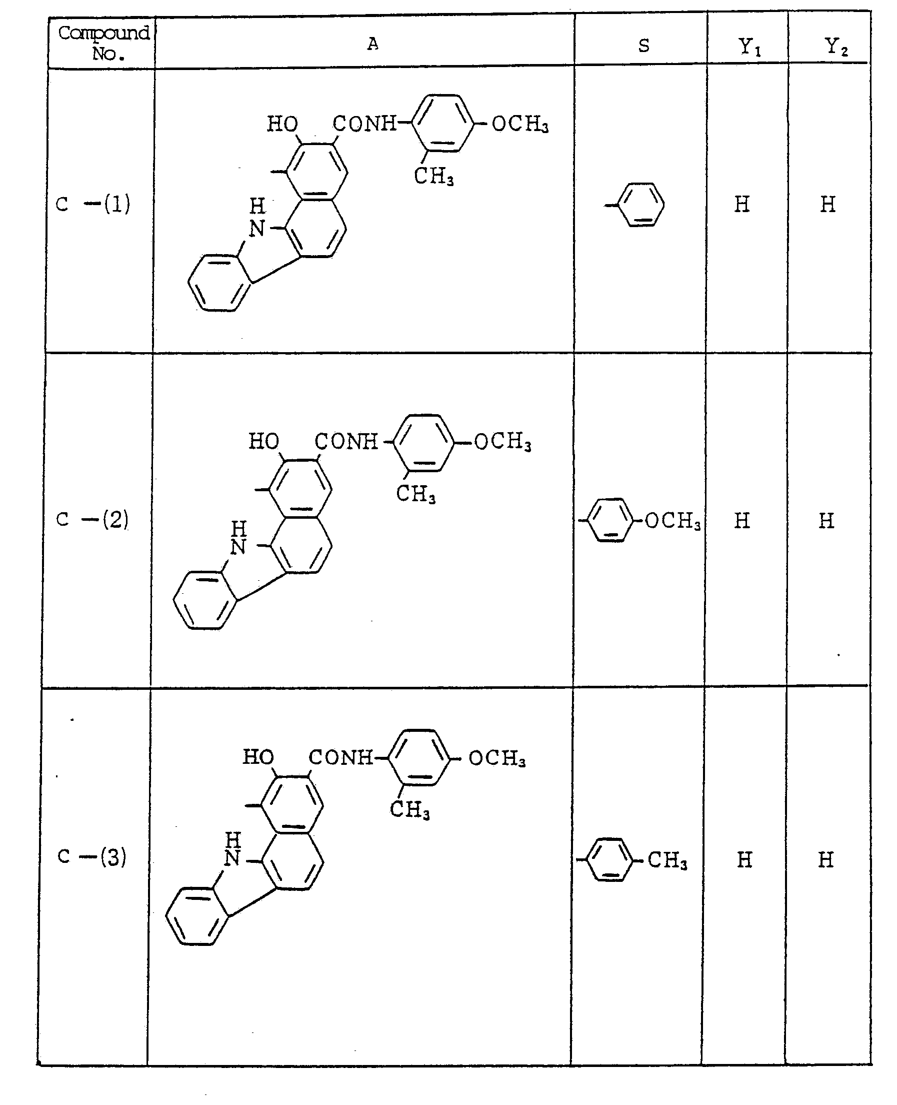

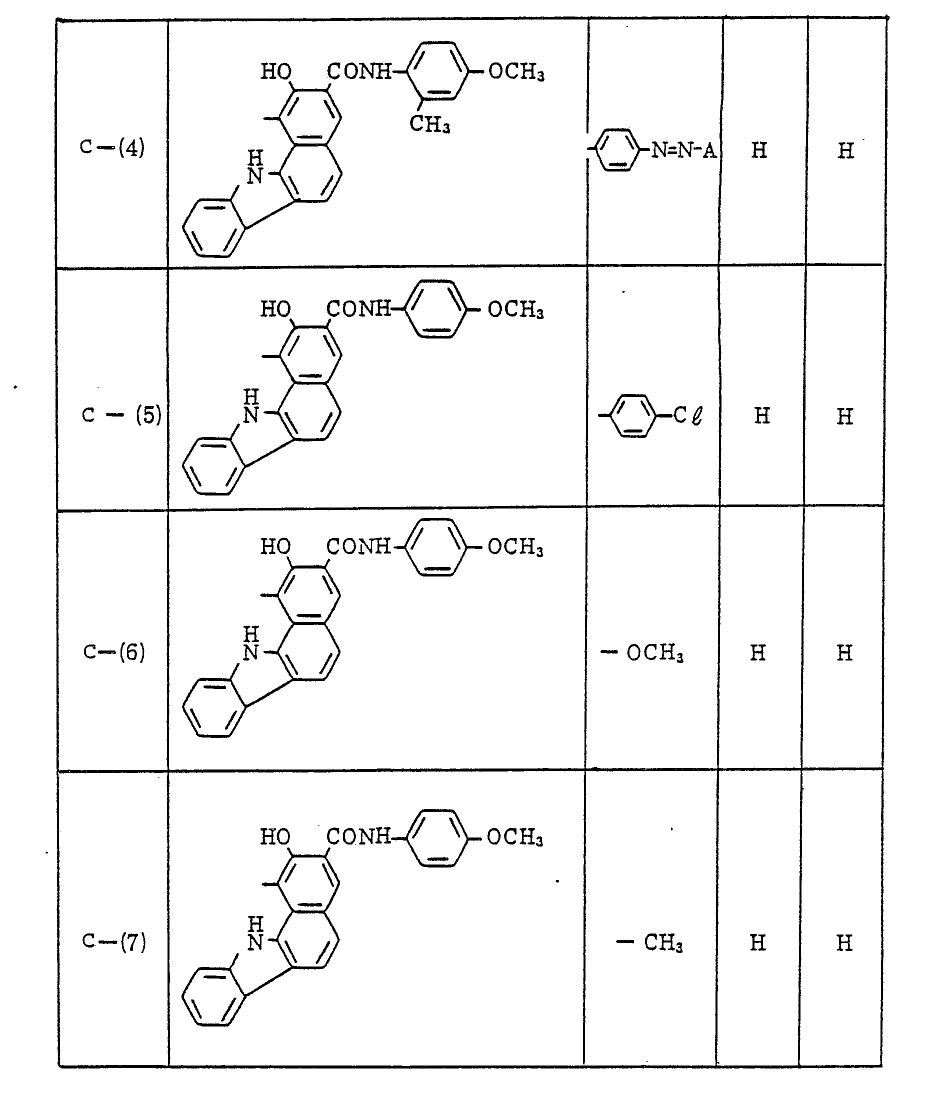

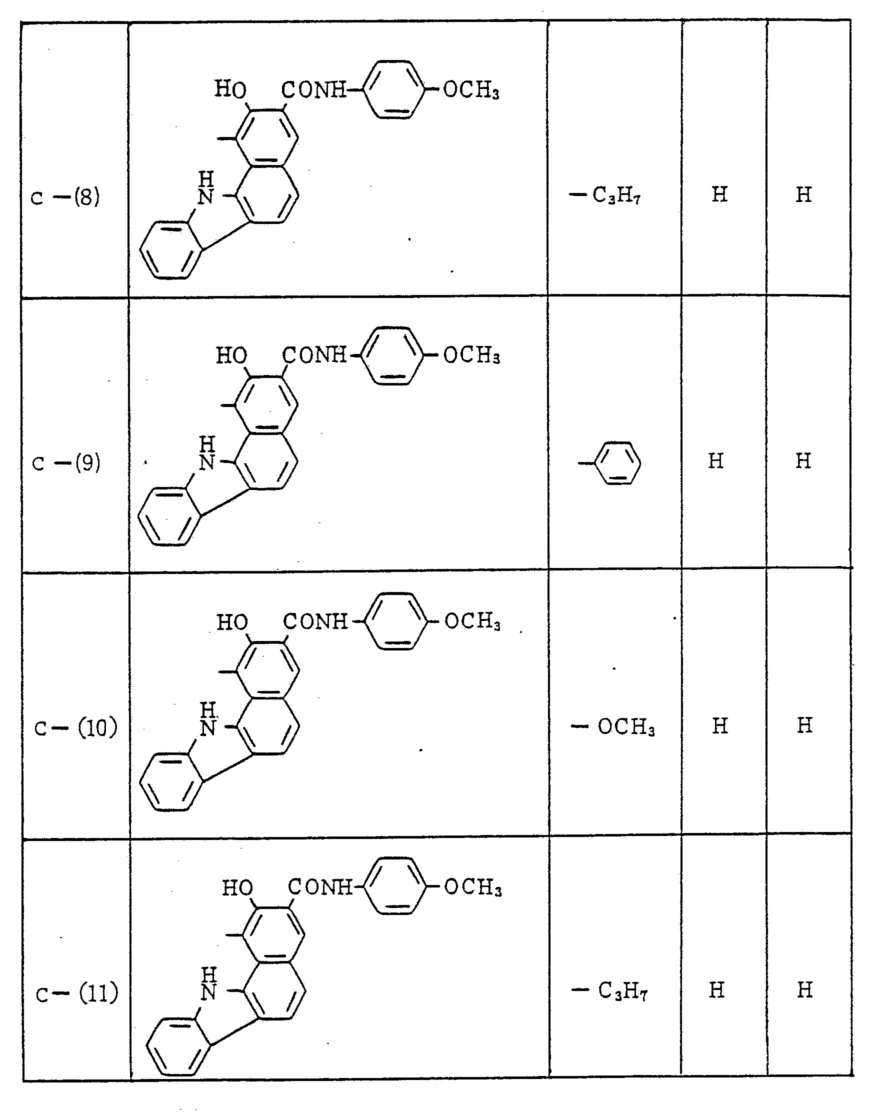

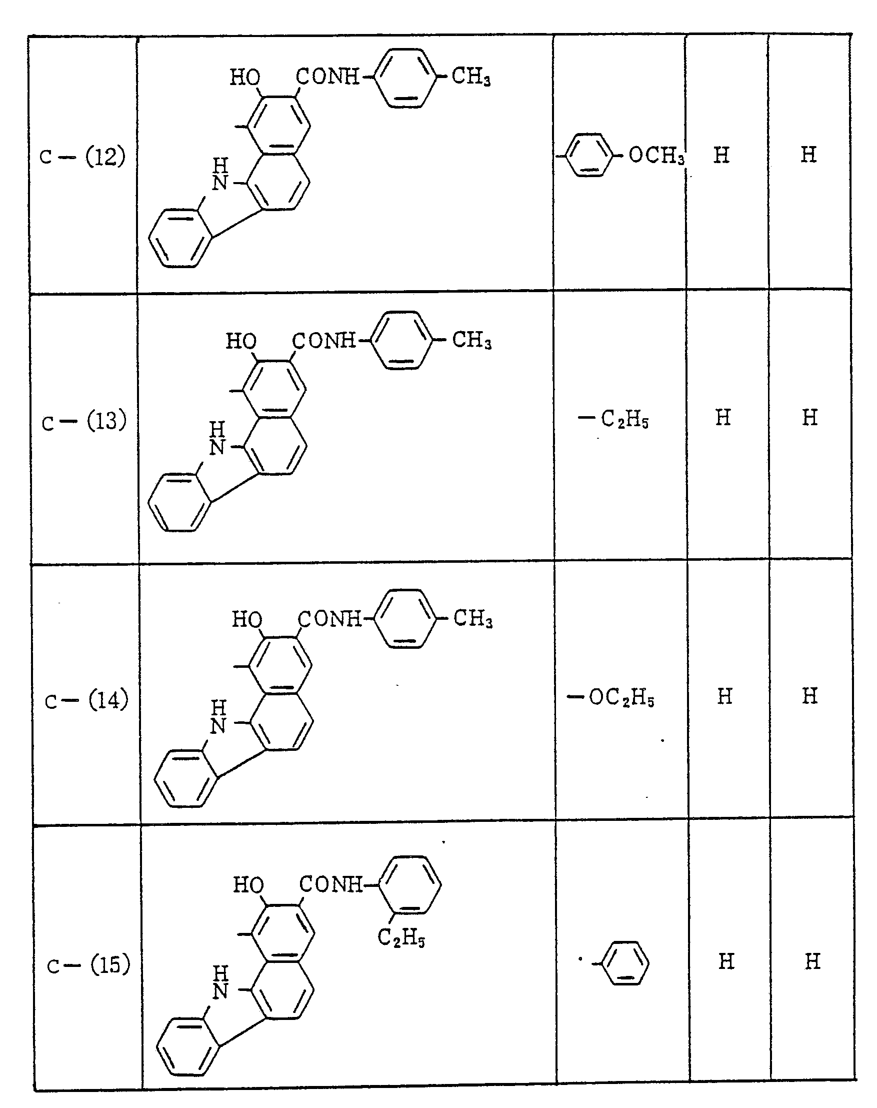

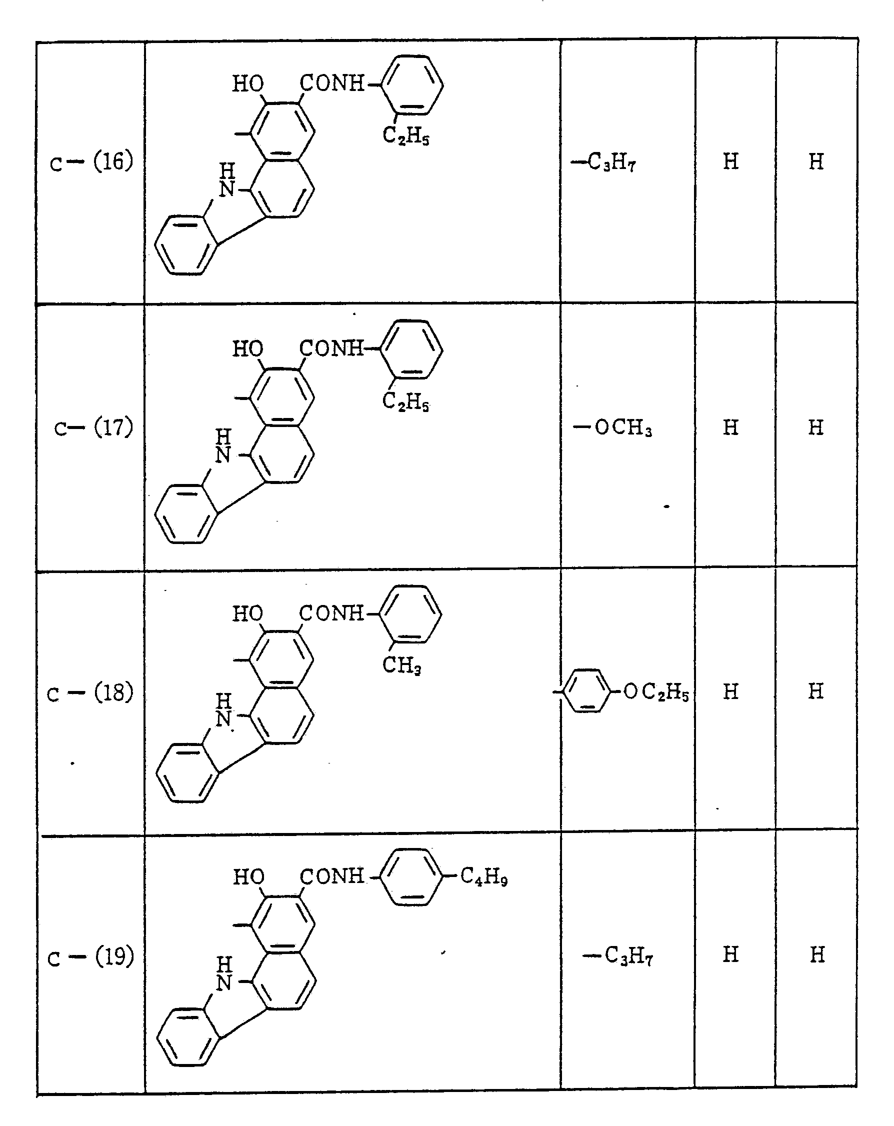

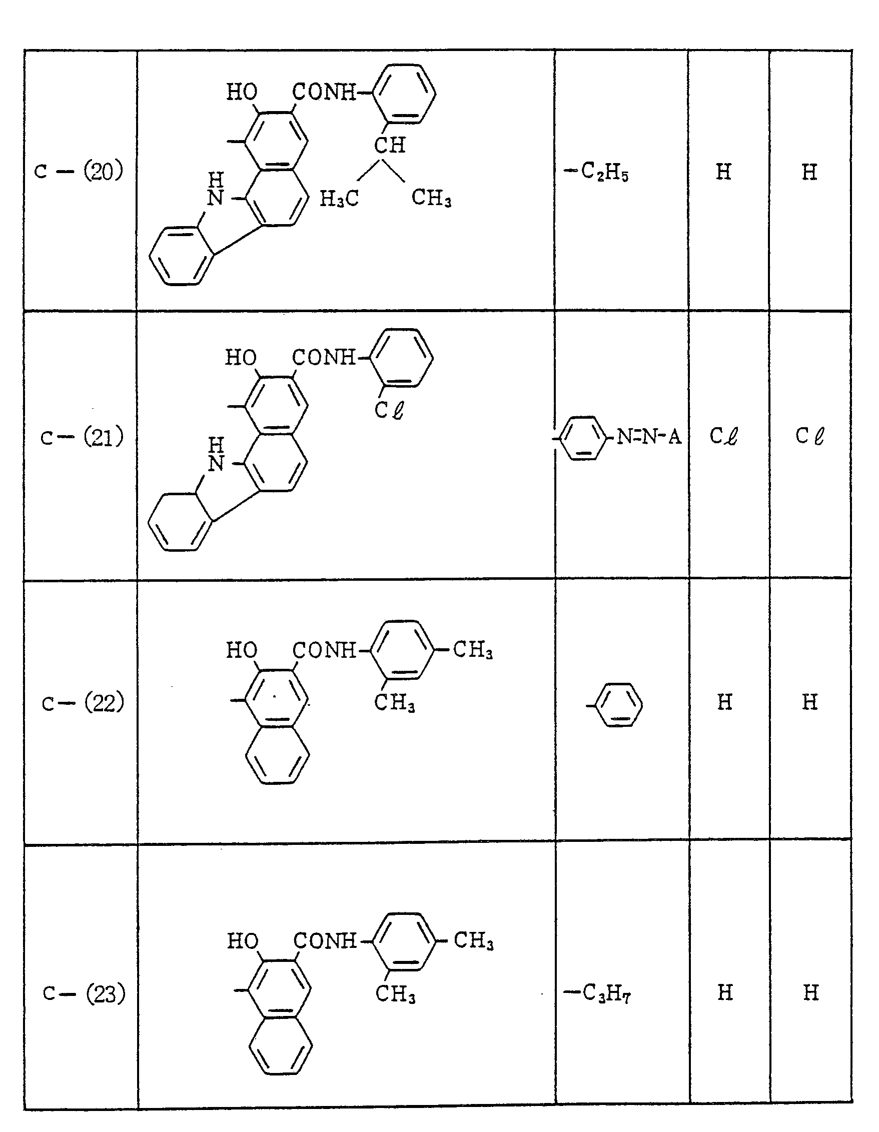

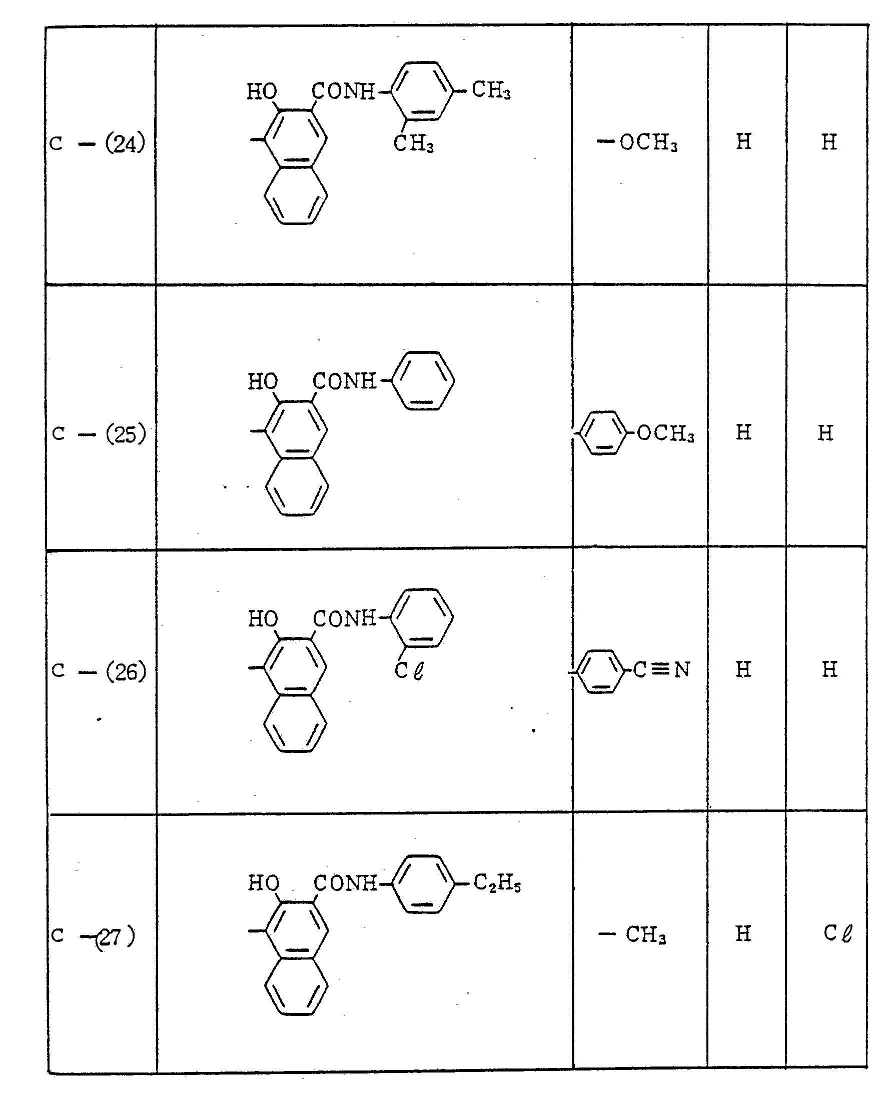

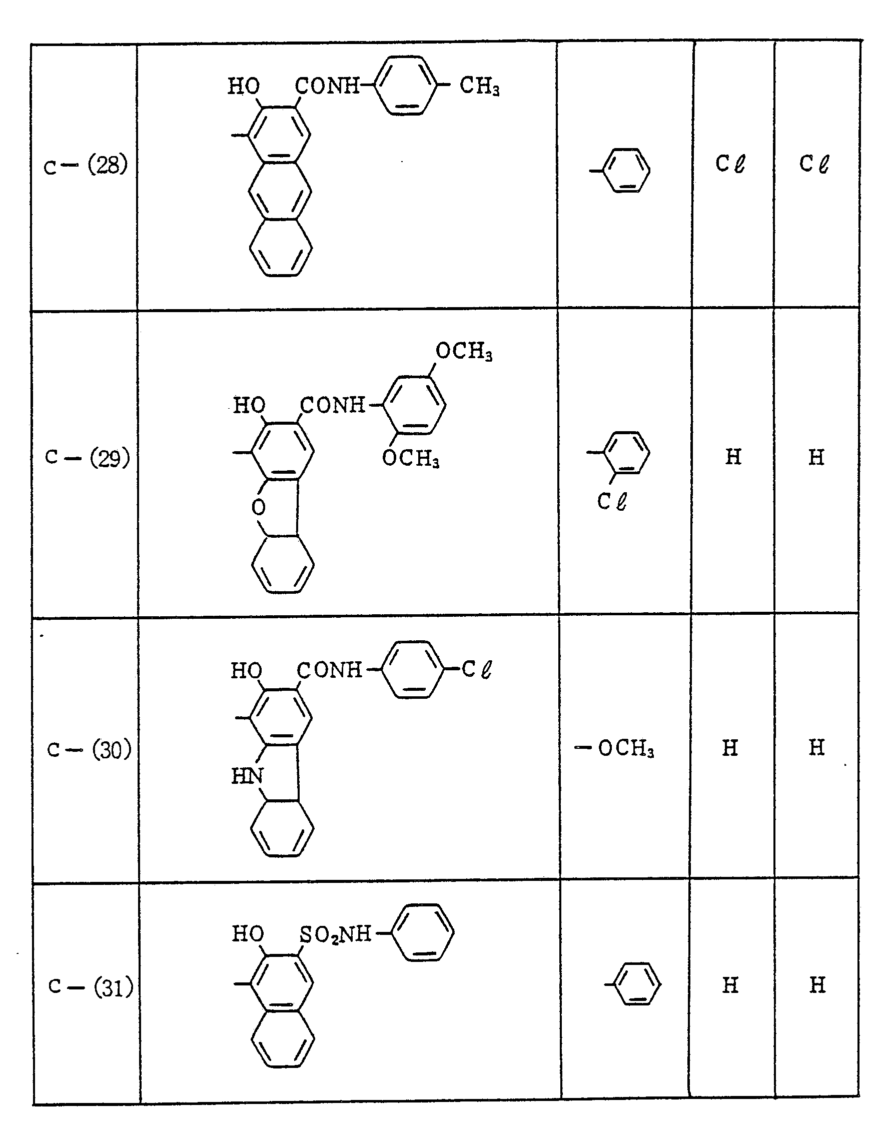

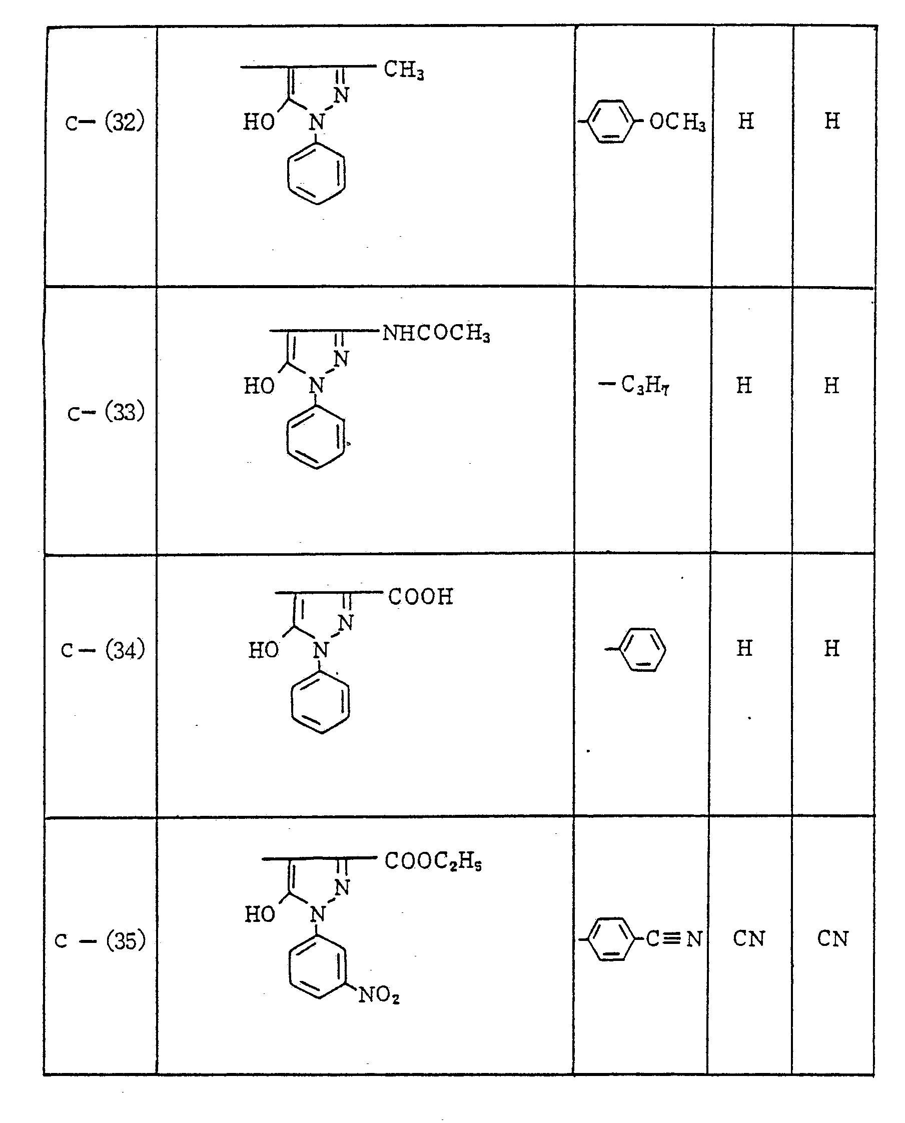

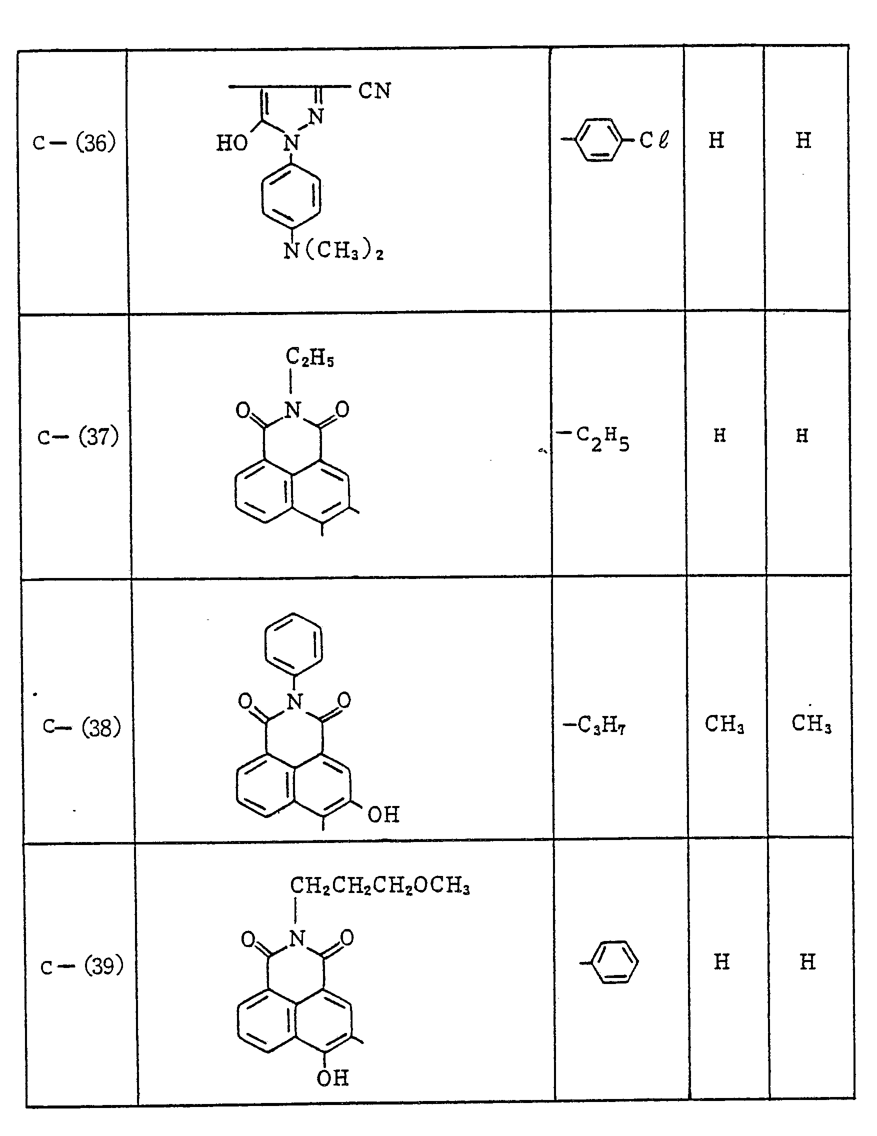

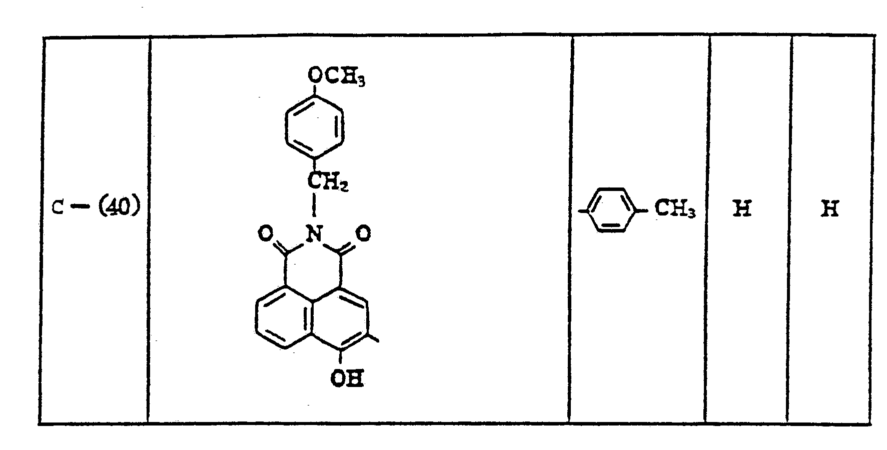

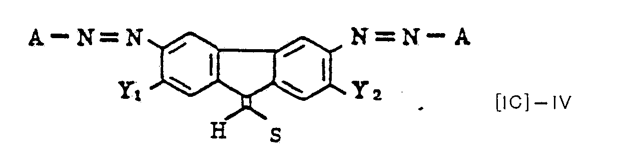

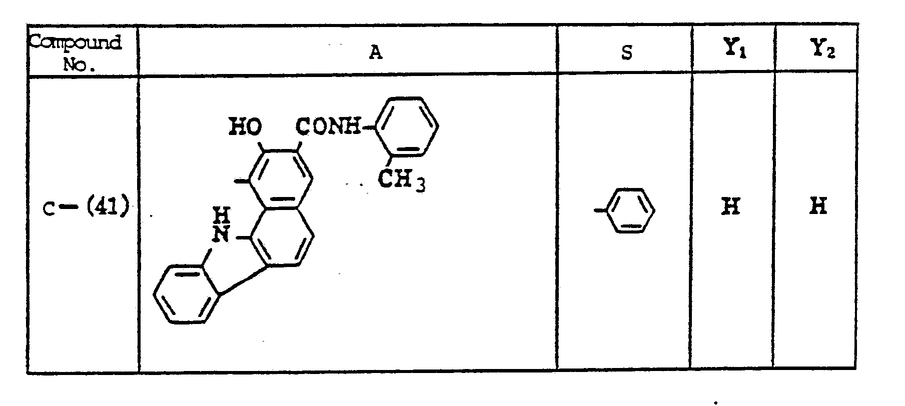

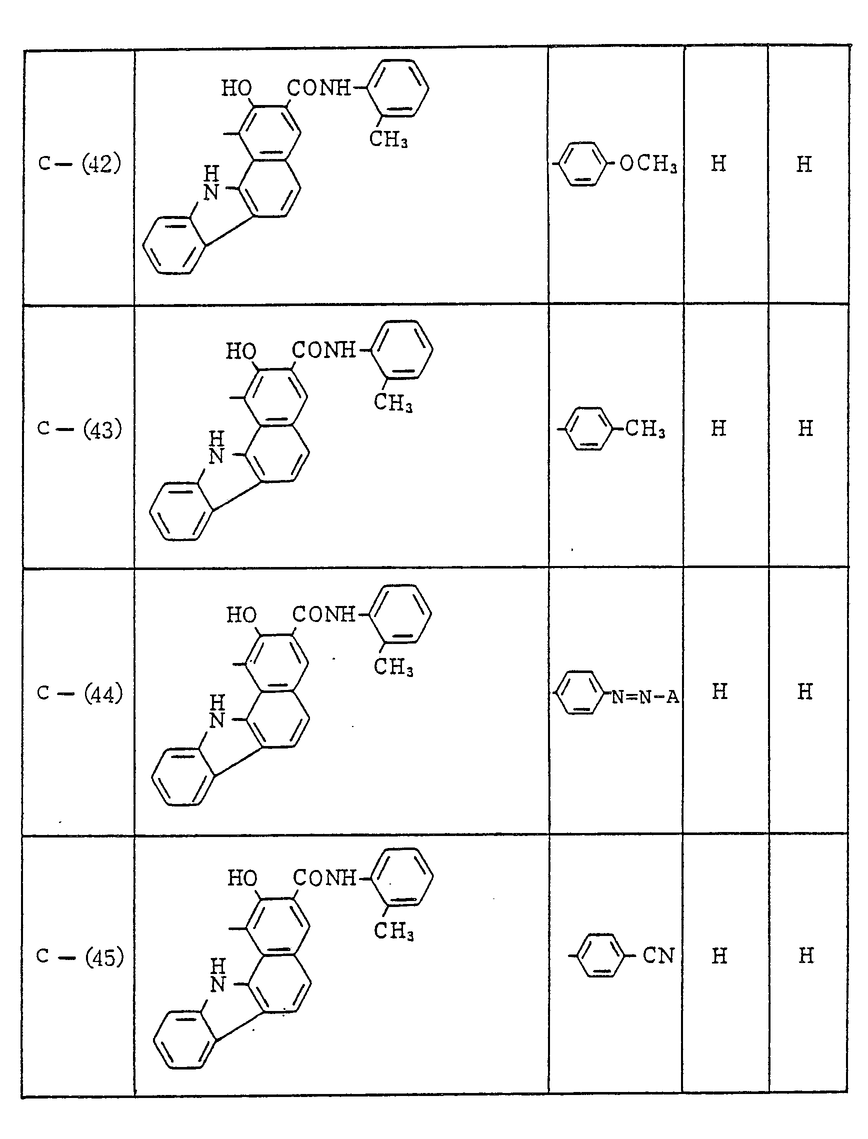

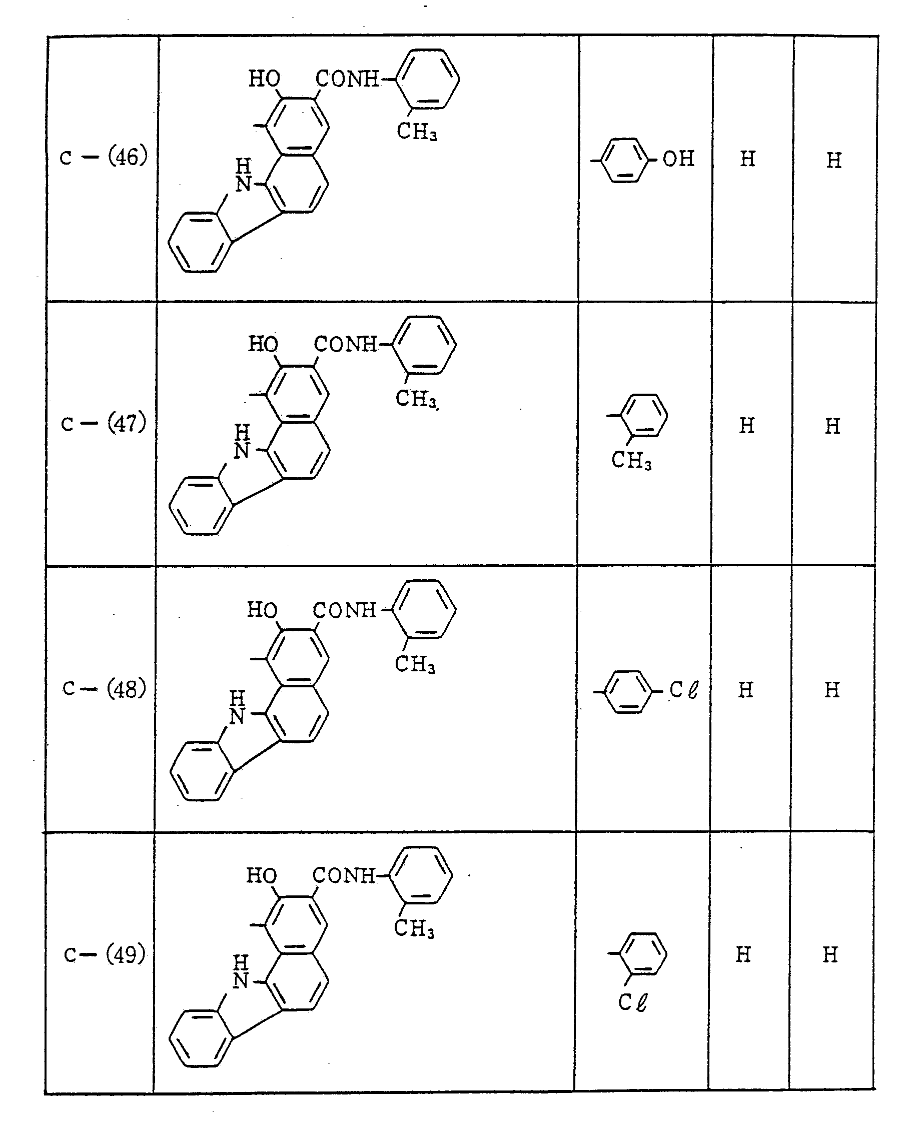

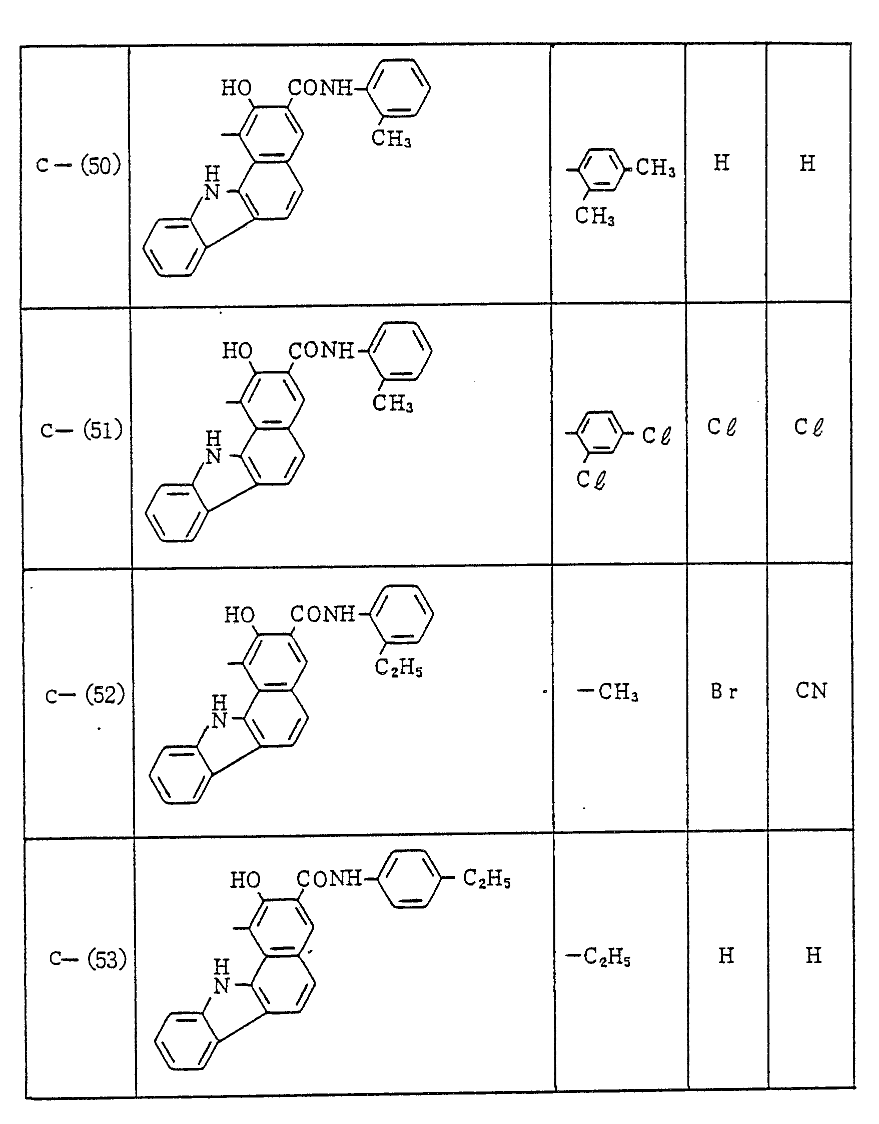

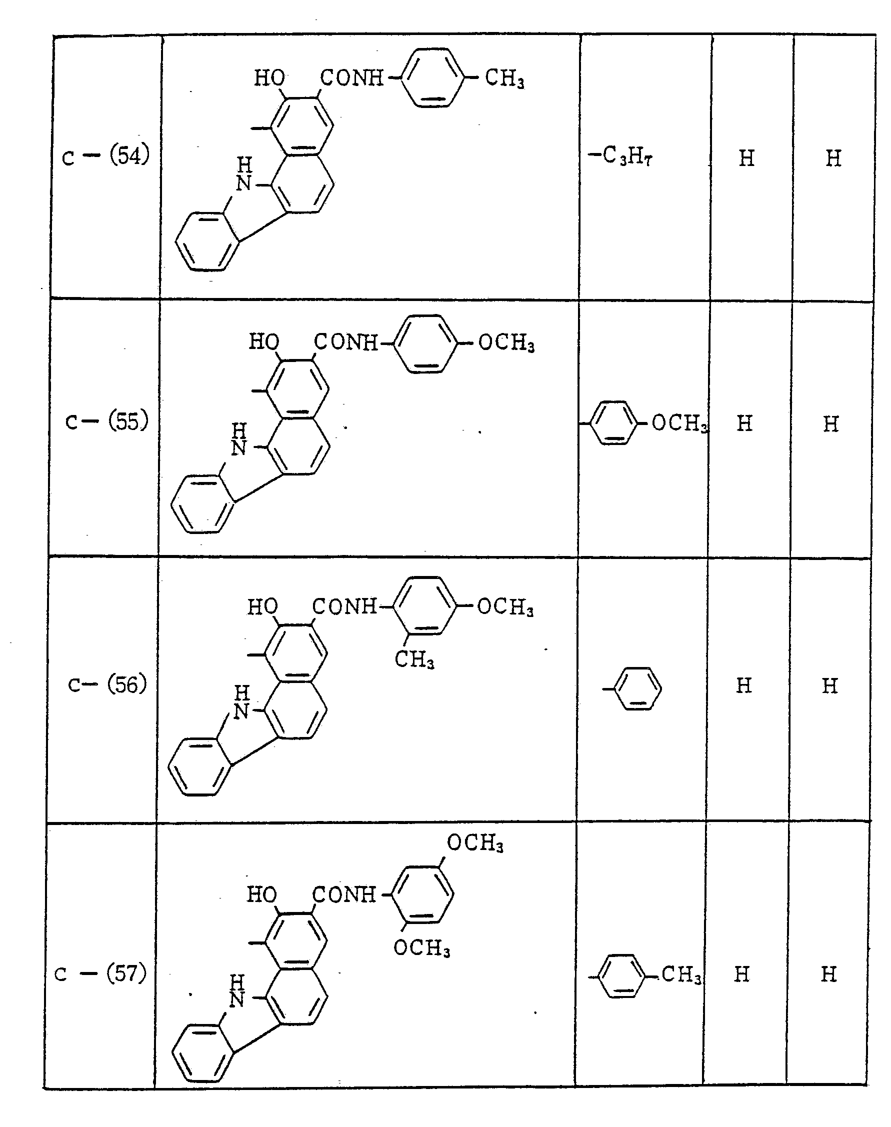

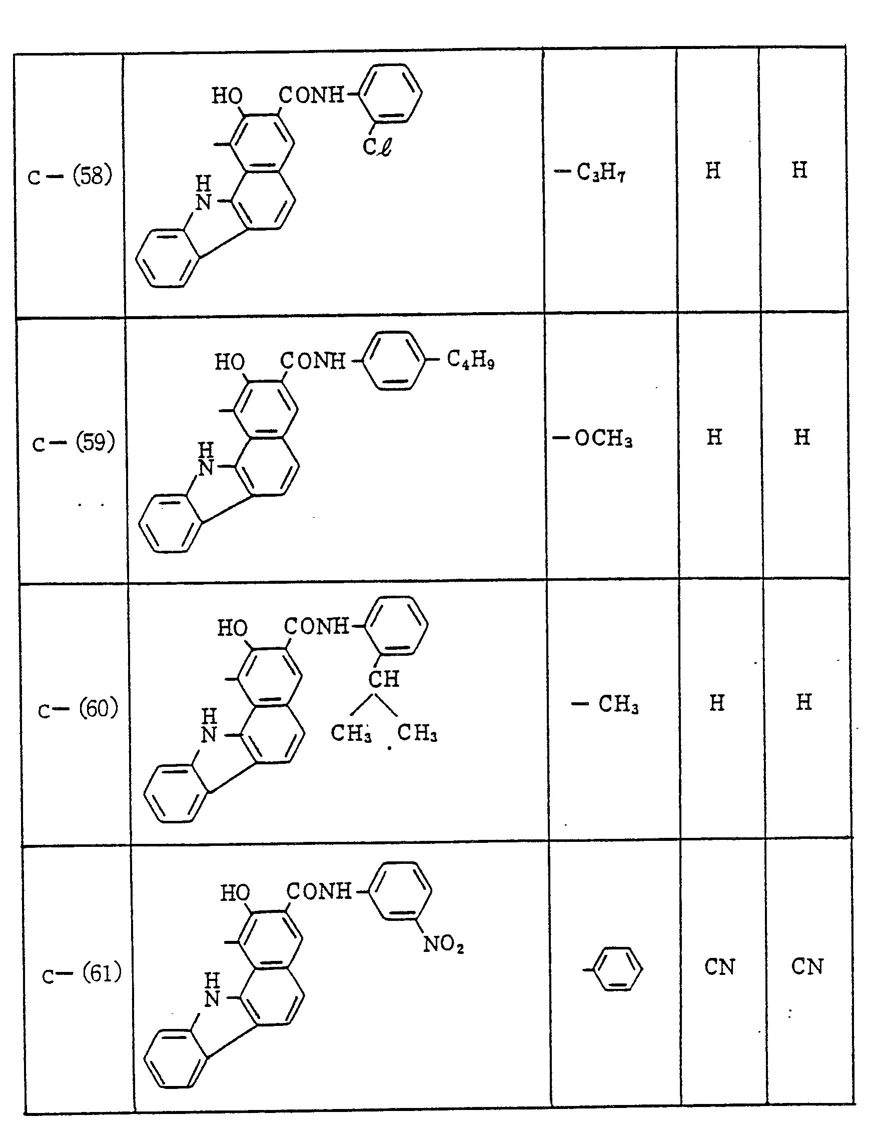

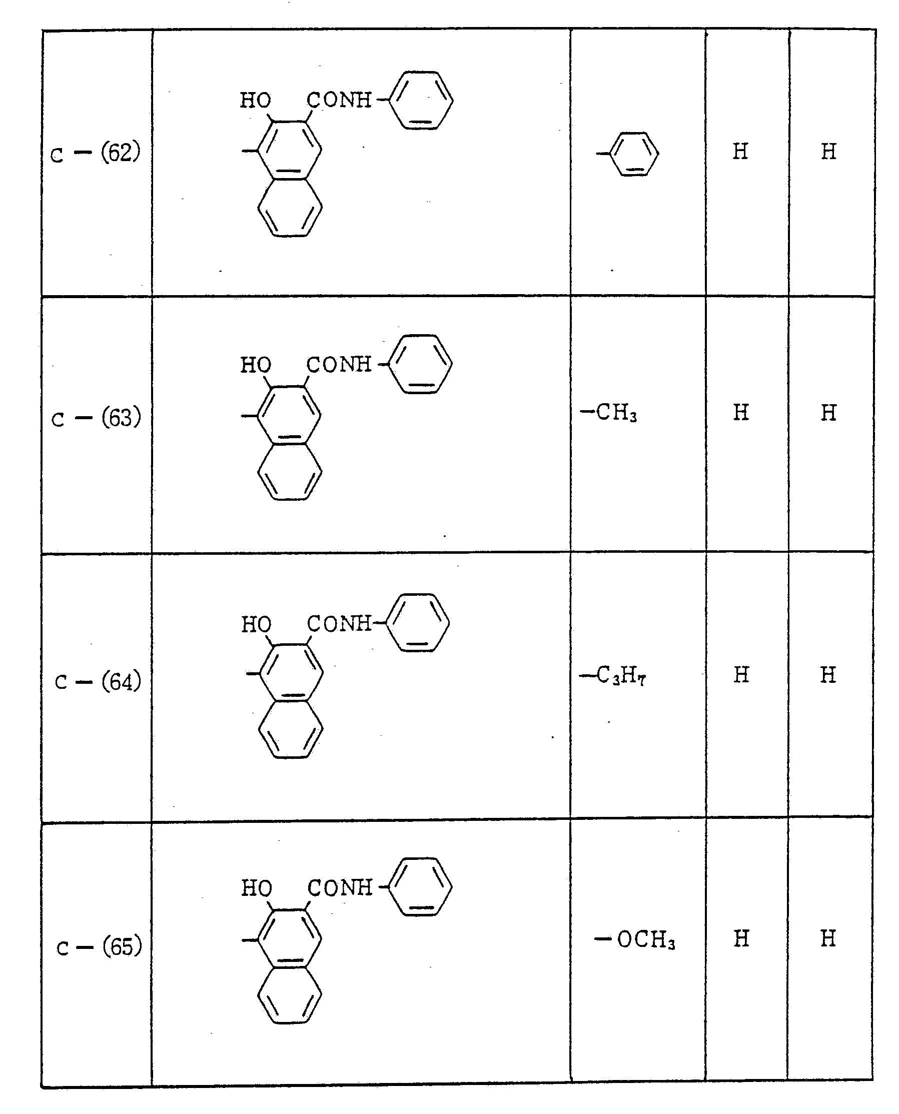

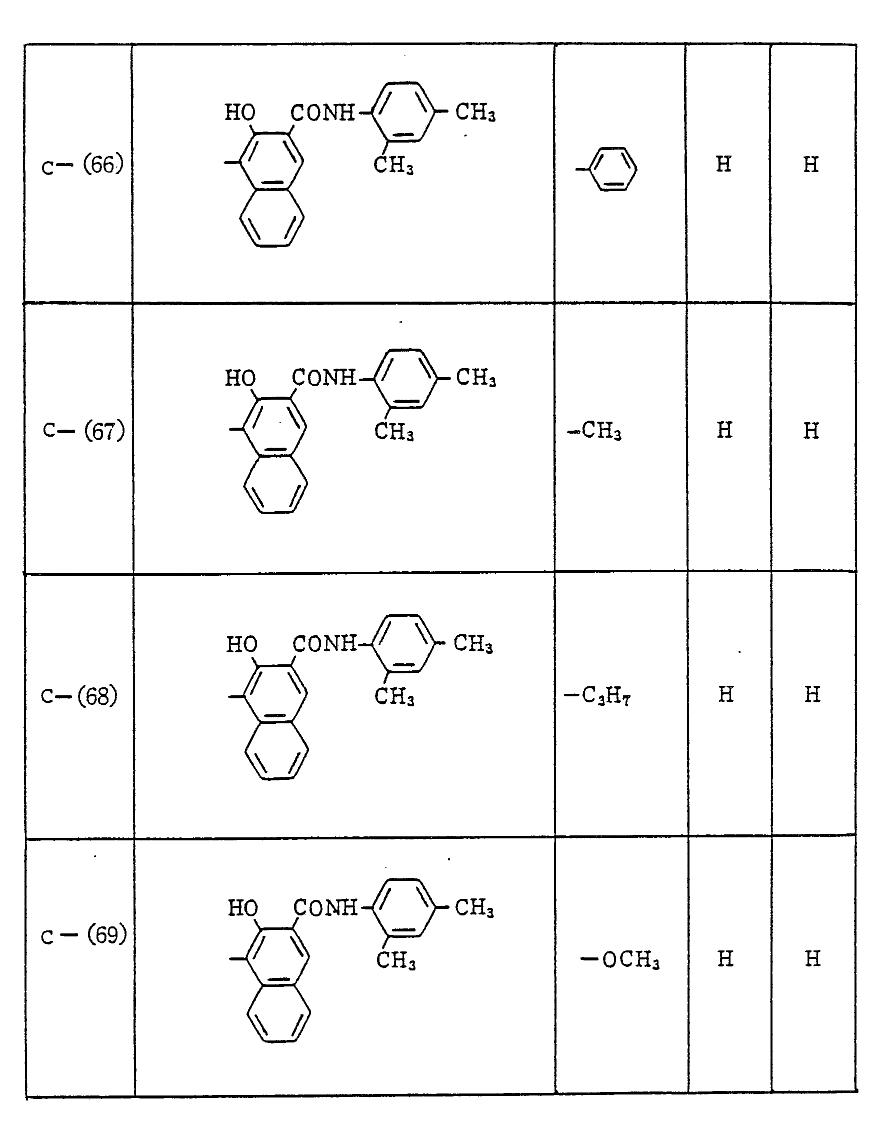

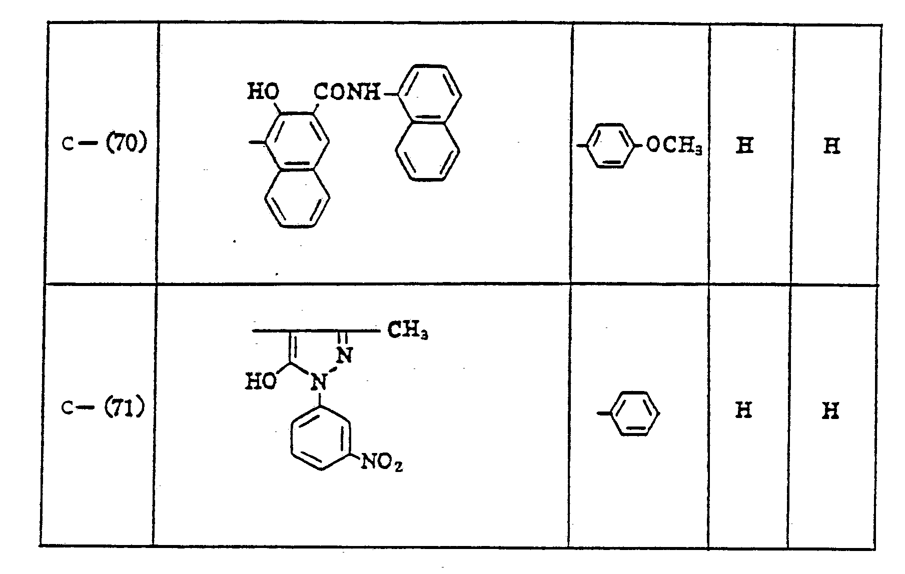

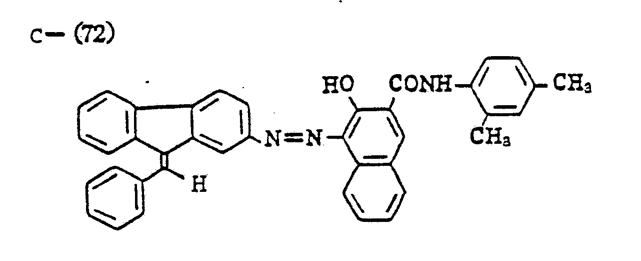

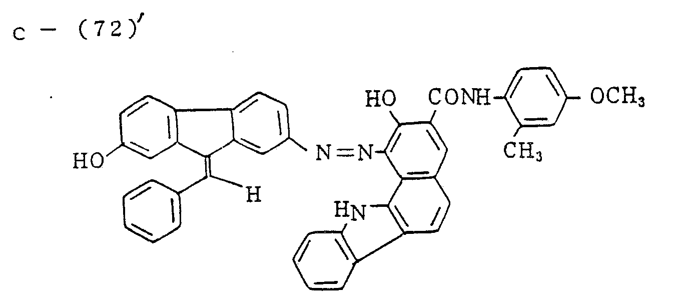

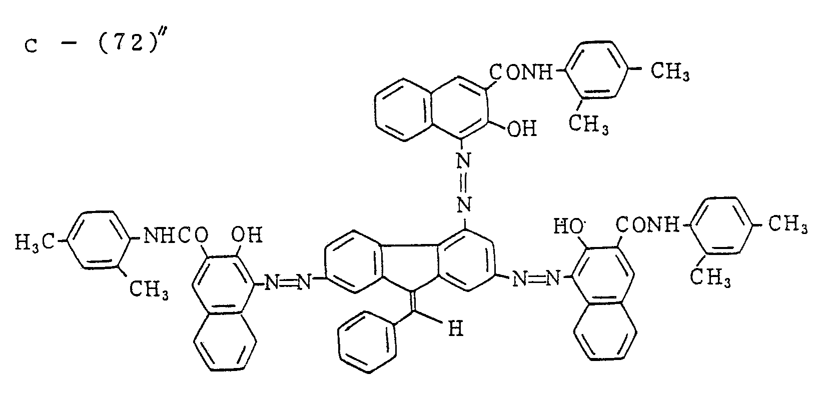

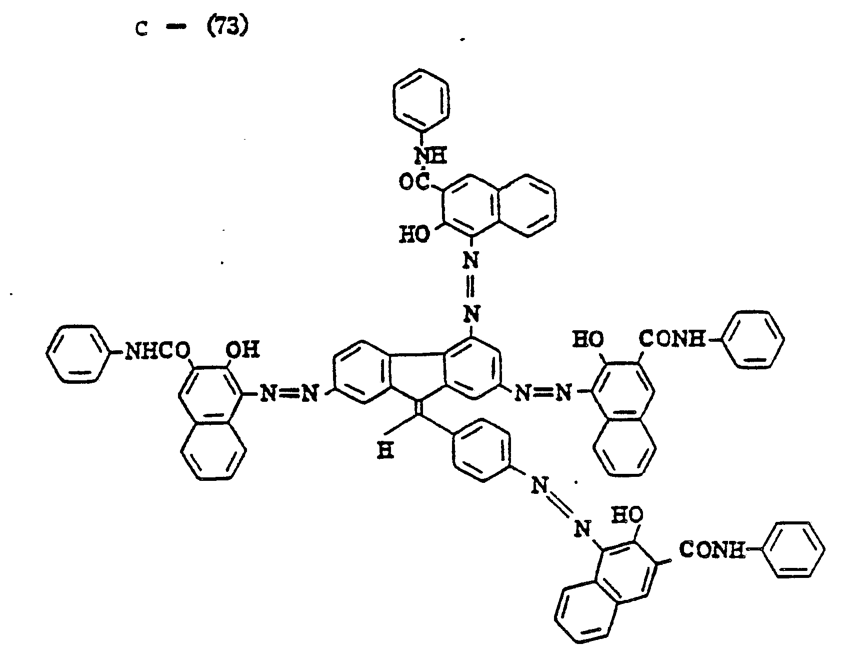

The azo compounds described above can be synthesized easily according to a known method. A typical example is shown below.

### Synthesis Example 3

### [Synthesis of compound of formula C―(1)]

The synthesis route is schematically shown below: 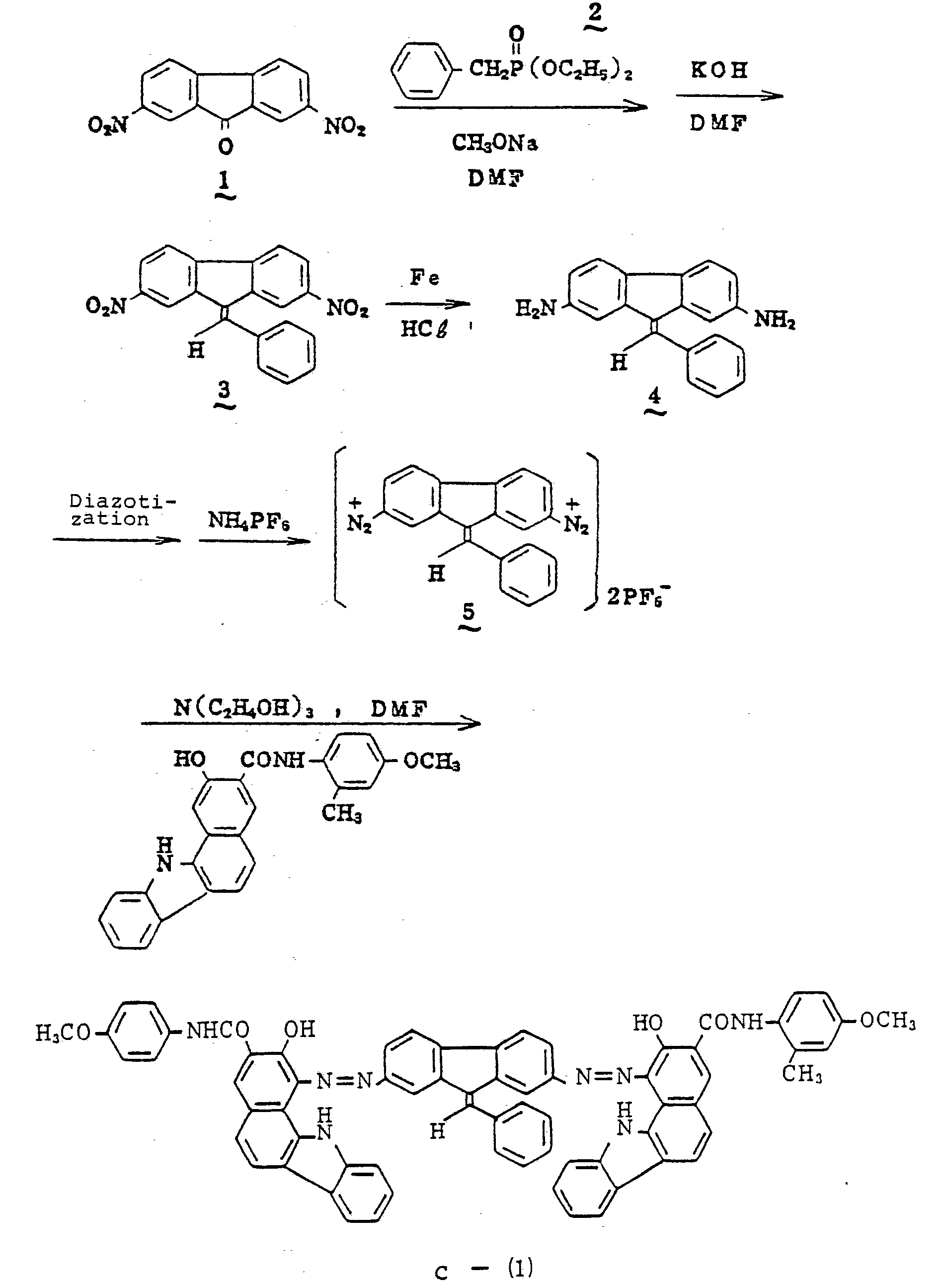 2,7-Dinitrofluorenone 1 (produced by Tokyo Kasei K.K.) was reacted with benzylcyanide 2 to prepare a dinitro derivative 3, which was then reduced with iron to form a diamino derivative 4. The diamino derivative 4 (28.4 g, 0.1 mole) was dispersed by adding it to a mixture of 1 liter of cone. HCI and 1 liter of water. A solution of 13.8 g (0.2 mole) of sodium nitrite dissolved in 1 liter of water was added dropwise at 5°C under ice-cooling. After completion of the addition, the reaction mixture was filtered, and 1 liter of an aqueous 50% ammonium hexafluorophosphate solution was added to the filtrate. The resultant precipitate was recovered by filtration, washed with water and thoroughly dried. The salt obtained was dissolved in 1.5 liters of N,N-dimethylformamide (DMF) to provide a tetrazonium salt solution to be used in the subsequent reaction.

As the next step, 79.3 g (0.2 mole) of 2-hydroxy-3-(4-methoxy-2-methylphenylcarbamoyl)-benzo[a]carbazole (Naphthol AS-SR, produced by Hoechst AG) and 60 g of triethanolamine were dissolved in 4 liters of N,N-dimethylformamide, and the tetrazonium salt solution prepared above was added dropwise under ice-cooling to the resultant solution, followed further by stirring for 2 hours to allow the reaction to proceed. The crystals formed were recovered by filtration, and they were washed twice with 5 liters of N,N-dimethylformamide and twice with 5 liters of acetone, followed by drying, to obtain 27.5 g of the desired bisazo compound C-(1) (Yield: 25%). From the analytical results of m.p. 300°C or higher, FD-MS spectrum which indicates a peak of M⁺ at m/Z 1099, and the elemental analysis of C=76.28%, N=10.00%, H=6.50% (Calcd. values, C=76.48%, N=10.20%, H=4.59%), it was confirmed that the desired substance was synthesized.

### Embodiment D

The compound may be of formula [ID]: 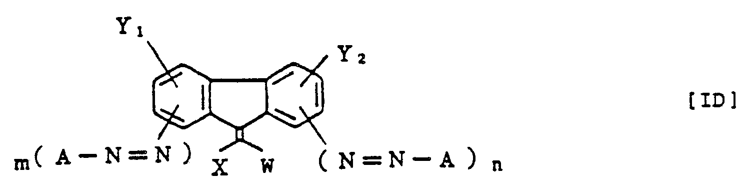 wherein X is a halogen atom; W is a halogen atom, a hydrogen atom, an alkyl group, an unsubstituted or substituted phenyl group, an alkoxy group, an ester group, an acyl group, an acetylamido group, an alkylsulfone group or a vinyl group; and Y,, Y₂, m, n and A are as defined in formula [I].

In formula [ID], X preferably represents fluorine, chlorine, bromine or iodine, W preferably represents fluorine, chlorine, bromine or iodine, a hydrogen atom, an alkyl group having 1 to 5 atoms, an alkoxy group, unsubstituted or substituted phenyl group, an ester group, an acyl group, an acetylamido group, an alkylsulfone group or a vinyl group. Other symbols are as described in detail for the compound of formula [IA].

Preferred compounds having good sensitivity and stability to heat and light are of formula [ID]―II: 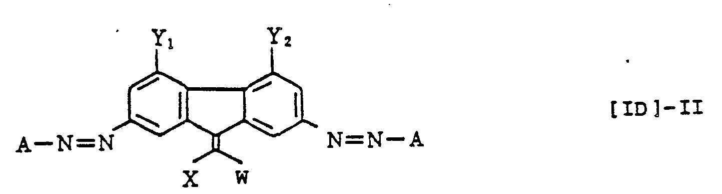 wherein X, W, Y_{I}, Y₂ and A are as defined in formula [ID]:

Examples of useful azo compounds of formula [ID] include, for example, those of formula:

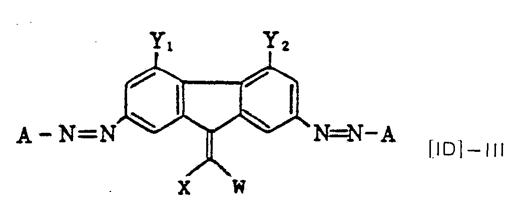

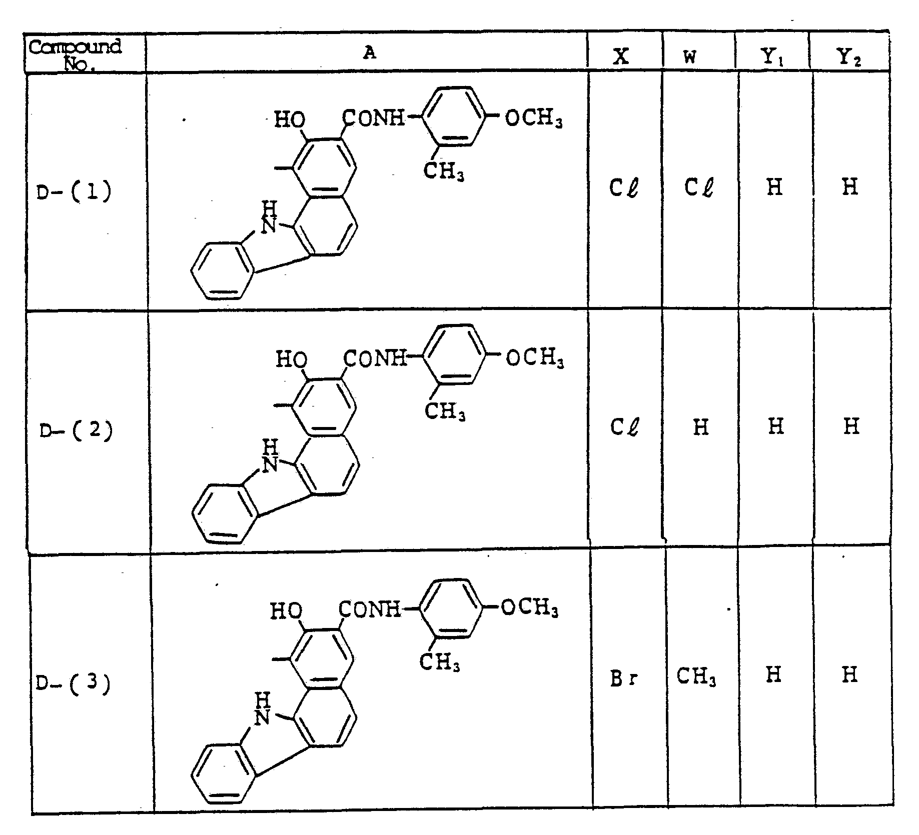

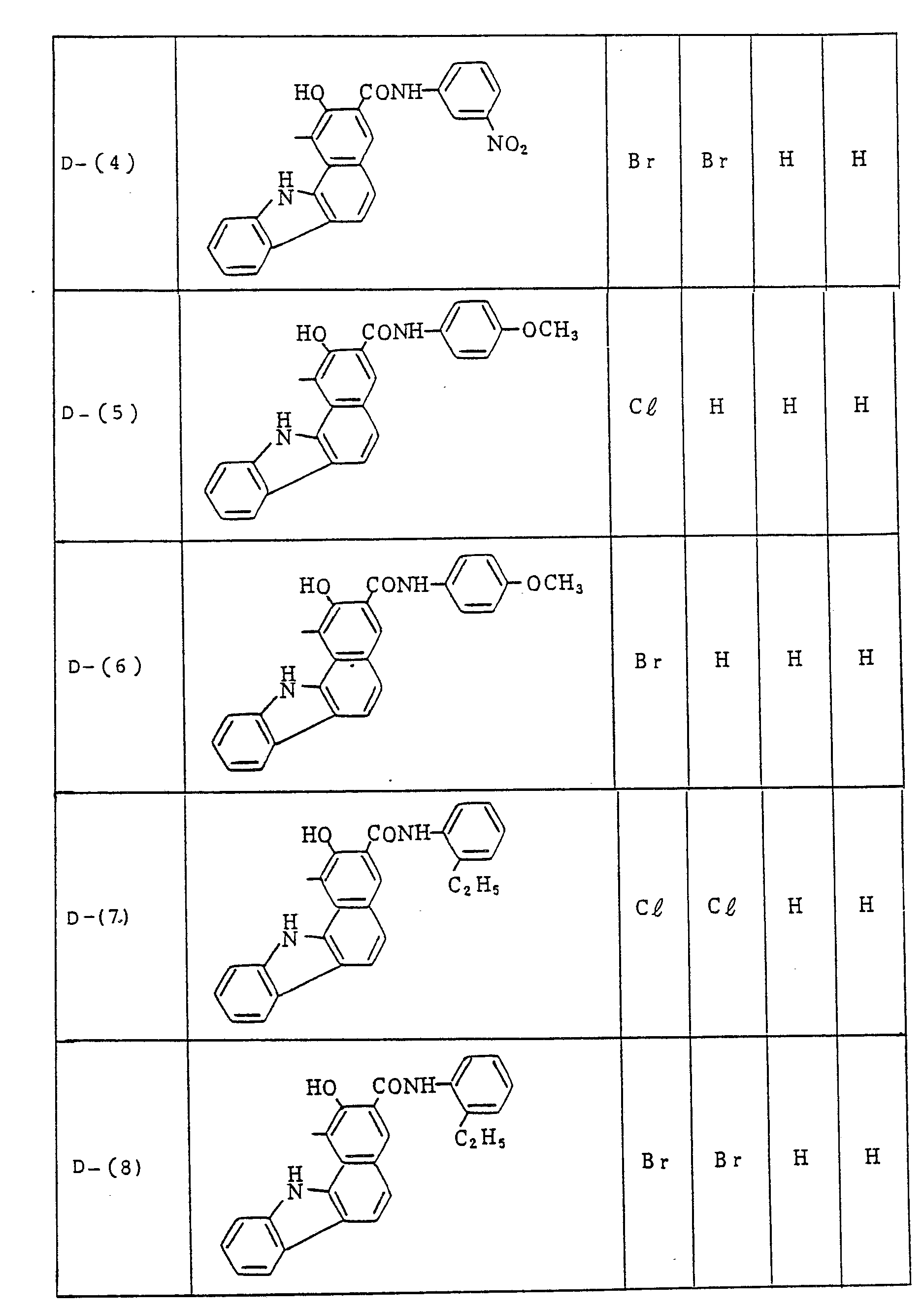

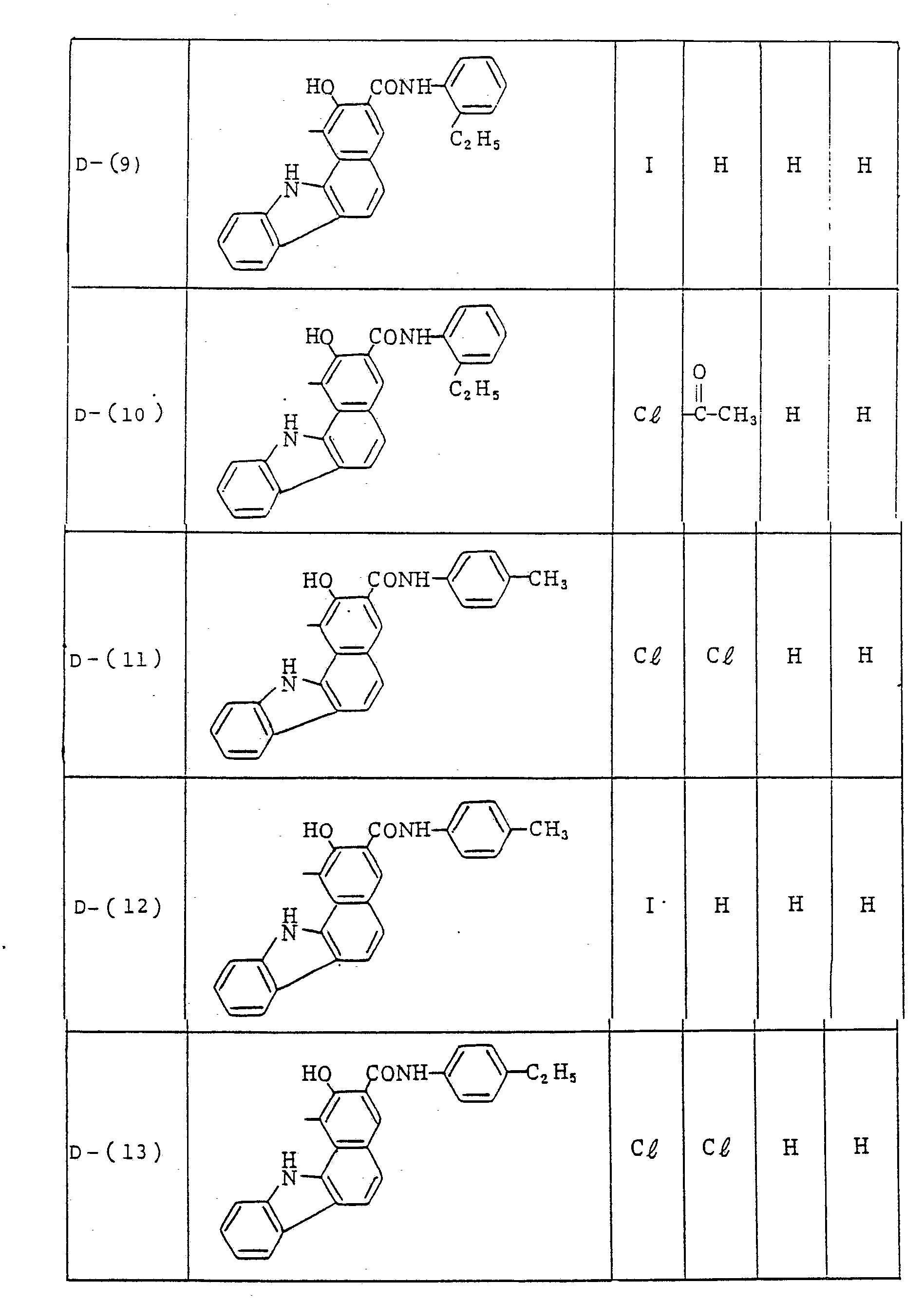

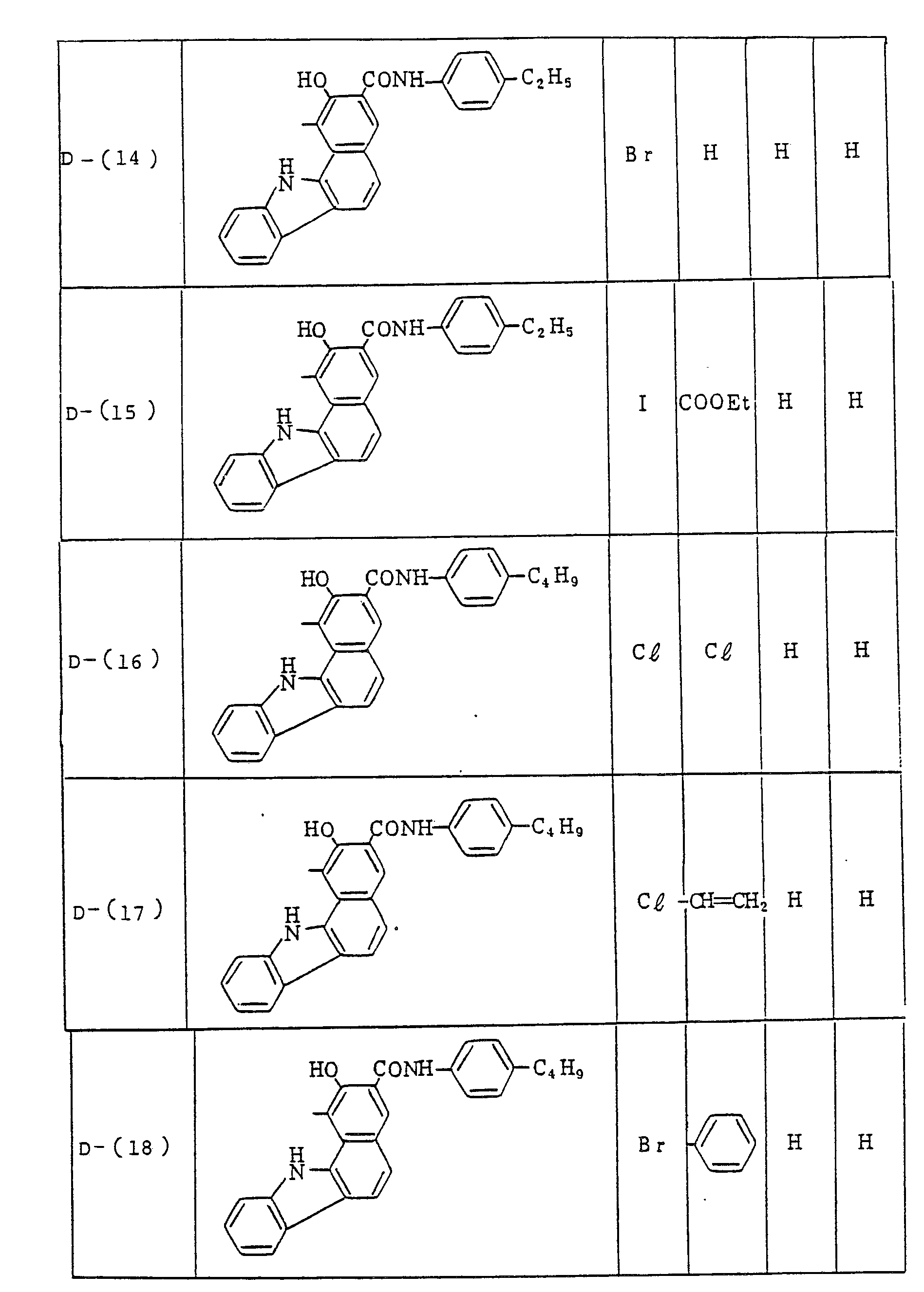

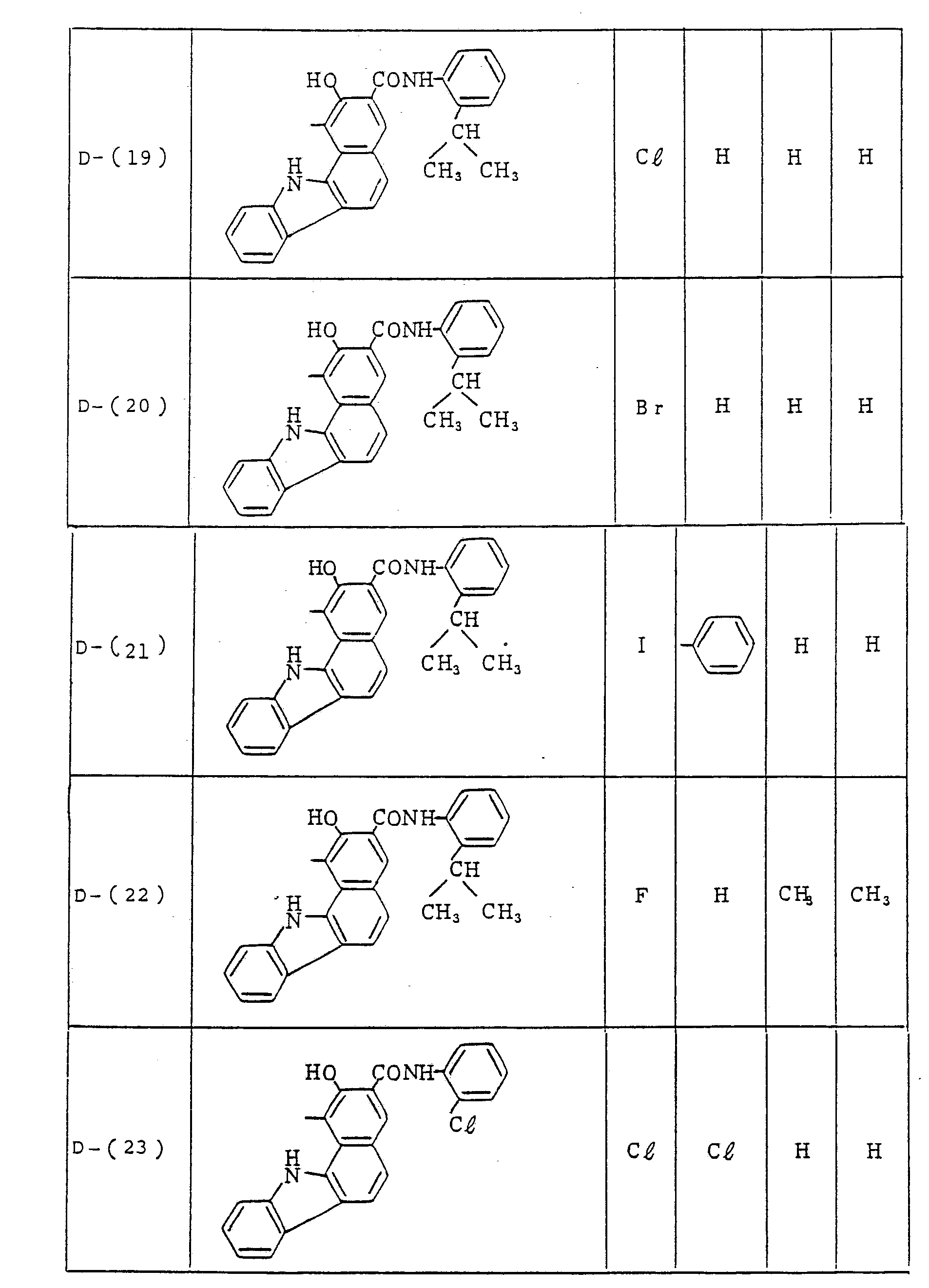

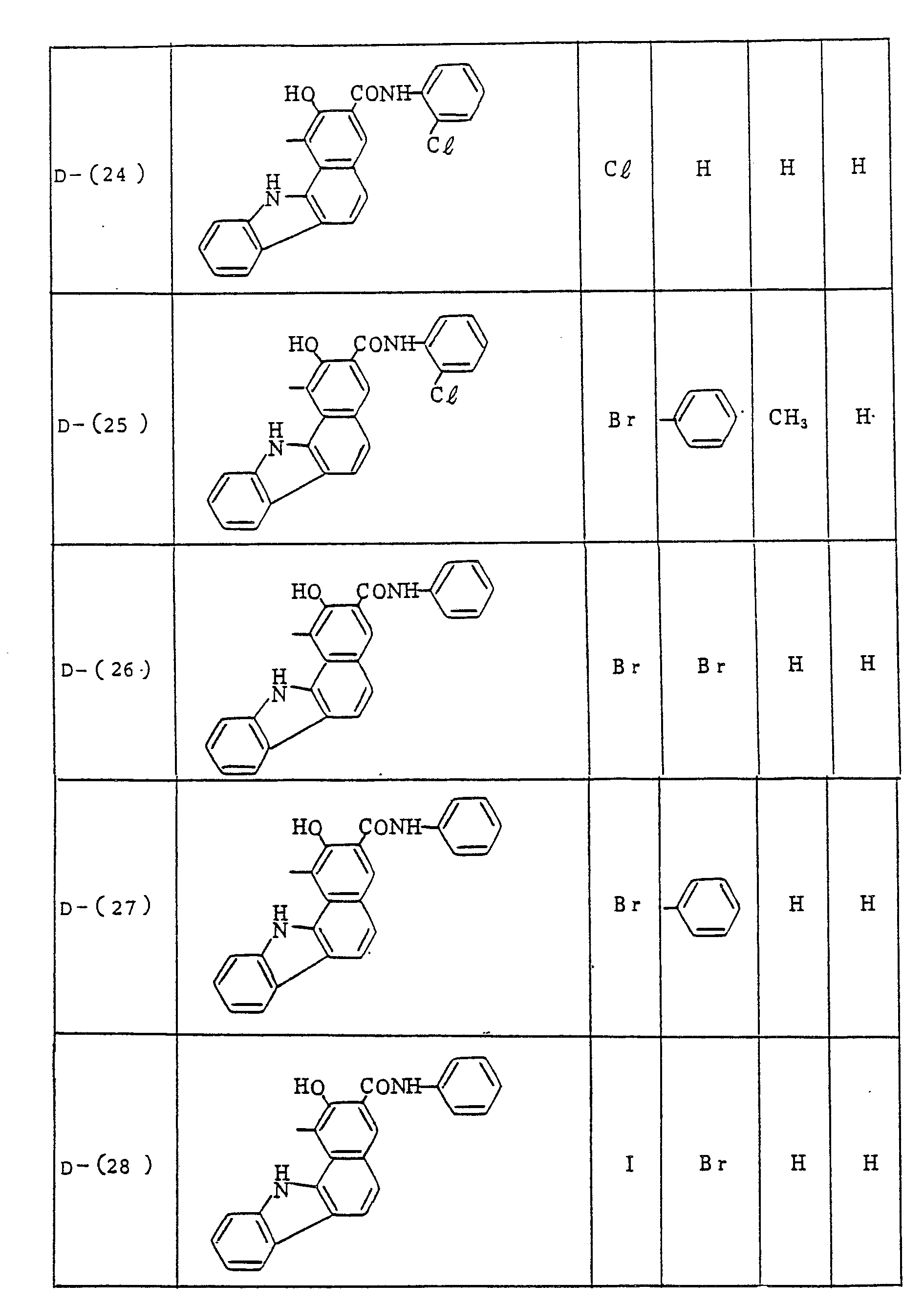

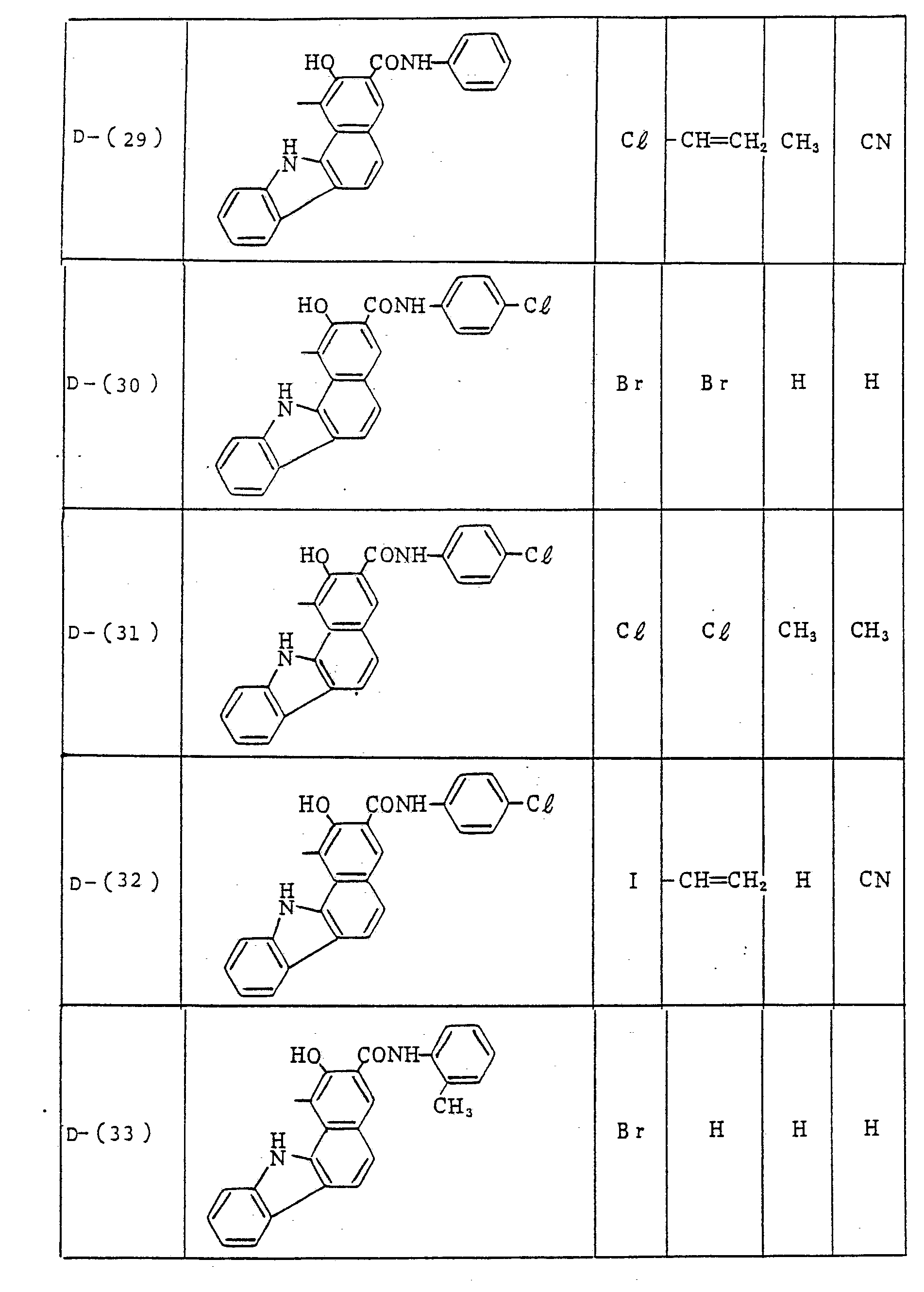

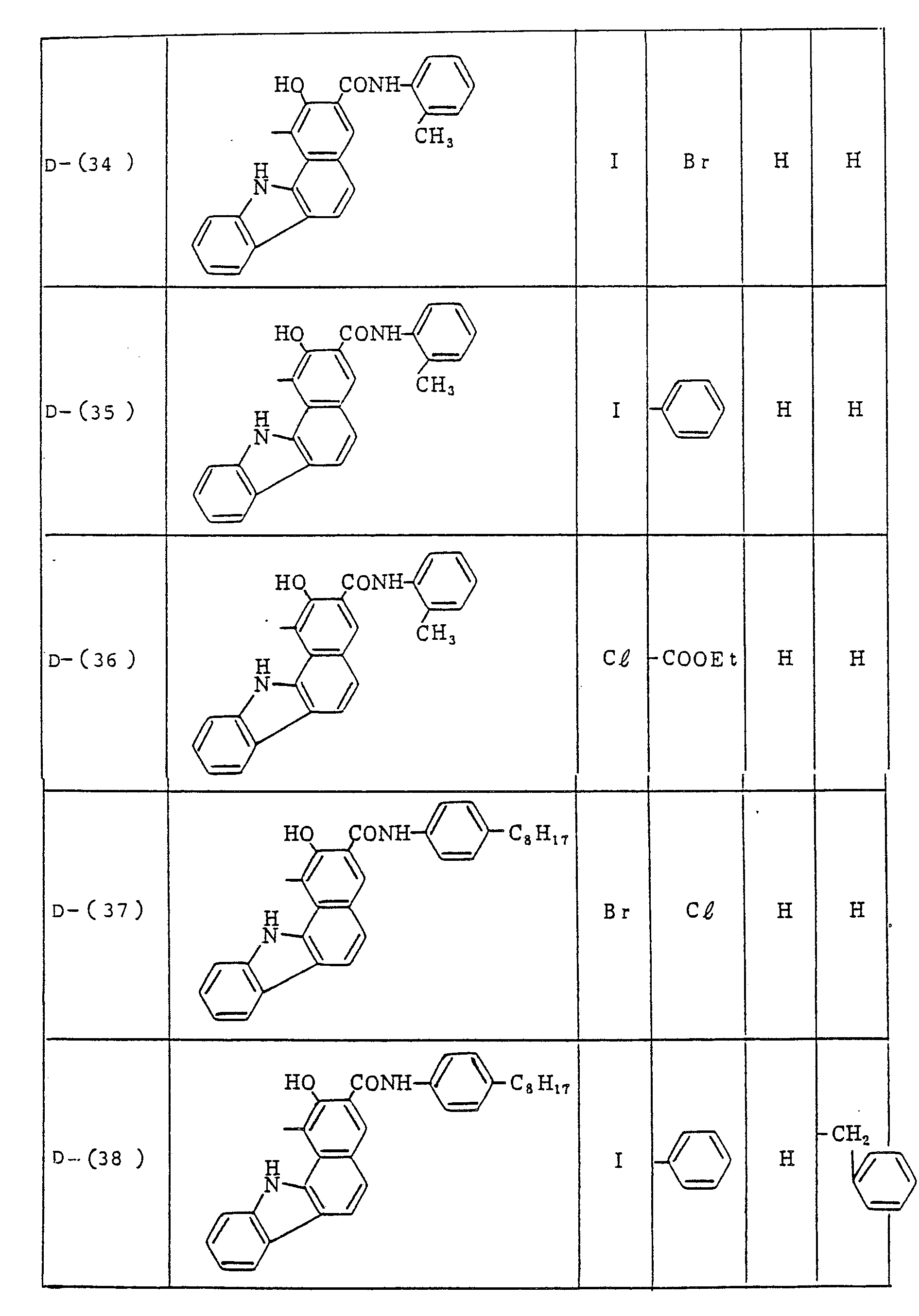

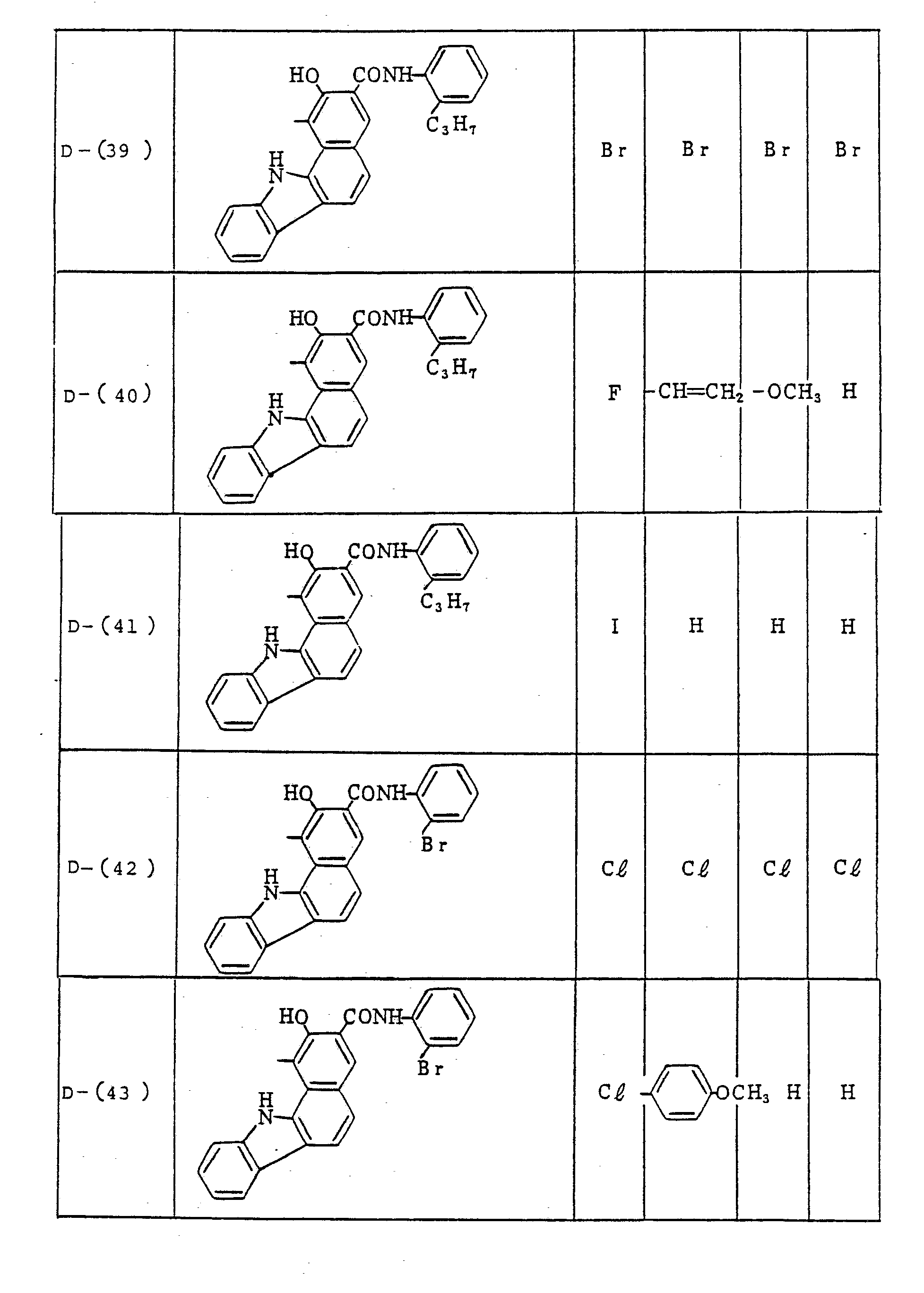

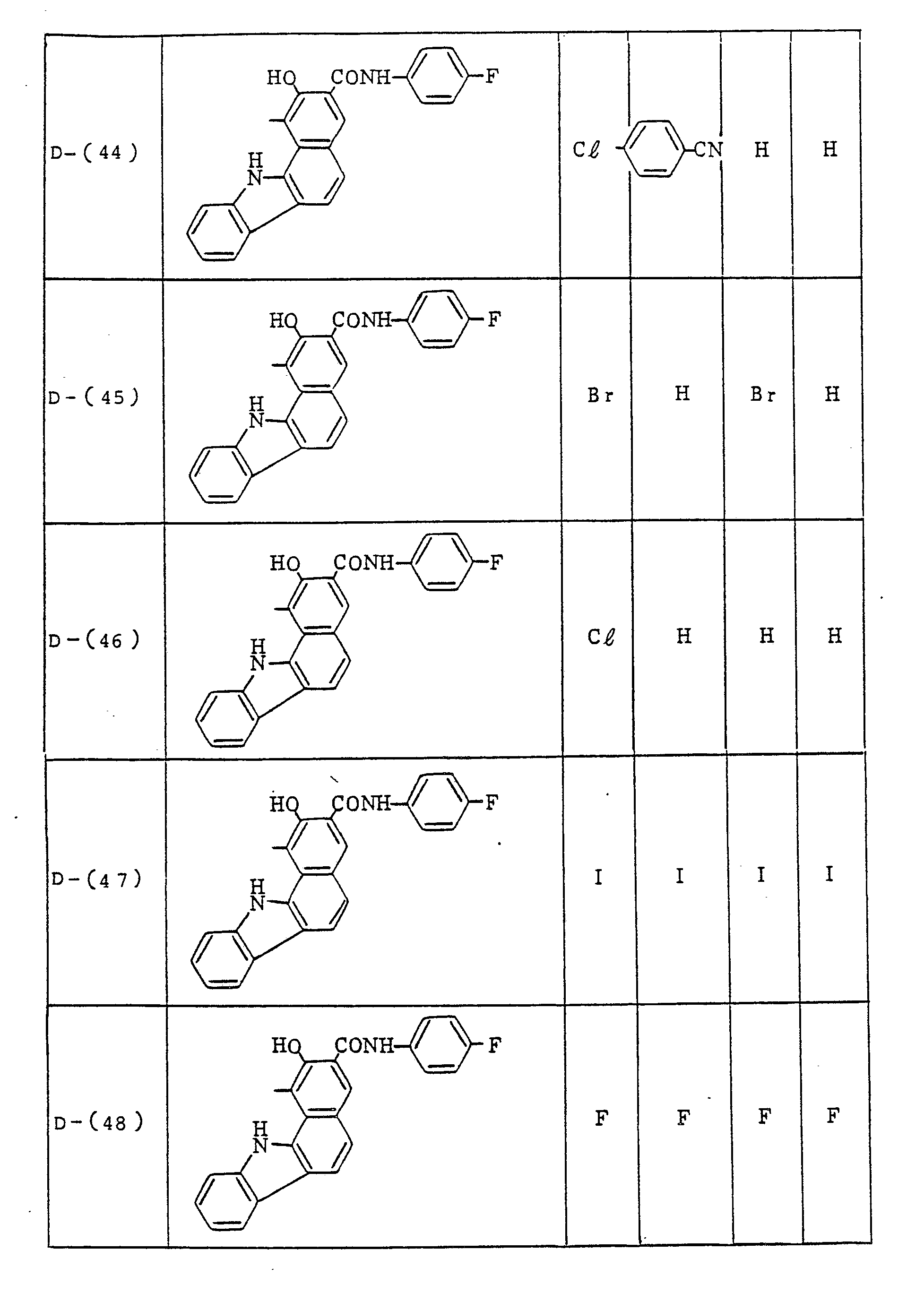

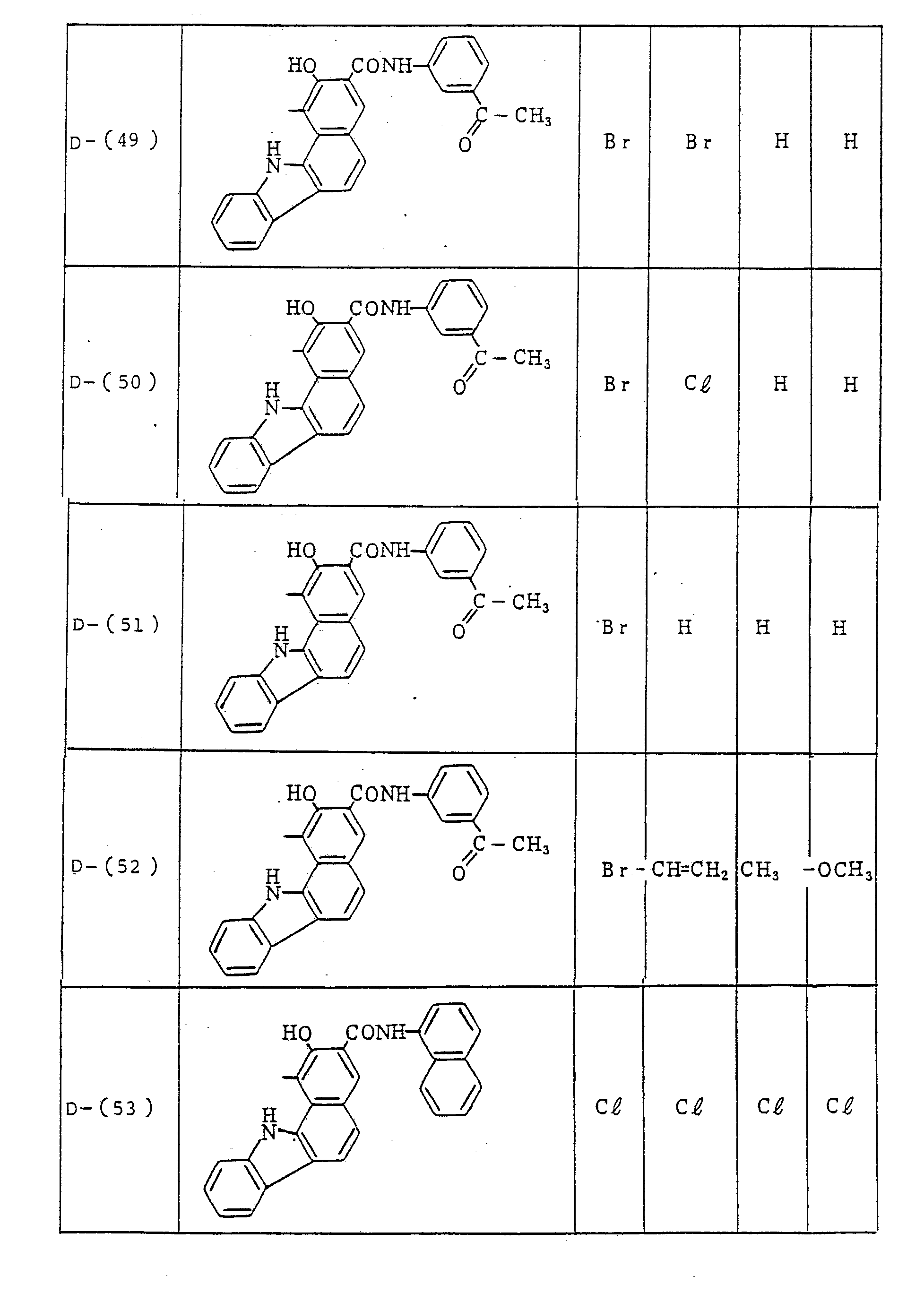

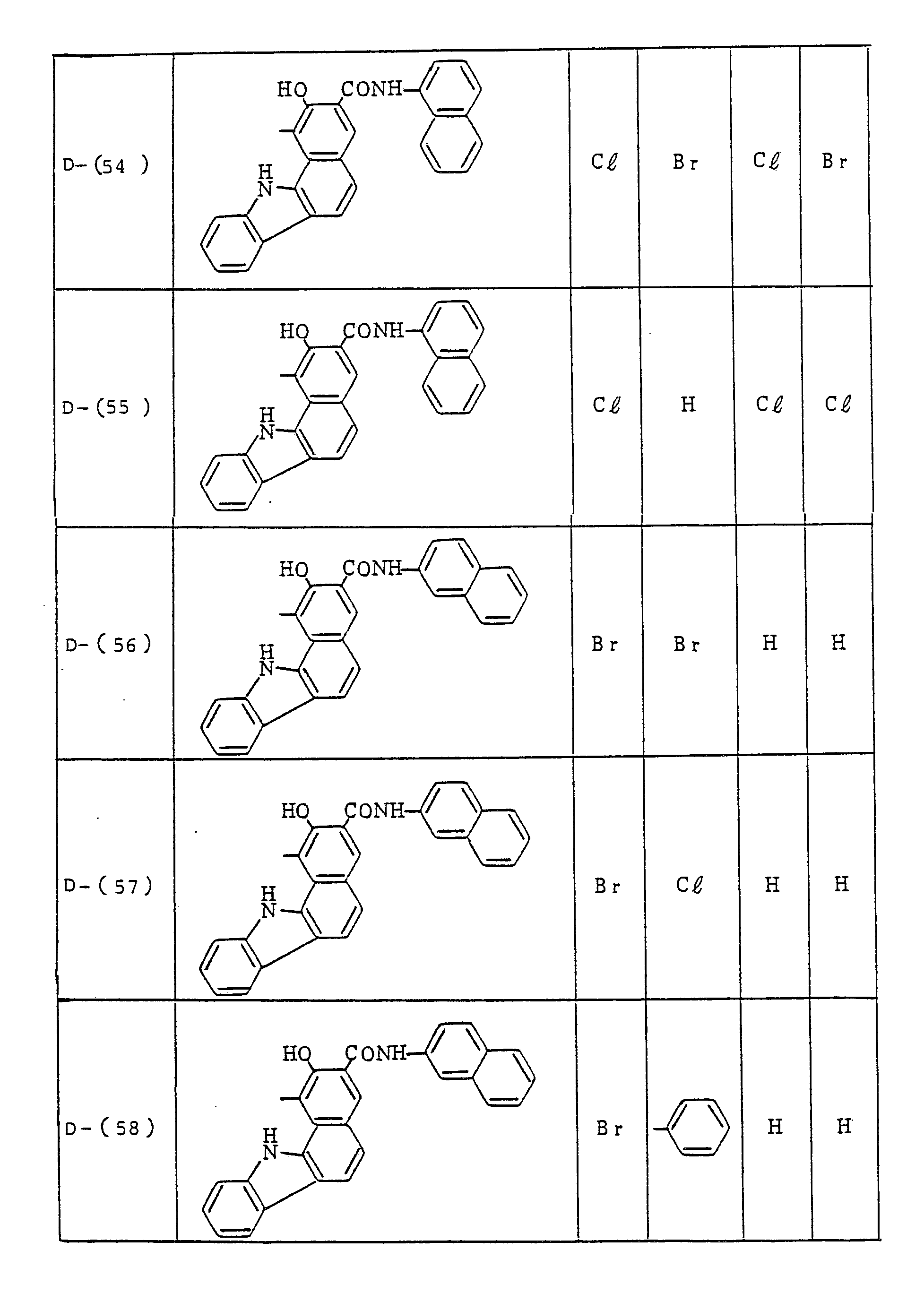

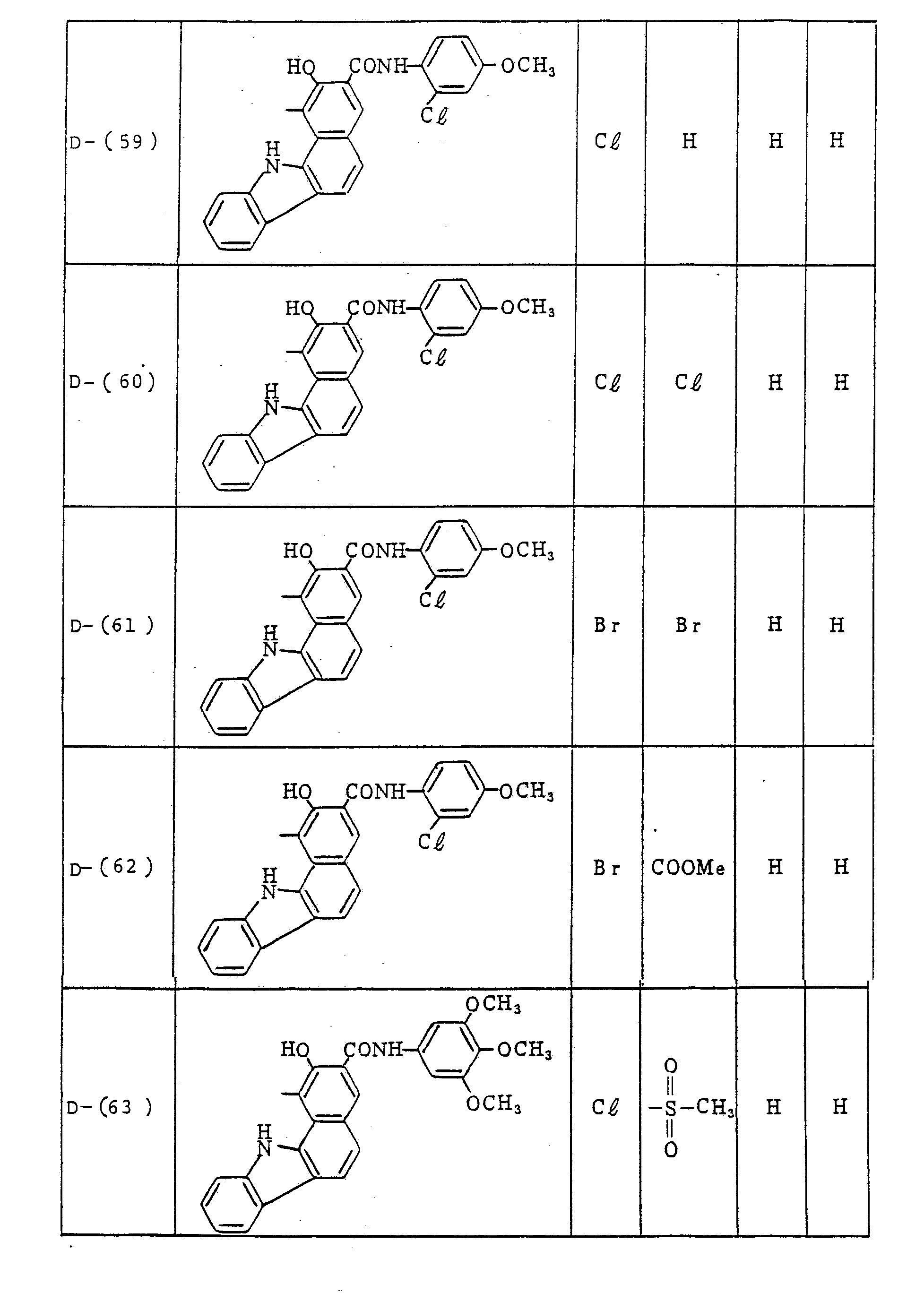

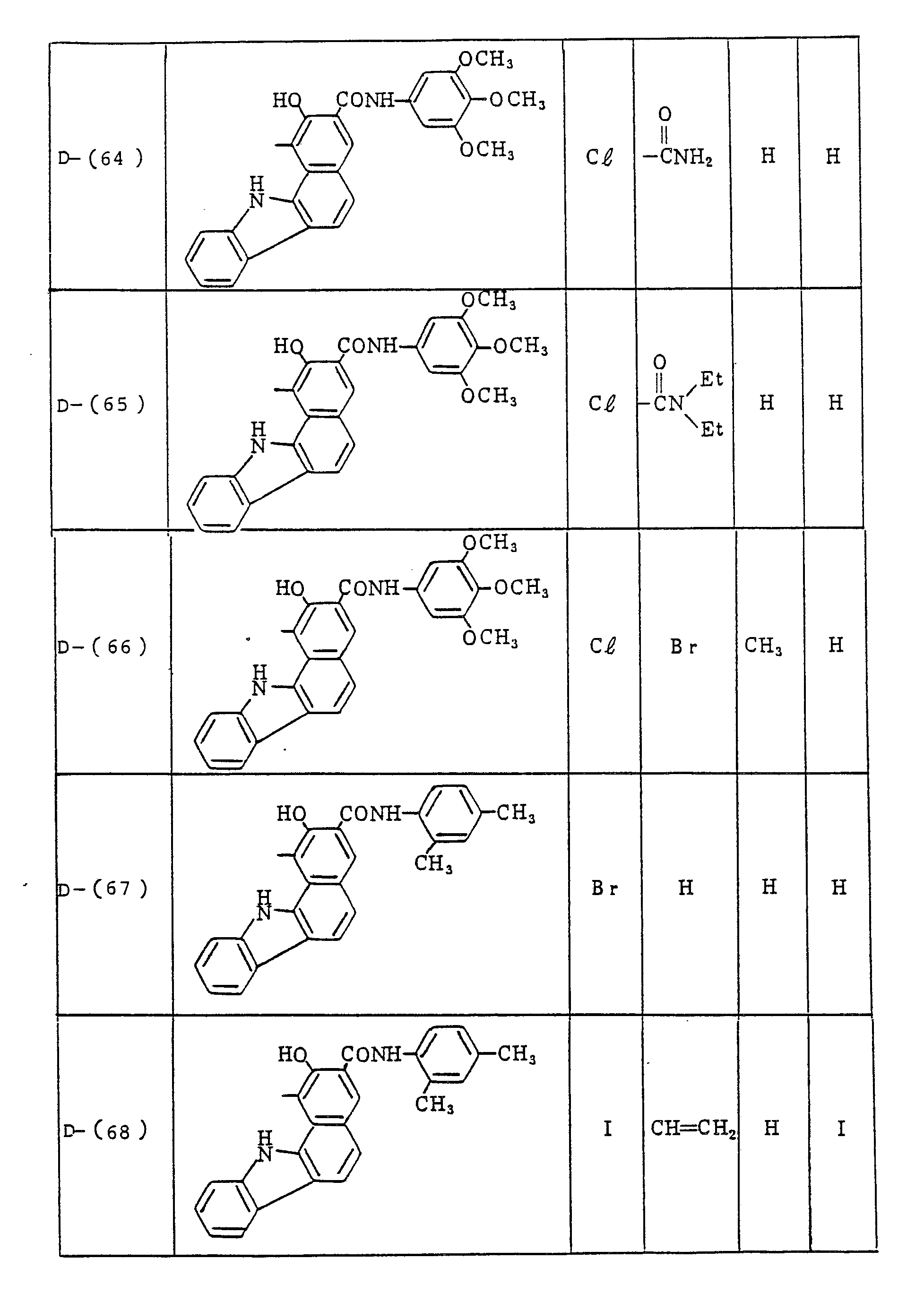

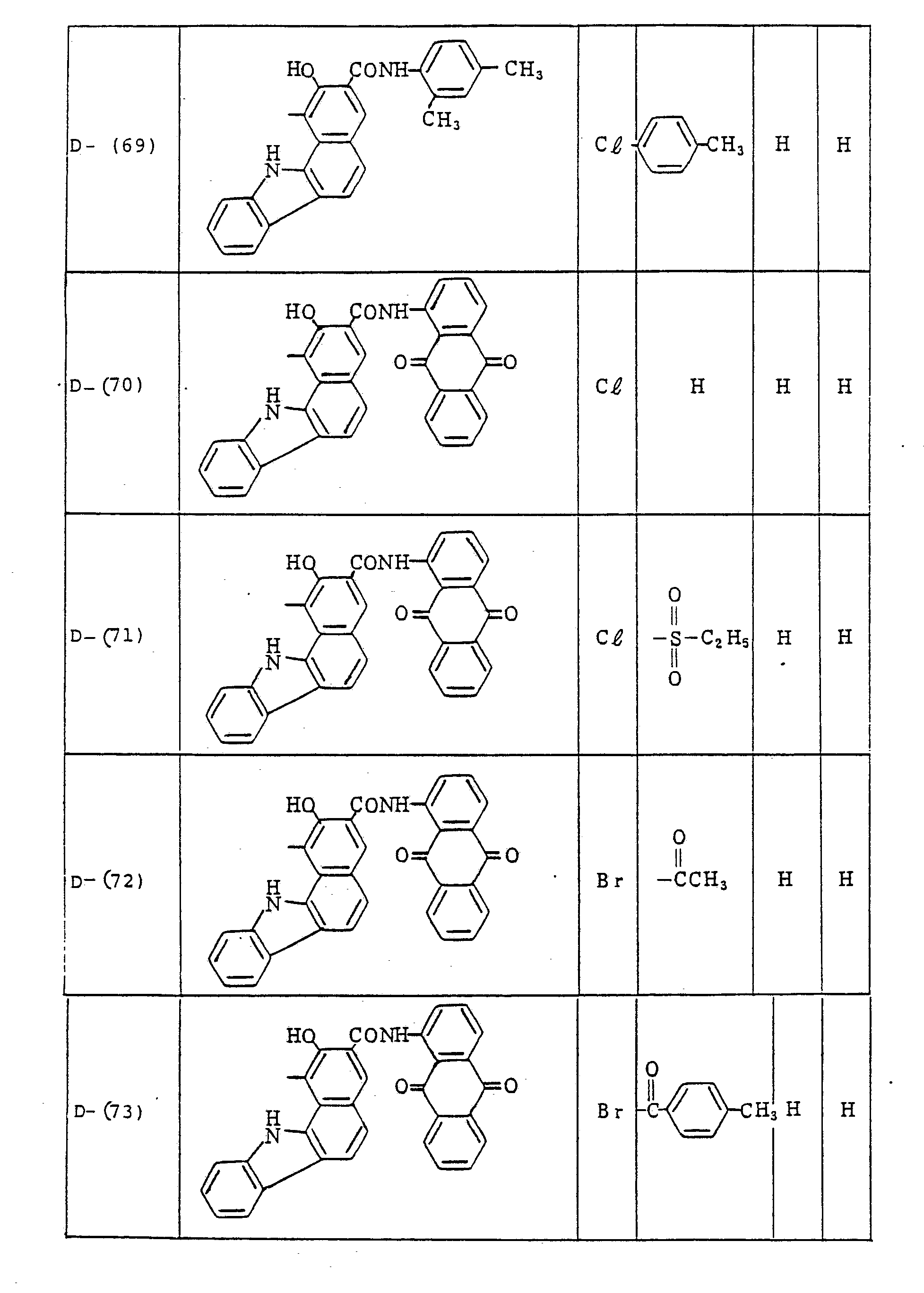

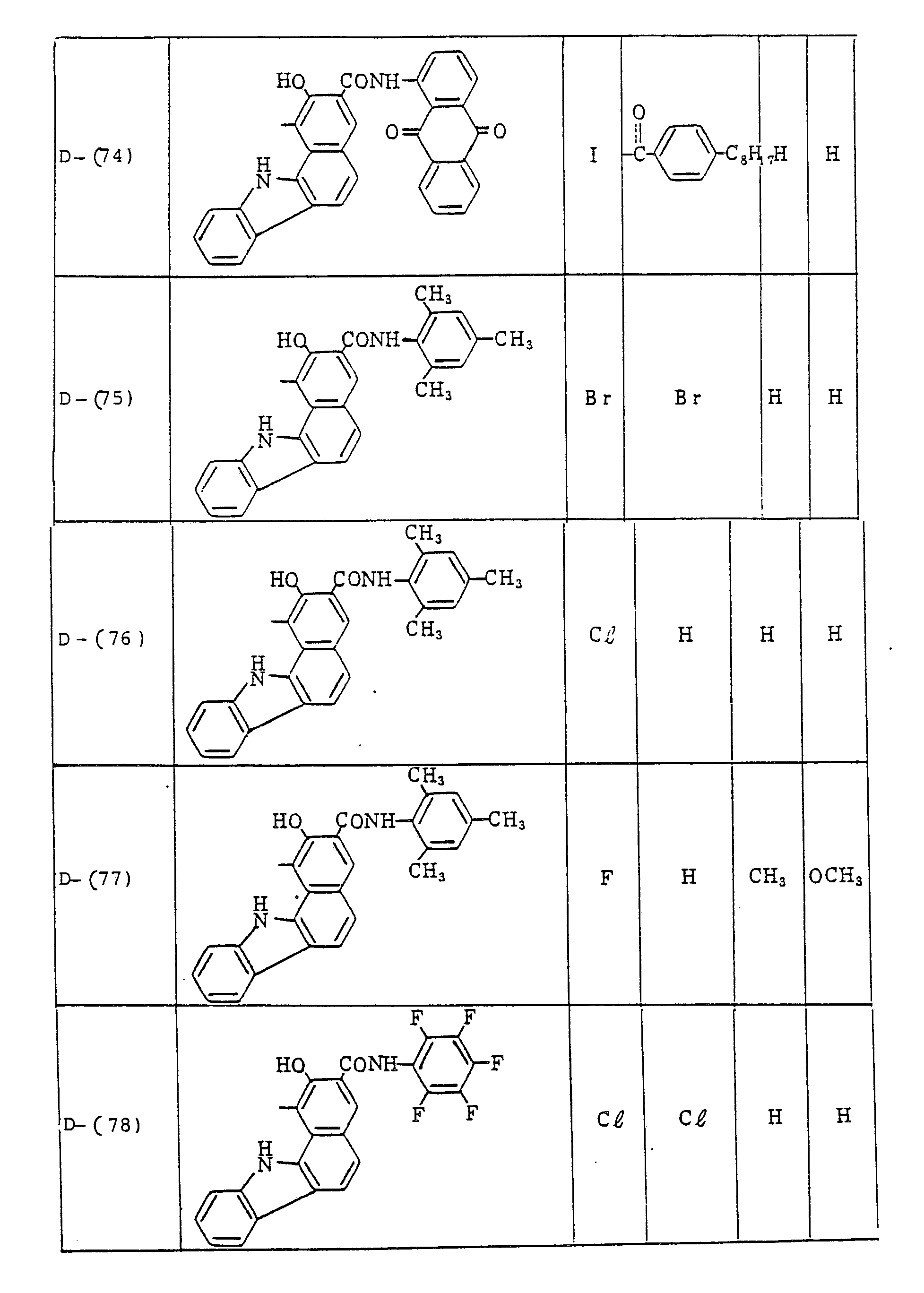

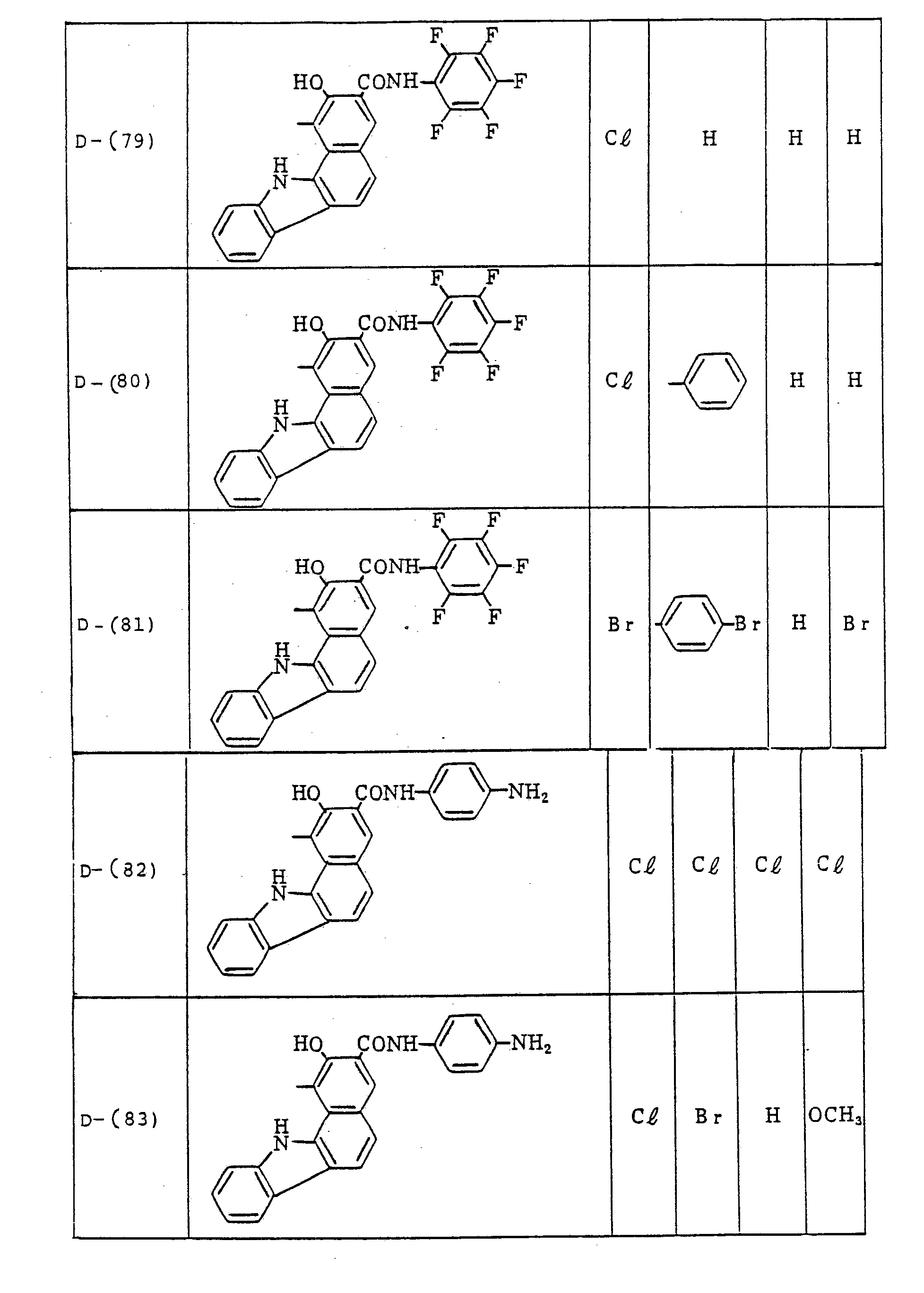

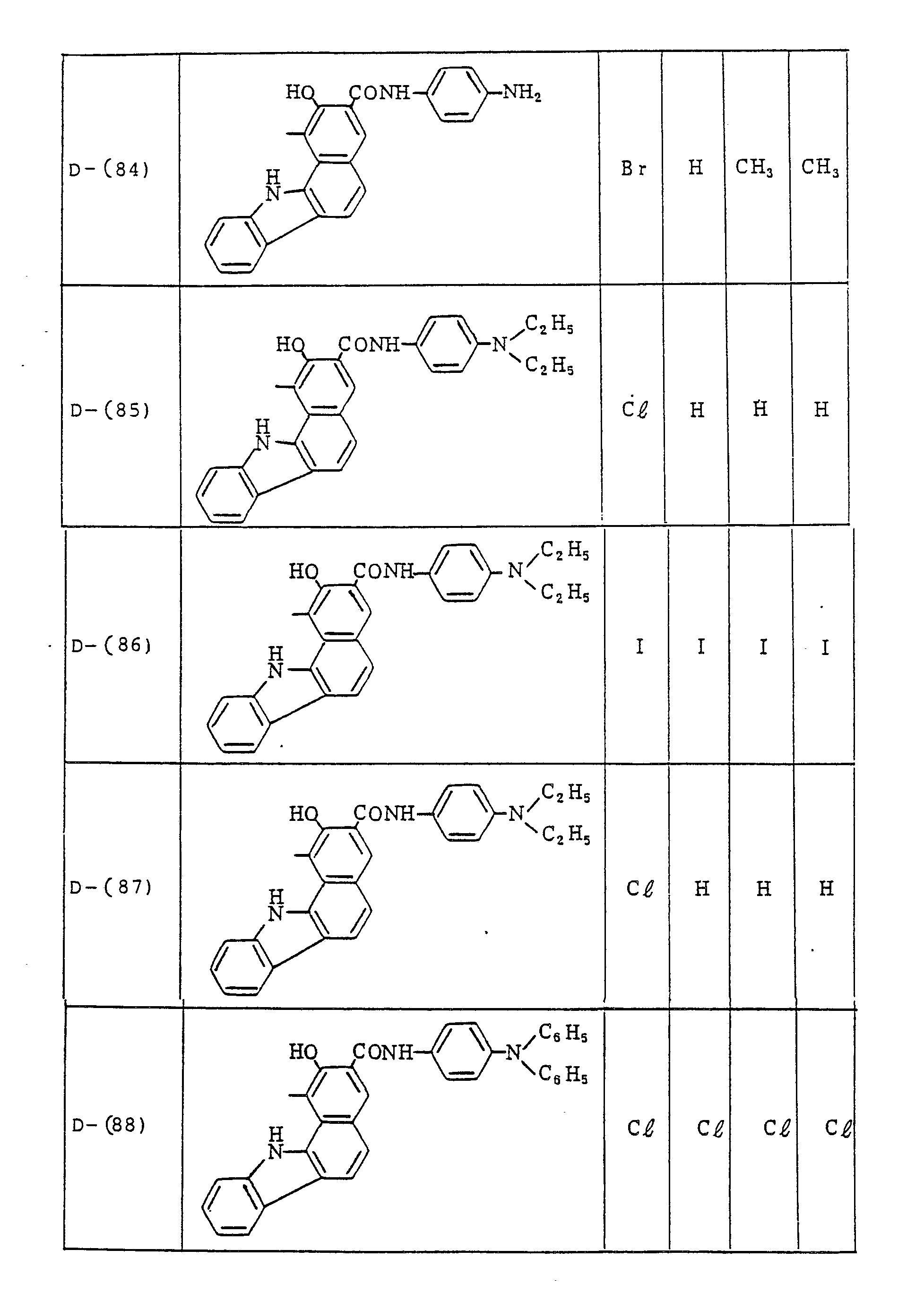

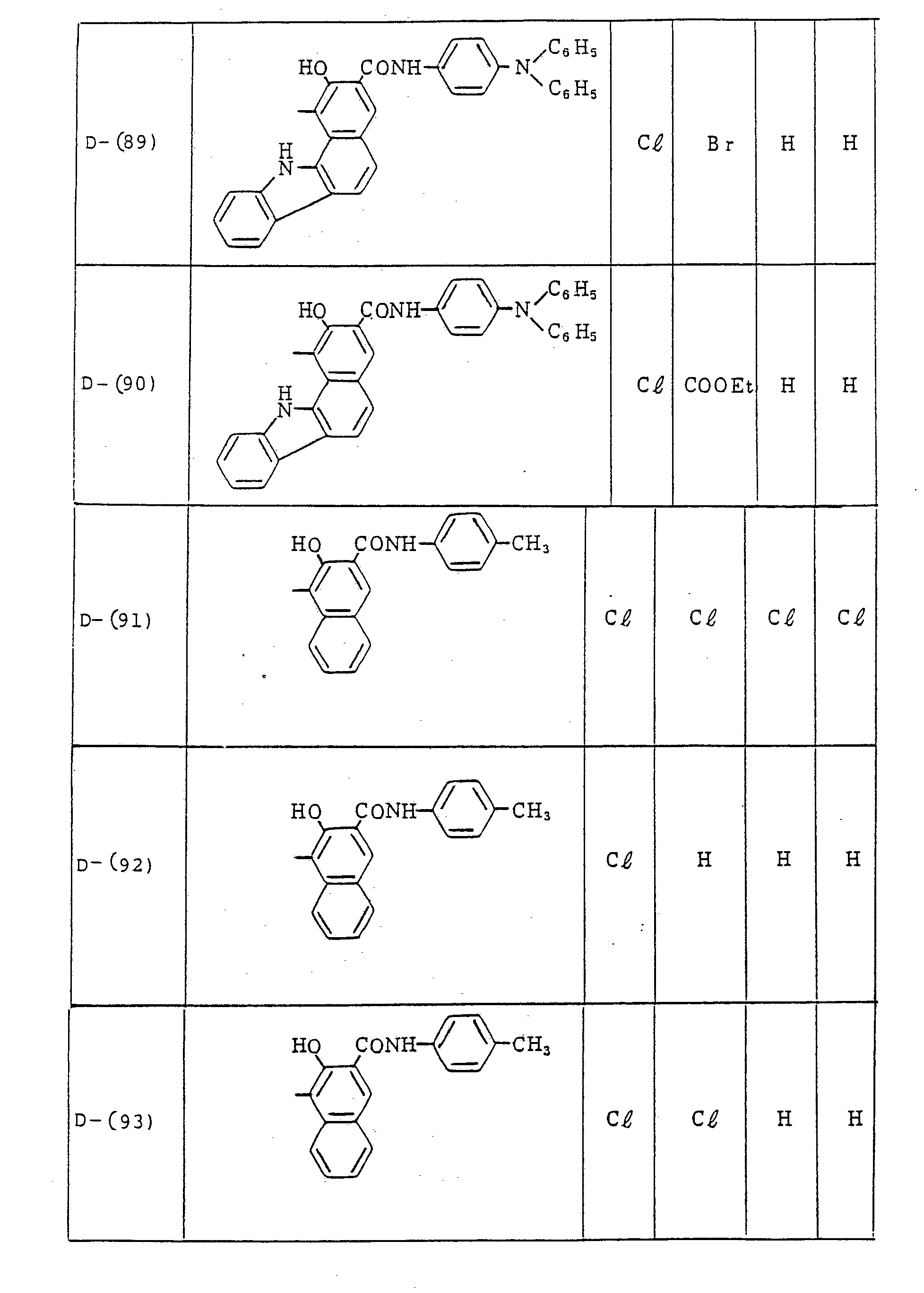

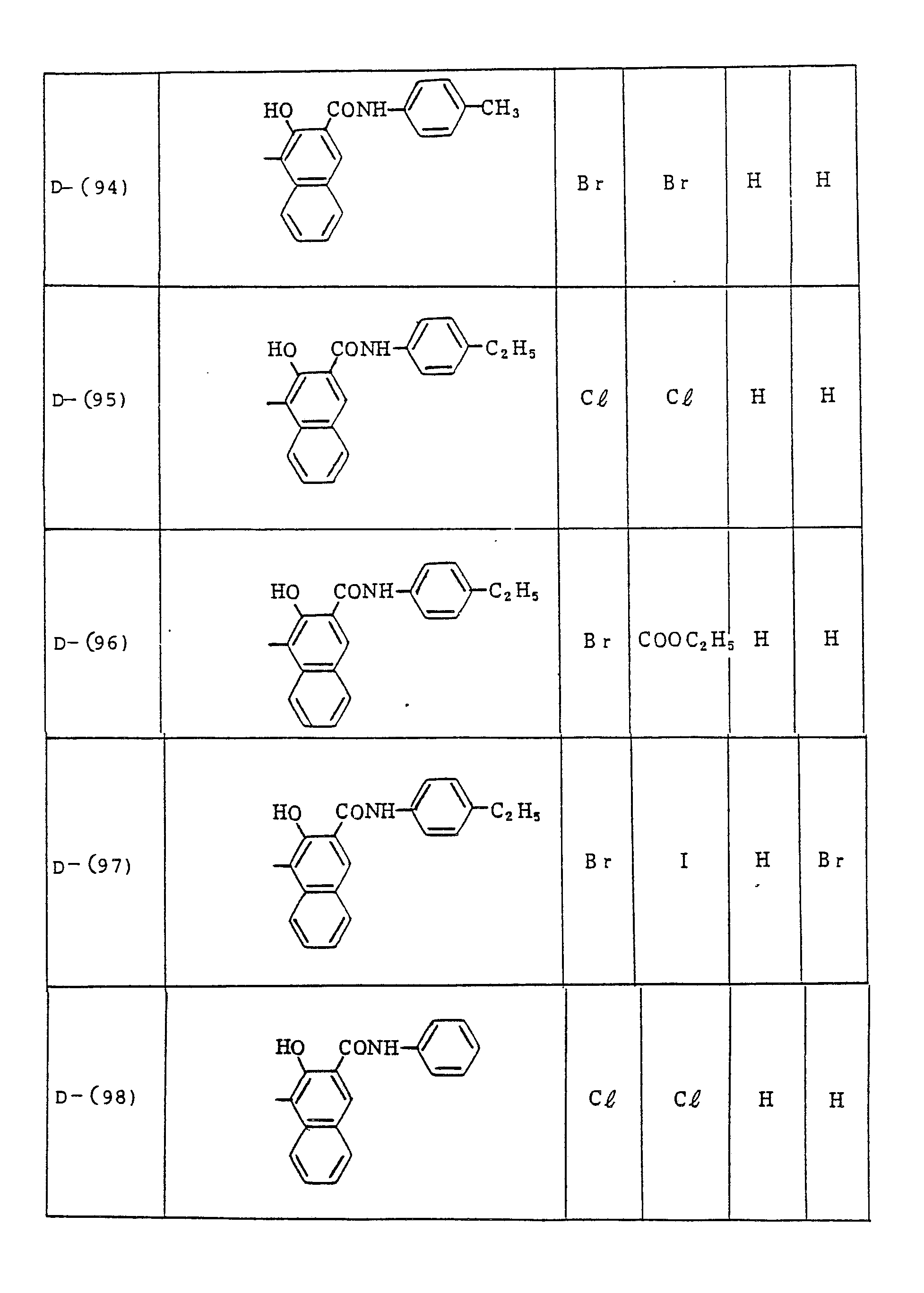

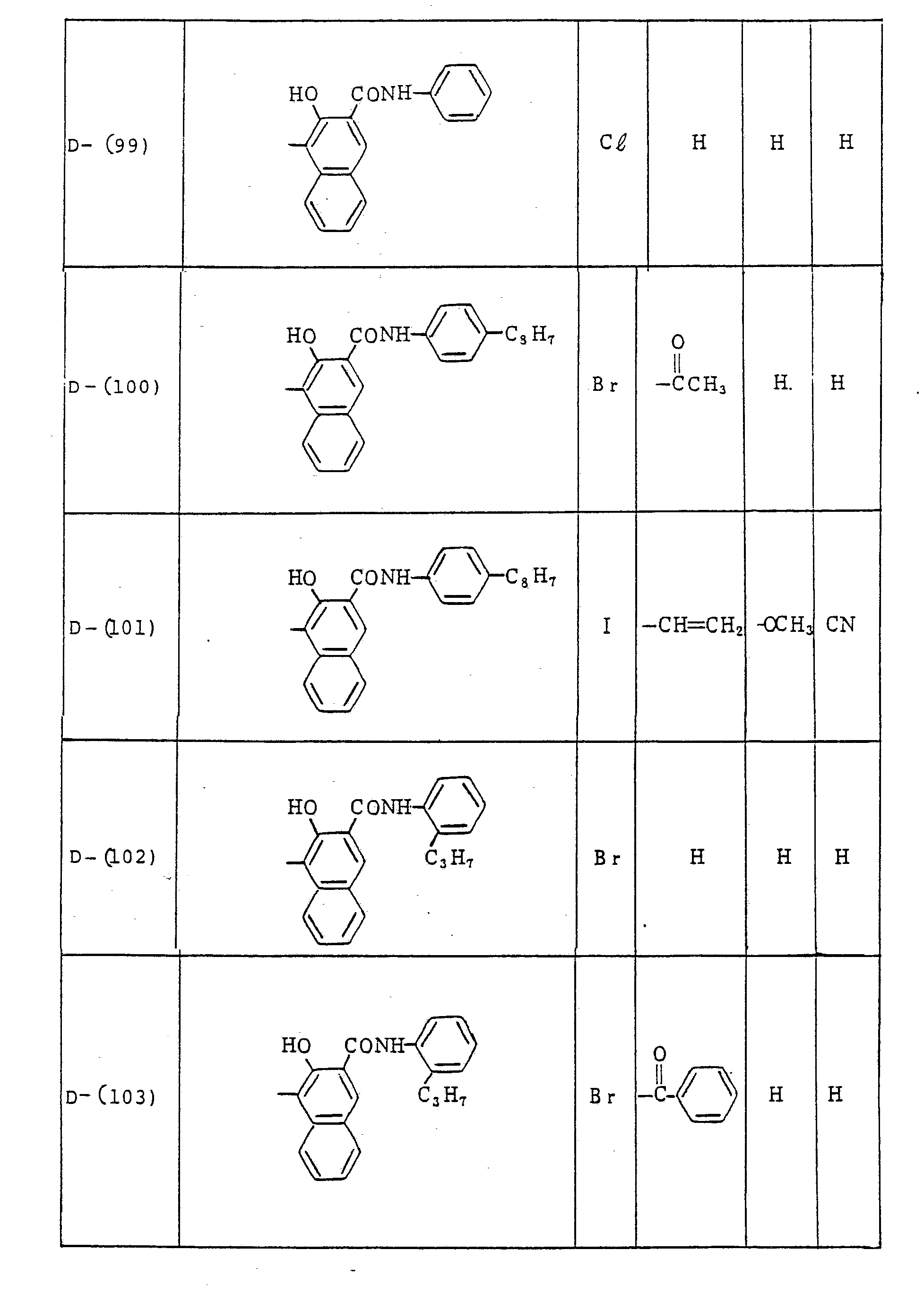

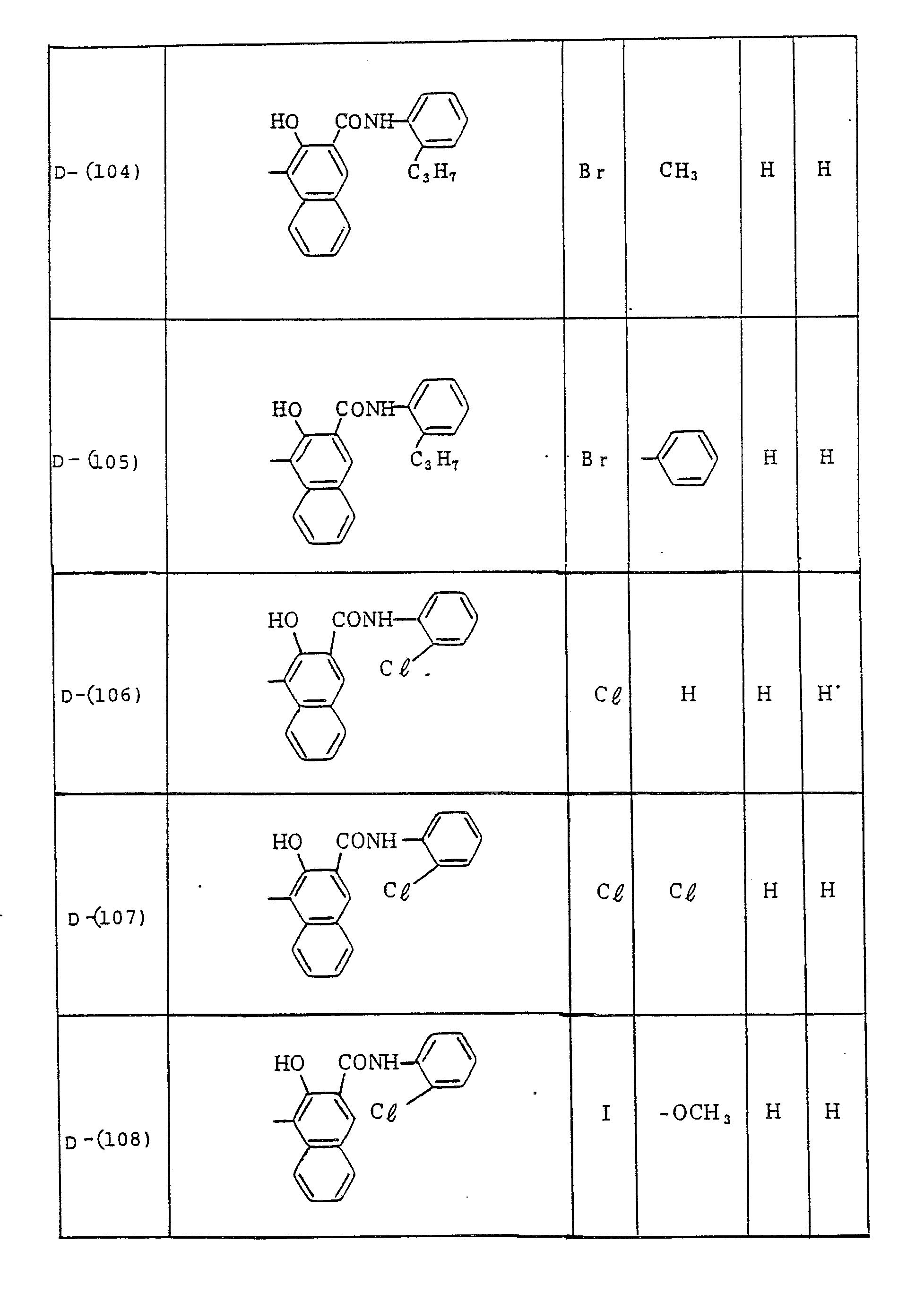

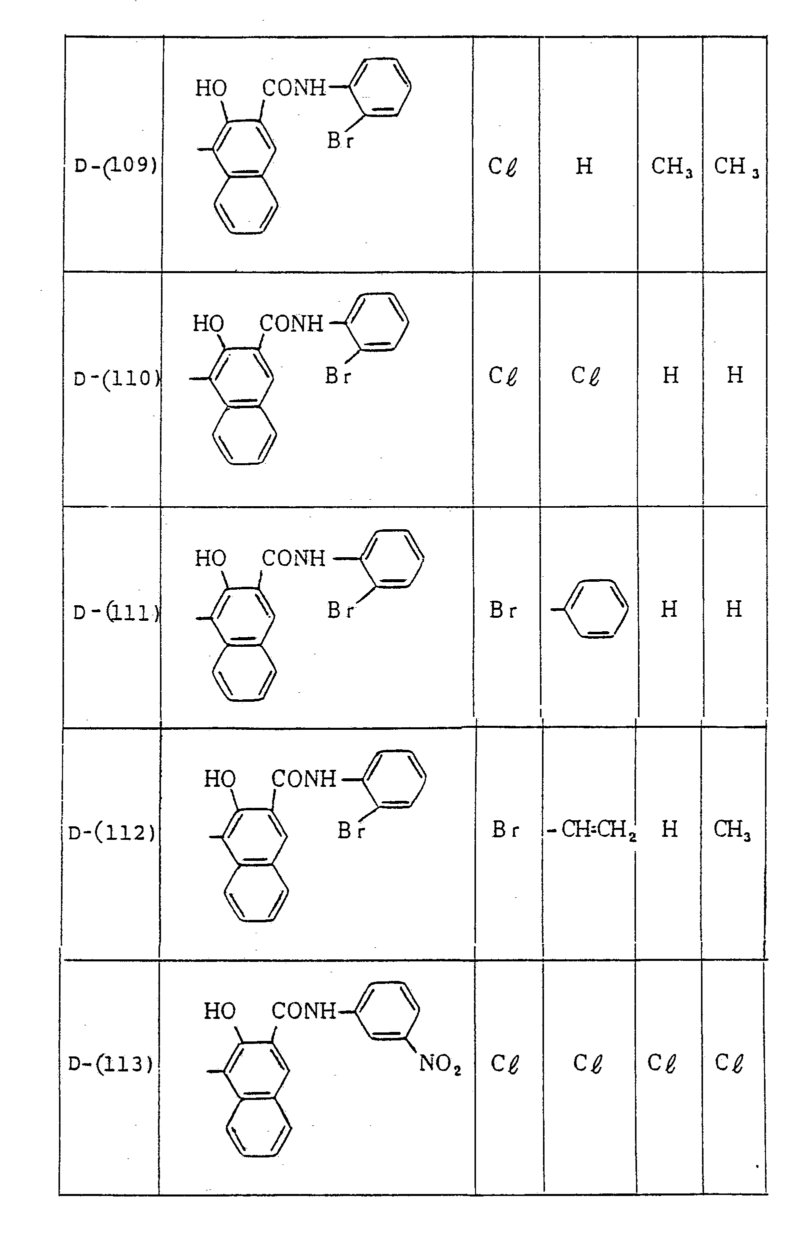

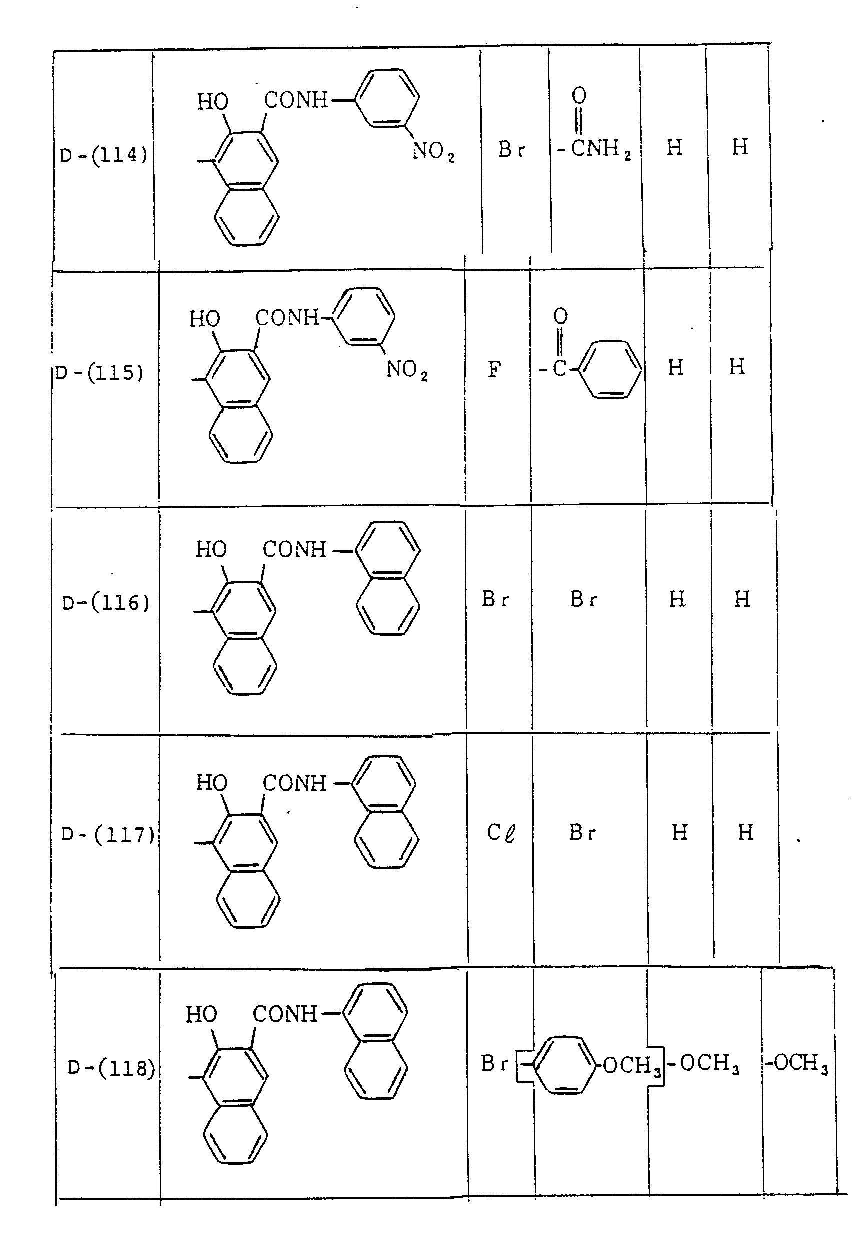

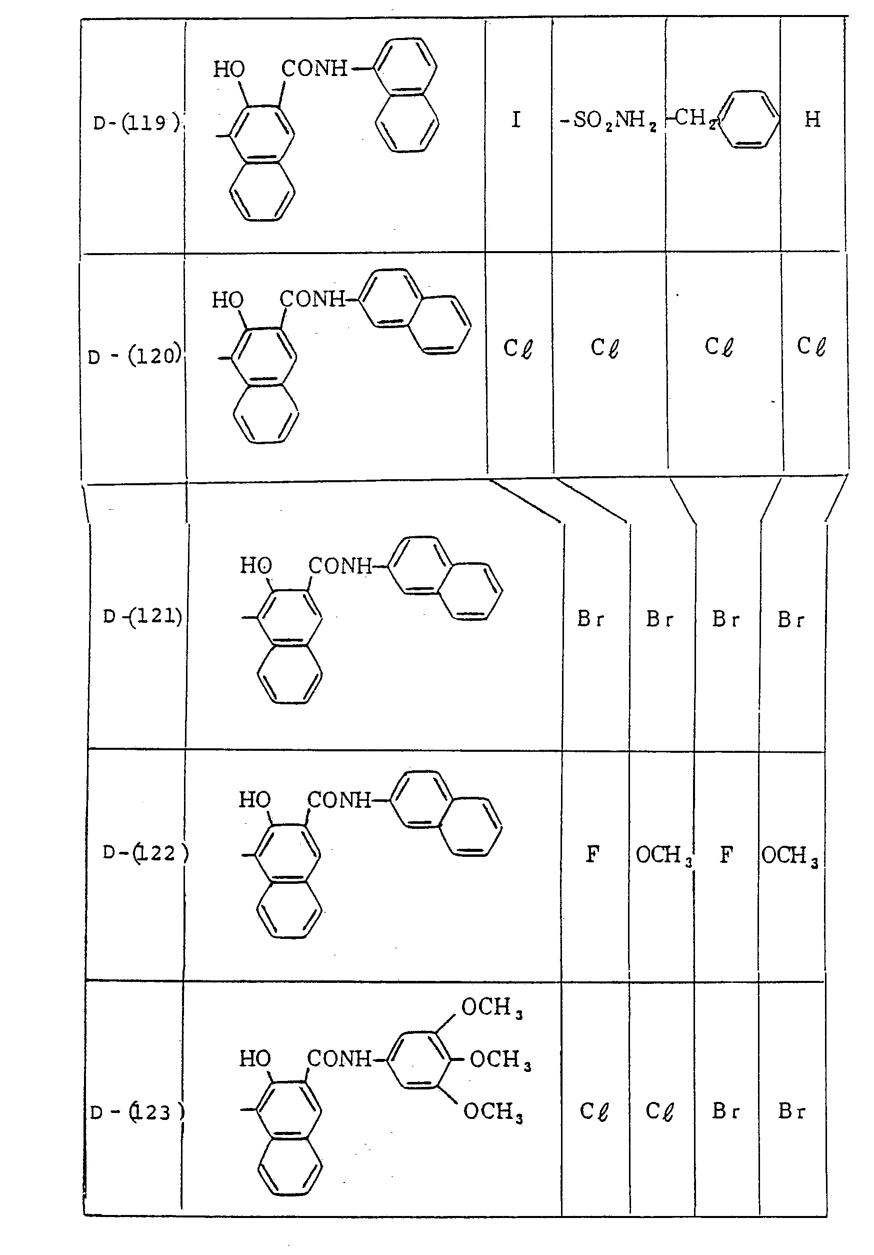

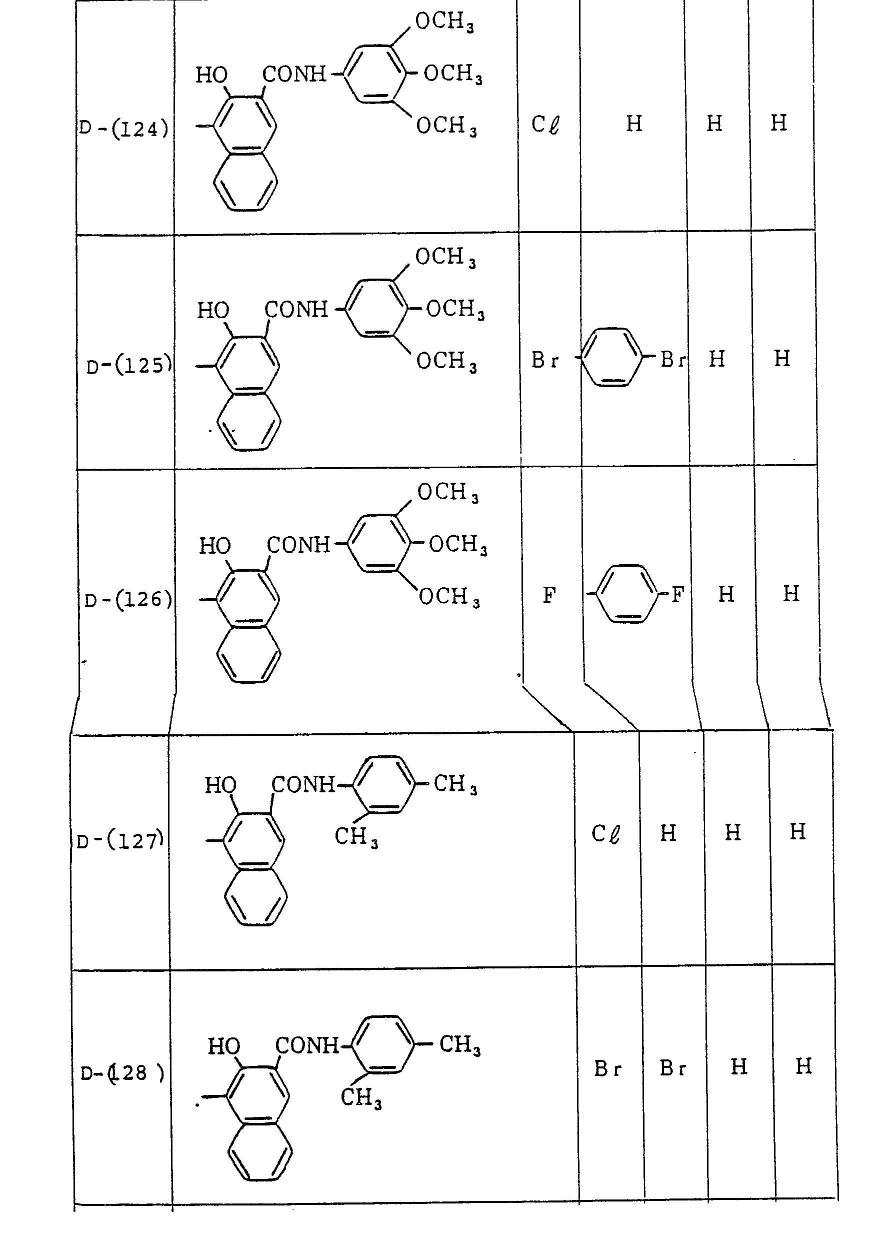

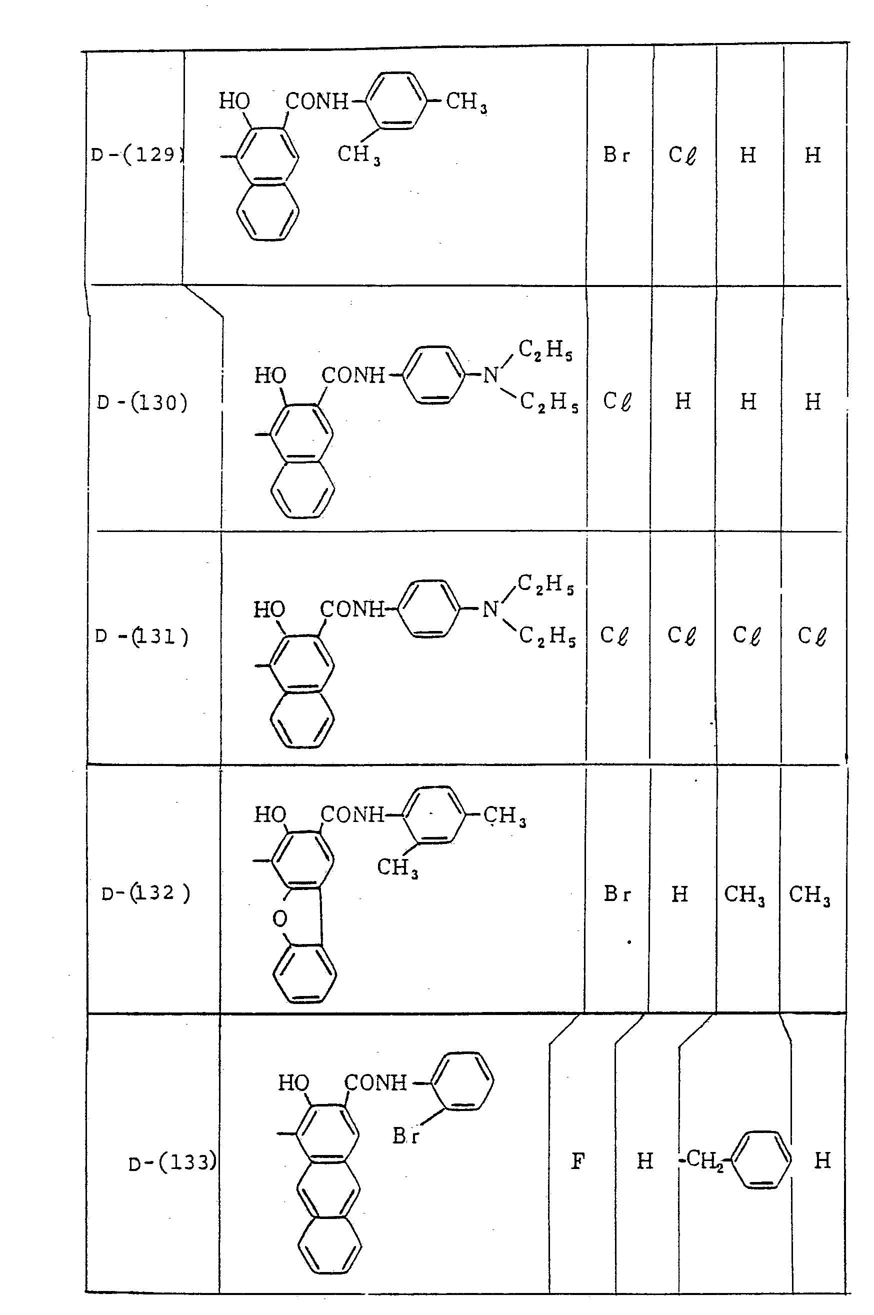

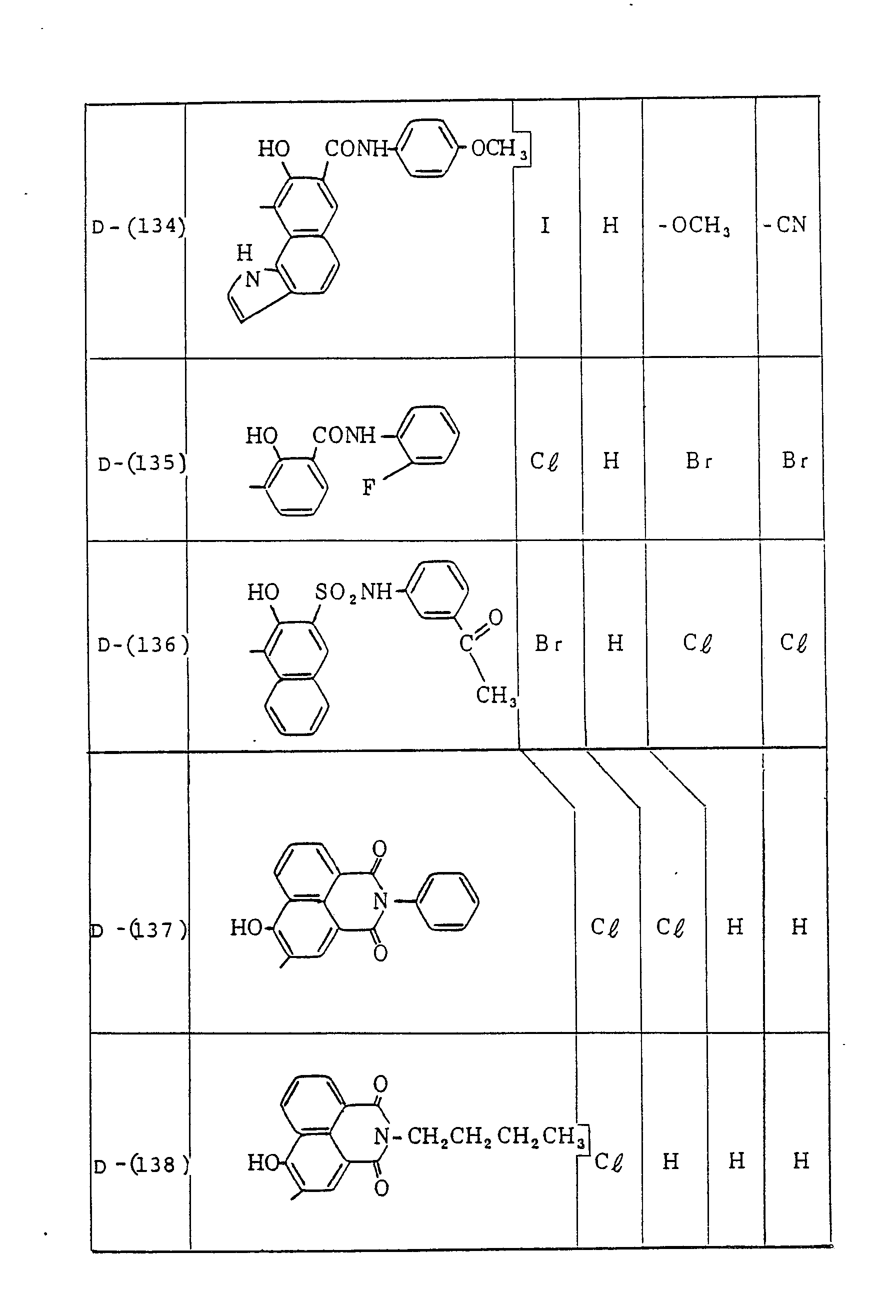

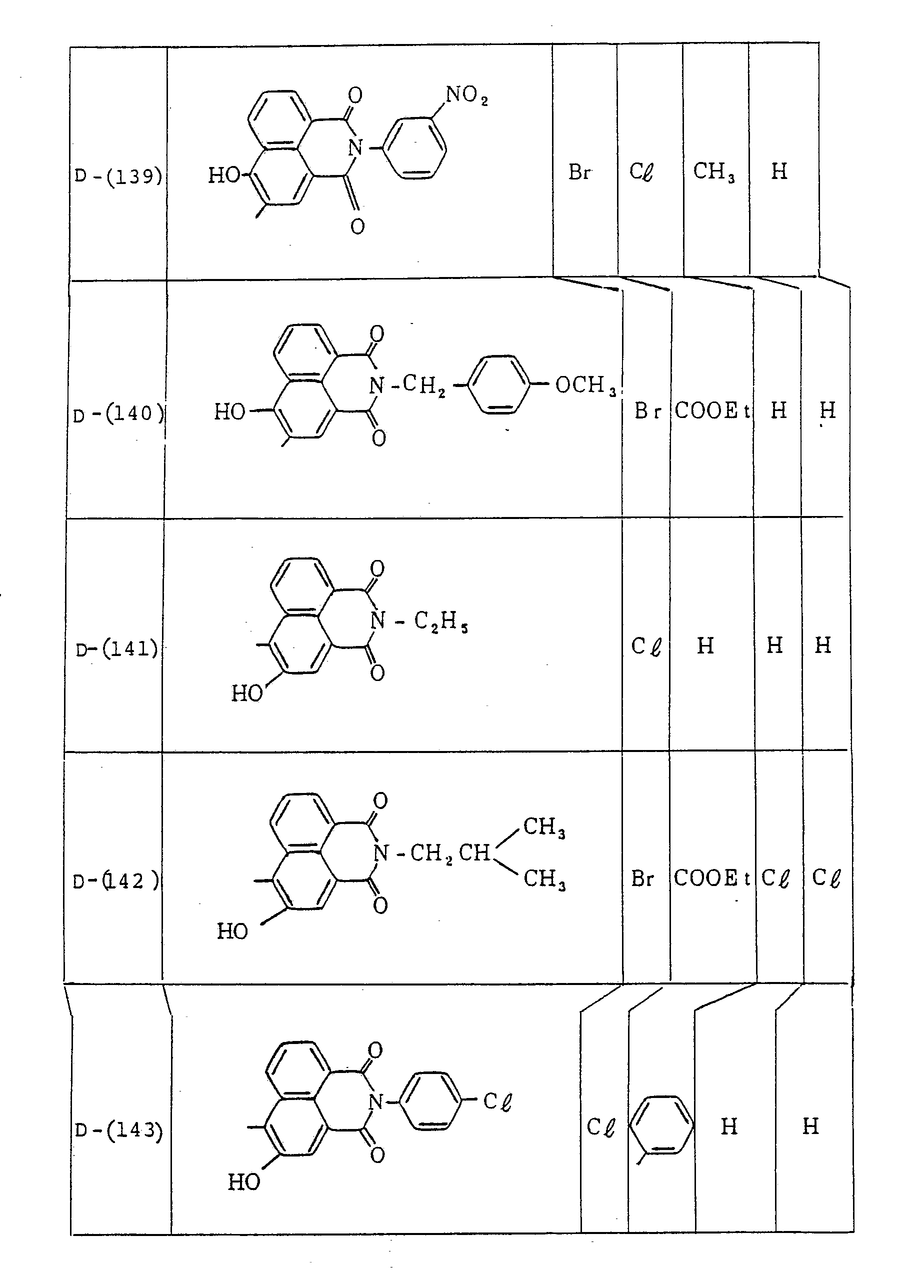

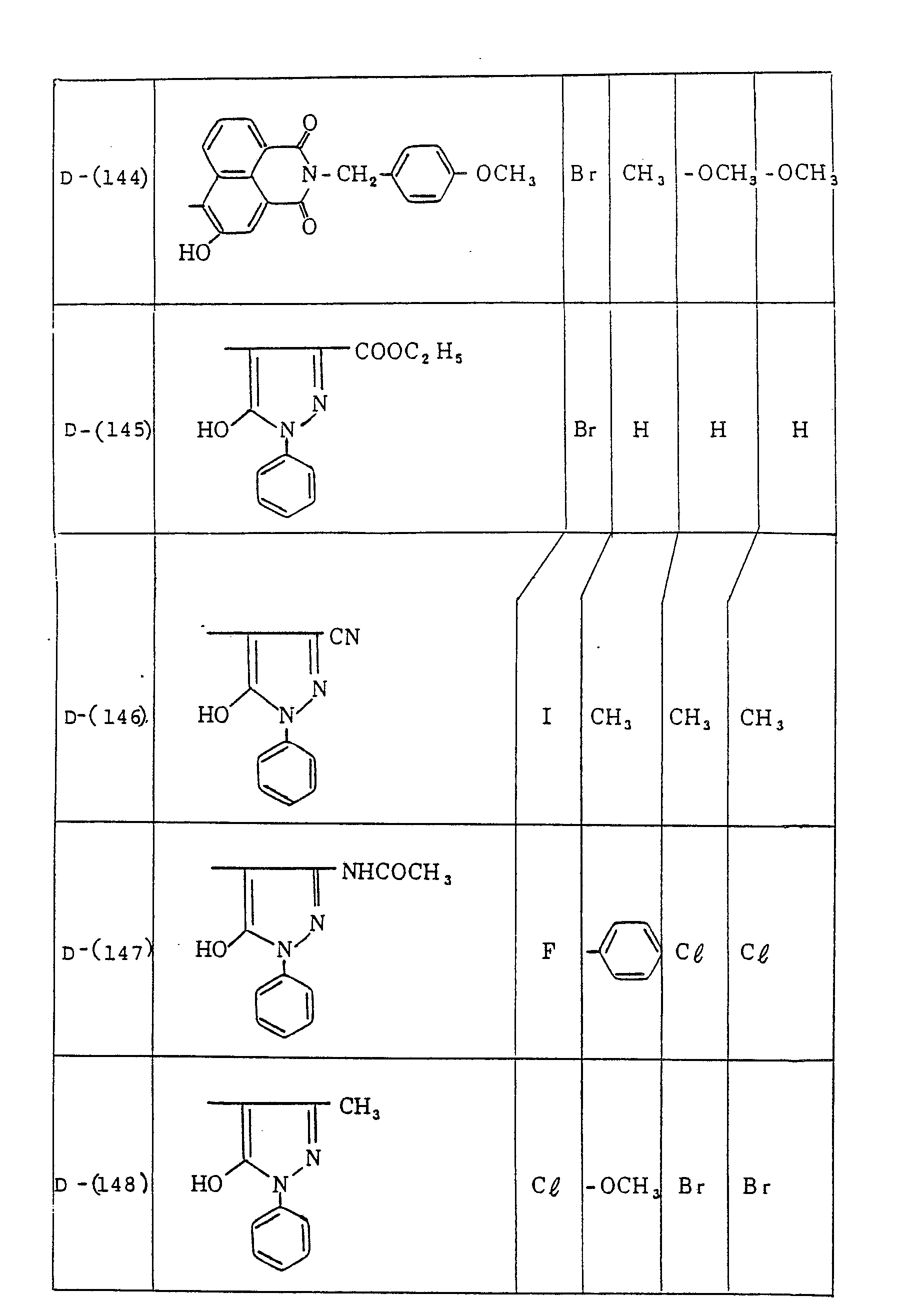

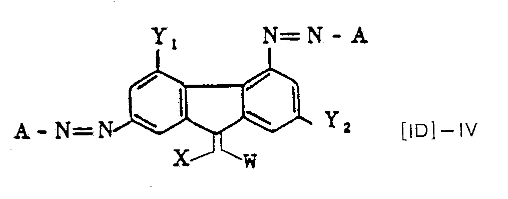

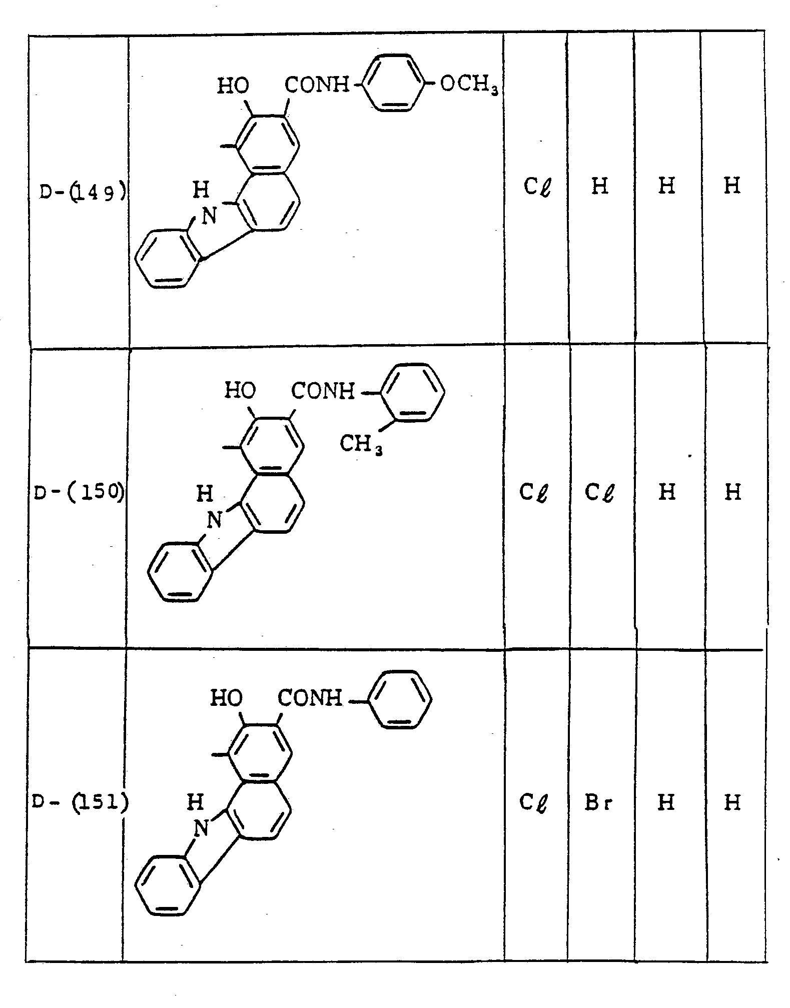

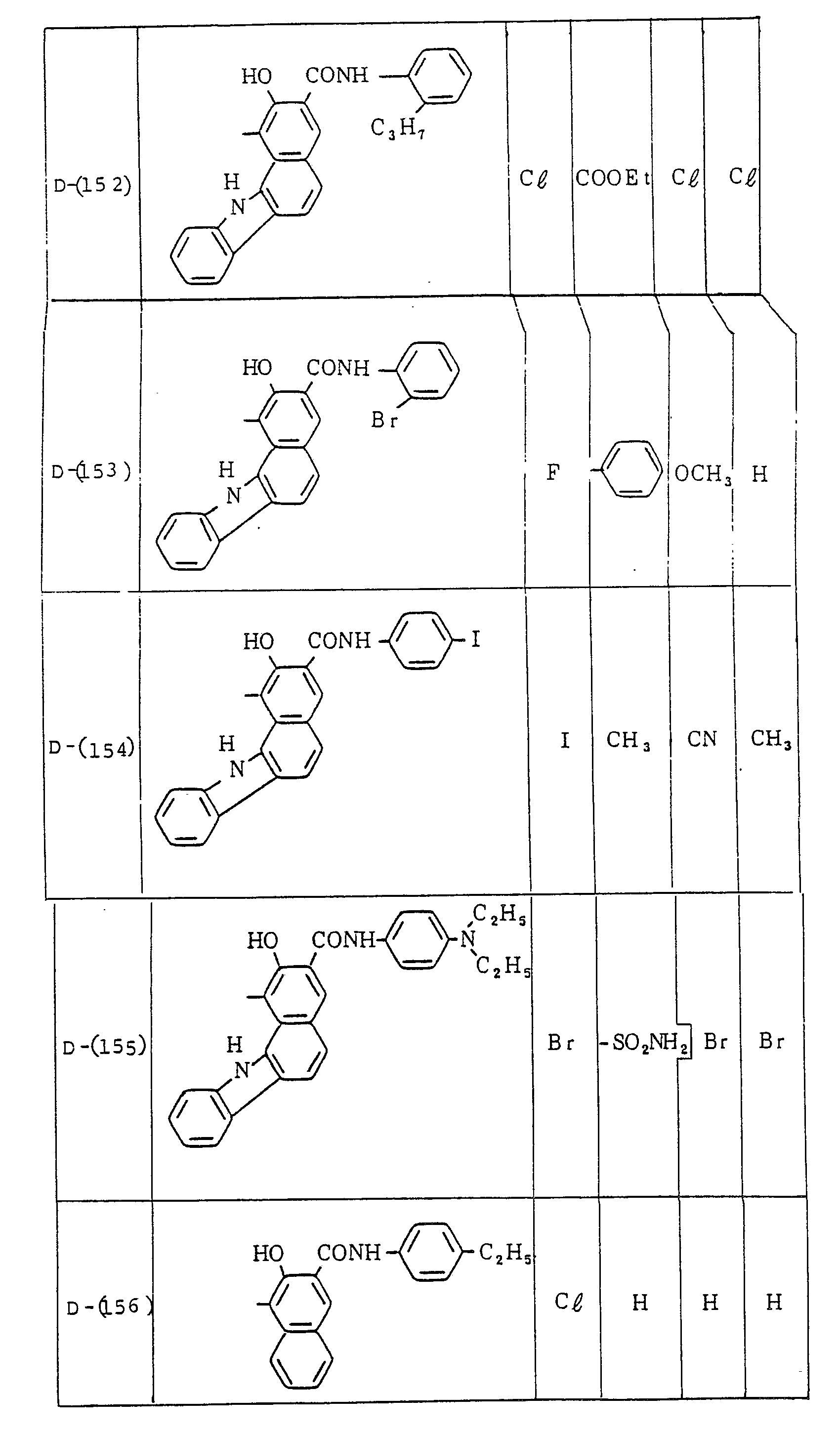

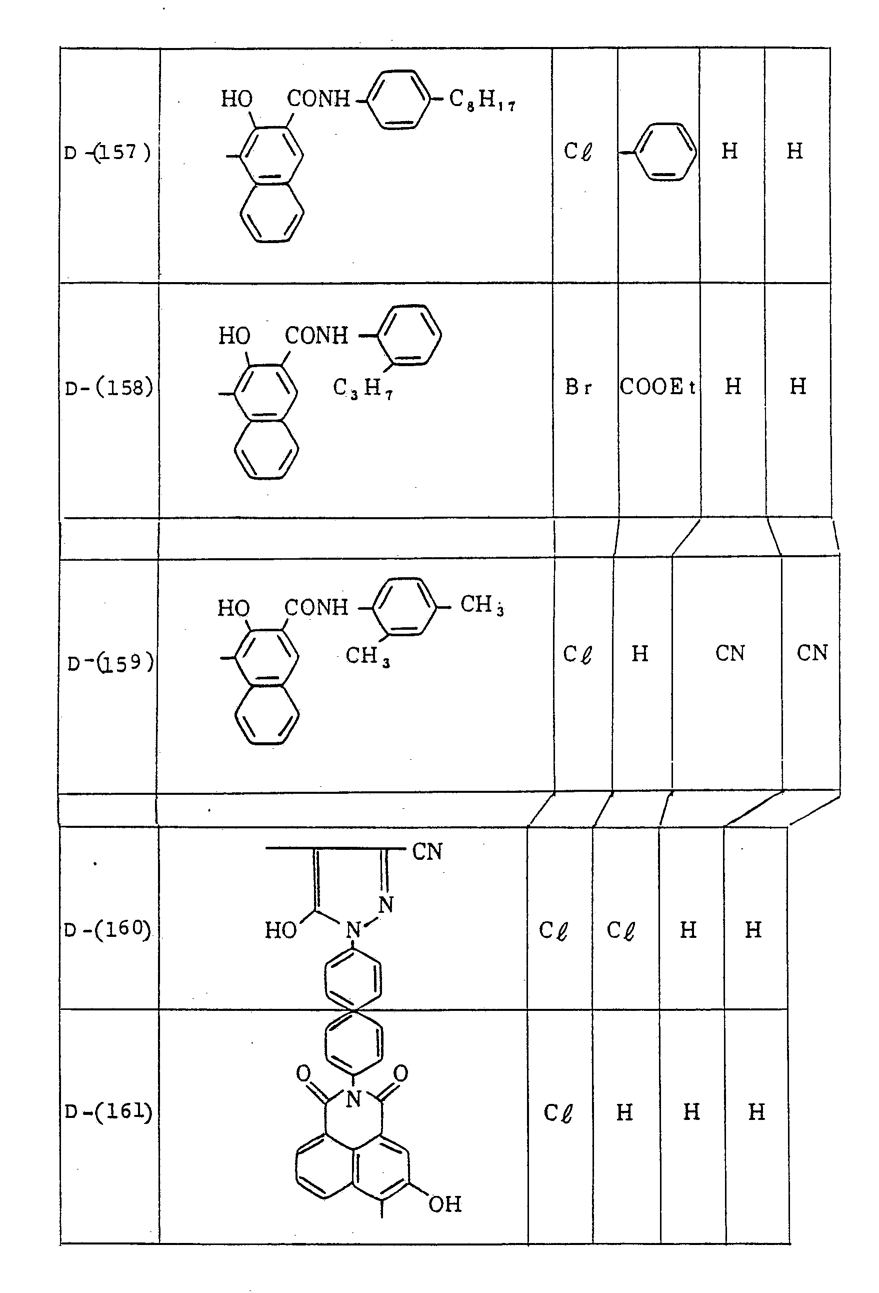

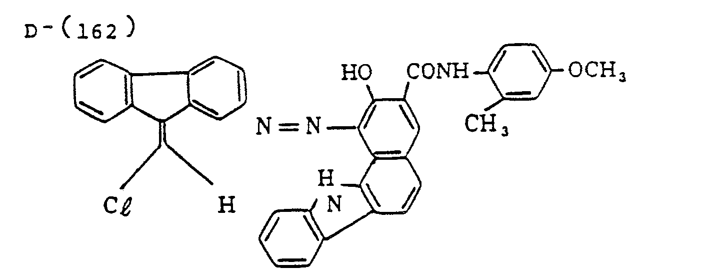

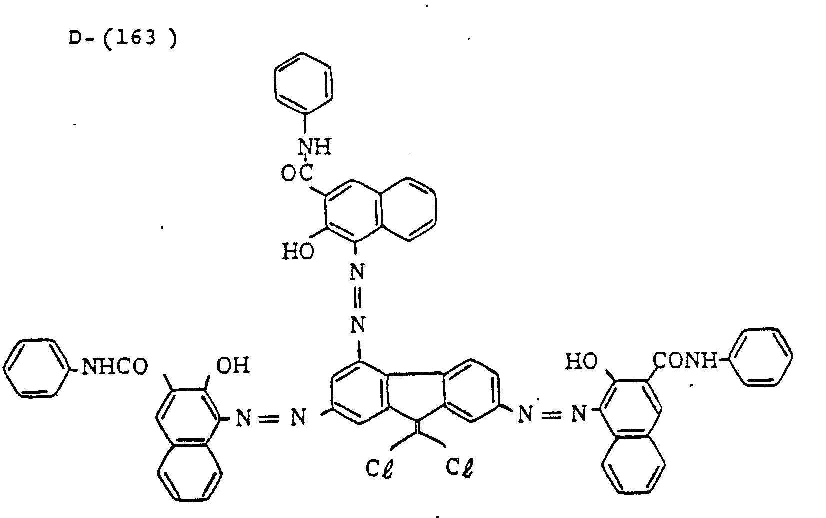

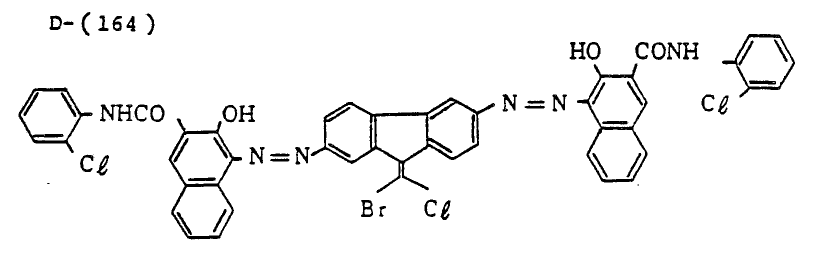

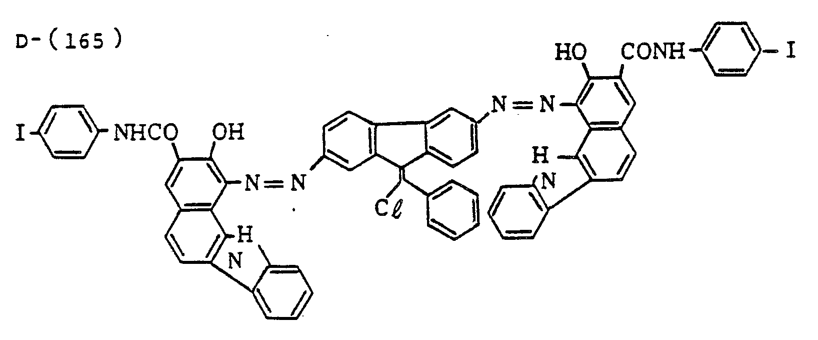

The azo compounds described above can be synthesized easily according to a known method.

### Embodiment E

The compounds may have the formula [IE]: 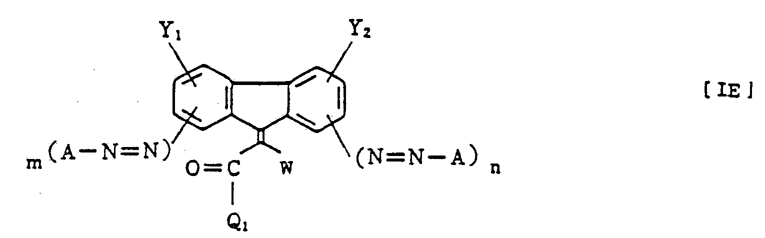 wherein Q₁, Y₁, Y₂, m, n and A are as defined in formula [I] and W is as defined in formula [ID].

In formula [IE], Q₁, for example, represents an alkyl group (desirably having 1 to 5 carbon atoms), an unsubstituted or substituted phenyl group, a hydrogen atom, an amino group, an alkylamino group, a phenylamino group or a hydroxyl group, or any other group as exemplified above.

Preferred compounds having good sensitivity and stability to heat and light are of formula [IE]―II: 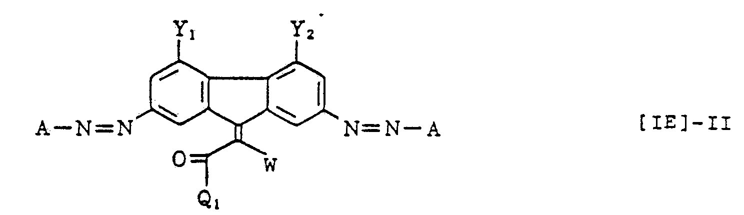 wherein Q_{1'} W, Y₁, Y₂ and A are as defined in formula [ID].

Examples of useful azo compounds of formula [IE] include, for example, those of formula:

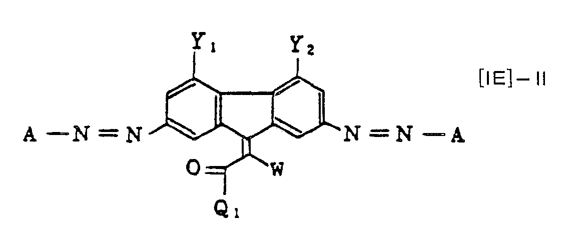

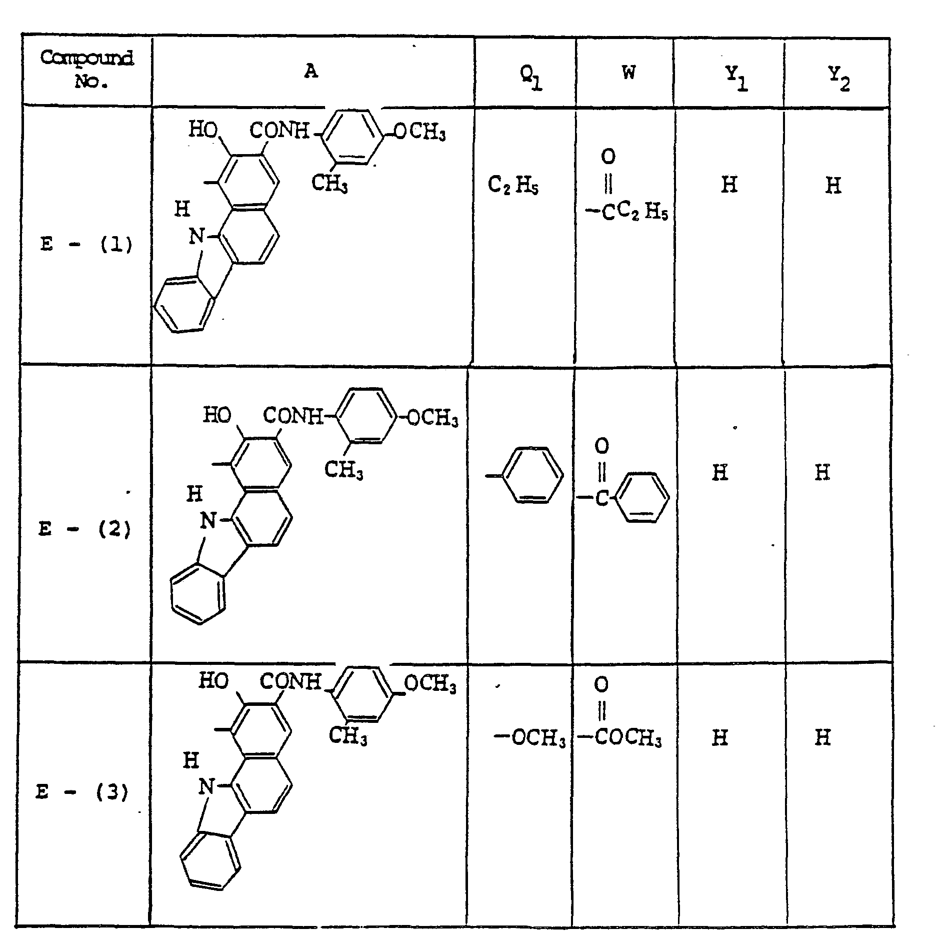

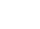

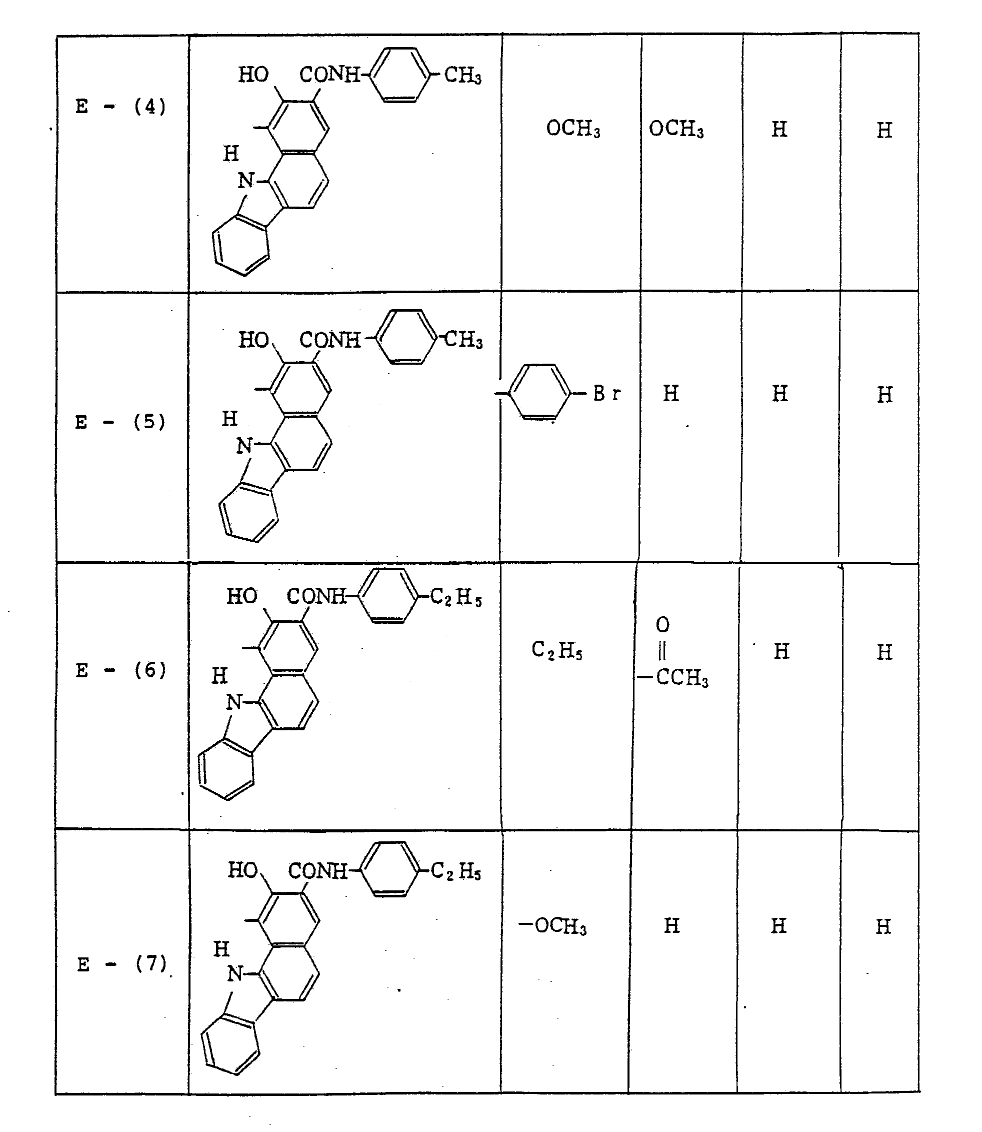

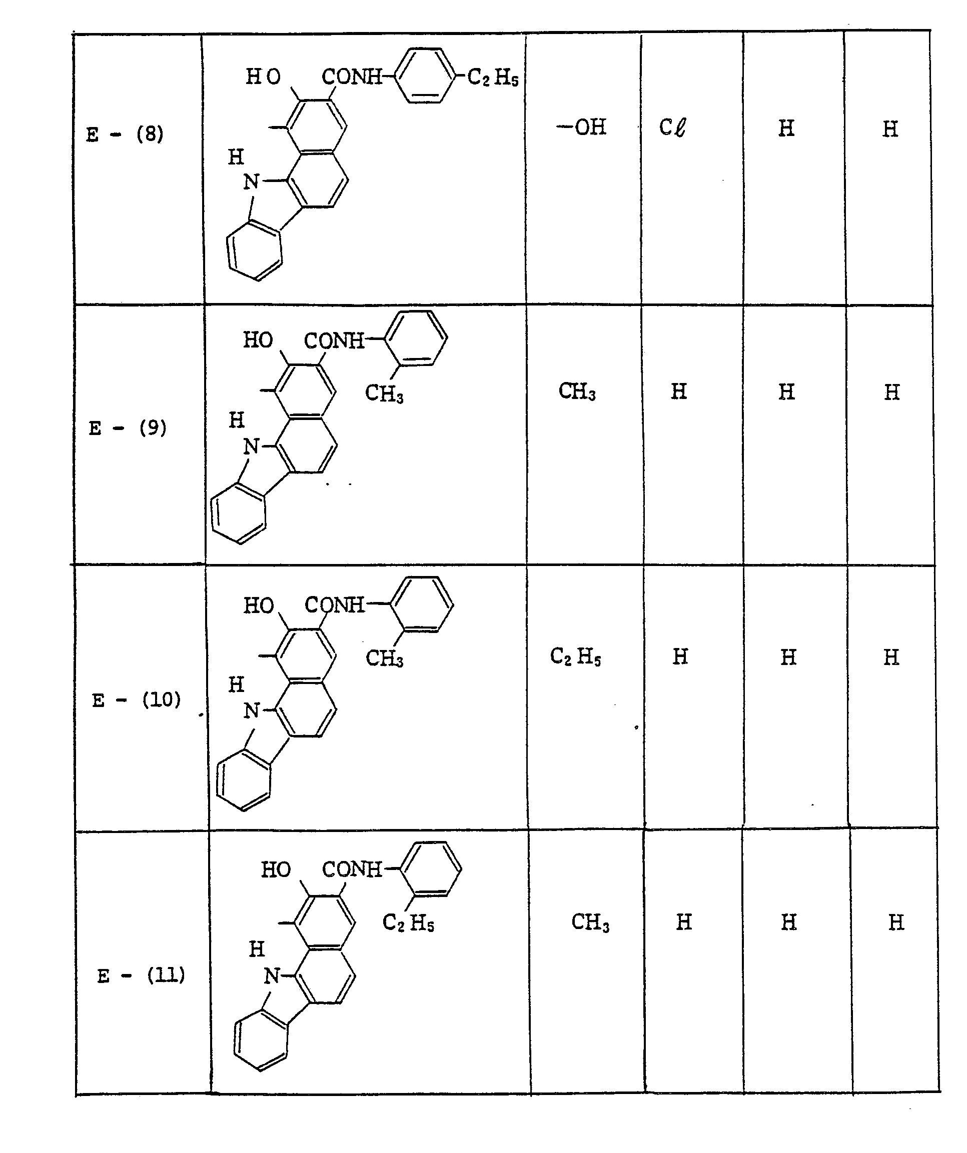

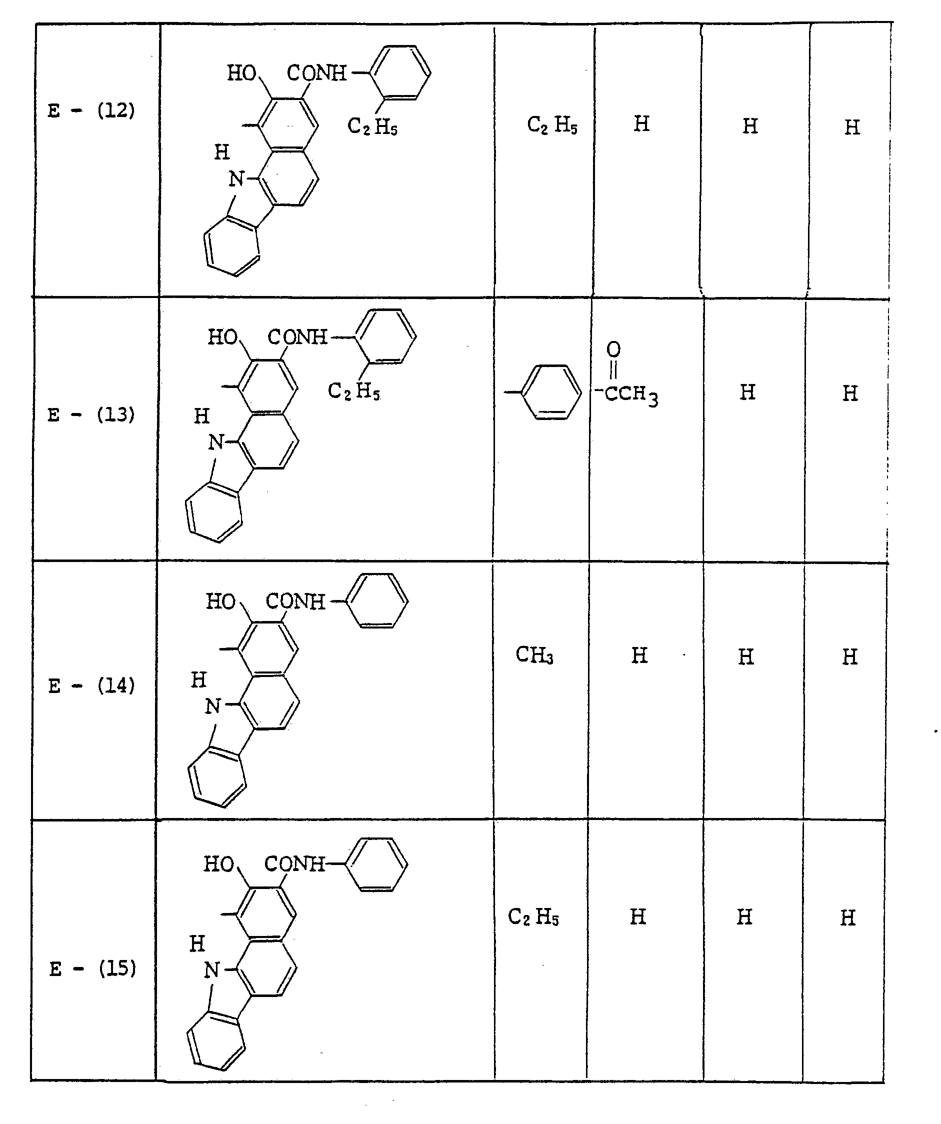

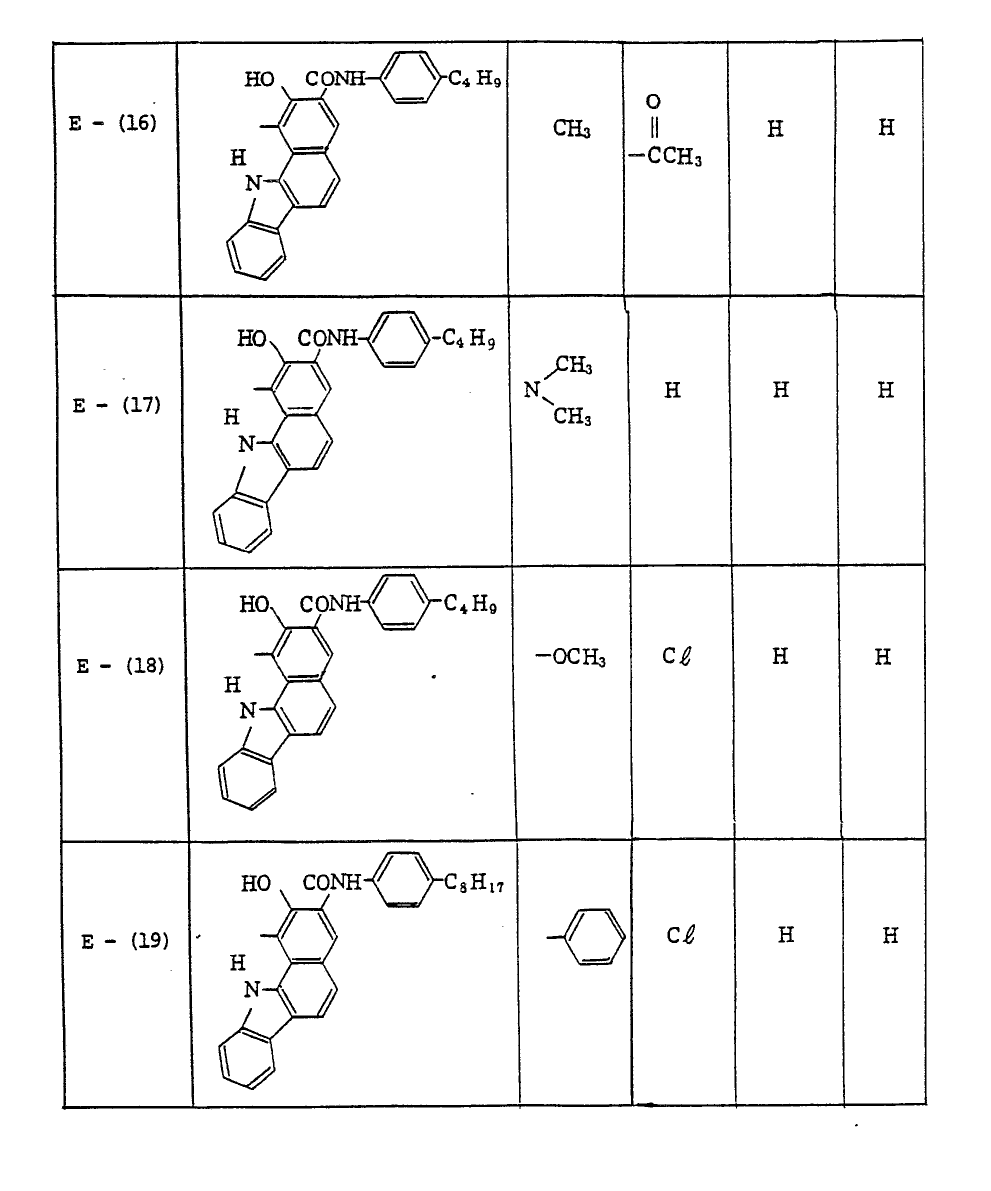

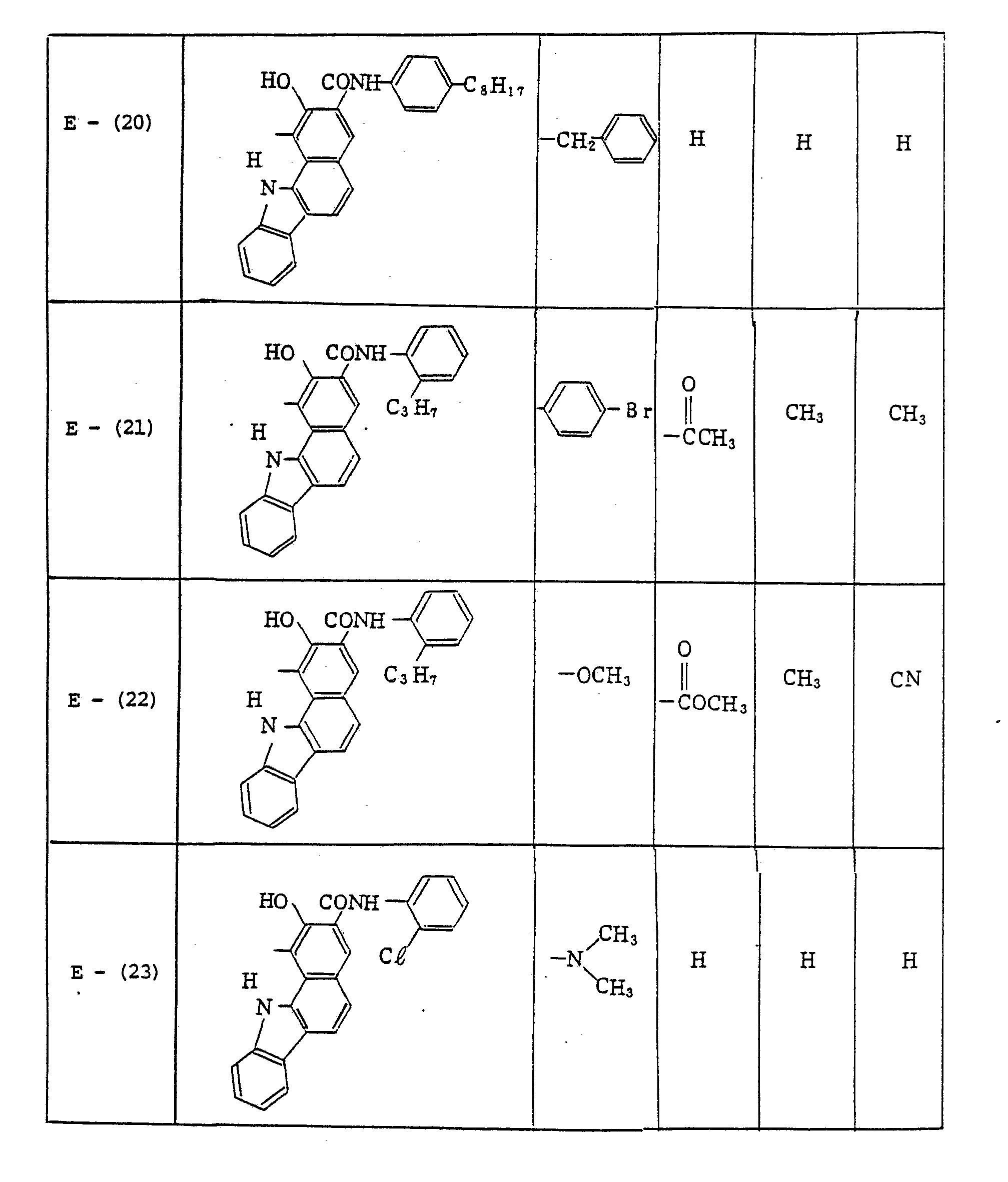

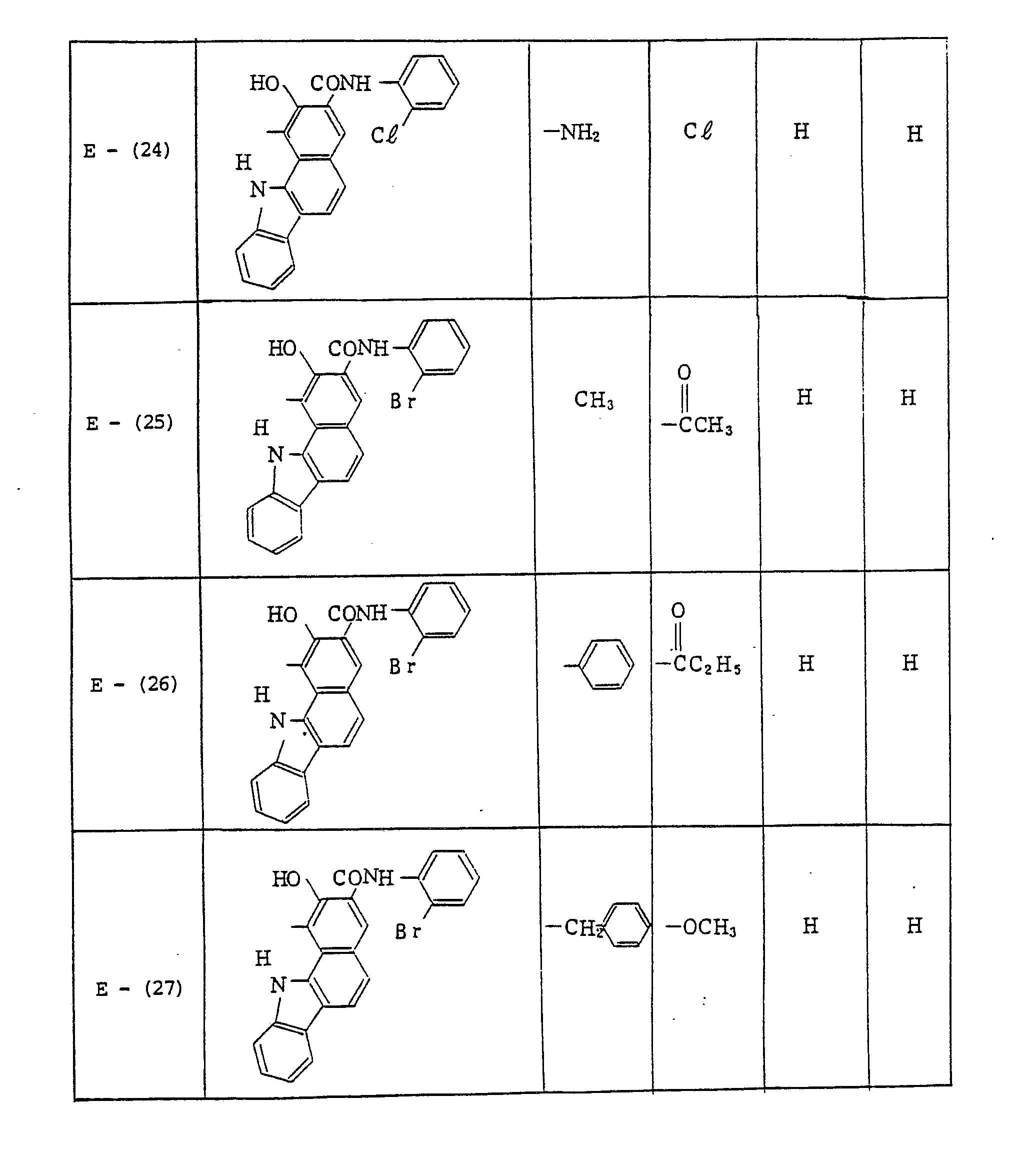

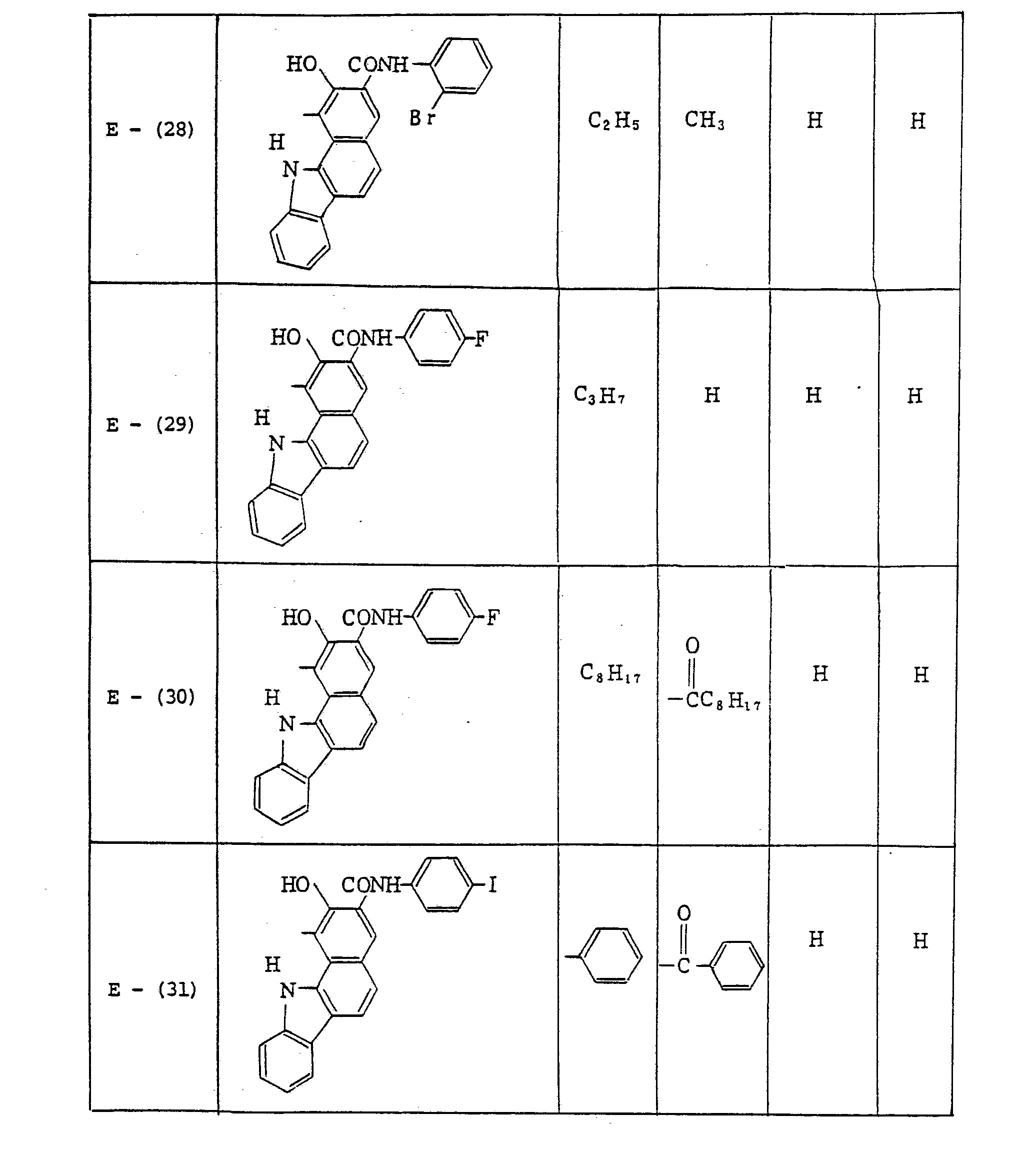

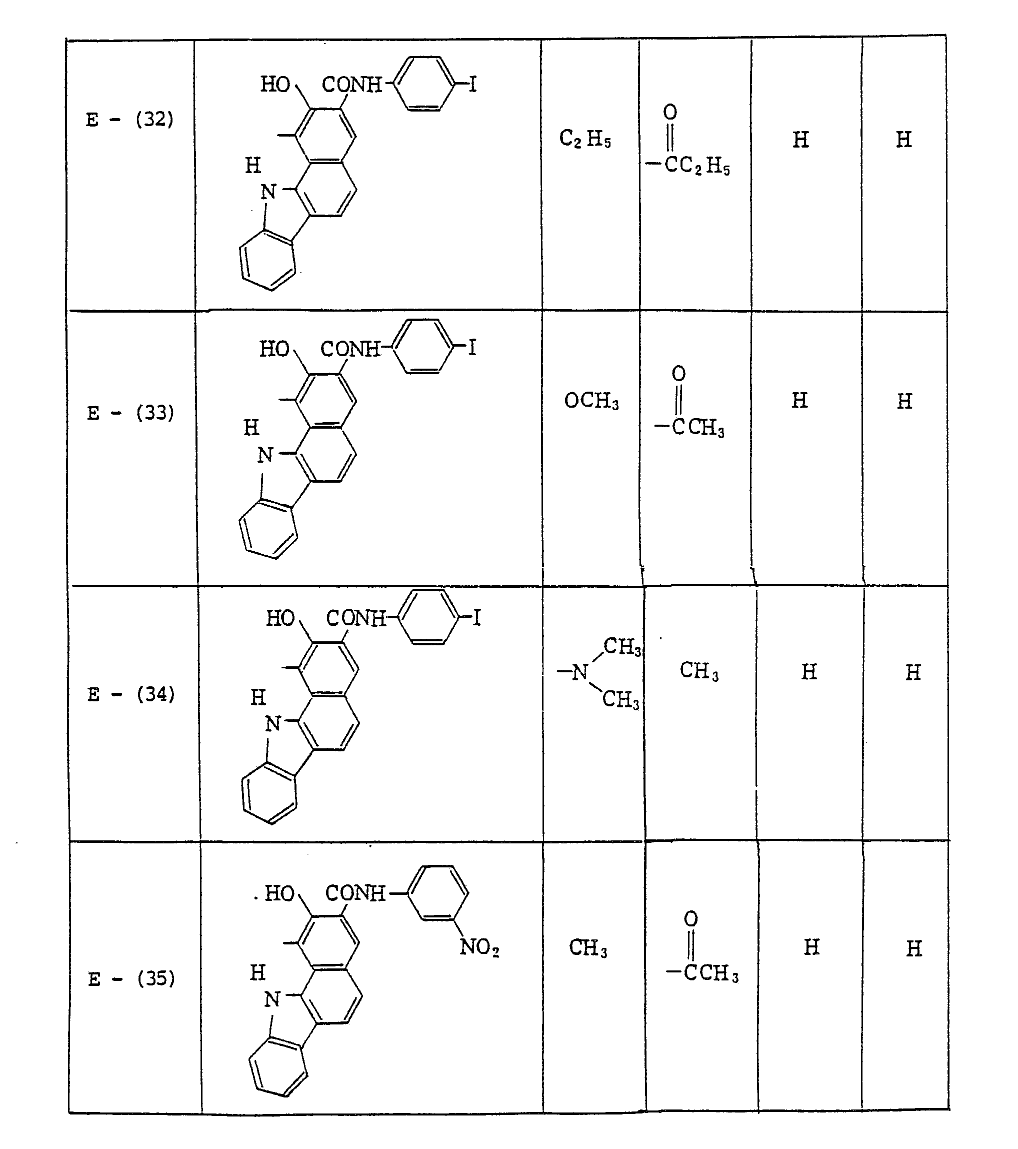

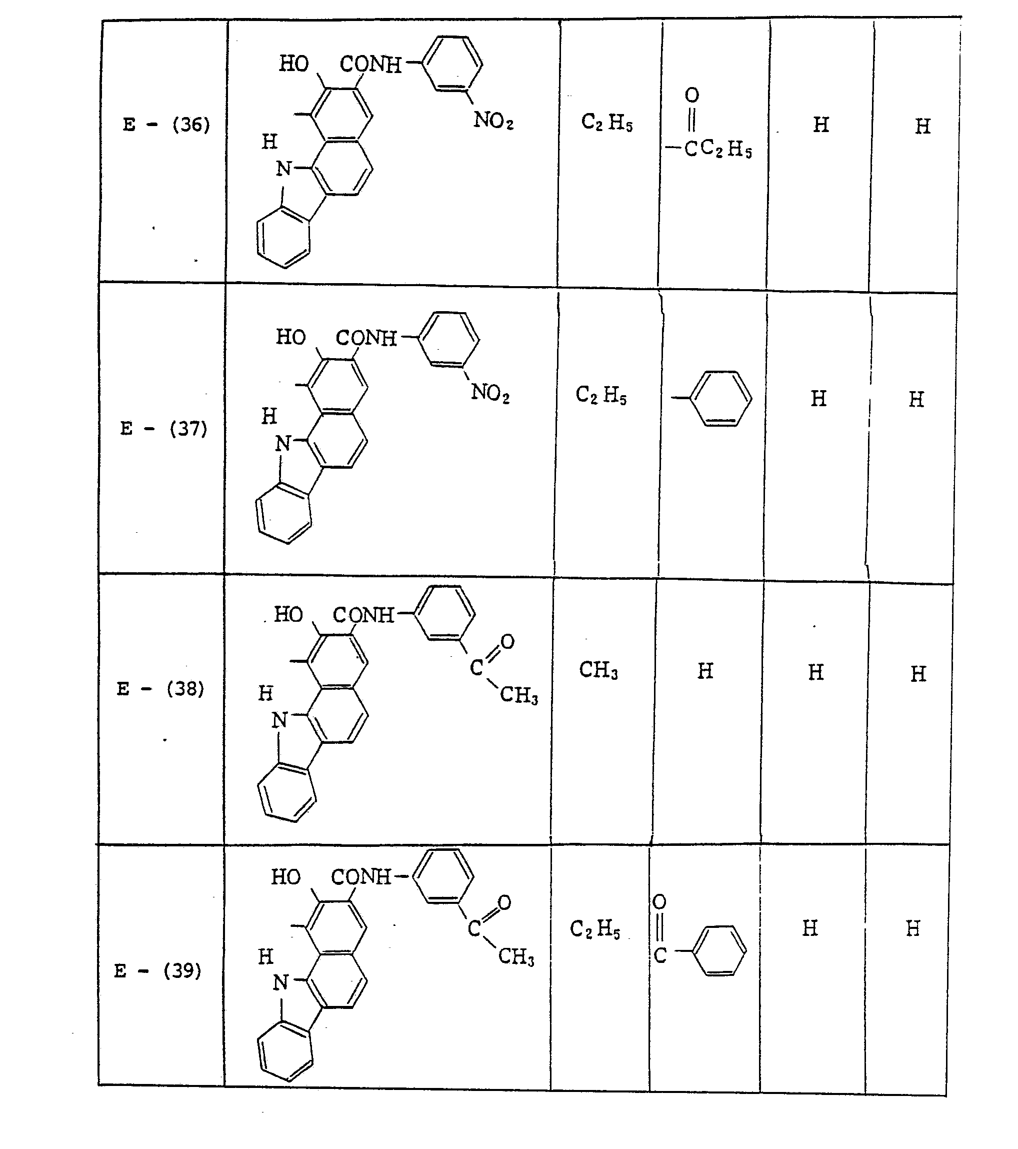

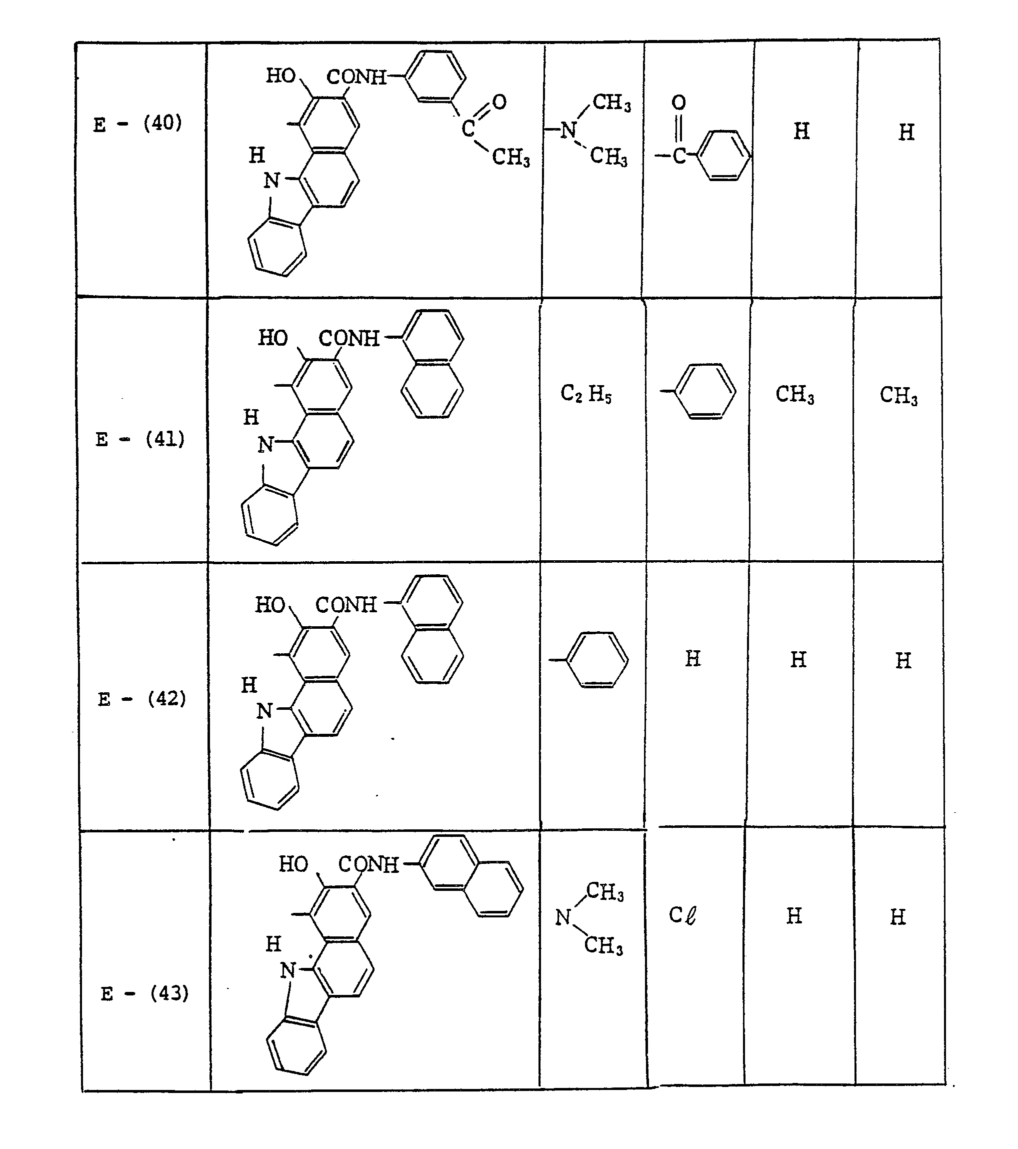

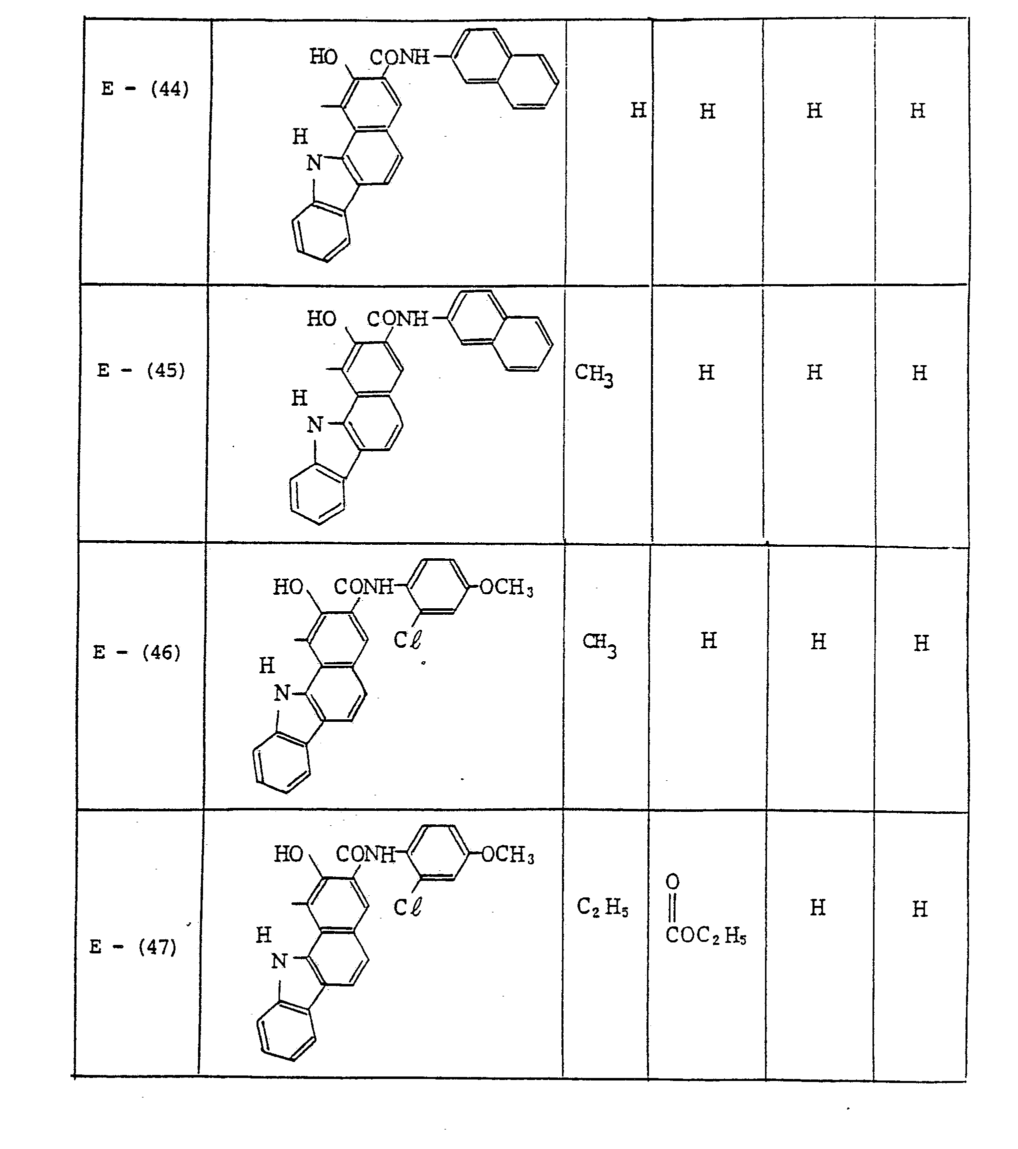

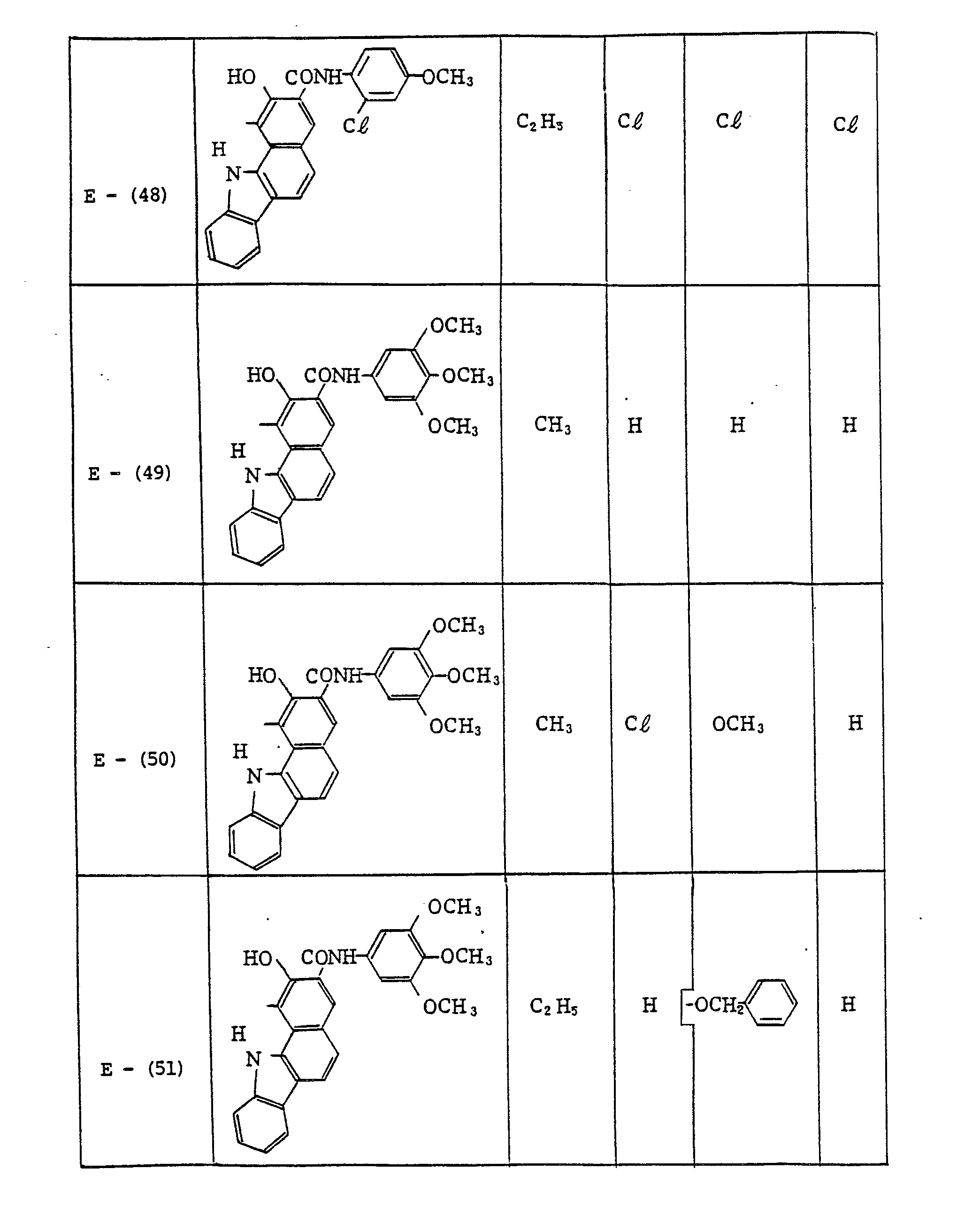

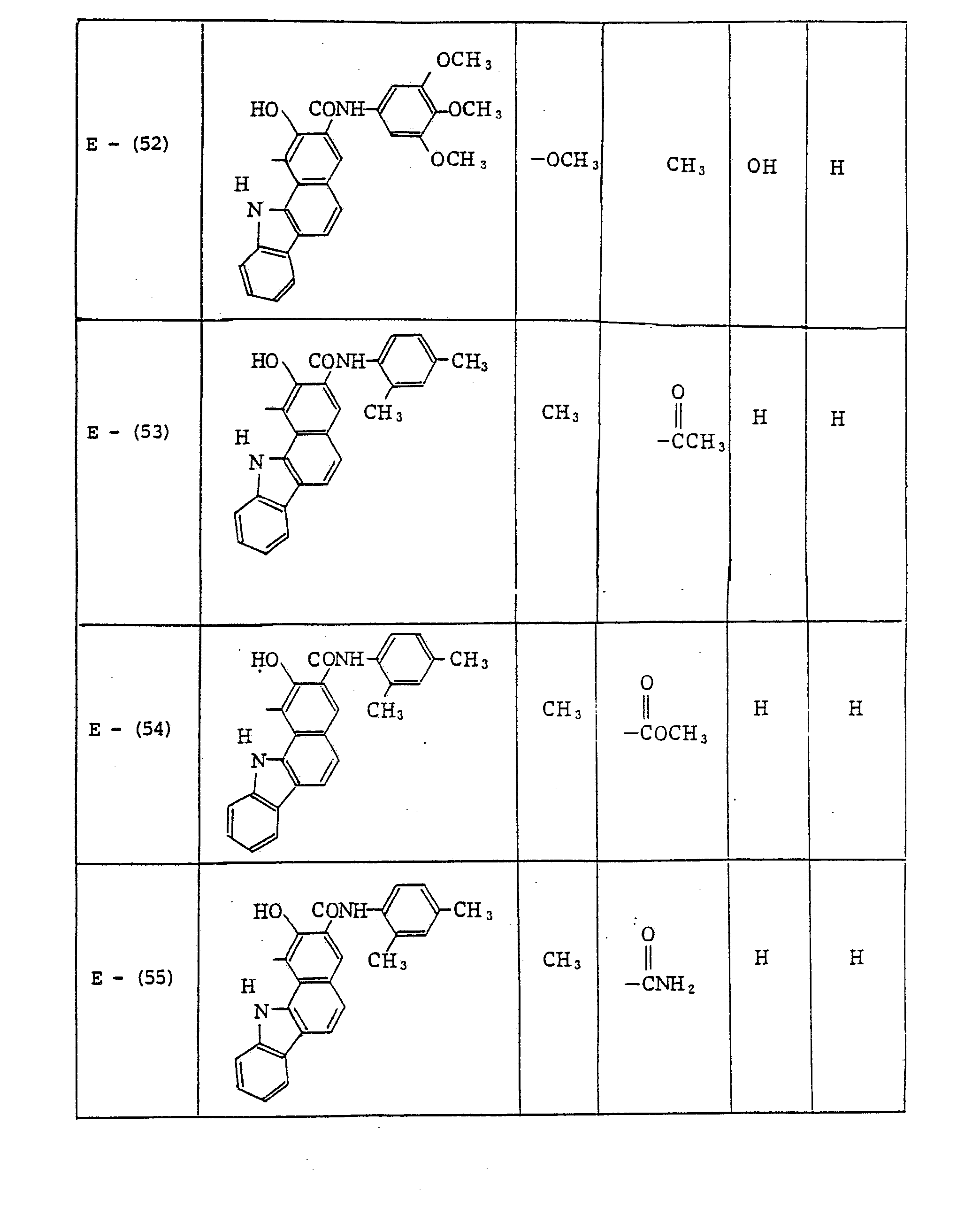

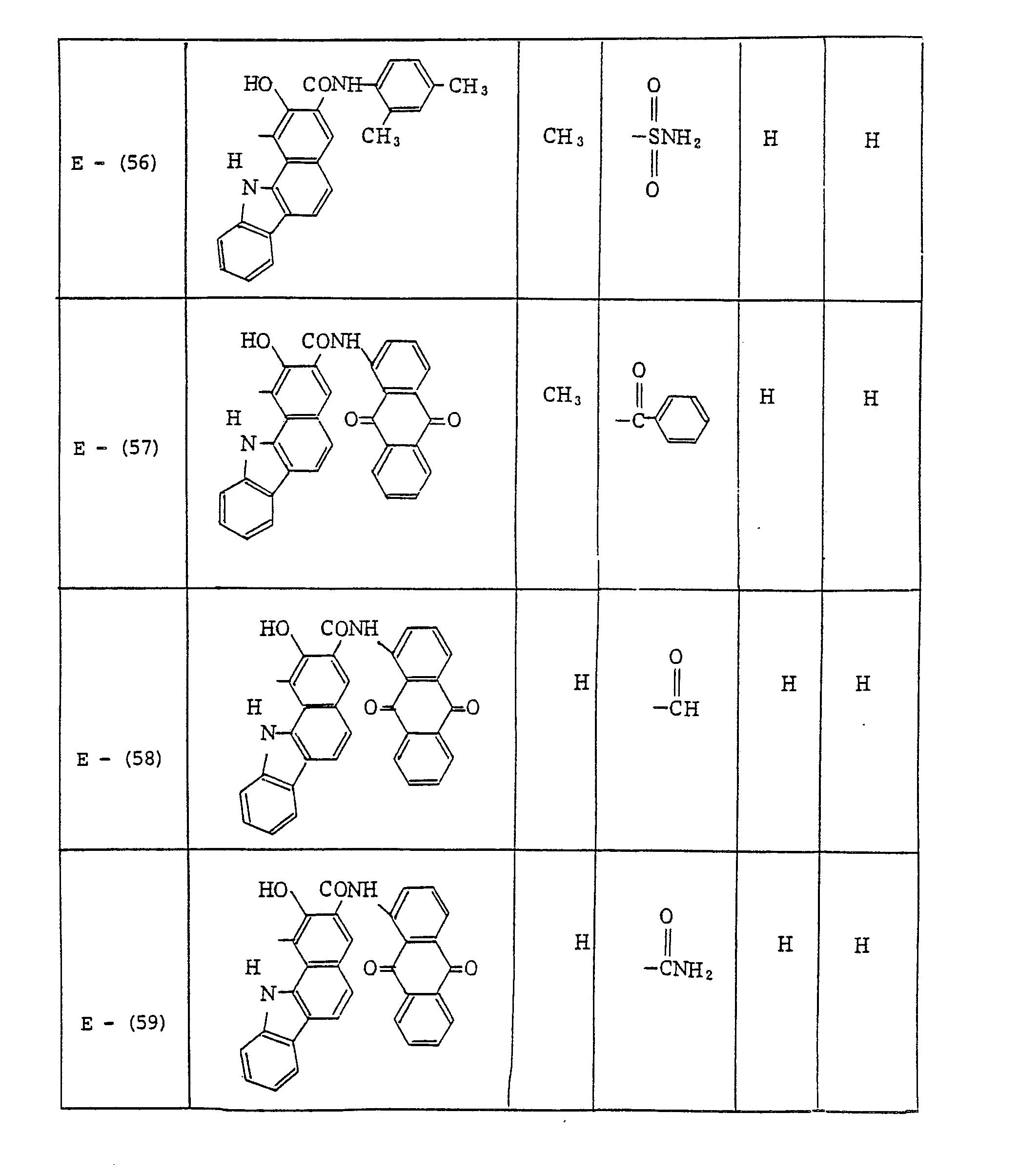

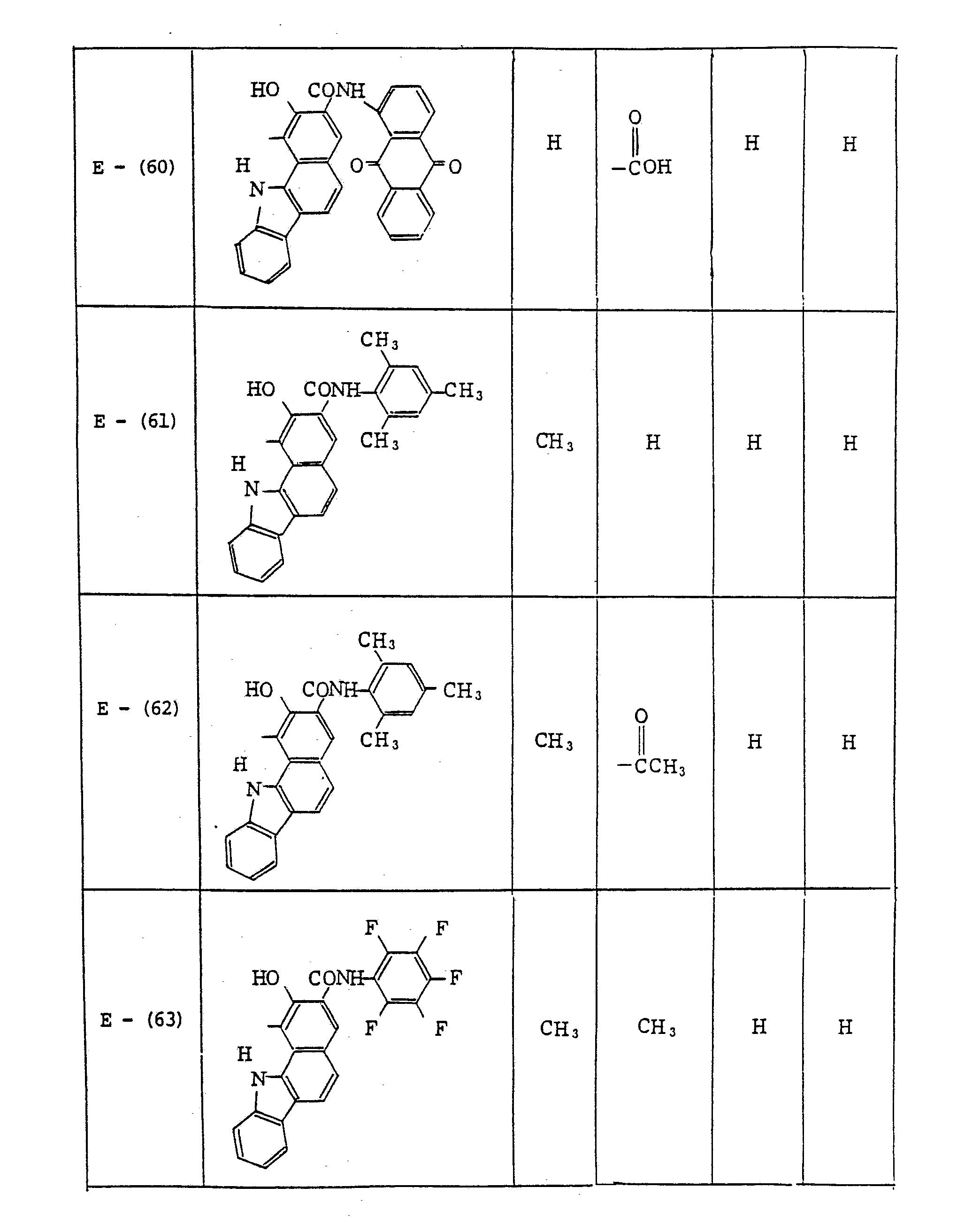

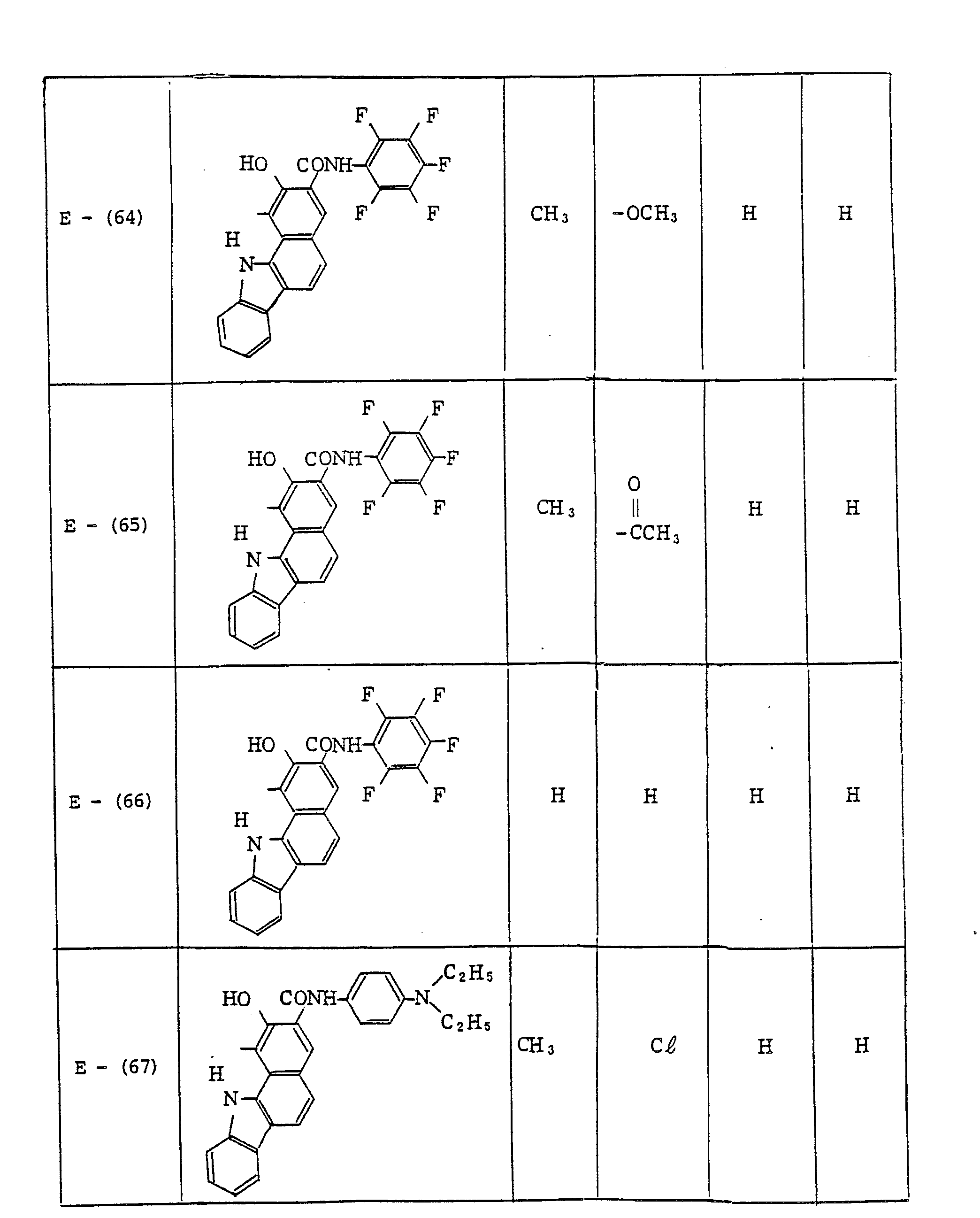

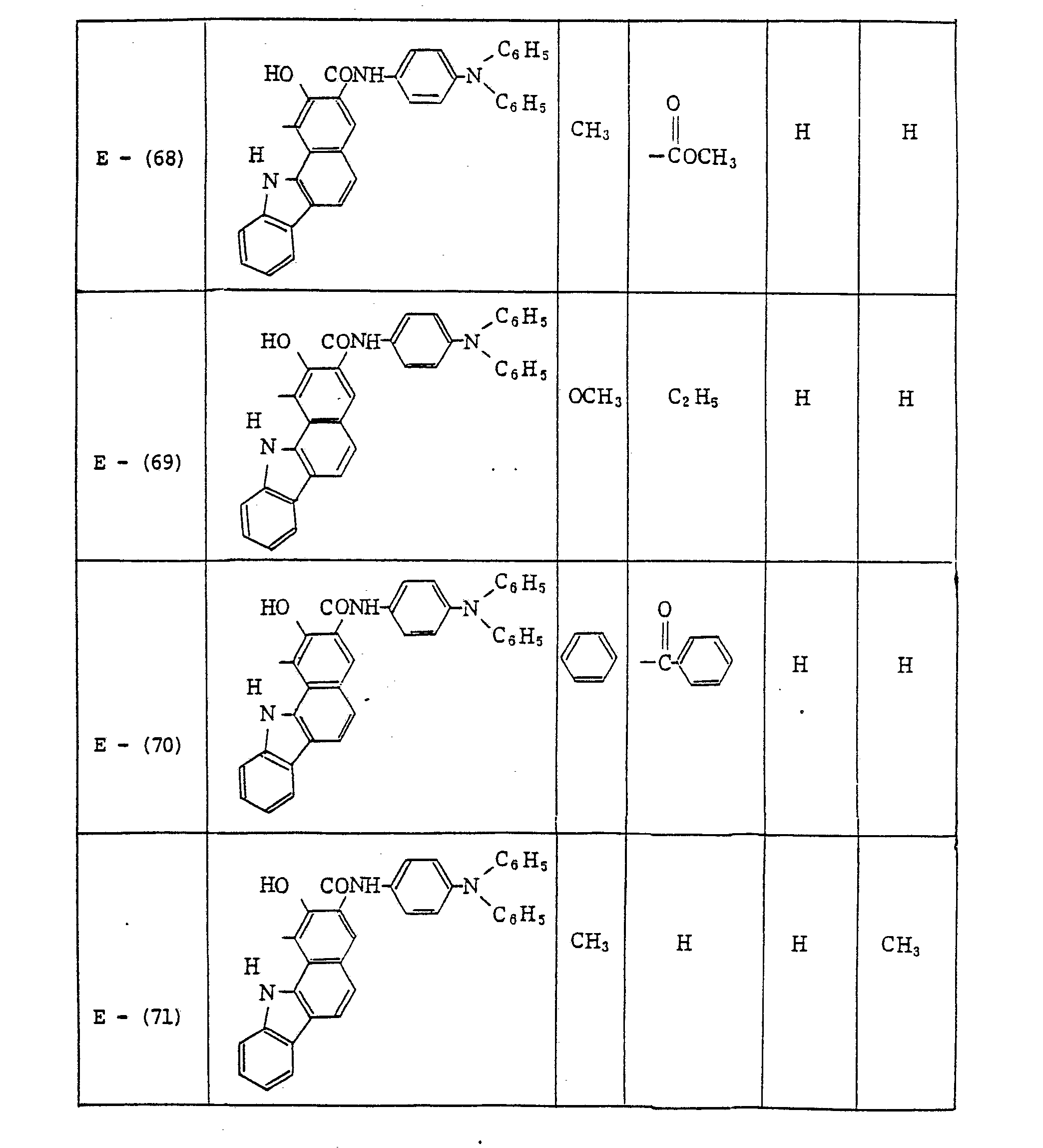

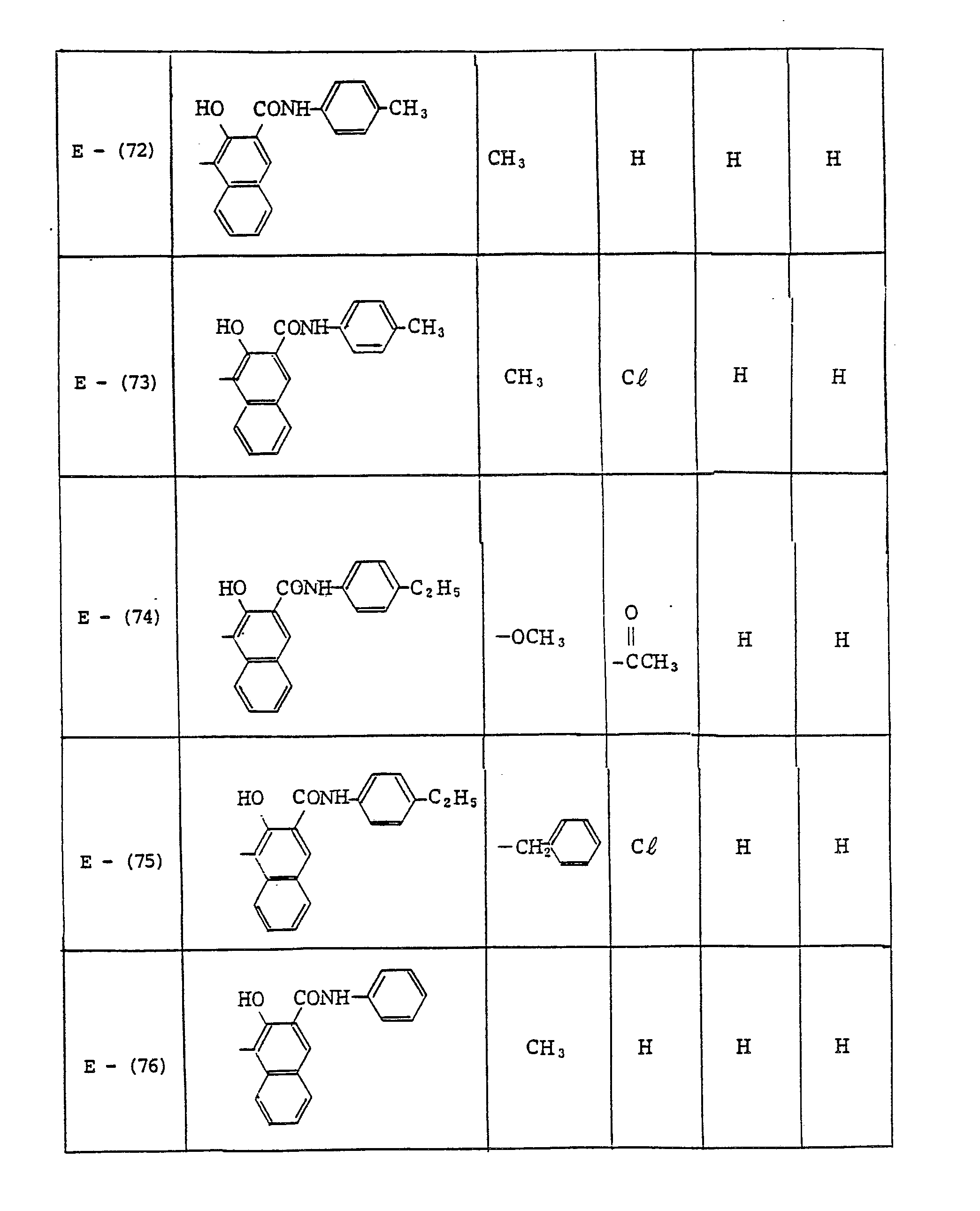

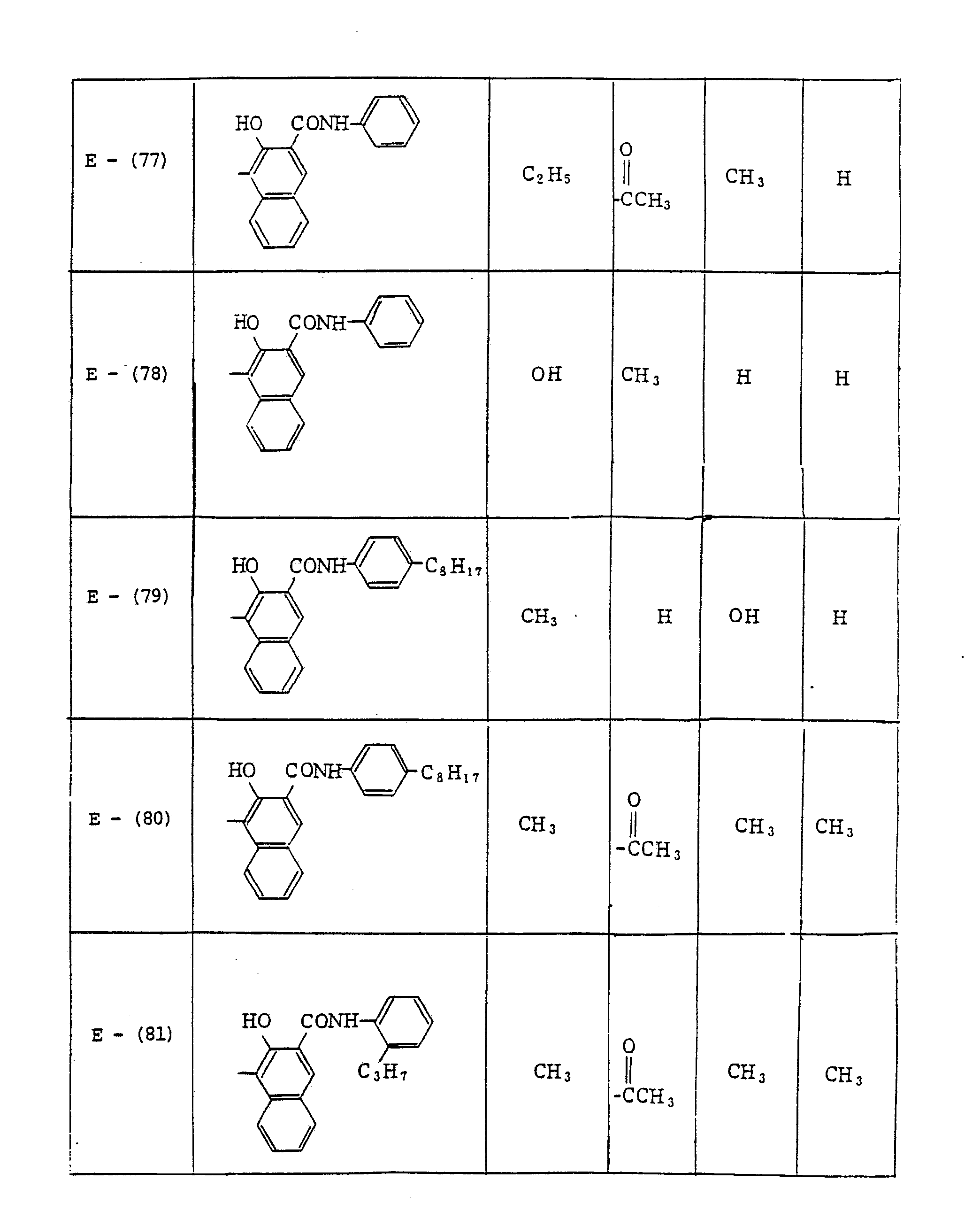

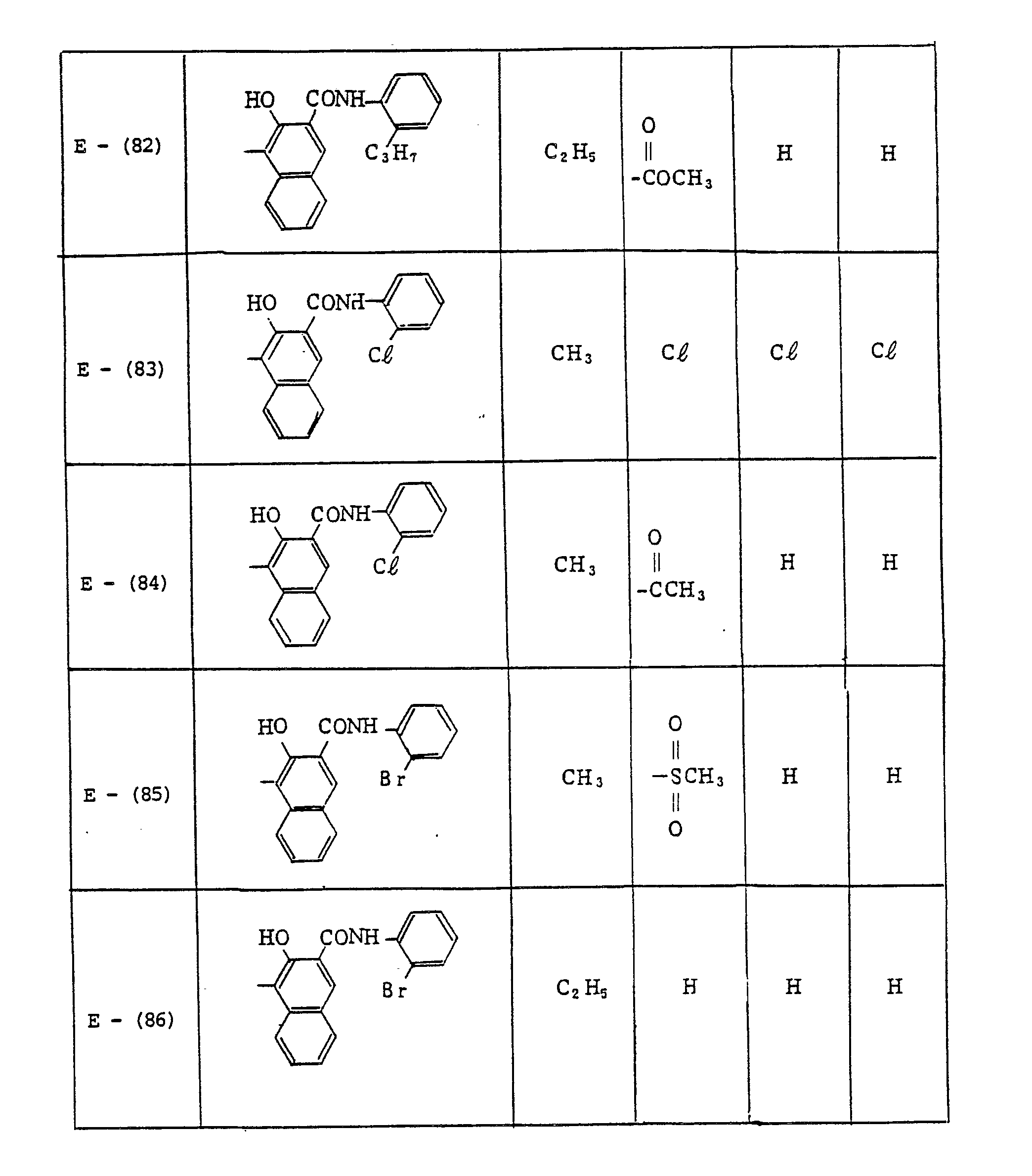

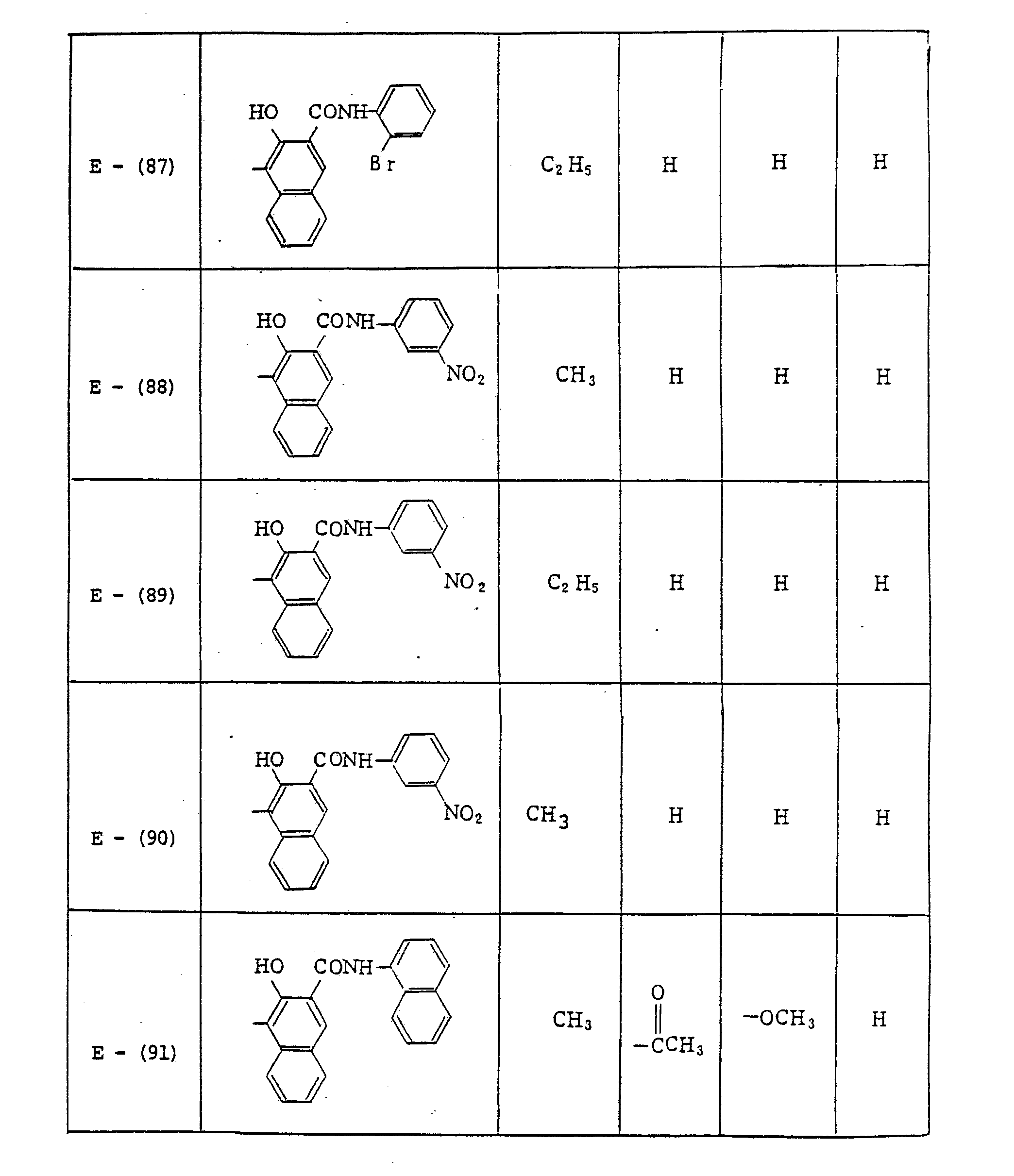

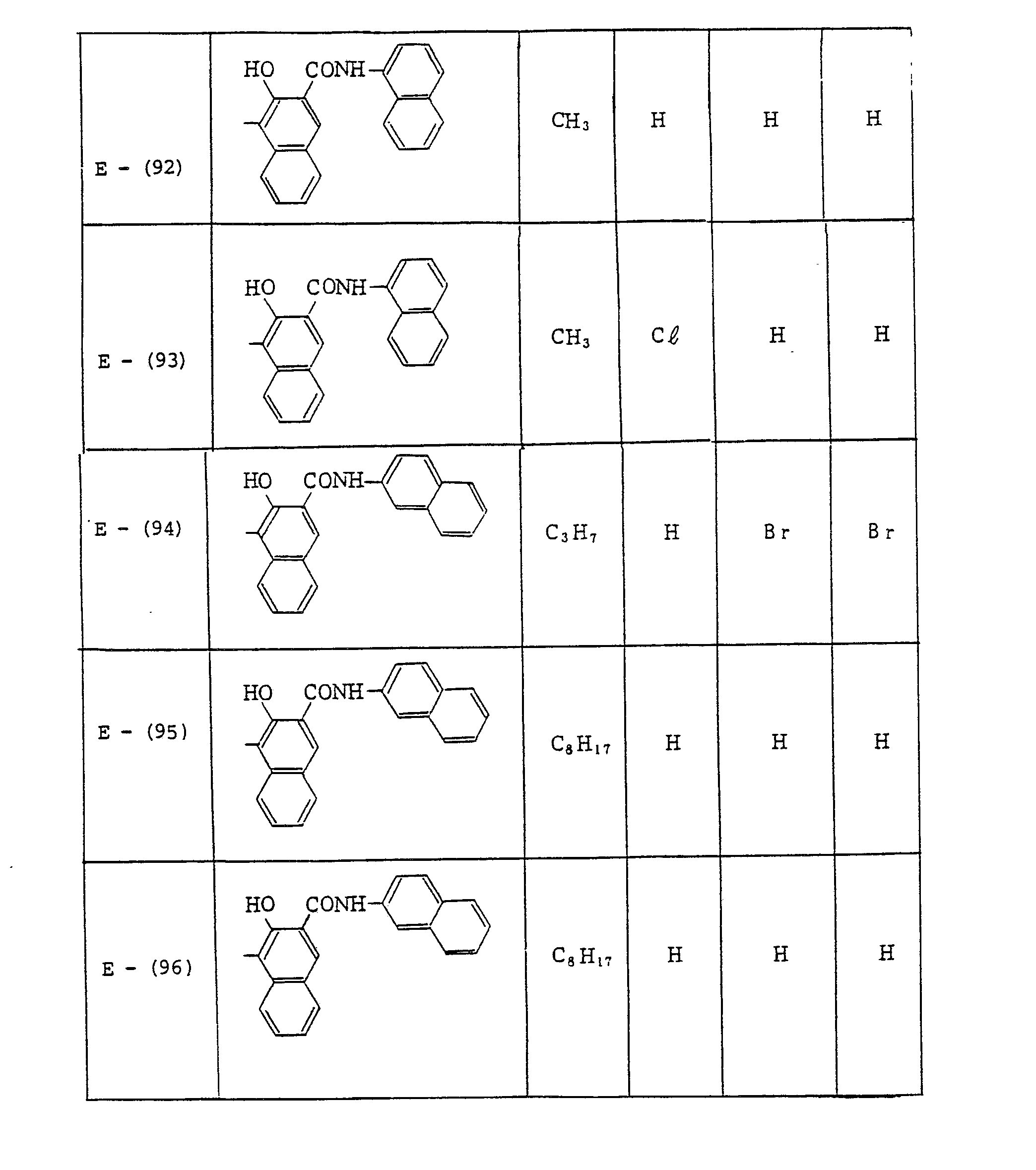

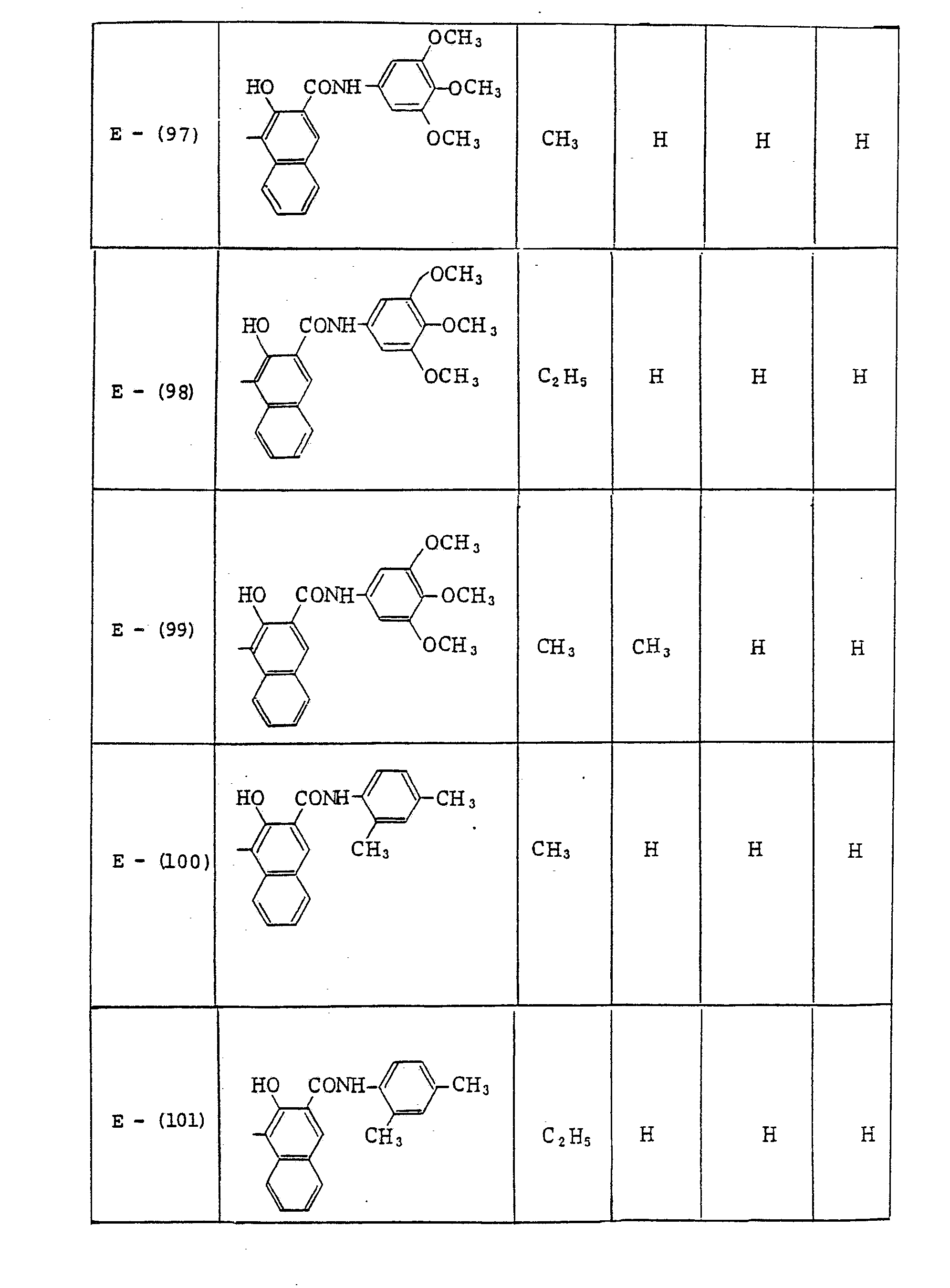

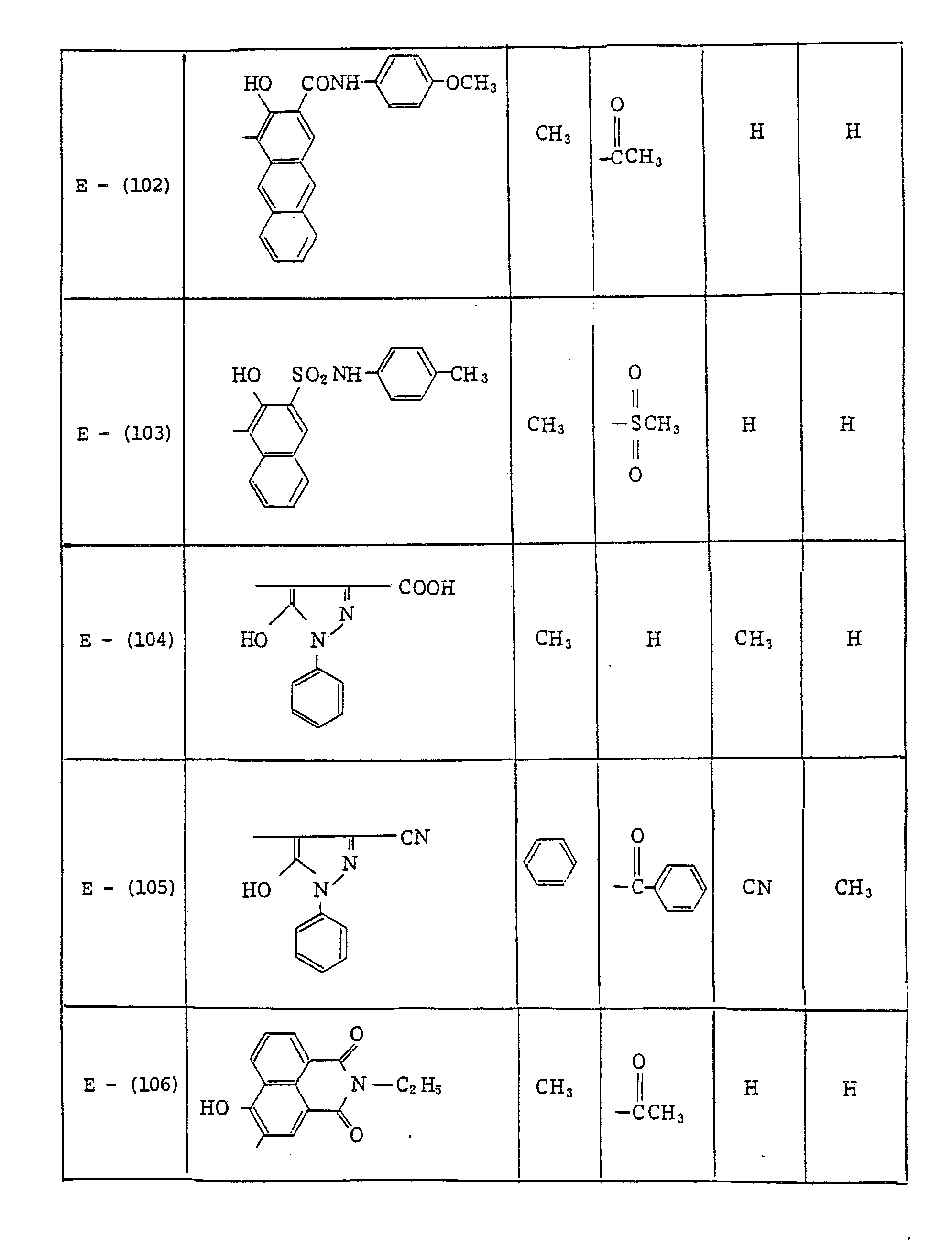

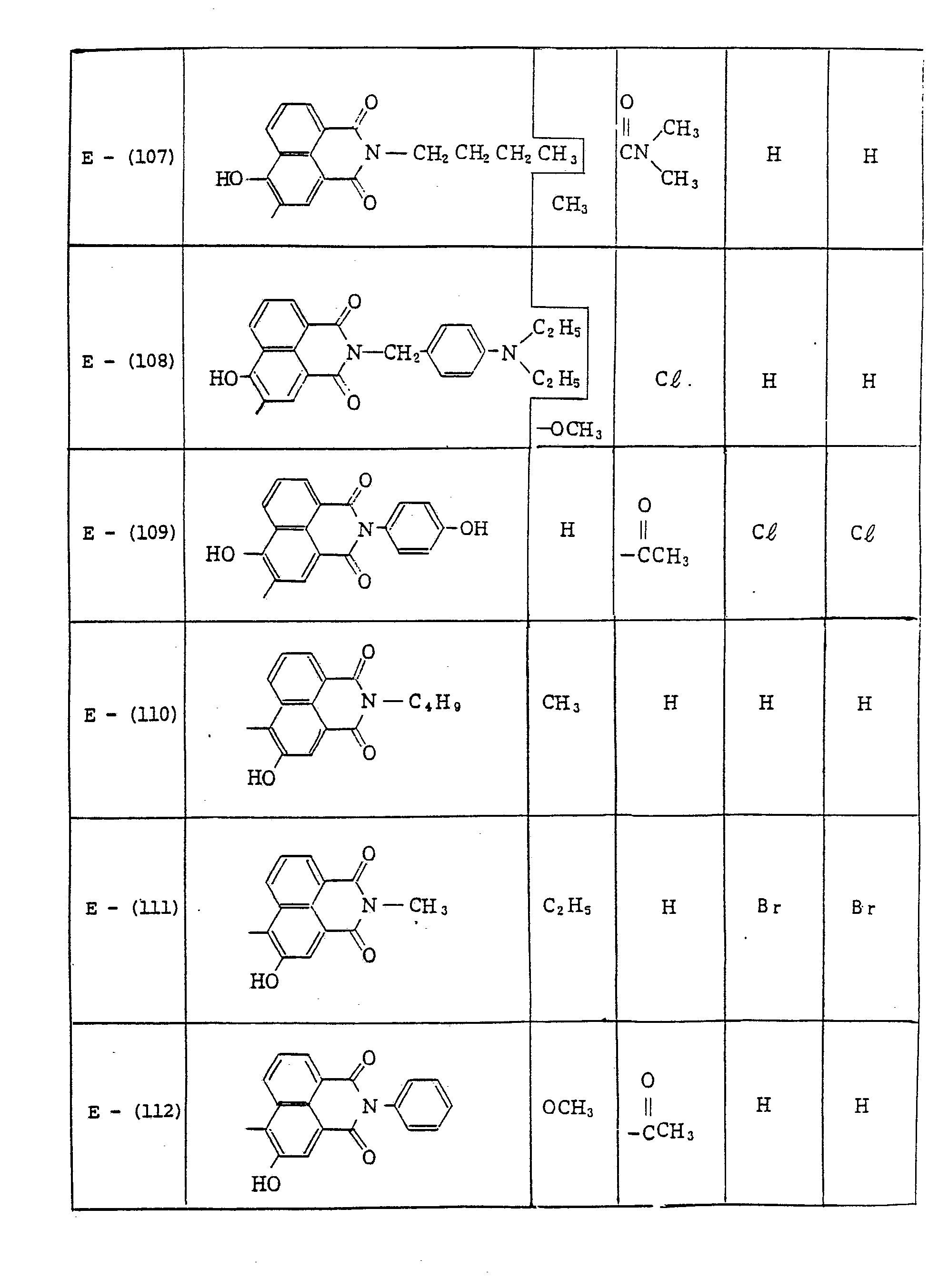

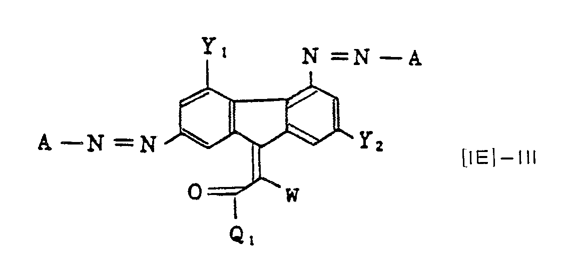

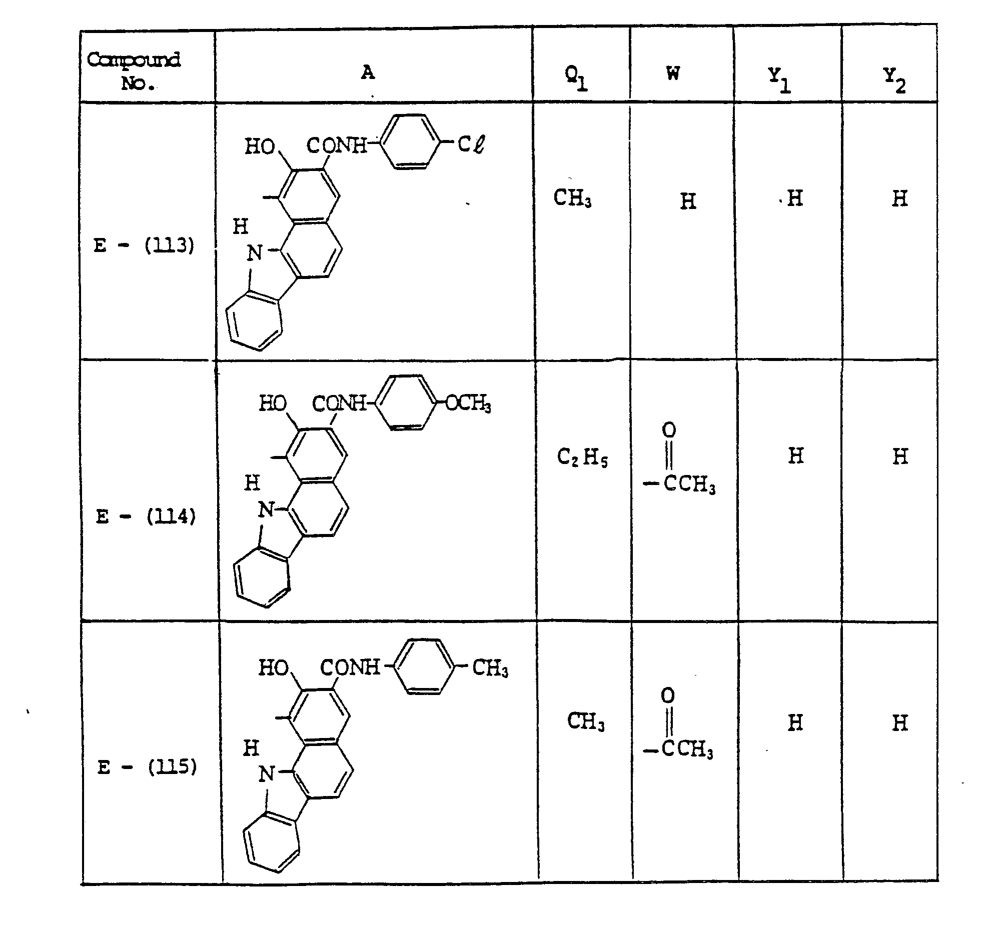

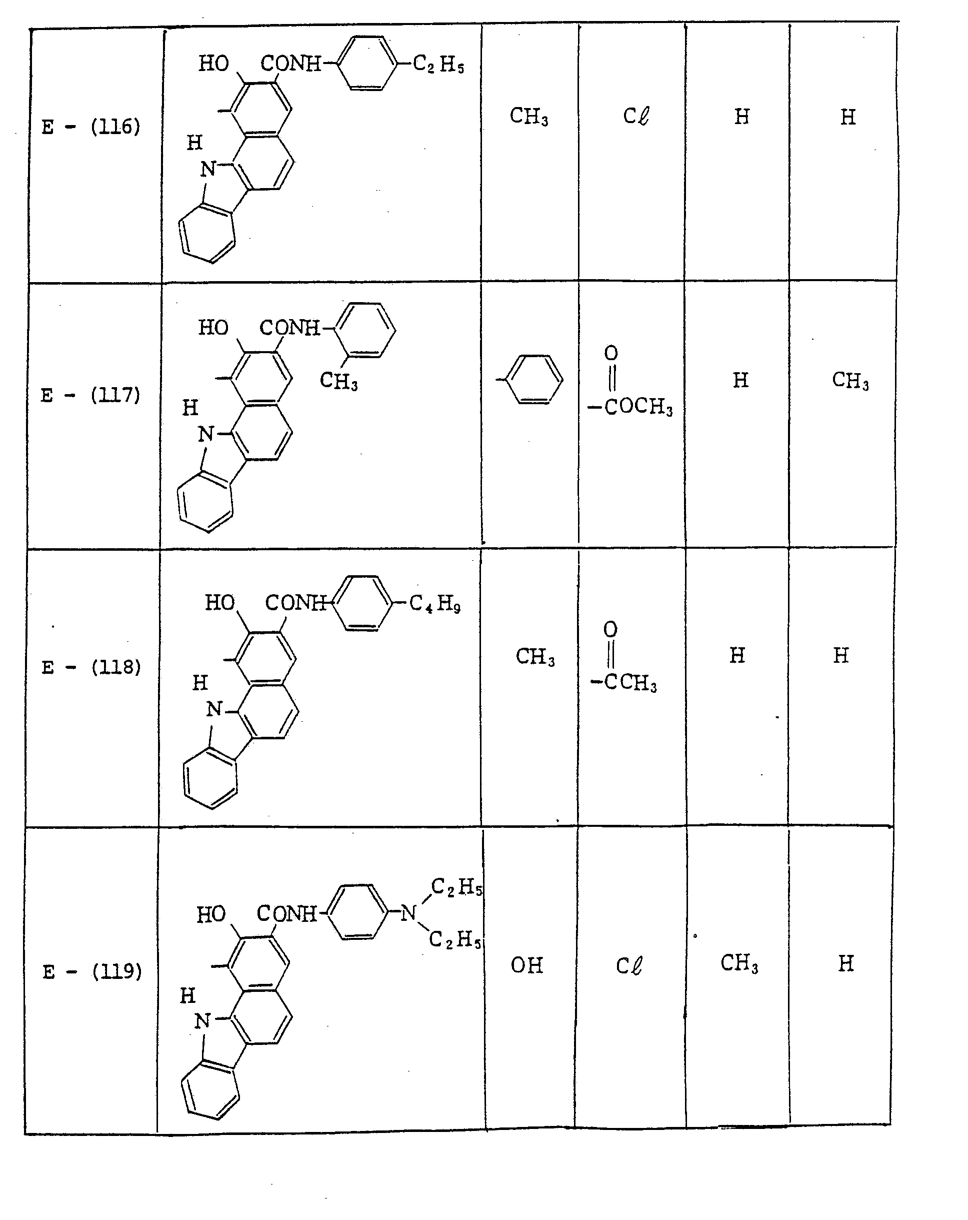

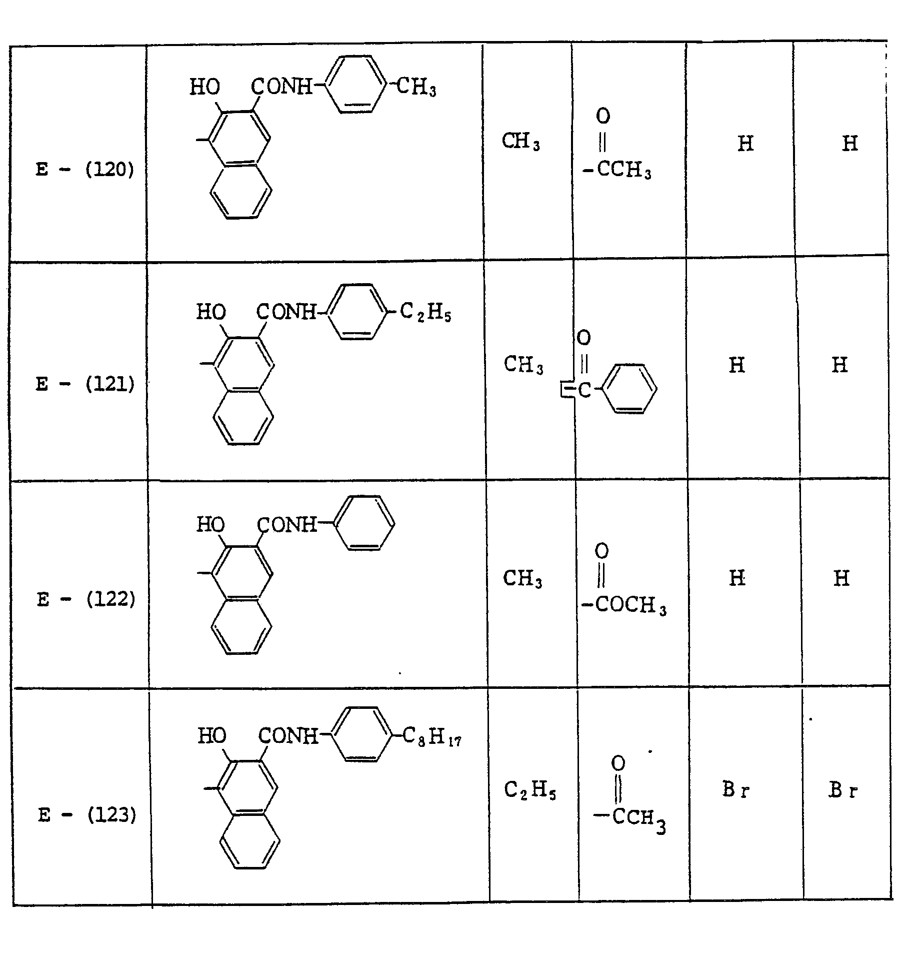

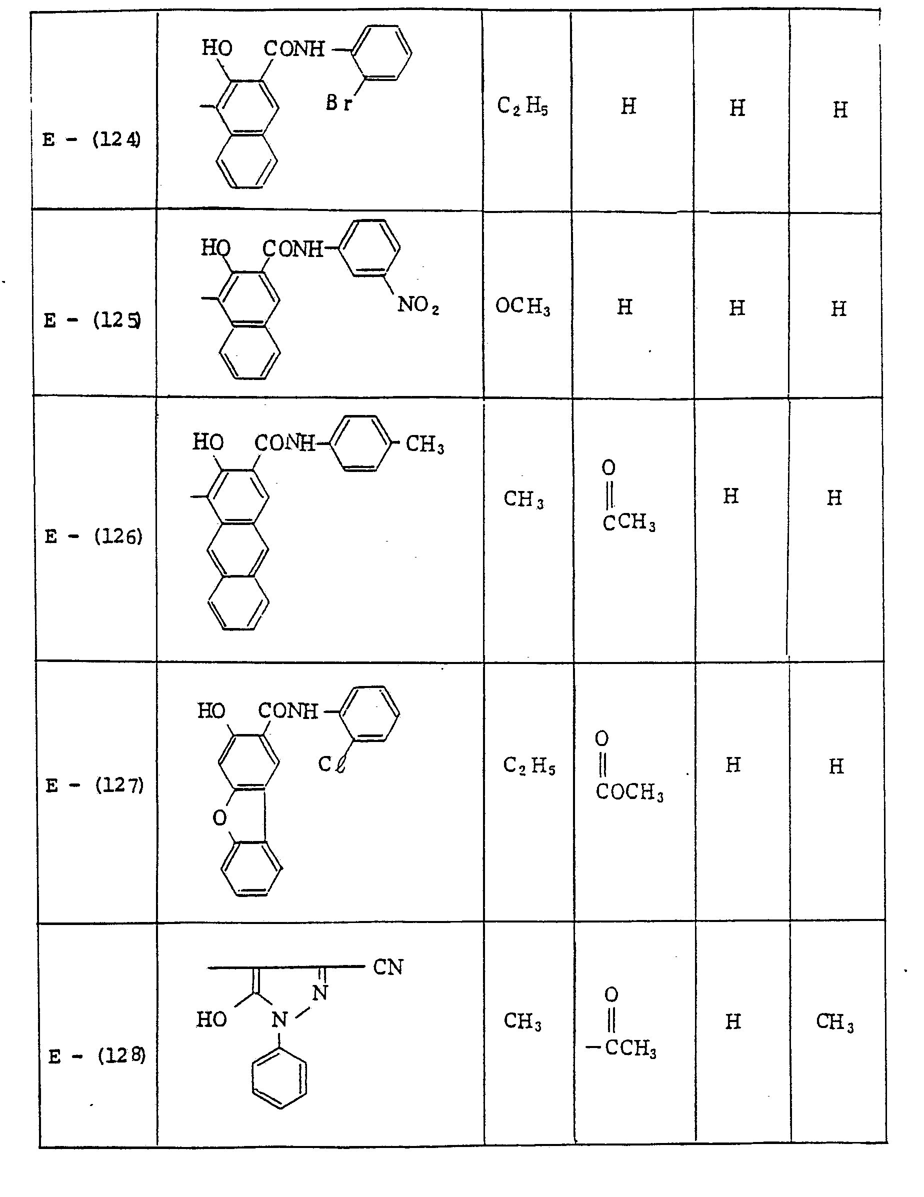

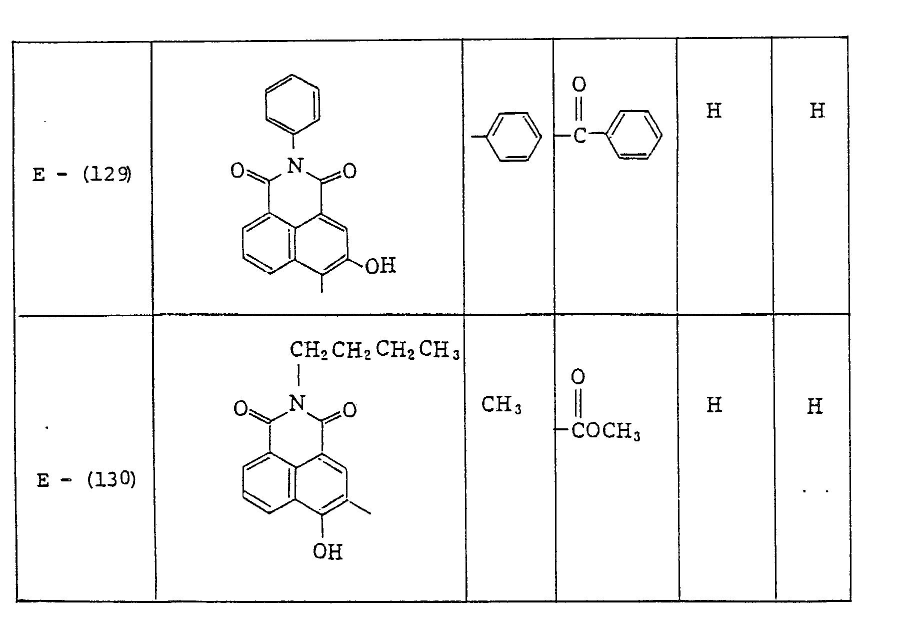

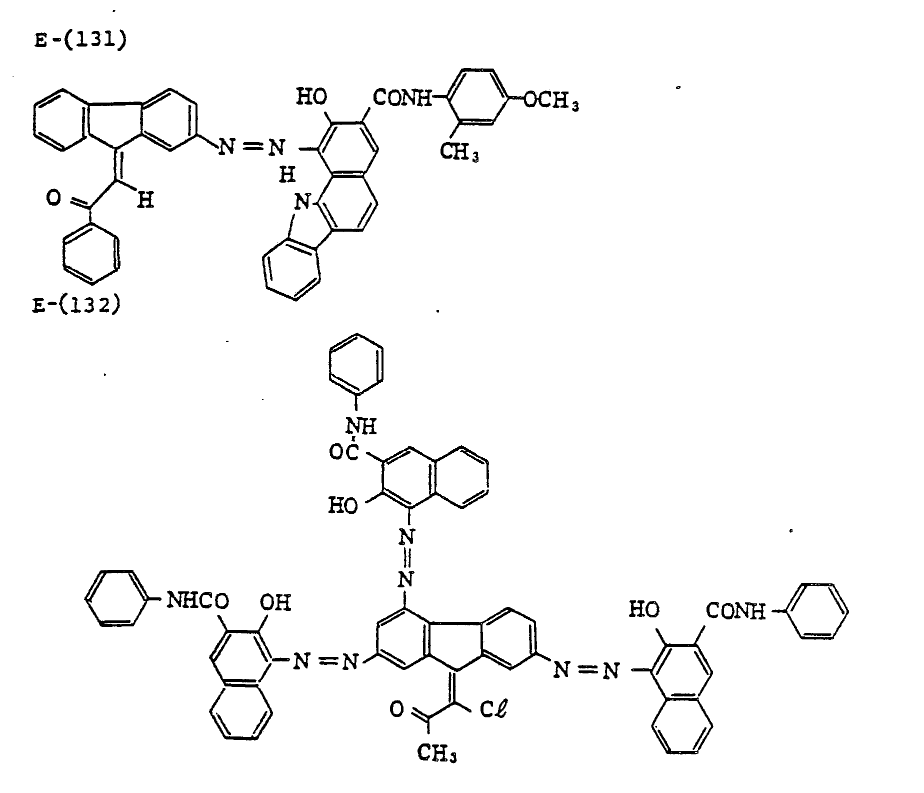

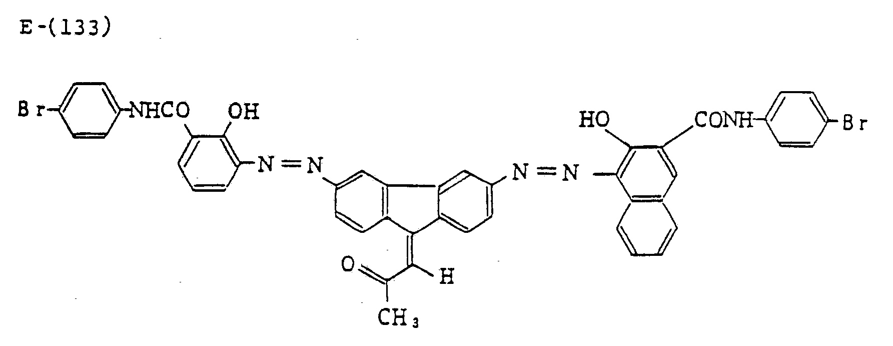

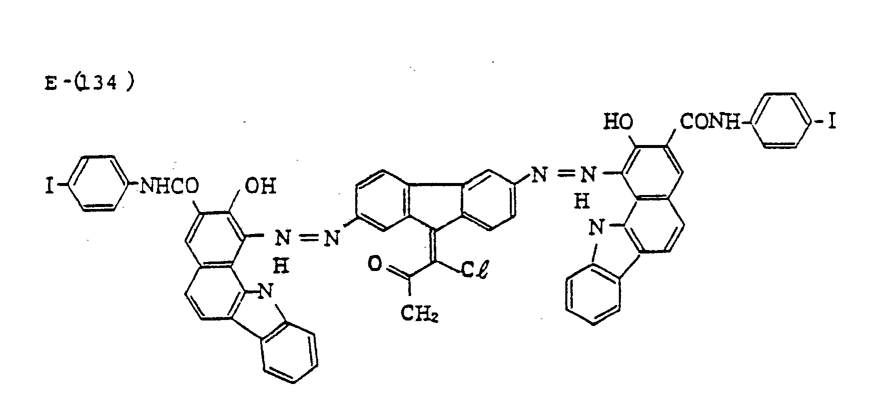

The azo compounds described above can be synthesized easily according to a known method.

### Embodiment F

The compound may be of formula [IF]: 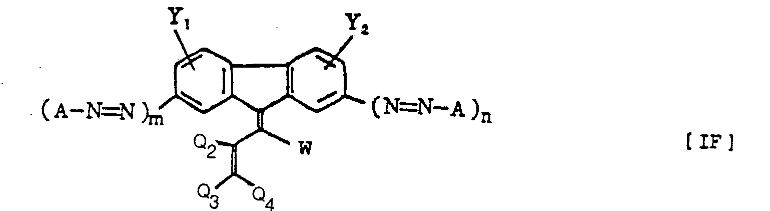 wherein Q₂, Q₃, Q₄, Y₁, Y₂, m, n and A are as defined in formula [I] and W is as defined in formula [ID].

Prefered compounds having good sensitivity and stability to heat and light are of formula [IF]―II: 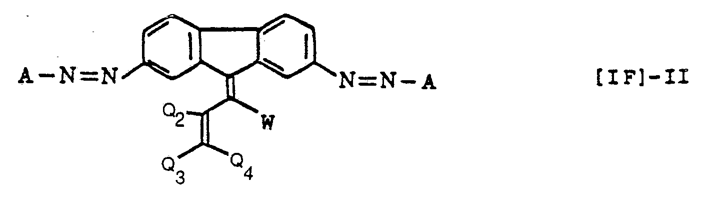 wherein Q₂, Q₃, Q₄, W, Y₁, Y2, and A are as defined in formula [ID].

Examples of useful azo compounds of formula |IF| include, for example, those of formula

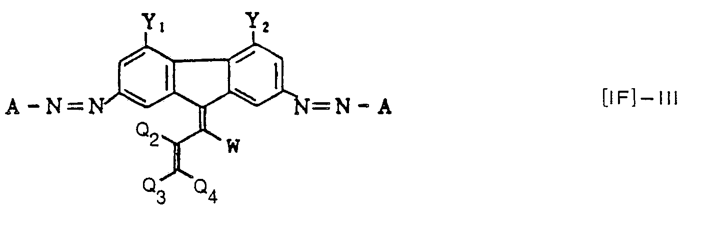

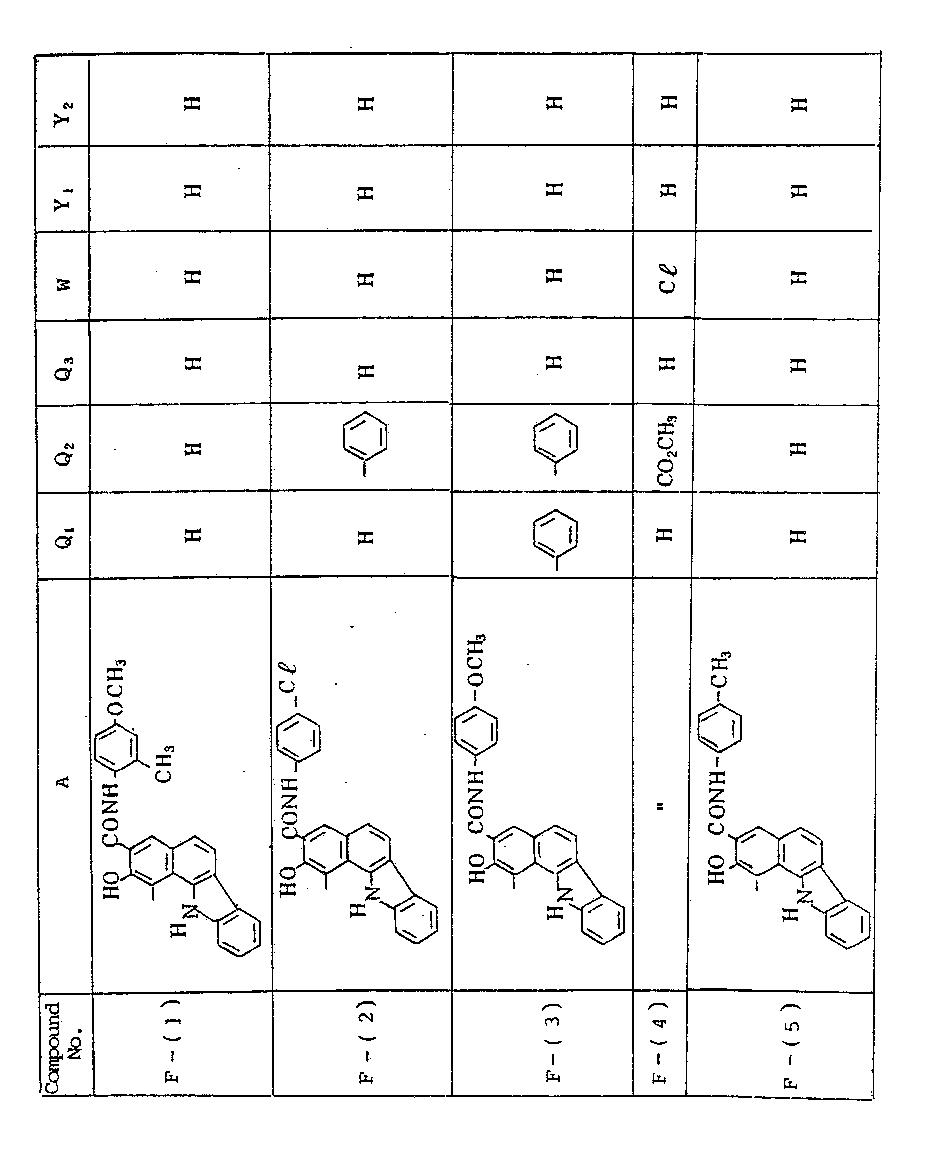

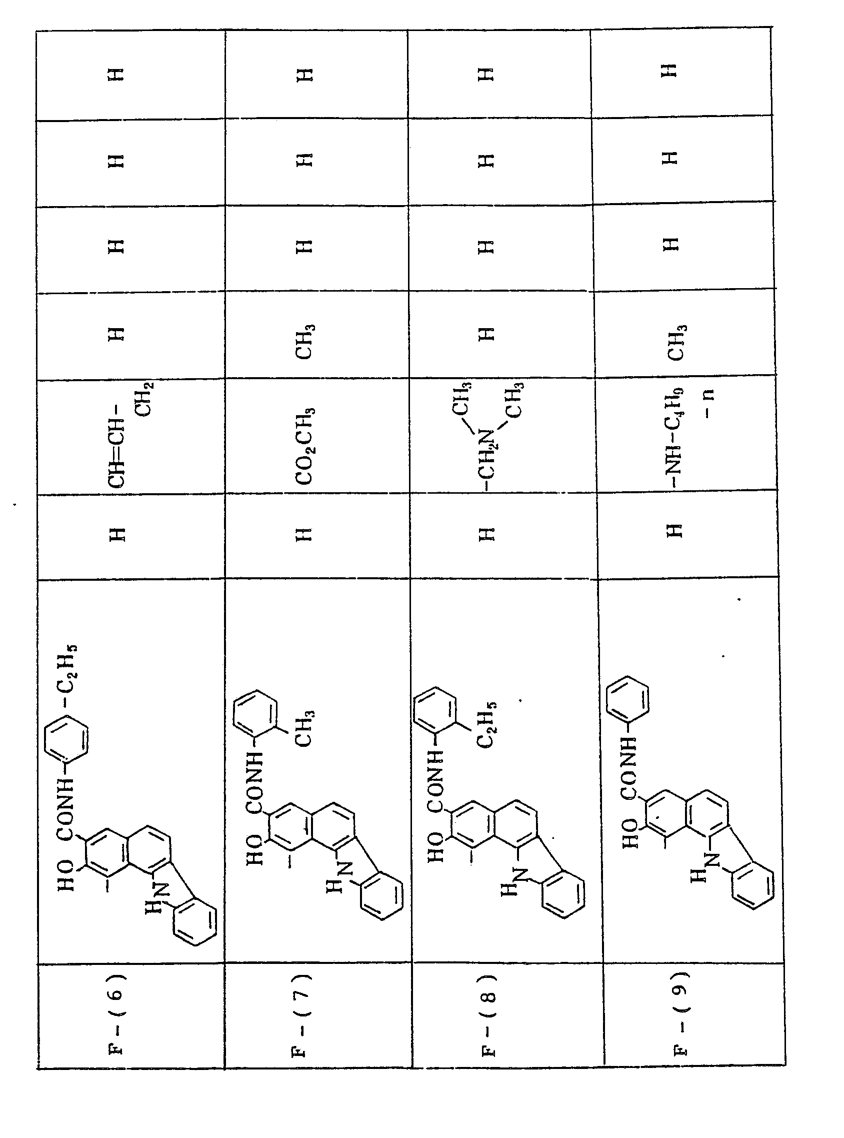

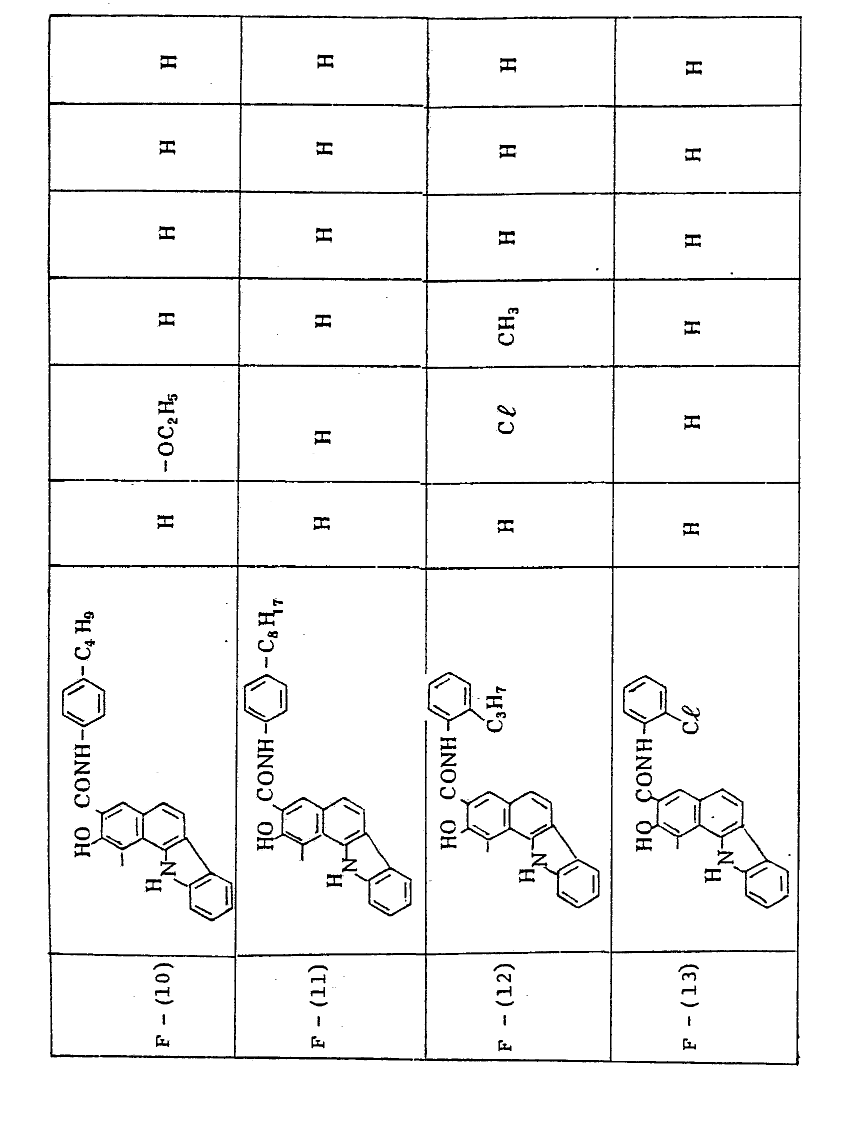

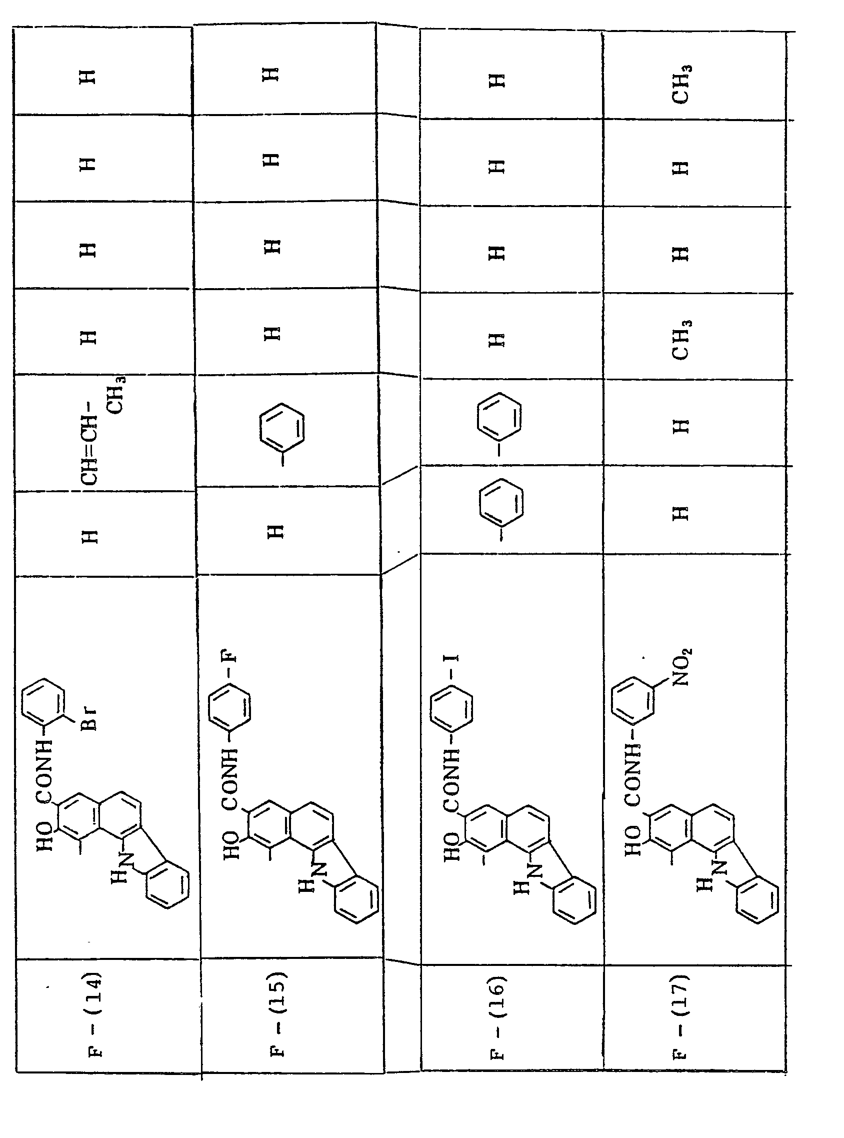

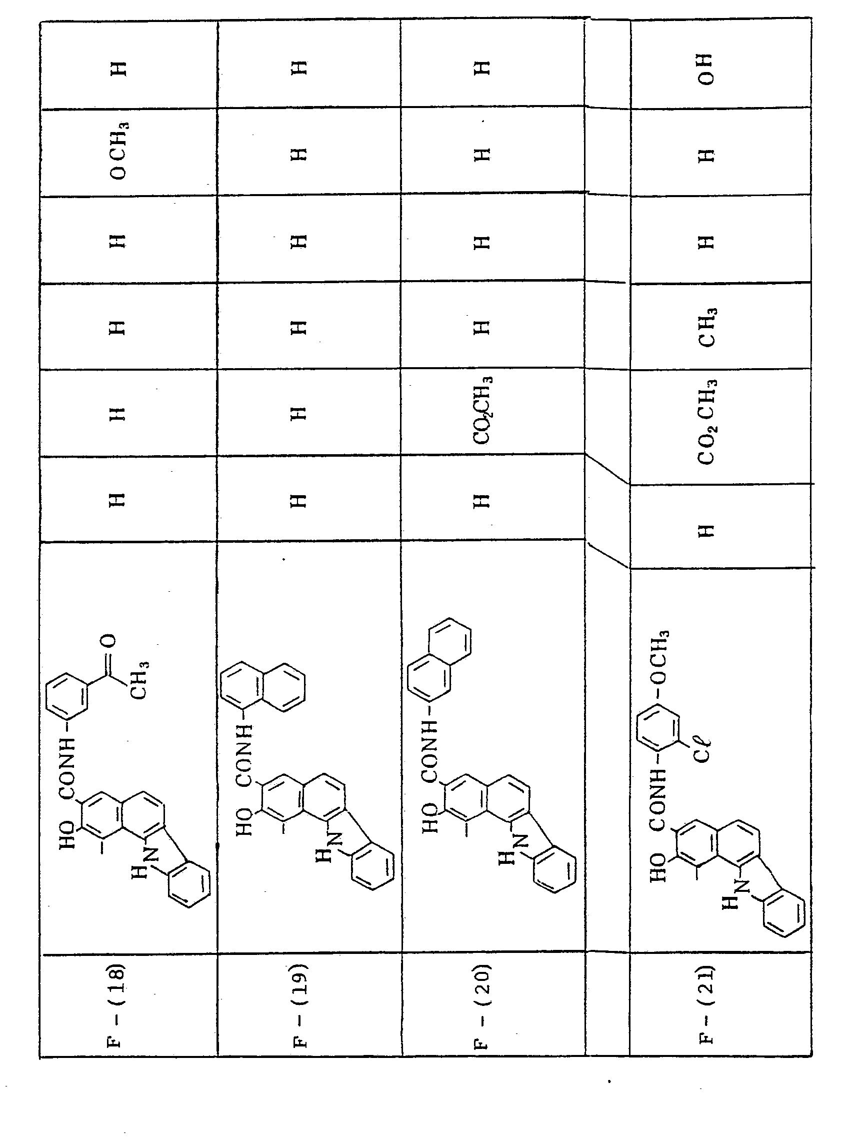

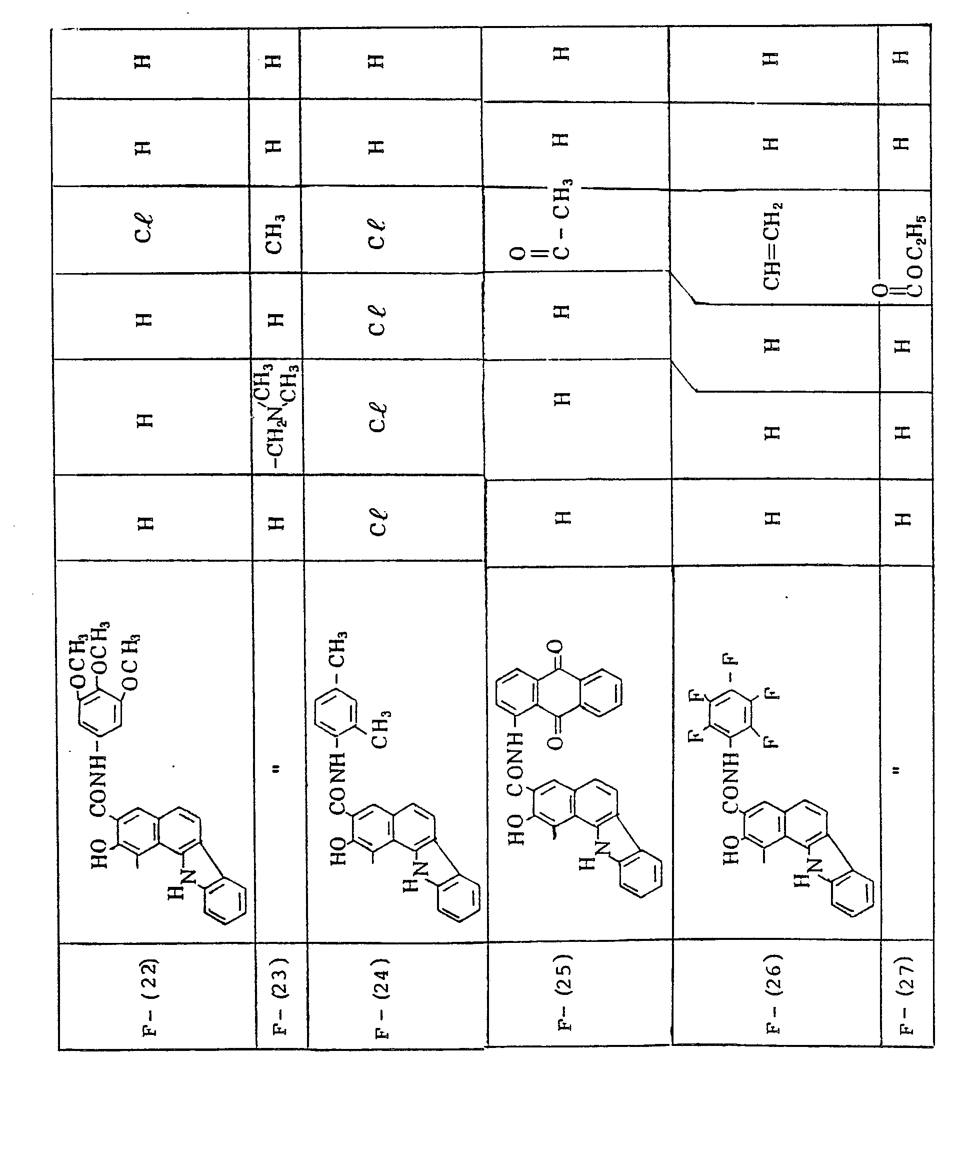

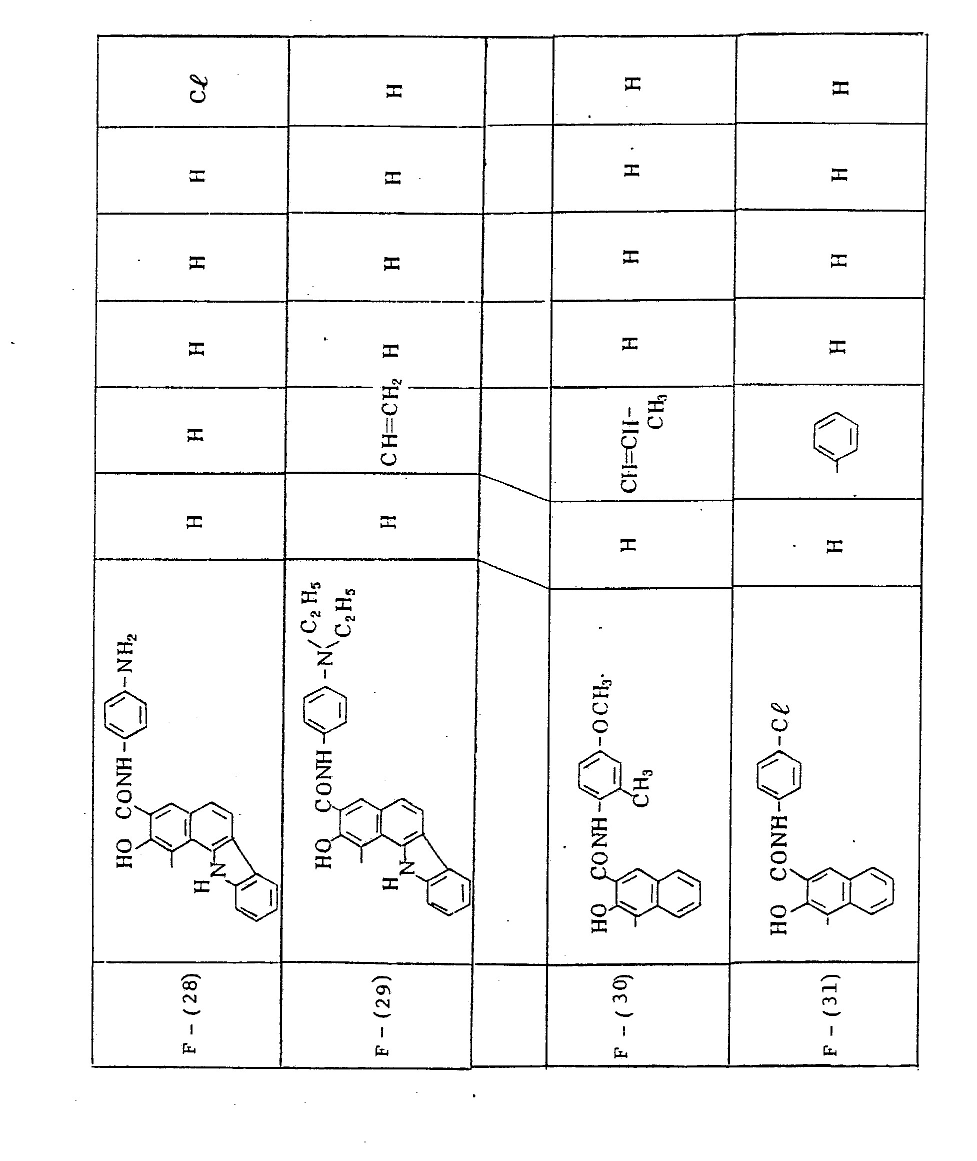

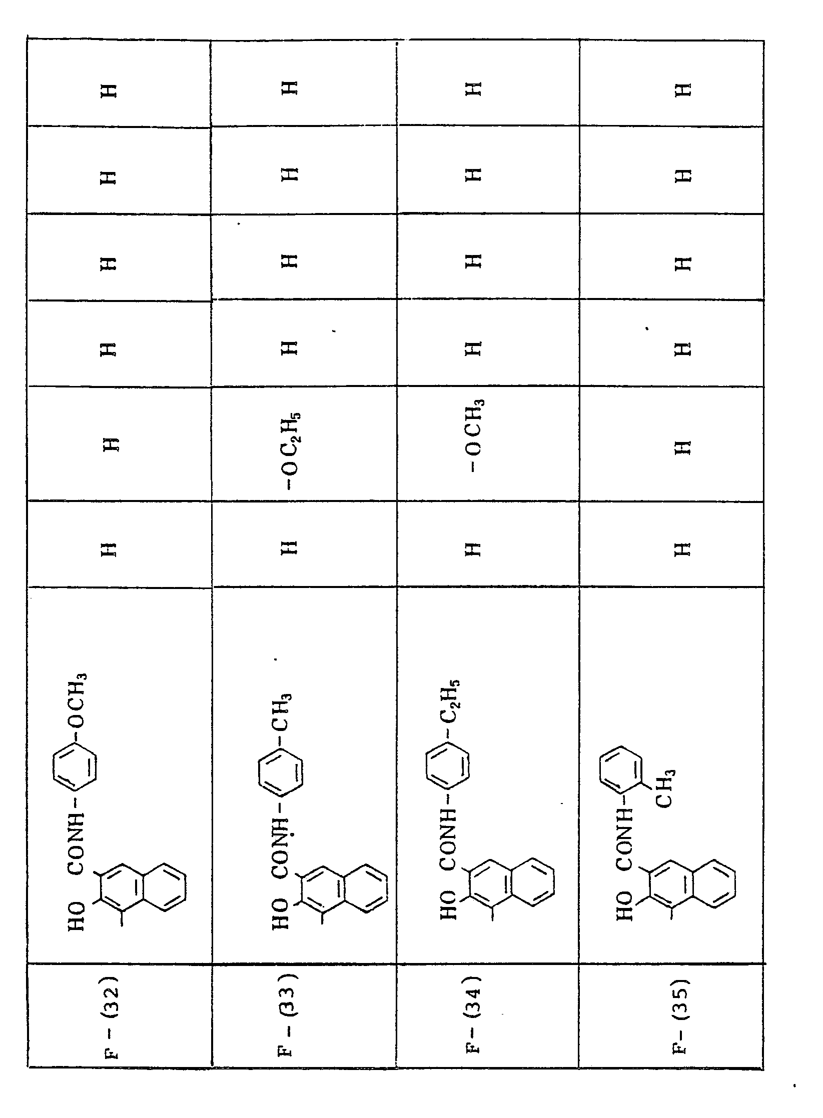

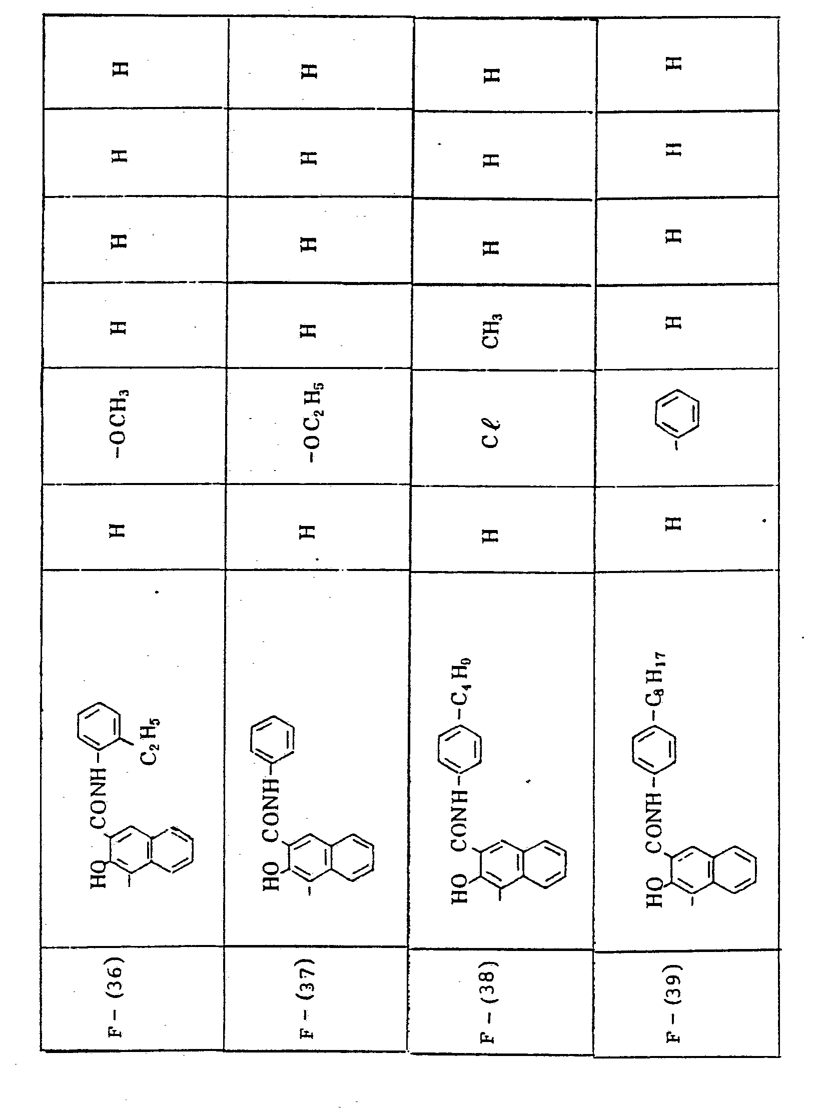

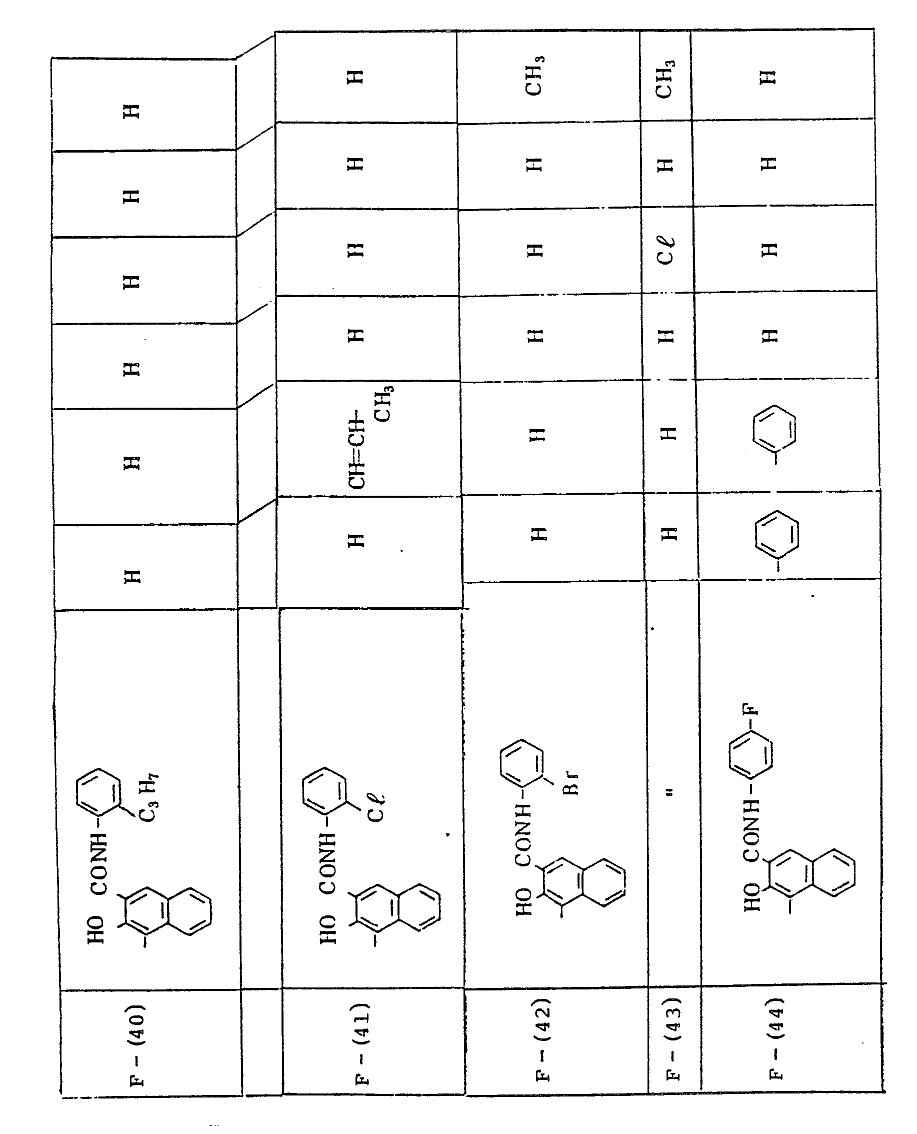

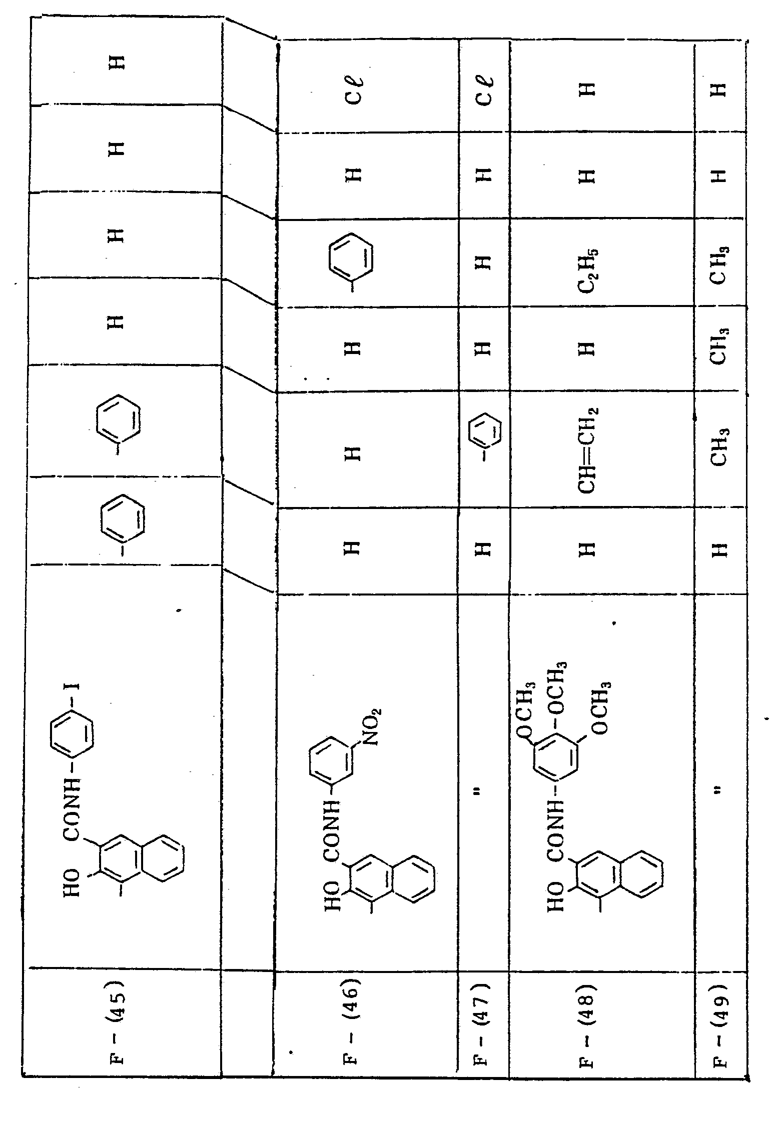

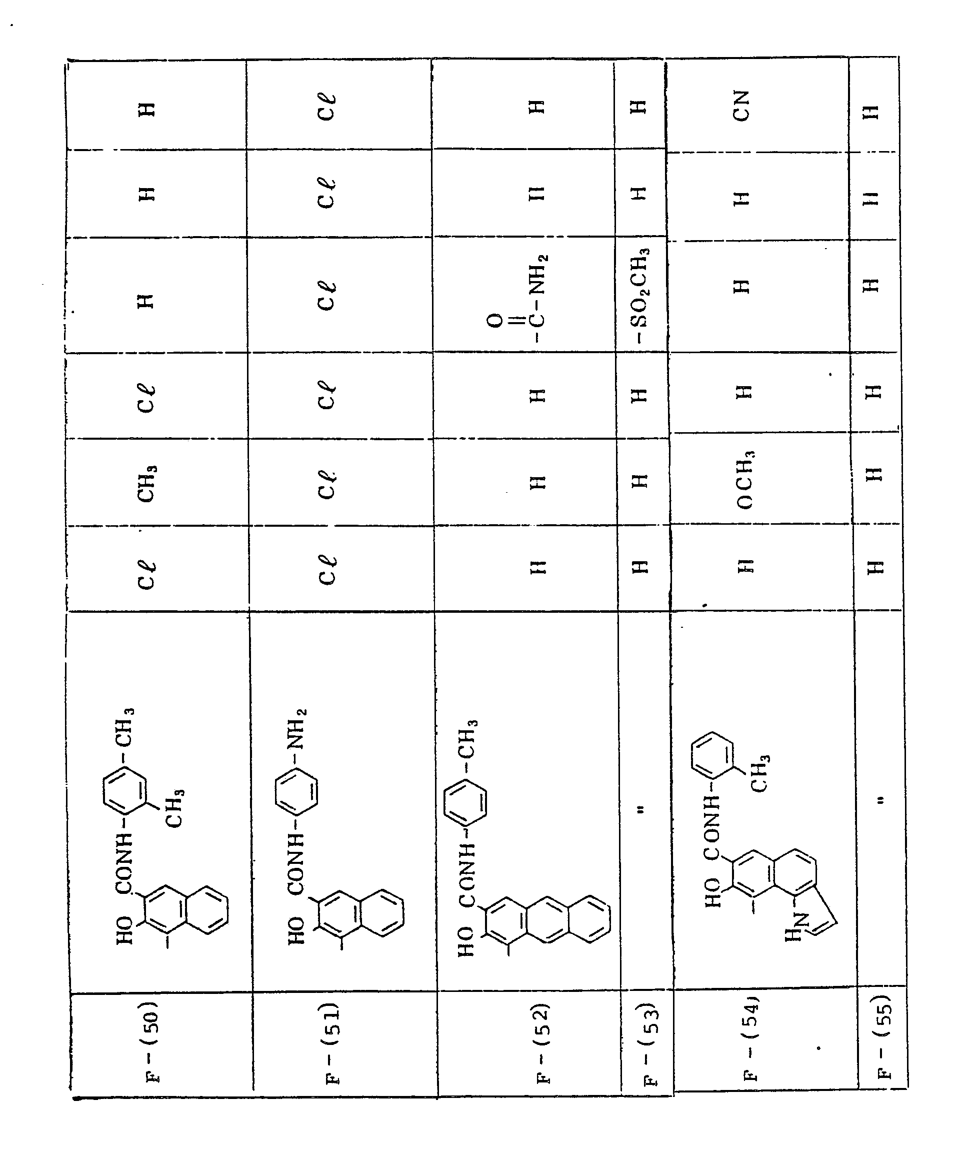

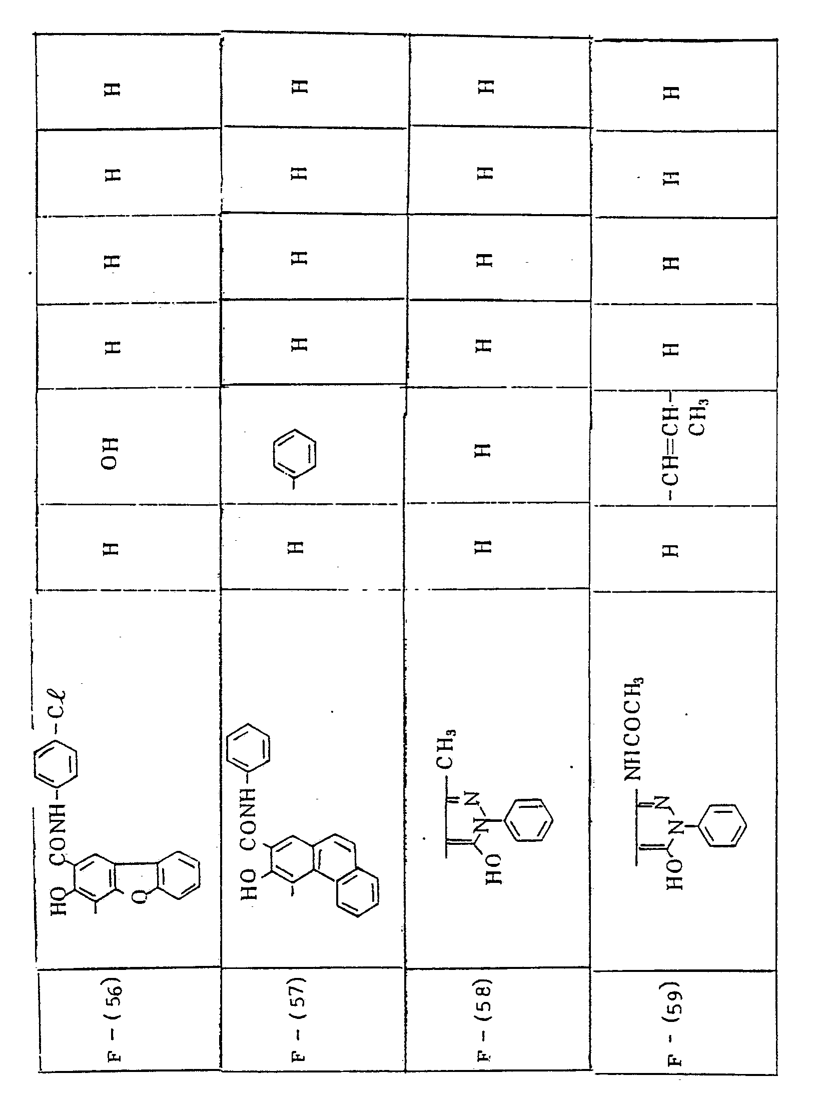

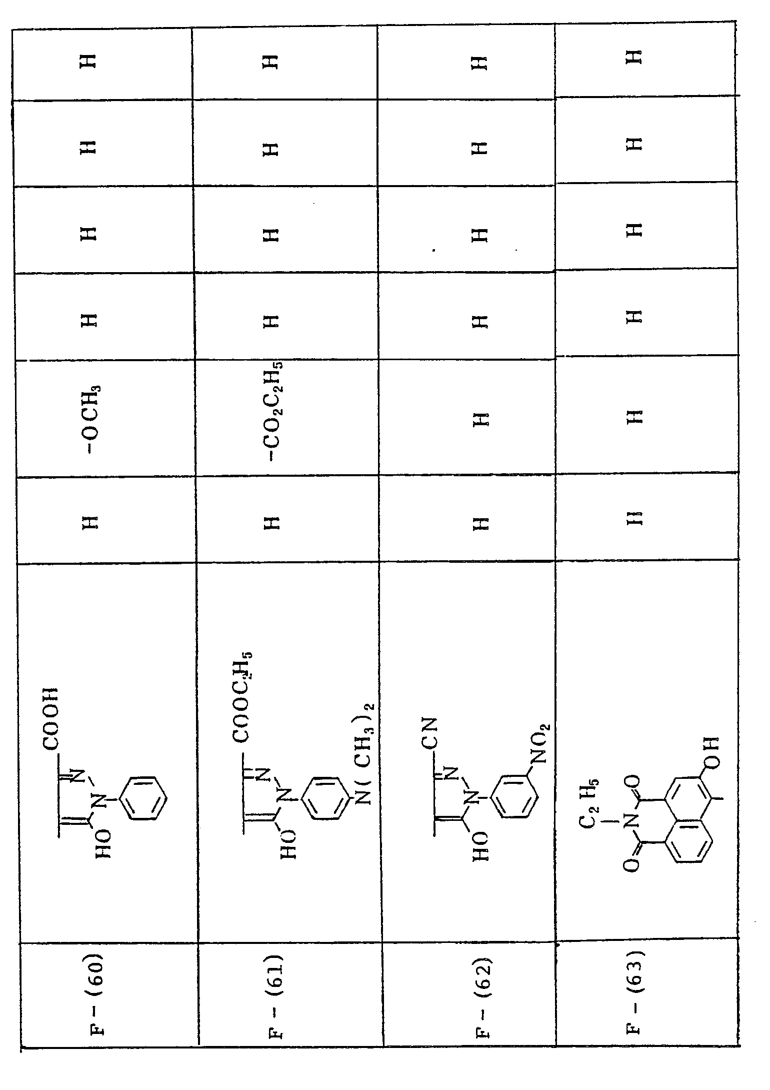

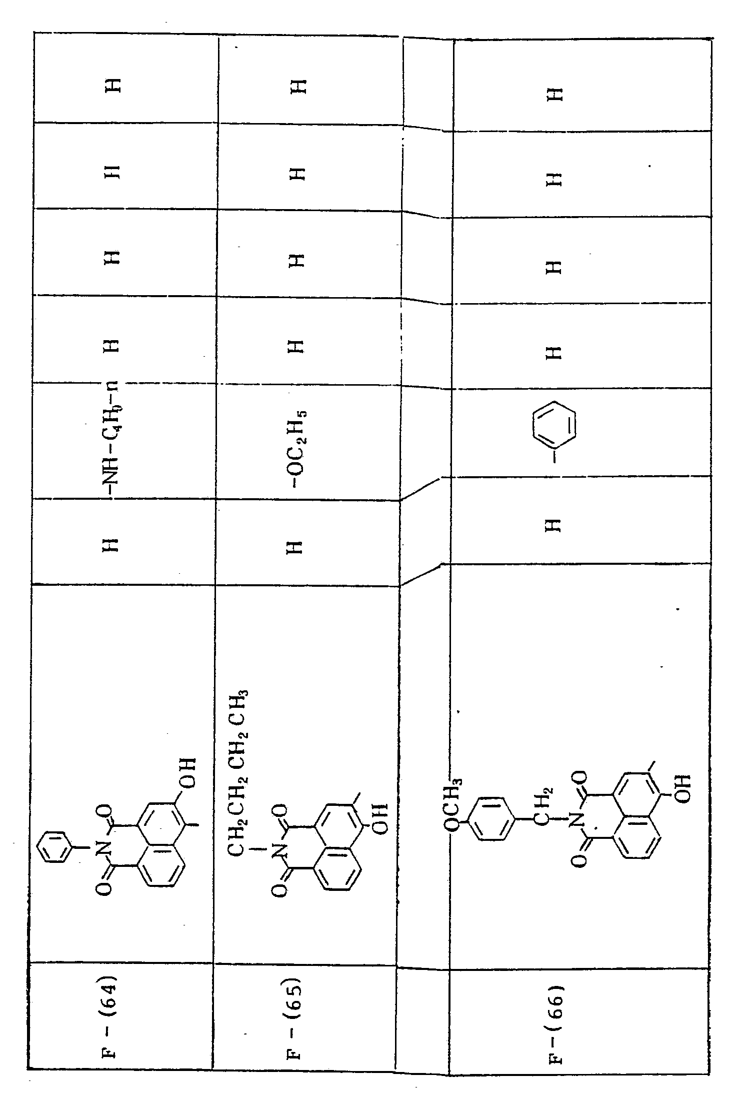

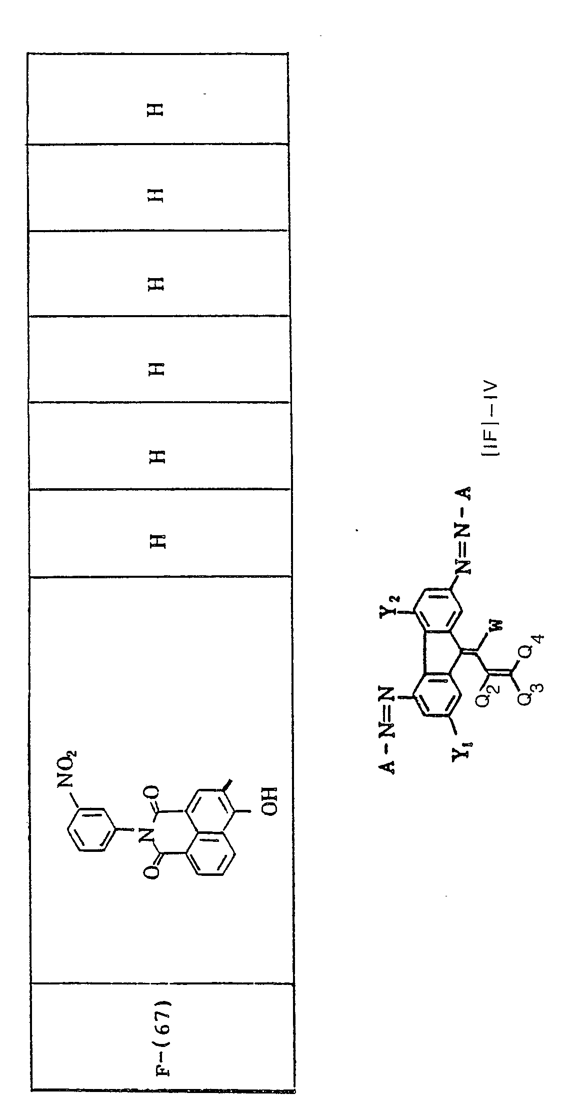

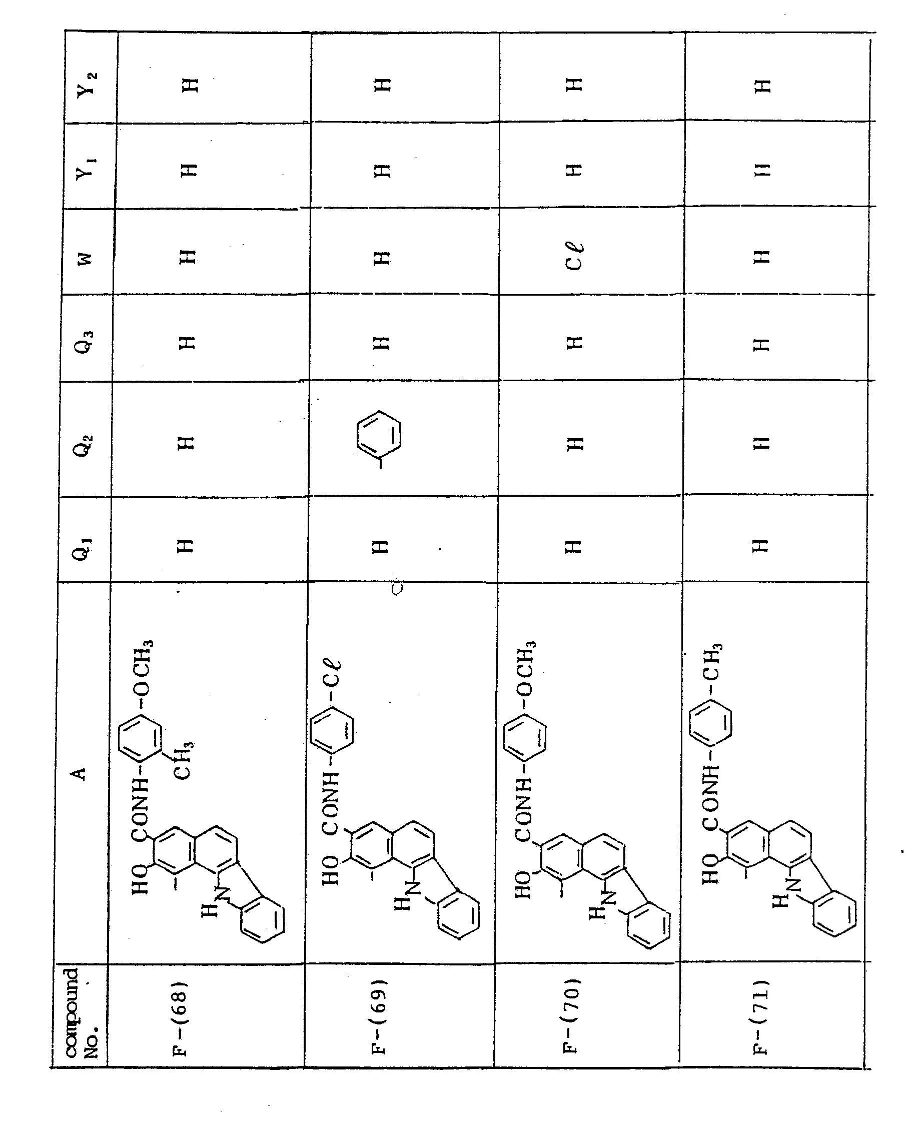

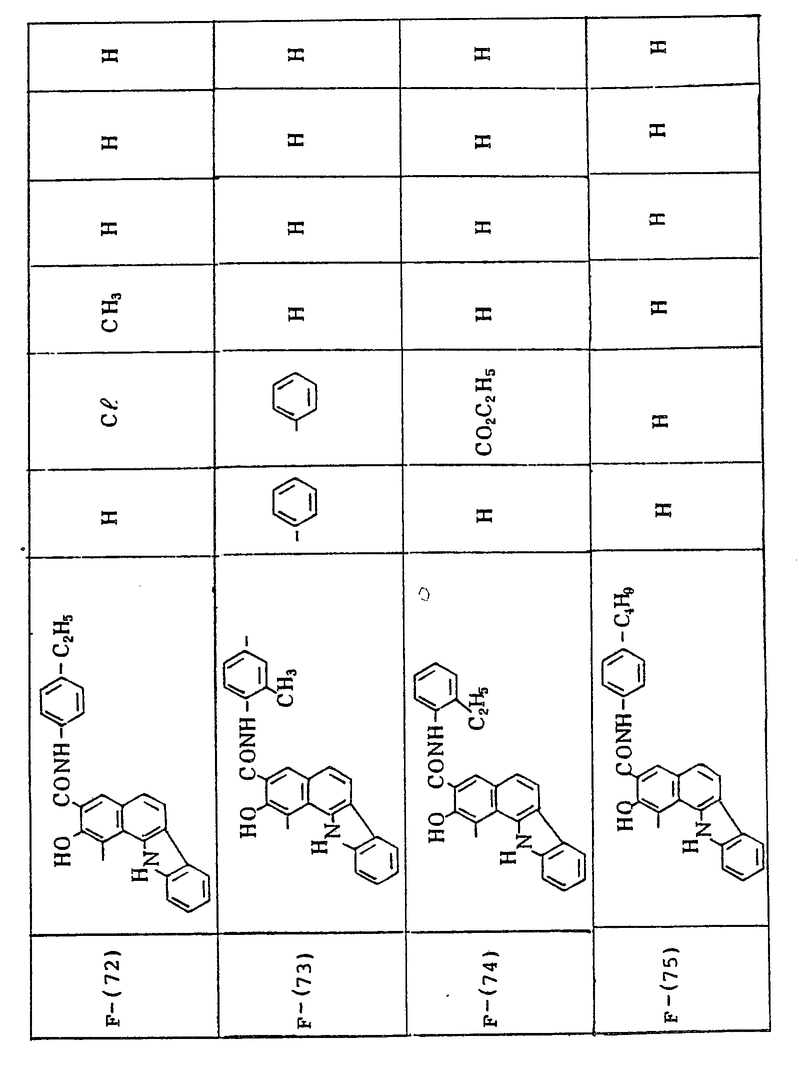

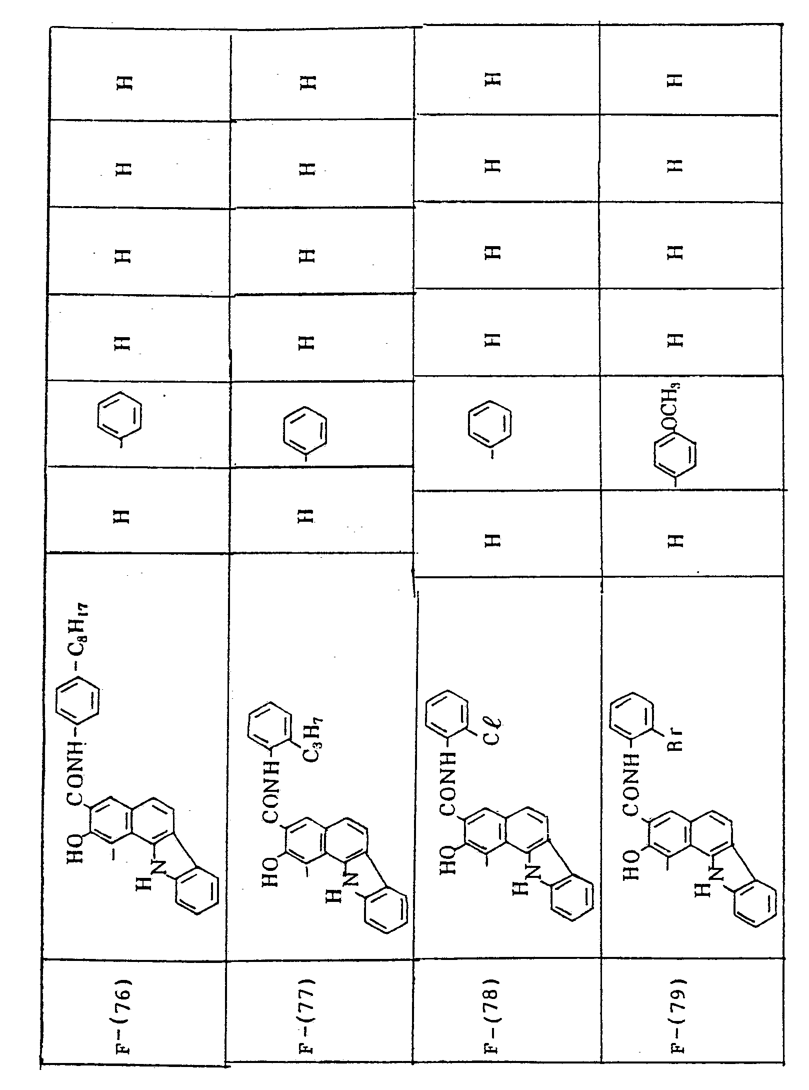

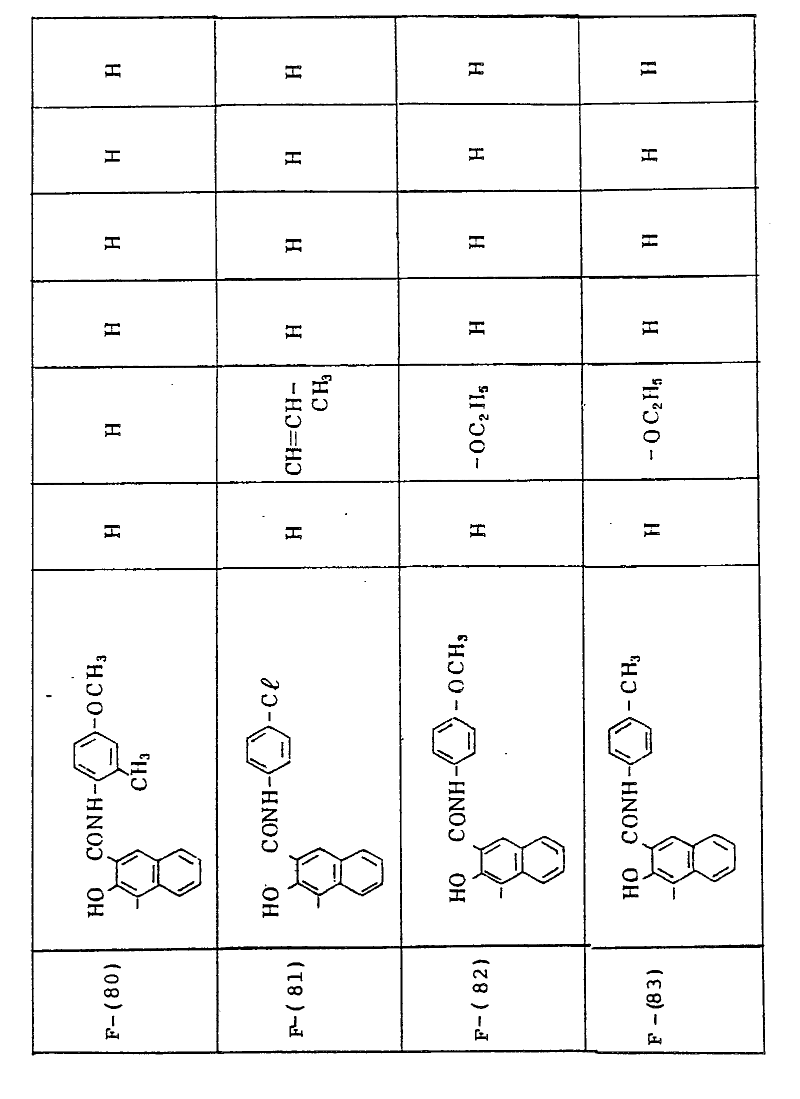

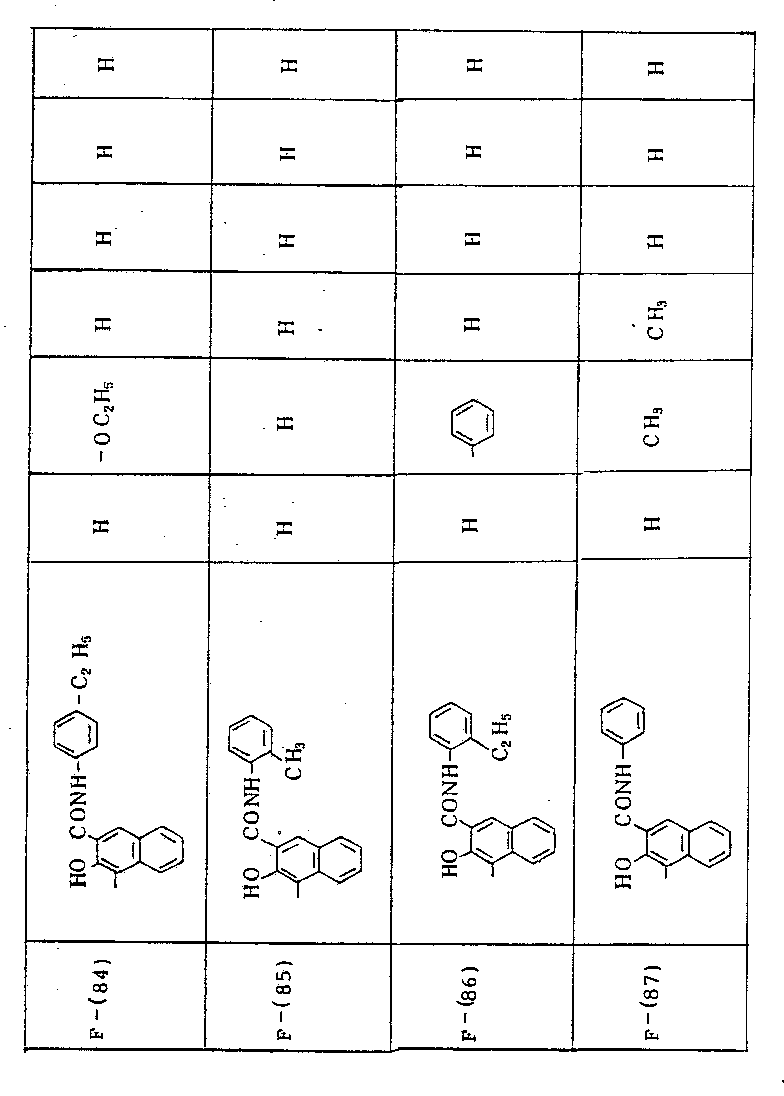

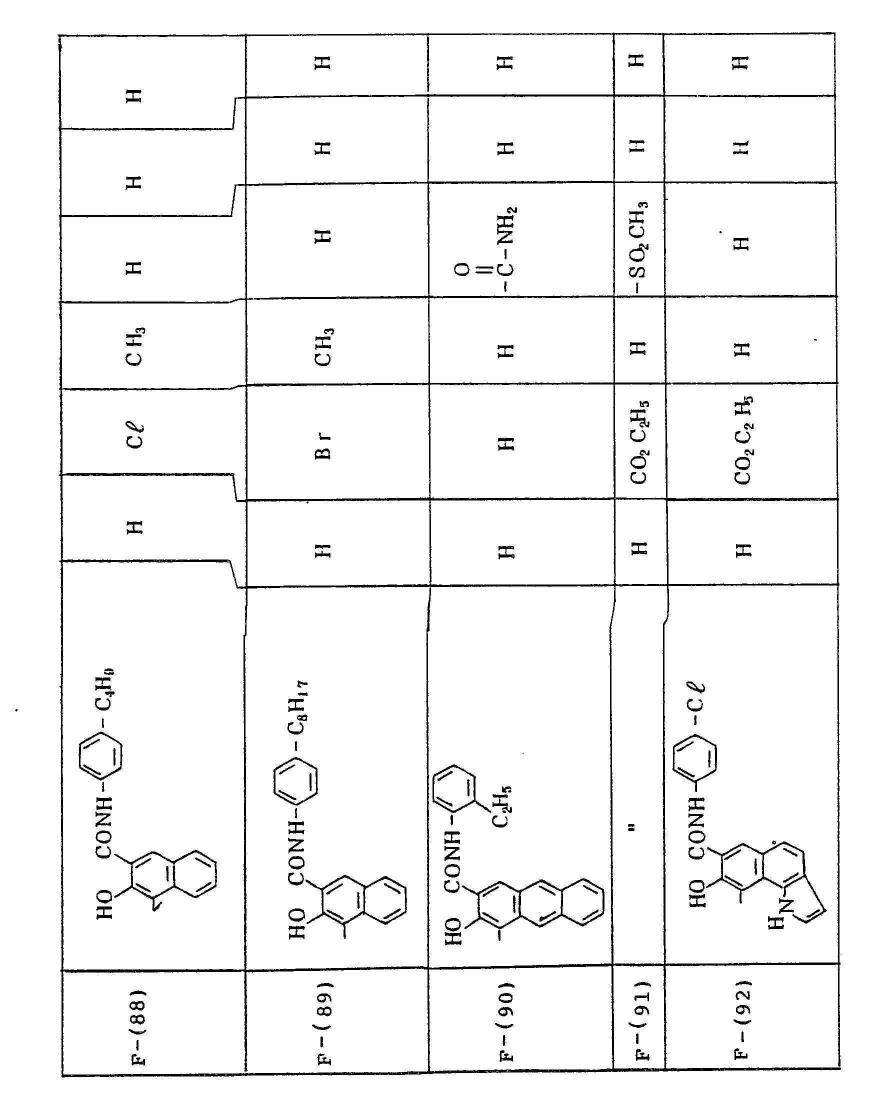

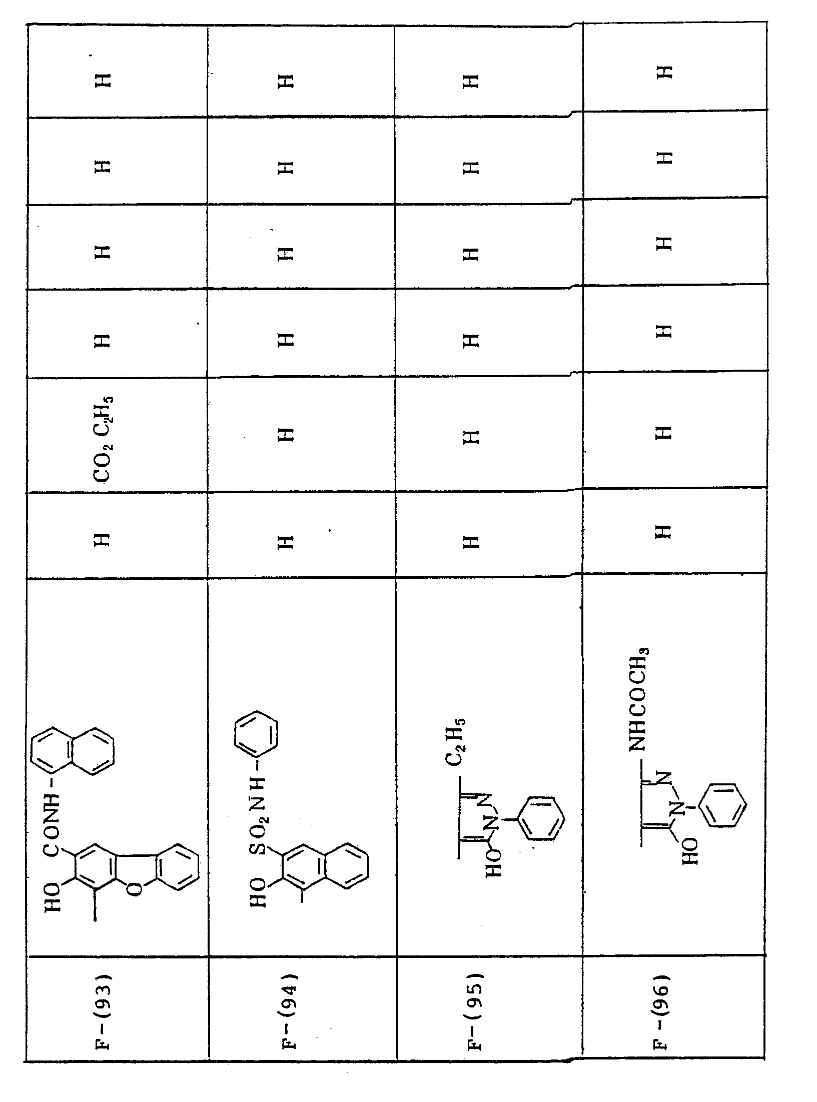

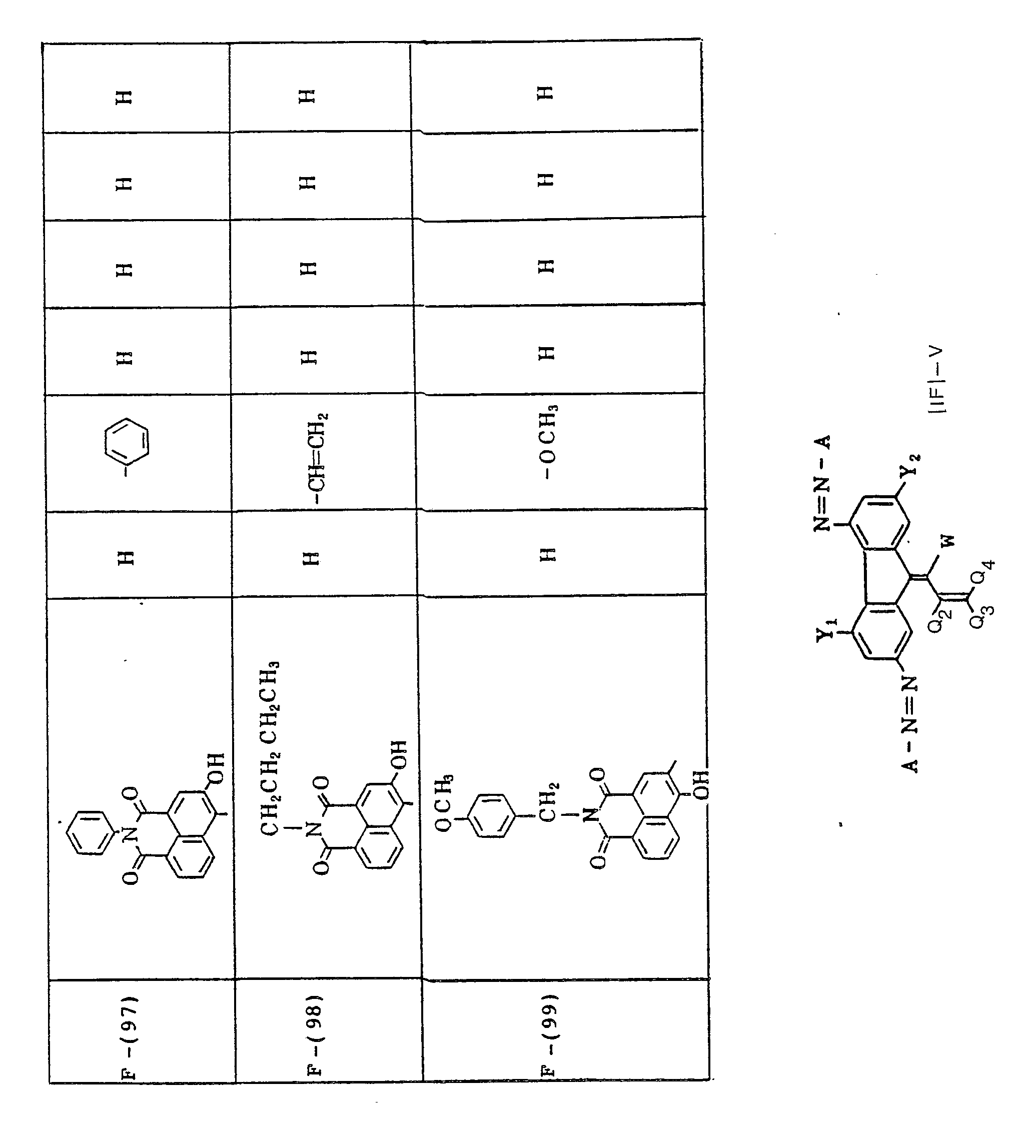

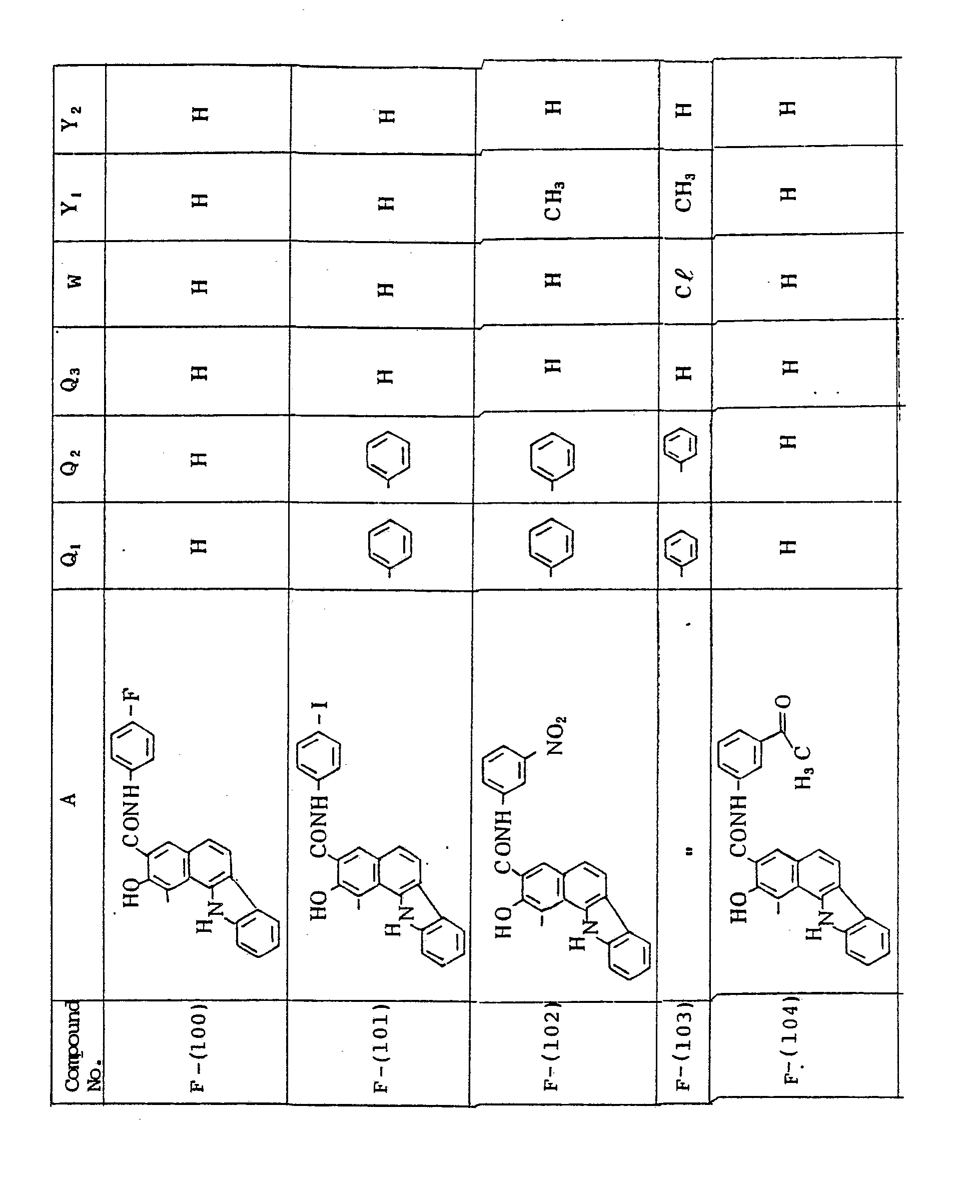

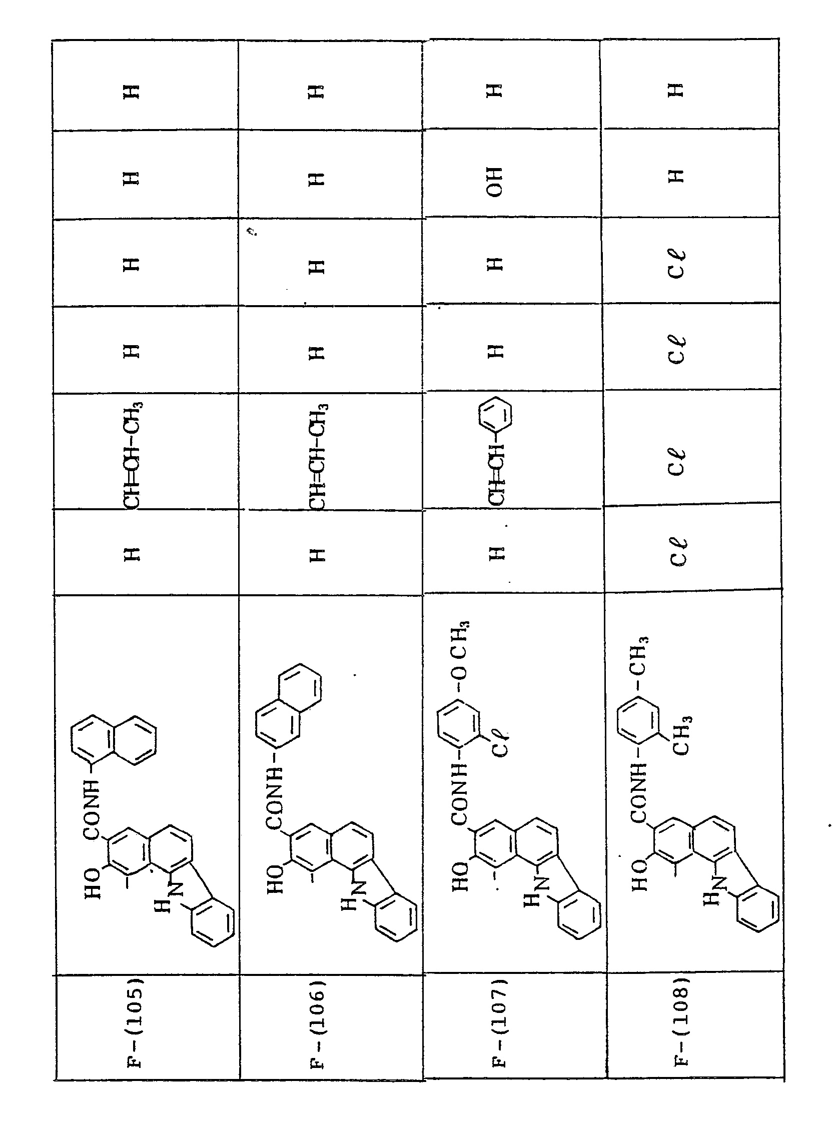

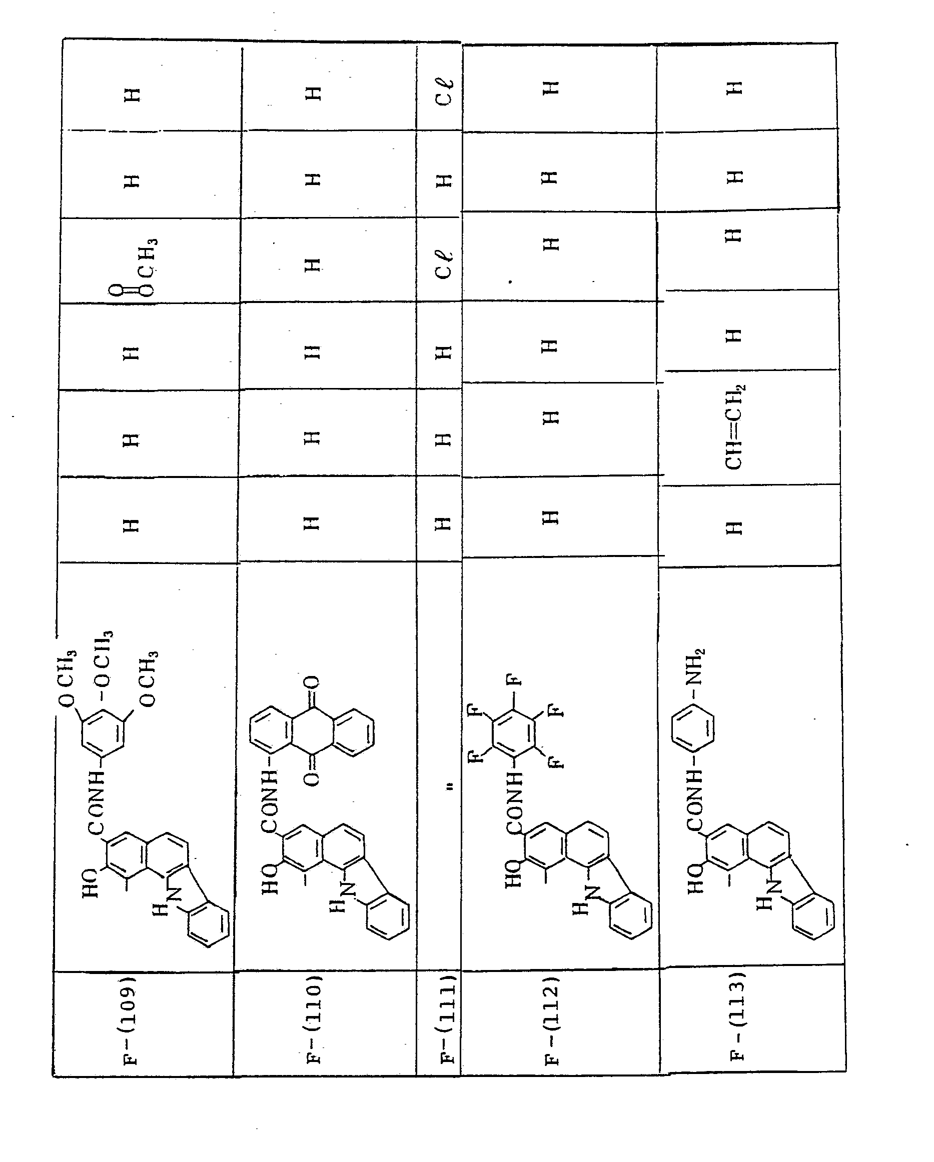

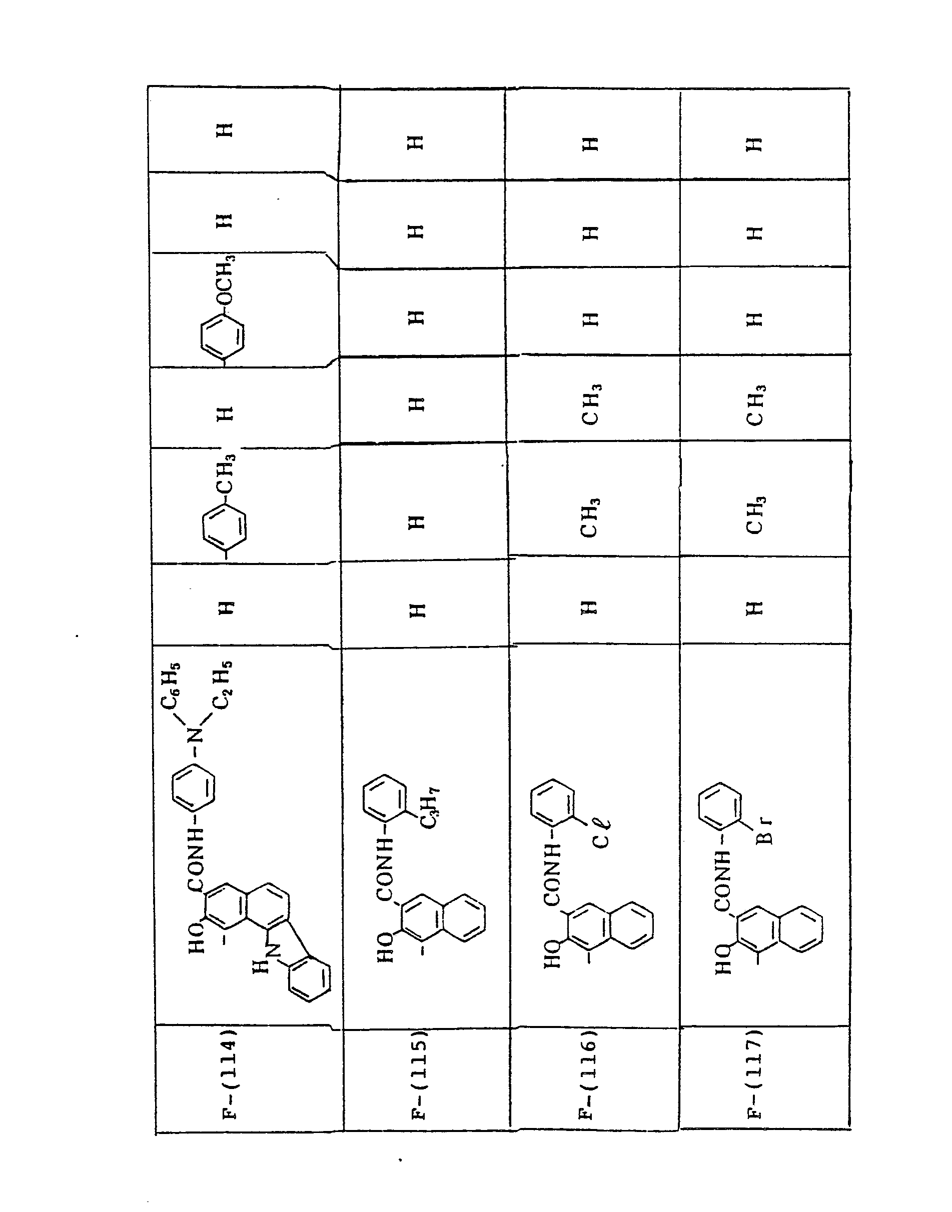

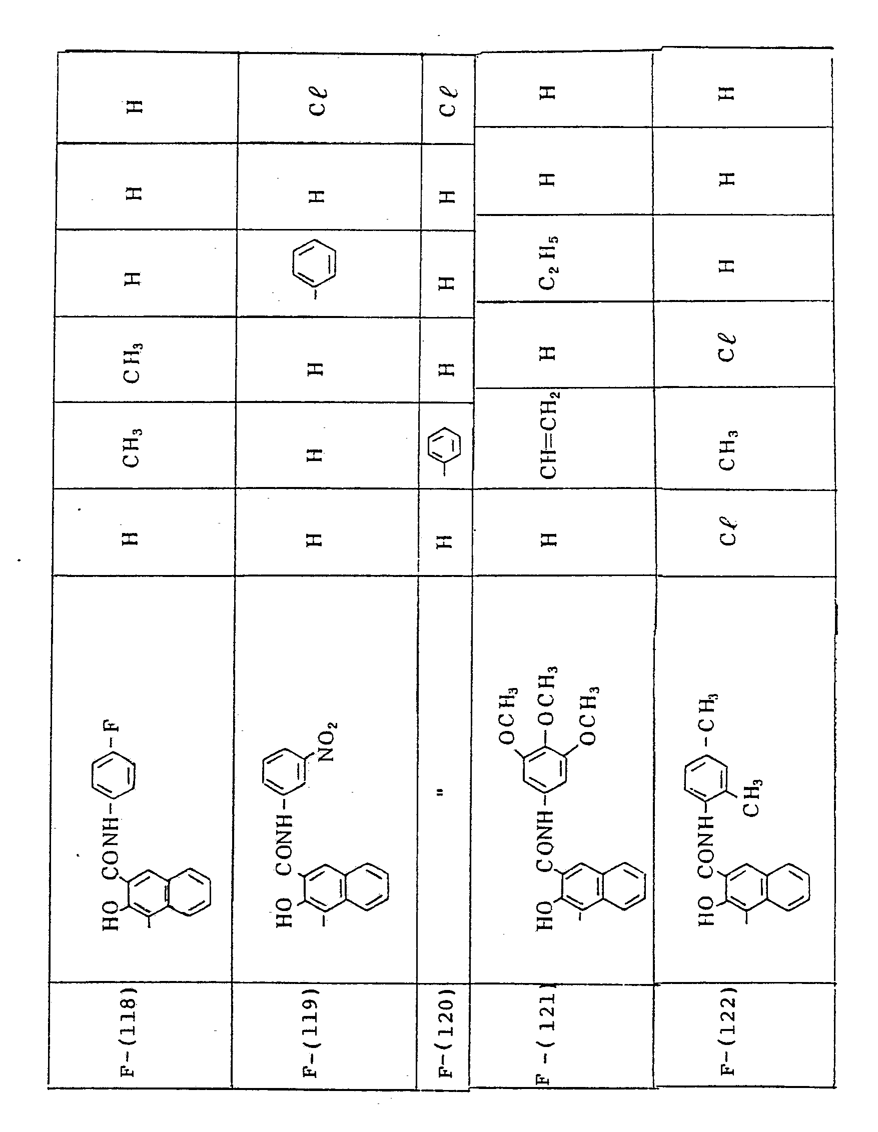

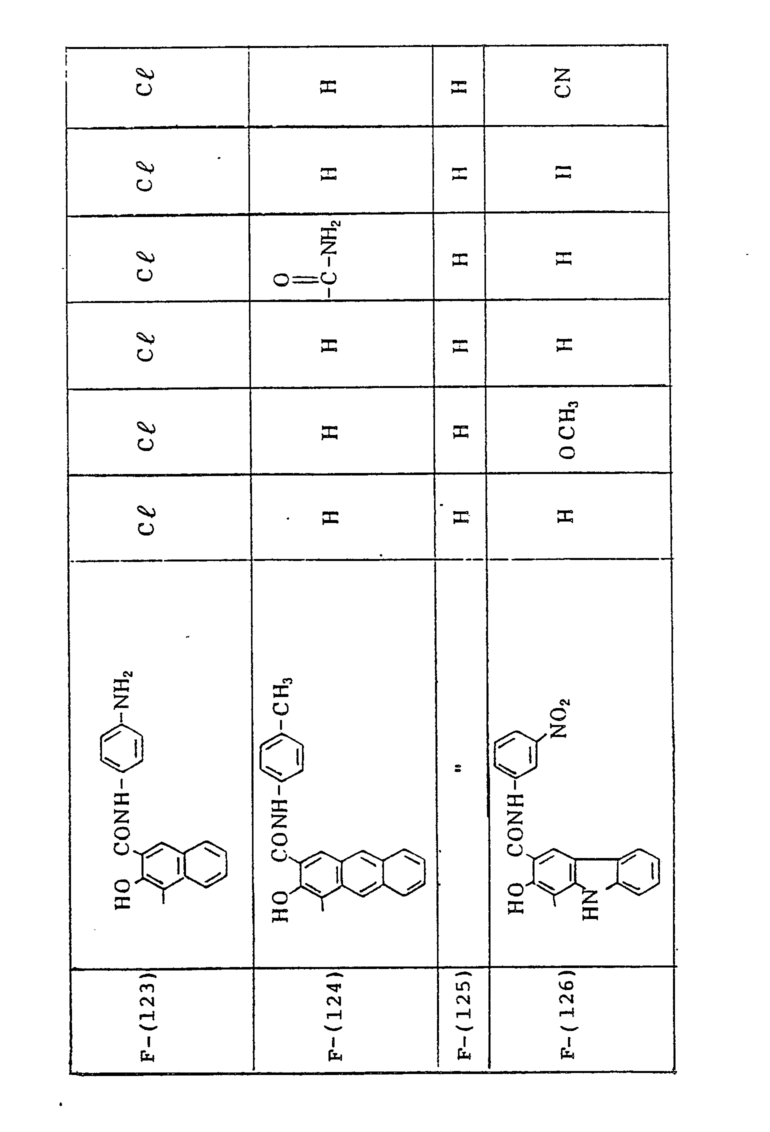

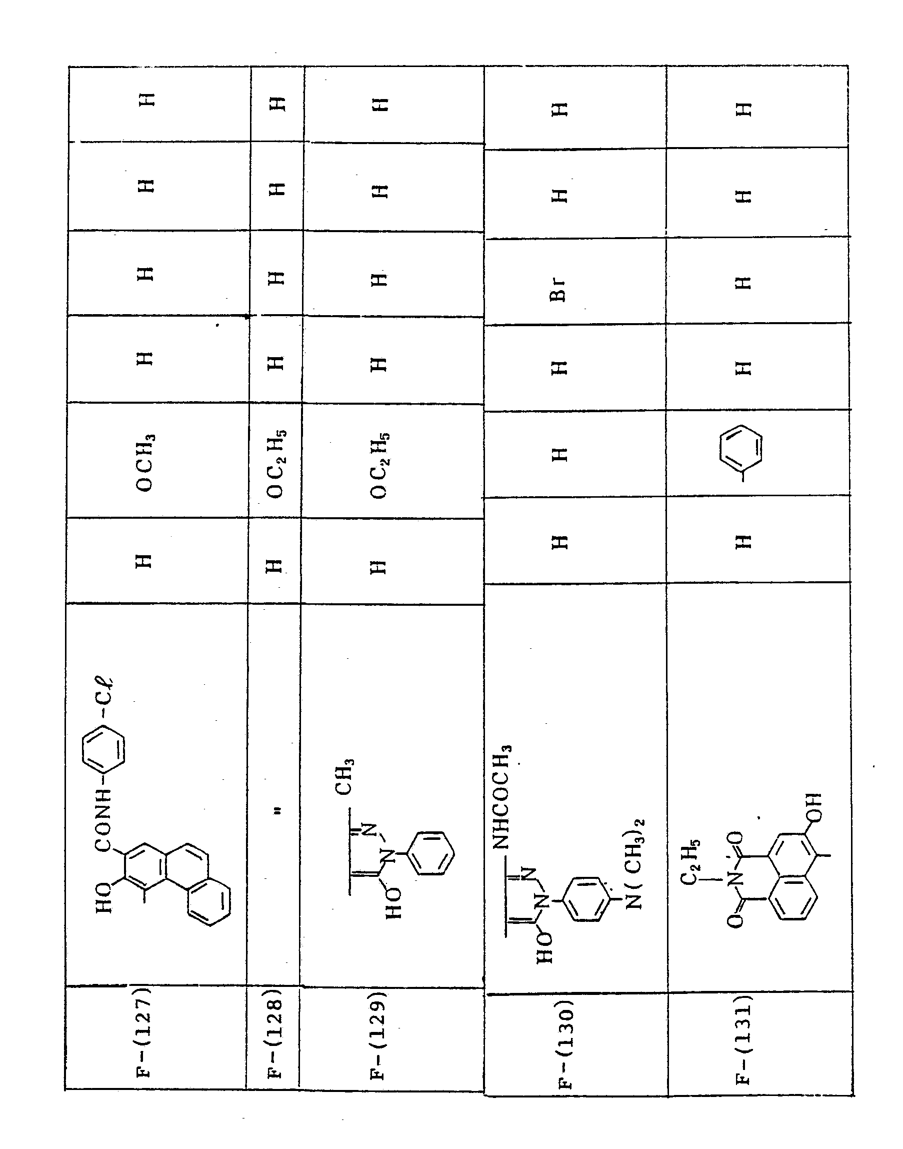

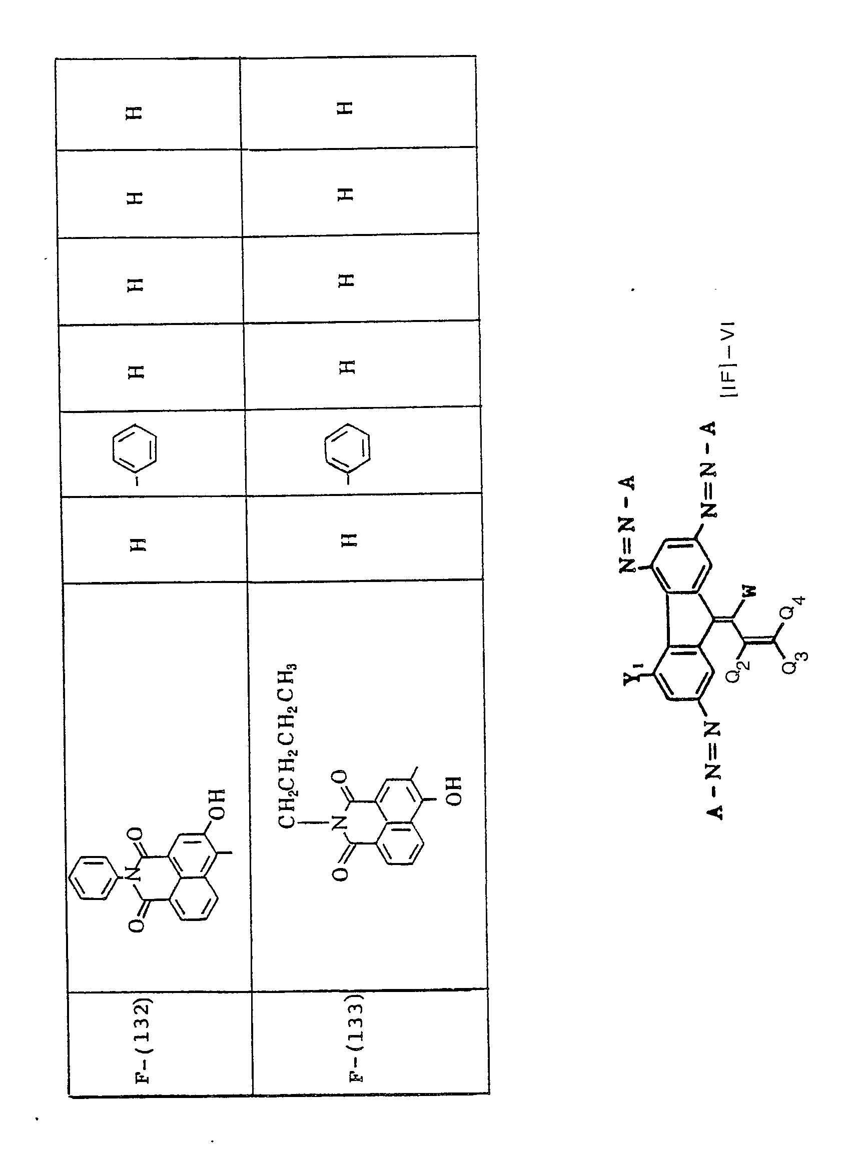

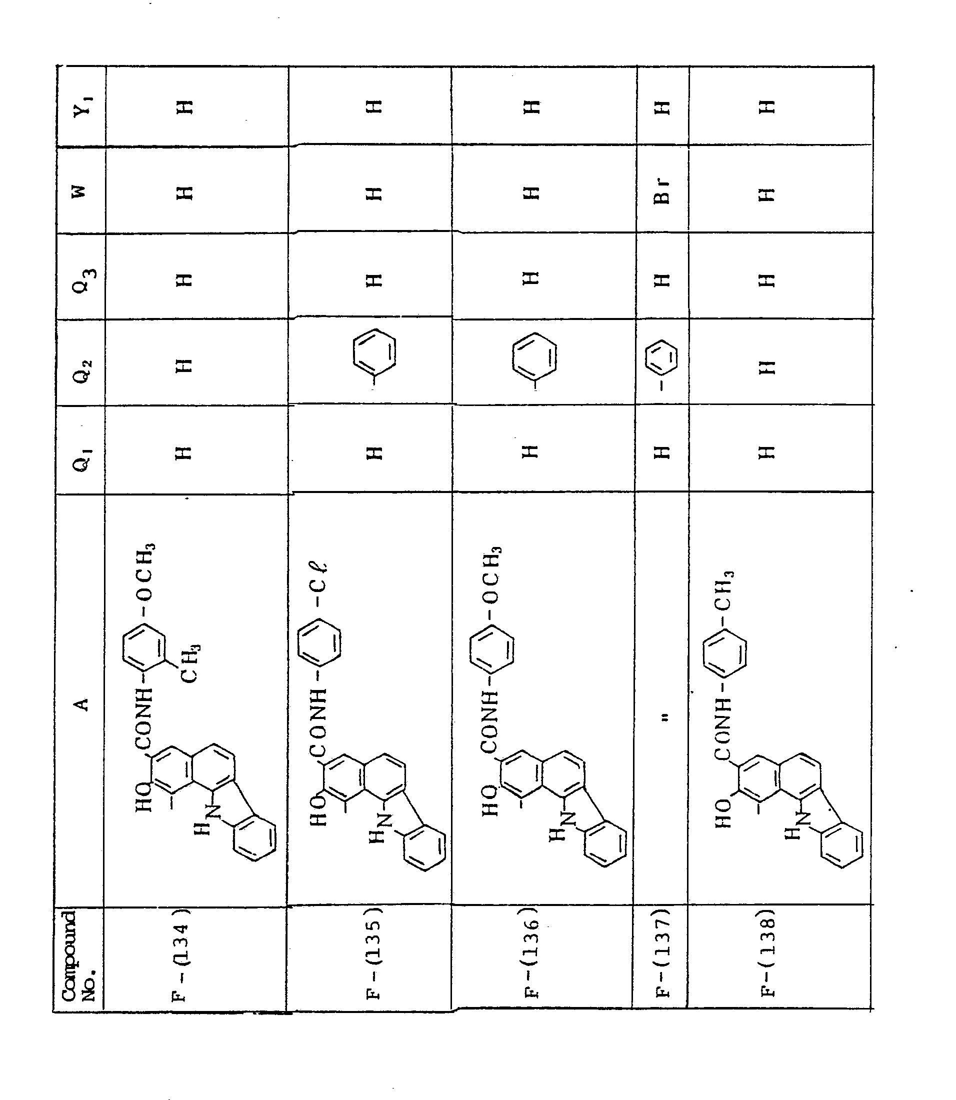

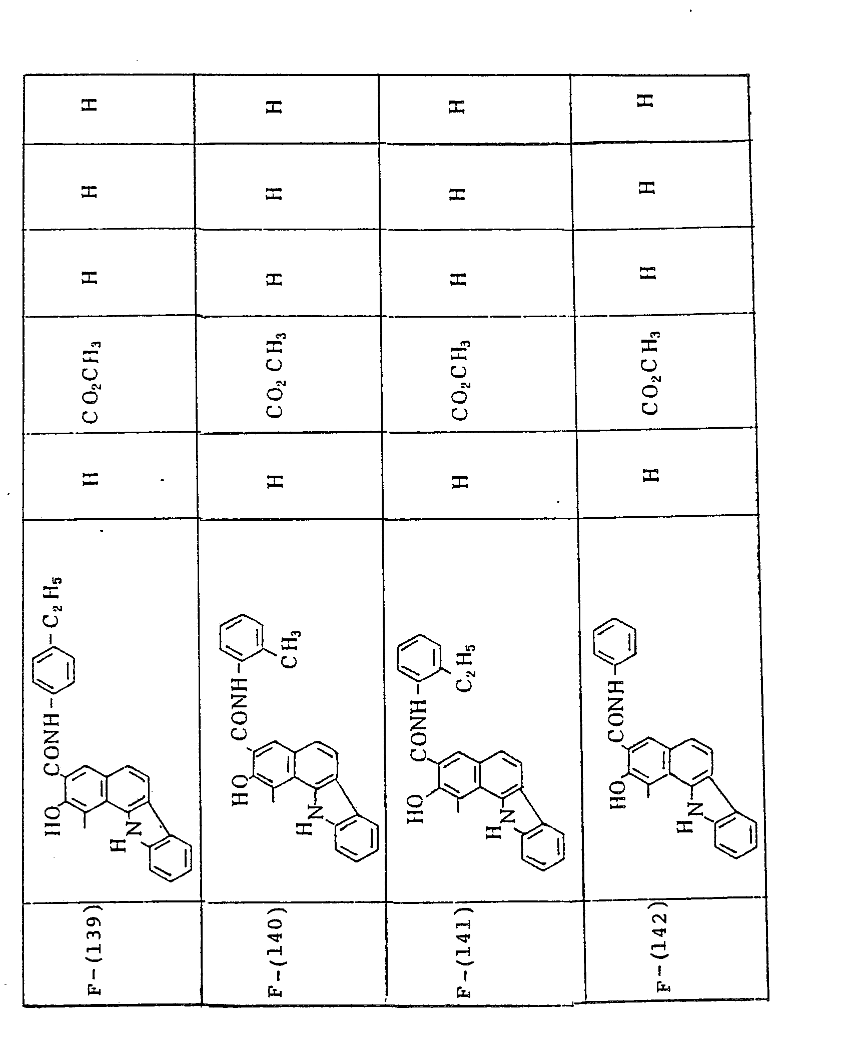

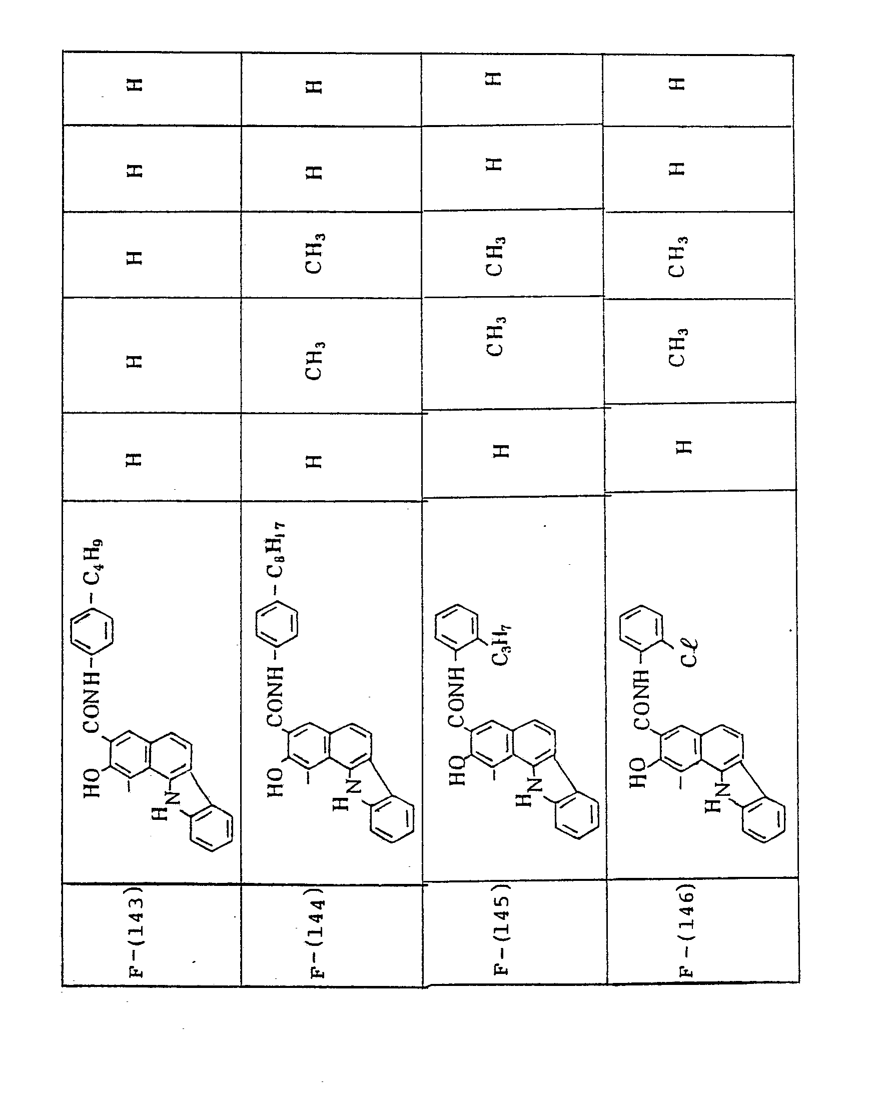

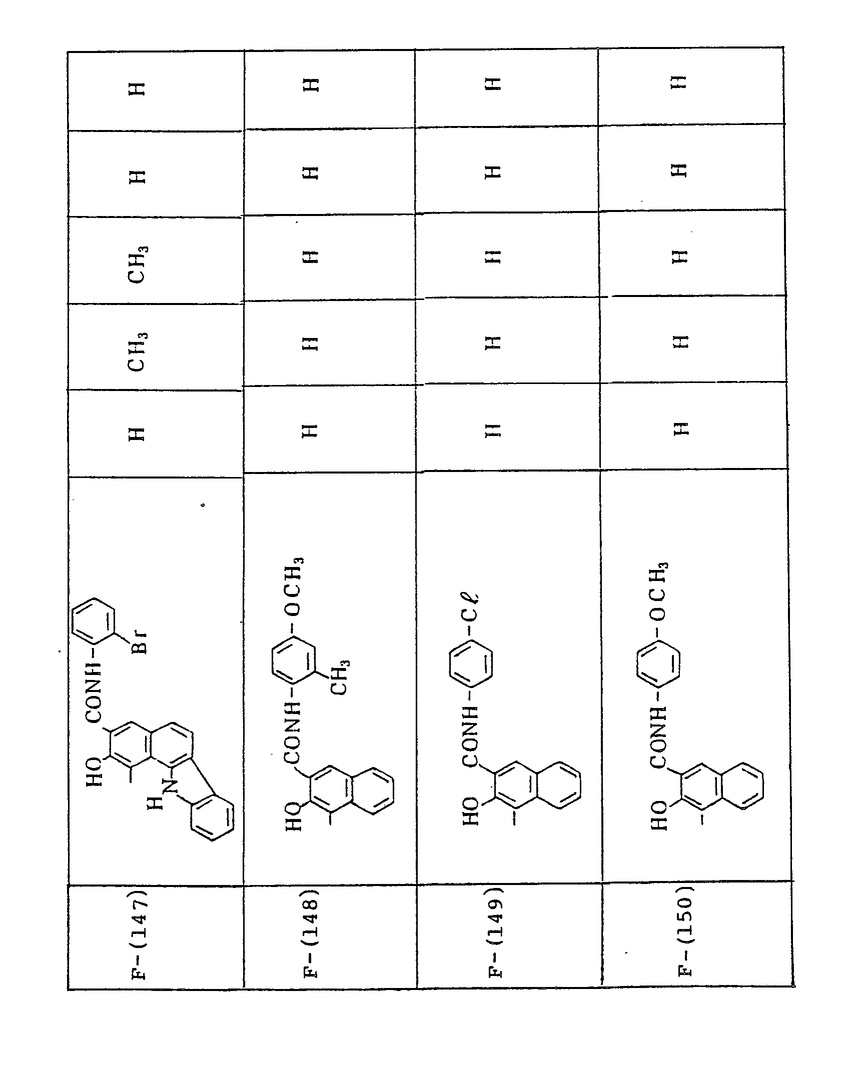

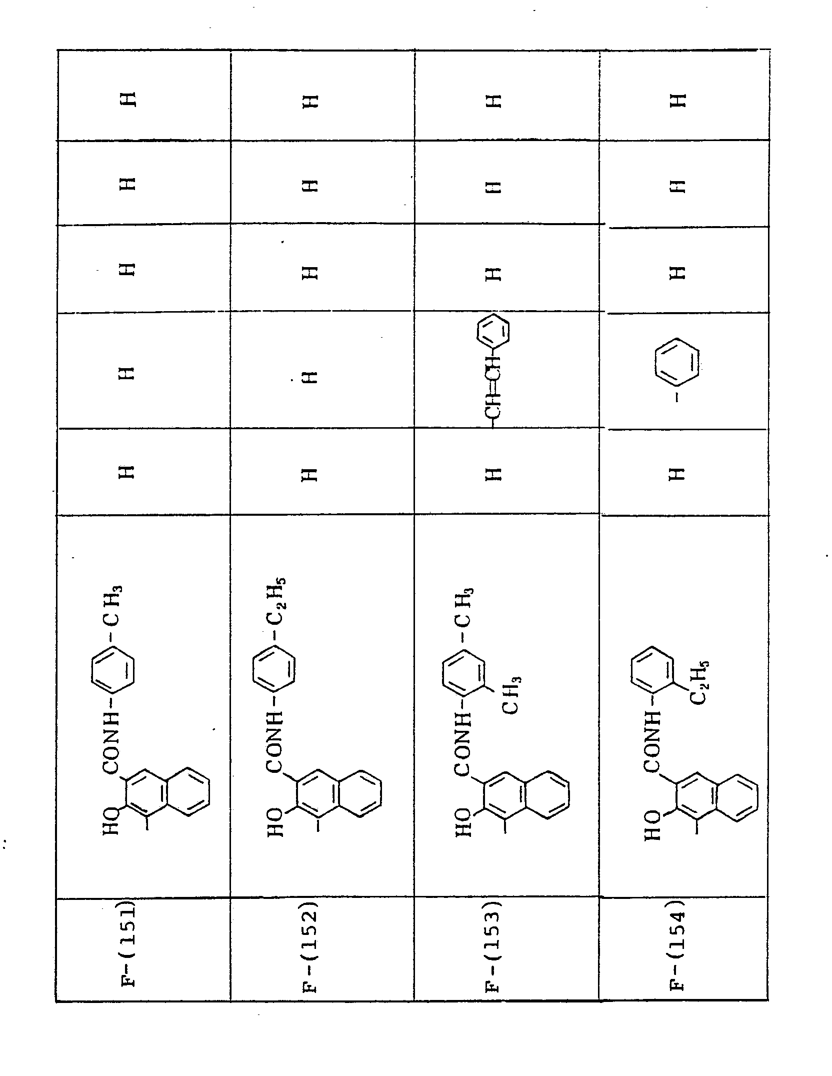

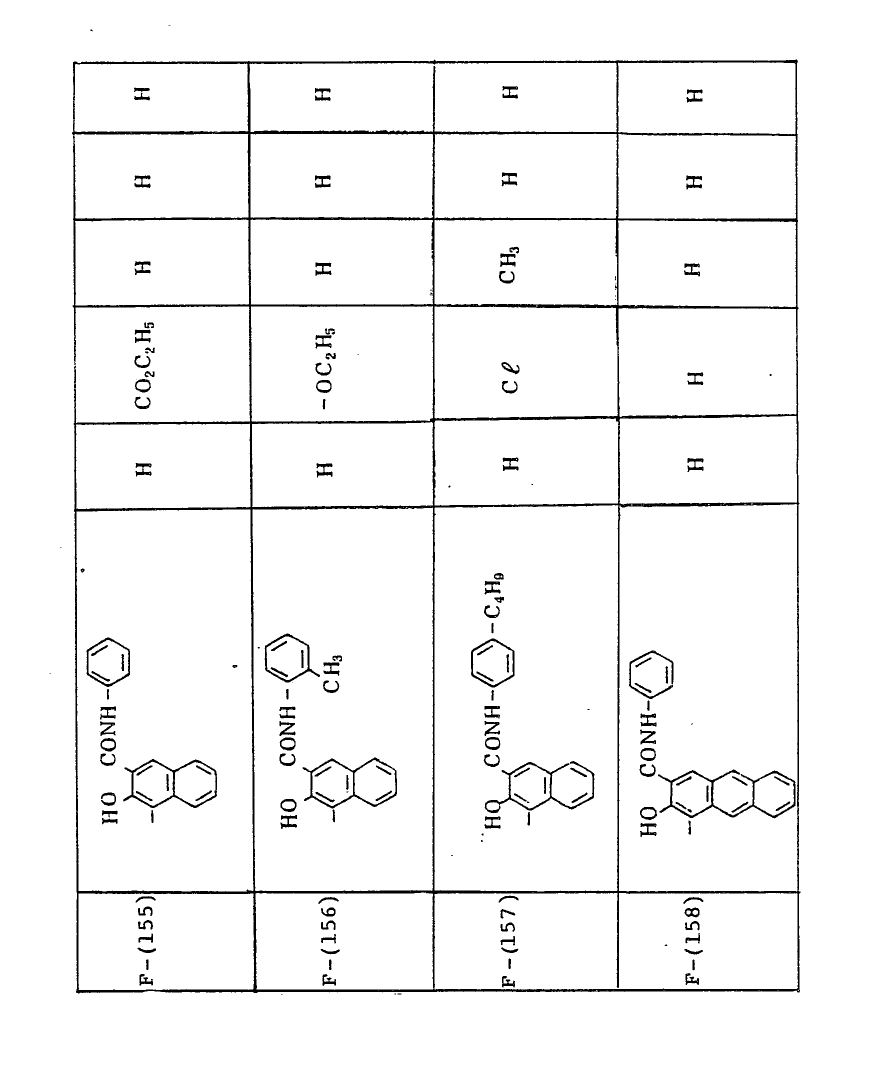

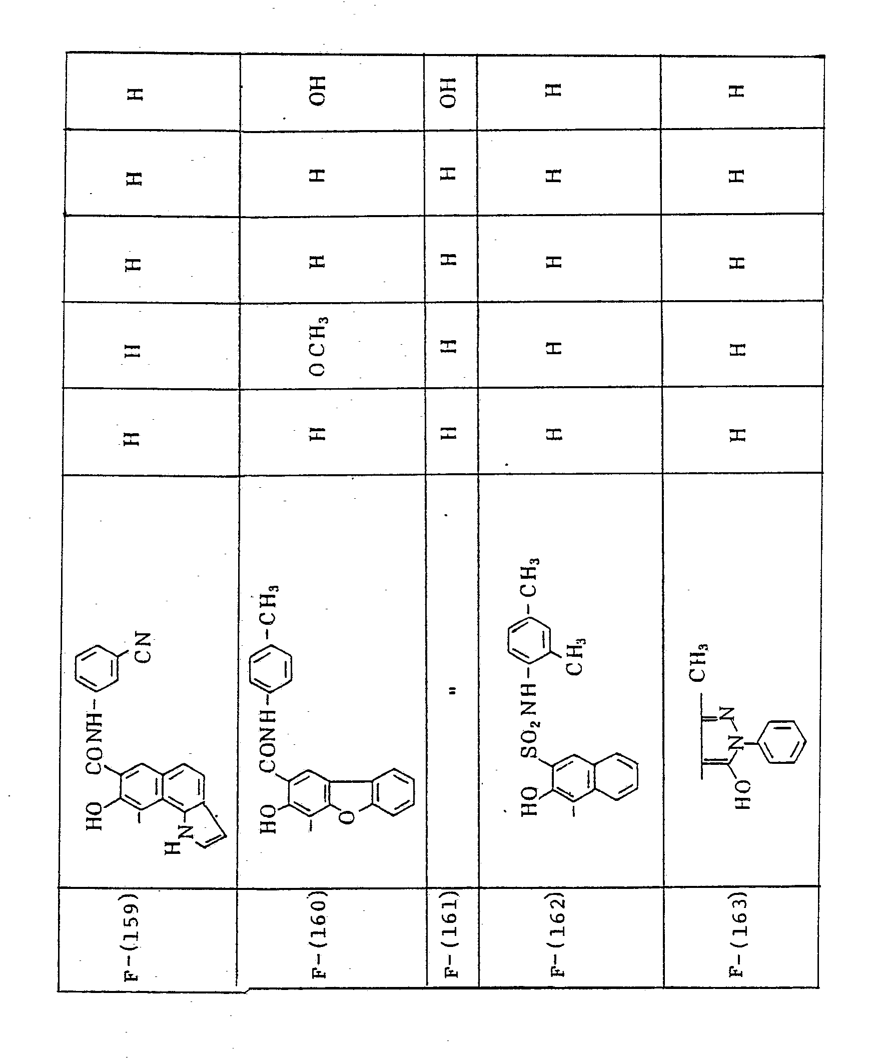

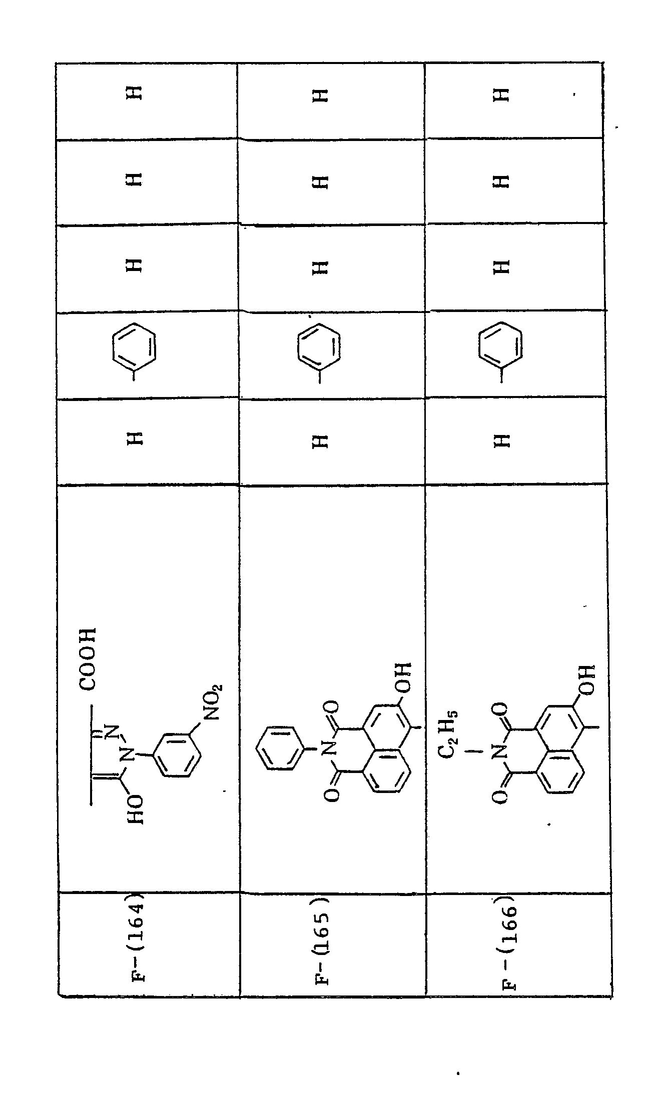

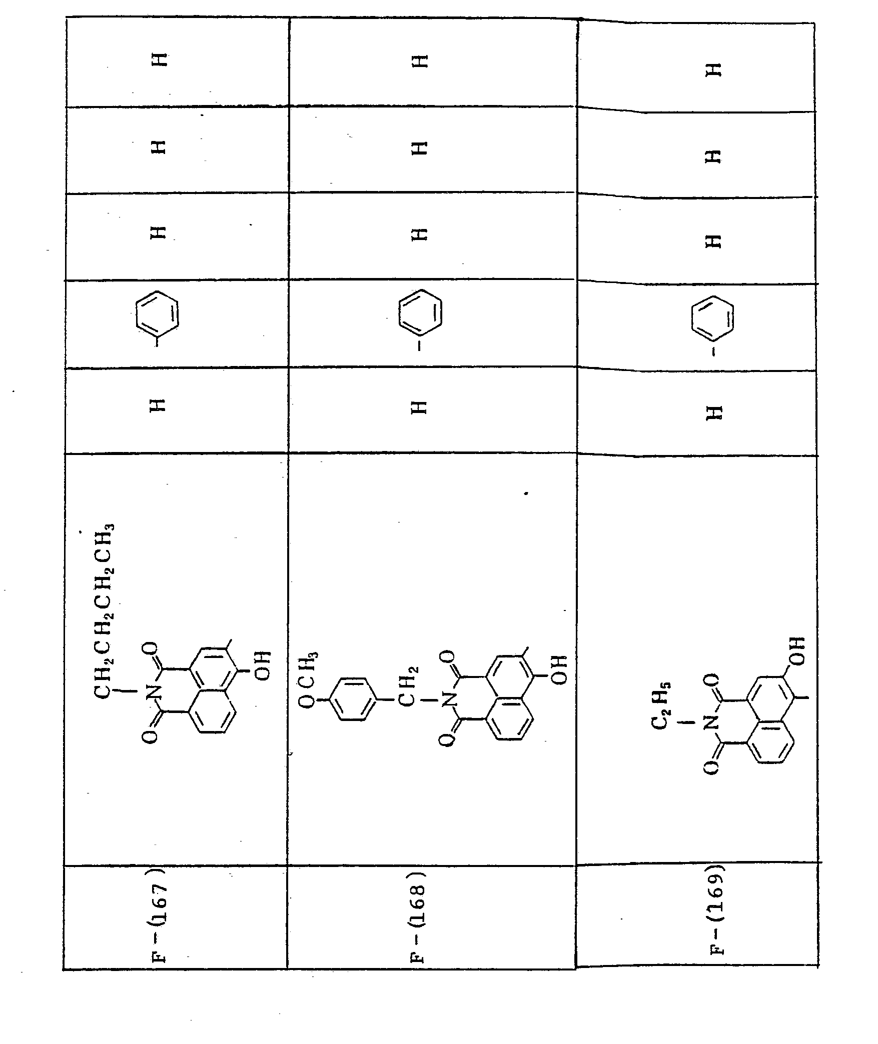

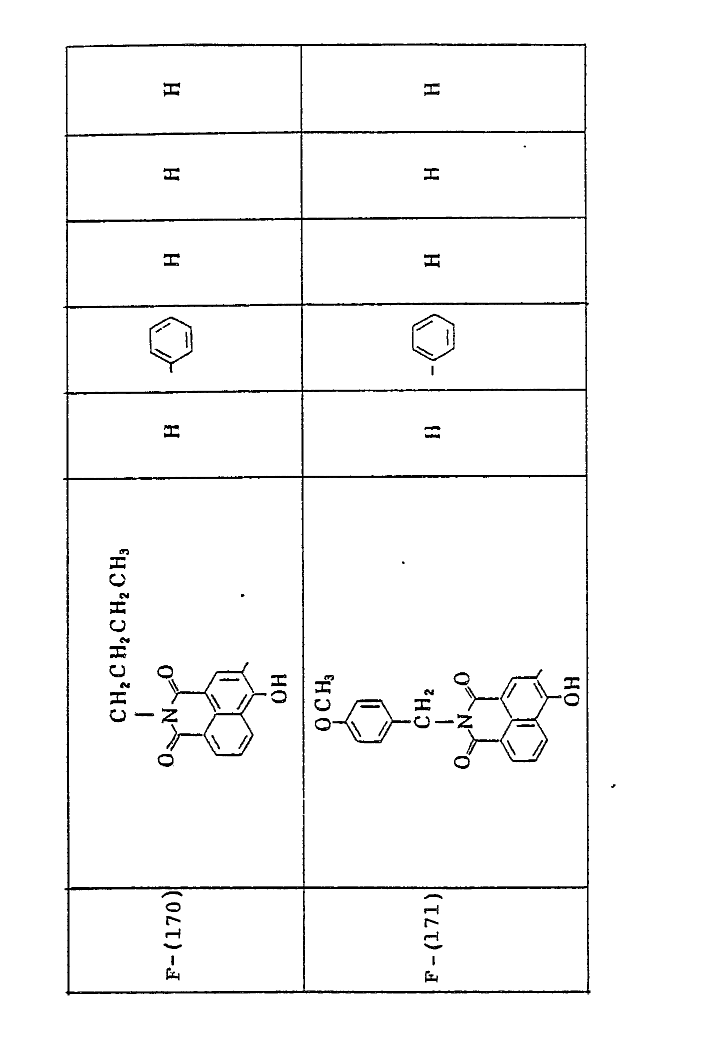

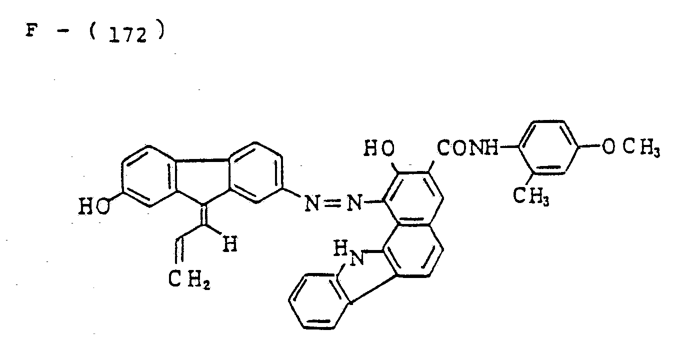

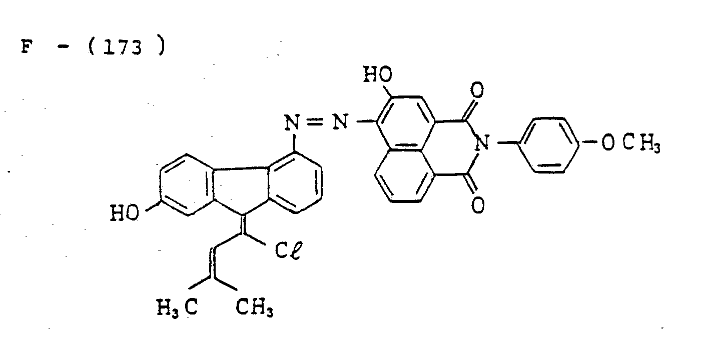

The azo compounds described above can be synthesized easily according to a known method. A typical example is shown below.

### Synthesis Example 4

### [Synthesis of a compound of formula F―(1)]

The synthesis route is schematically shown below:

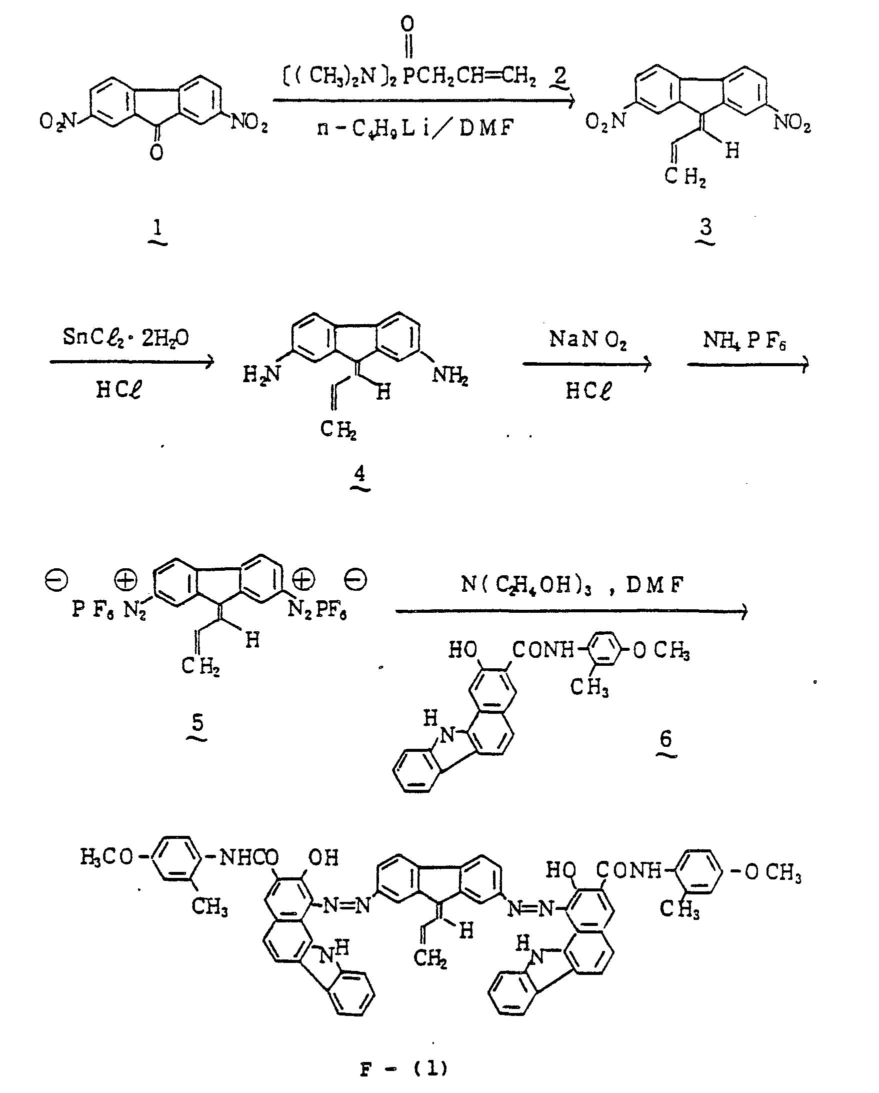

2,7-Dinitrofluorenone 1 (produced by Tokyo Kasei K.K.) was reacted with a vinyl derivative 2 to prepare a dinitro derivative 3 (Journal of Organic Chemistry, 34, 3053 (1969)), which was then reduced with stannous chloride to form a diamino derivative 4 (Journal of Chemical Society, 870 (1954)). The diamino derivative 4 (25.9 g, 0.1 mole) was dispersed by adding it to a mixture of 1 liter of conc. HCI and 1 liter of water and a solution of 13.8 g (0.2 mole) of sodium nitrite dissolved in 0.1 liter of water was added dropwise at 5°C under ice-cooling. After completion of the addition, the reaction mixture was filtered, and 1 liter of an aqueous 50% ammonium hexafluorophosphate solution was added to the filtrate. The resultant precipitate was recovered by filtration, washed with water and thoroughly dried. The salt obtained was dissolved in 1.5 liters of N,N-dimethylformamide (DMF) to provide a tetrazonium salt solution to be used in the subsequent reaction.

As the next step, 79.3 g (0.2 mole) of 2-hydroxy-3-(4-methoxy-2-methylphenylcarbamoyl)-benzo[a]carbazole (Naphthol AS-SR, produced by Hoechst AG) and 60 g of triethanolamine were dissolved in 4 liters of N,N-dimethylformamide, and the tetrazonium salt solution prepared above was added dropwise under ice-cooling to the resultant solution, followed further by stirring for 2 hours to allow the reaction to proceed. The crystals formed were recovered by filtration, and they were washed twice with 5 liters of N,N-dimethylformamide and twice with 5 liters of acetone, followed by drying, to obtain 82.7 g of the desired bisazo compound F-(1) (77%). From the analytical results of m.p. 300°C or higher, FD-MS spectrum which indicates a peak of M⁺ at m/Z 1073, and the elemental analysis of C=47.82%, N=₁₁._{65%}, H=₄._{44%} (Calcd. values, C=₄₇._{91%}, N=11.73%, H=4.41%), it was confirmed that the desired substance was synthesized.

The azo compounds used in the present invention have excellent photoconductivity. A photoreceptor may be prepared by dispersing the azo compound in a binder on an electroconductive support. A particularly good effect can be obtained when the photoreceptor of the so-called function separation type is constituted by use of the azo compound of formula (Z) as the carrier generating material through utilization of the particularly excellent carrier photoconductivity generating ability possessed by the azo compound, together with a carrier transporting material which can act effectively in combination therewith. The function separation type photoreceptor may be a dispersion type, but a lamination type photoreceptor in which the carrier generating layer containing the carrier generating material and the carrier transporting layer containing the carrier transporting material are laminated together is preferred.

The azo compound to be used in the present invention may be employed either alone or as a combination of two or more compounds of formula [I], or in combination with other azo compounds.

Various forms are known for mechanical constitution of photoreceptors, and any one of them can be used for the photoreceptor of this invention.

Generally, photoreceptors take the forms as shown in Figs. 1 through 6. In Fig. 1 and Fig. 3, a photosensitive layer comprising a laminated product of a carrier generating layer 2 containing the azo compound of formula (I) as the main component and a carrier transporting layer 3 containing a carrier transporting material as the main component is provided on an electroconductive support 1. As shown in Fig. 2 and Fig. 4, the photoreceptor may also be provided with an intermediate layer 5 provided on the electroconductive support. A photoreceptor with the best electrophotographic characteristics can be obtained when the photosensitive layer 4 is thus constituted of the two layers. The present invention may also provide a photoreceptor as shown in Fig. 5 and Fig. 6 which comprises a photosensitive layer 4 comprising the above carrier generating material 7 dispersed in the layer 6 containing the carrier transporting material as the main component directly or through the intermediate layer 5.

When the azo compound of formula (I) is employed as the carrier generating material, the carrier transporting material which can be used in combination therewith may, for example, be electron acceptors which can readily transport electrons such as trinitrofluorenone or tetranitrofluorenone, and otherwise electron donors which can readily transport positive holes such as polymers having heterocyclic groups as side chains, typically poly-N-vinylcarbazole, triazole derivatives, oxadiazole derivatives, imidazole derivatives, pyrazoline derivatives, polyarylalkane derivatives, phenylenediamine derivatives, hydrazone derivatives, amino-substituted chalcone derivatives, triarylamine derivatives, carbazole derivatives, stilbene derivatives, and phenothiazine derivatives.

The carrier generating layer 2 constituting the photosensitive layer 4 with a double-layer construction may be formed directly on the electroconductive support 1 or the carrier transporting layer 3, or on an intermediate layer, which may or may not be present, such as an adhesive layer or a barrier layer as described below.

M-1) A method in which a solution of the azo compound dissolved in an appropriate solvent, optionally mixed and dissolved with a binder, is coated.

M-2) A method in which the azo compound is micropulverized in a dispersing medium by means of a ball mill or a homomixer, optionally together with a binder, and the resultant dispersion is coated.

The solvent or dispersing medium used in the formation of the carrier generating layer includes, for example, n-butylamine, diethylamine, ethylenediamine, isopropanolamine, triethanolamine, triethylenediamine, N,N-dimethylformamide, acetone, methyl ethyl ketone, cyclohexanone, benzene, toluene, xylene, chloroform, 1,2-dichloroethane, dichloromethane, tetrahydrofuran, dioxane, methanol, ethanol, isopropanol, ethyl acetate, butyl acetate and dimethyl sulfoxide.

Any binder may be used in the carrier generating layer or the carrier transporting layer, but it is preferred to use a film-forming polymer which is hydrophobic, and which has a high dielectric constant and is electrically insulating. Such polymers may be for example:
P-1) Polycarbonate;
P-2) Polyester;
P-3) Methacrylic resin;
P-4) Acrylic resin;
P-5) Polyvinyl chloride;
P-6) Polyvinylidene chloride;
P-7) Polystyrene;
P-8) Polyvinyl acetate;
P-9) Styrene-butadiene copolymer;
P-10) Vinylidene chloride-acrylonitrile copolymer;
P-11) Vinyl chloride-vinyl acetate copolymer;
P-12) Vinyl chloride-vinyl acetate-maleic anhydride copolymer;
P-13) Silicone resin;
P-14) Silicone-alkyd resin;
P-15) Phenol-formaldehyde resin;
P-16) Styrene-alkyd resin;
P-17) Poly-N-vinylcarbazole.

These binders may be used either singly or as a mixture of two or more.

The carrier generating layer 2 preferably has a thickness of 0.01 µm to 20 pm, more preferably of 0.05 µm to 5 µm. When the carrier generating layer or the photosensitive layer is a dispersion system, the azo compound should preferably have a particle size of 5 ₁₁m or less, more preferably 1 ₁₁m or less.

The electroconductive support used is the photoreceptor of the present invention may be, for example, a plate or drum of a metal or alloy, or a paper or plastic film made electroconductive by coating, vapor deposition or lamination of a metal thin films or a thin film of an electroconductive compound or alloys thereon. In the intermediate layer, such as an adhesive layer or barrier layer, in addition to the polymers used as the binder, it is also possible to use organic polymeric materials such as polyvinyl alcohol, ethyl cellulose or carboxymethyl cellulose or aluminum oxide.

The photoreceptor of the present invention has excellent charging characteristics, sensitivity characteristics and image forming characteristics, and is particularly excellent in durability without deterioration due to fatigue when used repeatedly, as can clearly be seen from the following Examples.

### Example 1

To 110 ml of 1,2-dichloroethane were added 2 g of compound A-(14) and 2 g of a polycarbonate resin "Panlite L-1250" (trade name, produced by Teijin Kasei K.K.) and dispersed therein in a ball mill for 12 hours. The resultant dispersion was applied to a polyester film with aluminum vapor deposited thereon to provide a dried film thickness of 1 µm to provide a carrier generating layer, followed further by coating thereon with a solution of 6 g of 4,4'-dimethyl-4"-styryl-triphenylamine (having the formula K-(1) shown below) and 10 g of a polycarbonate resin "Panlite L-1250" dissolved in 110 ml of 1,2-dichloroethane to a dried film thickness of 15 µm to form a carrier transporting layer, thus preparing a photoreceptor of this invention.

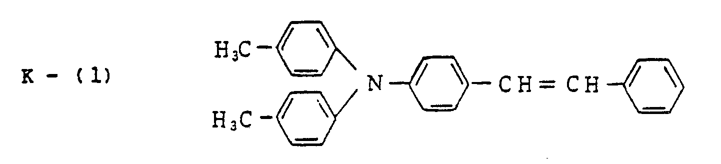

By use of the photoreceptor as described above, the following characteristic evaluations were conducted by means of an electrical paper testing machine Model SP-428 produced by Kawaguchi Denki Seisakusho K.K. After charging at a charged voltage of -6 KV for 5 seconds, the member was left to stand in dark for 5 seconds and then irradiated with a halogen lamp light to the luminosity of 35 lux on the surface of the photoreceptor, and the dose required for attenuating the surface potential to the half value (half-reduction dosage) E_{1/2} was determined. The surface potential after exposure at a dose of 30 lux-sec (residual potential) V_{R} was also determined. Similar measurements were repeated for 100 times. The results are shown in Table 1.

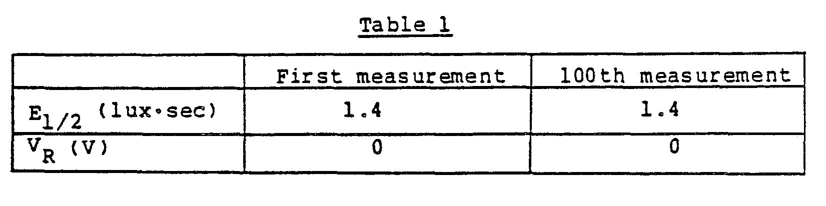

### Comparative Example 1

A photoreceptor for comparative purpose was prepared in the same manner as in Example 1 except for employing the bisazo compound L-(1 ) shown below as the carrier generating material.

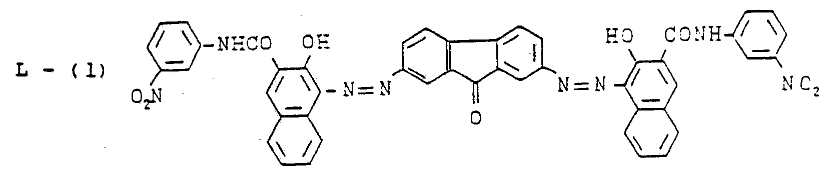

For this photoreceptor for comparative purpose, measurements were conducted similarly as in Example 1 to obtain the results as shown in Table 2.

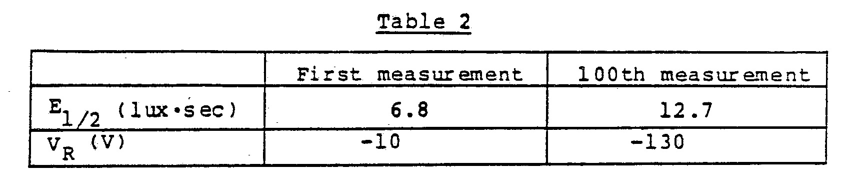

As seen from the above results, the photosensitive member of this invention is very superior to the photoreceptor for comparative purpose with respect to sensitivity, residual potential and stability in repeated uses.

### Examples 2-4

Using compounds A-(20), A-(22) and A-(25) as the carrier generating material, and 1-[4-(N,N-diethylamino)benzylidene]-amino-1,2,3,4-tetrahydroquinoline (the compound K-(2) shown below), 4-methoxy-4'-(4-methyl)styryl-triphenylamine (the compound K-(3) shown below) and 4-methyl-4'-(4-chloro)styryl-triphenylamine (the compound K-(4) shown below), respectively, following otherwise the same procedure as described in Example 1, photoconductive members of this invention were prepared and subjected to similar measurements to obtain the results shown in Table 3.

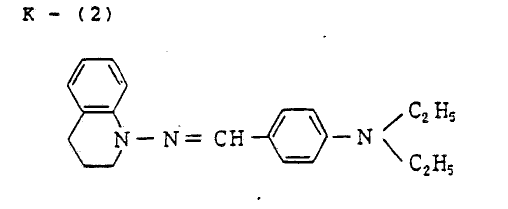

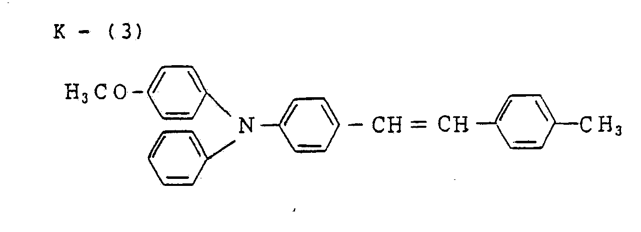

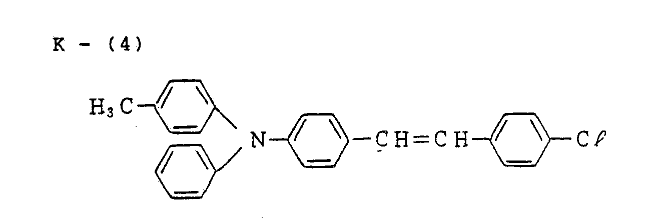

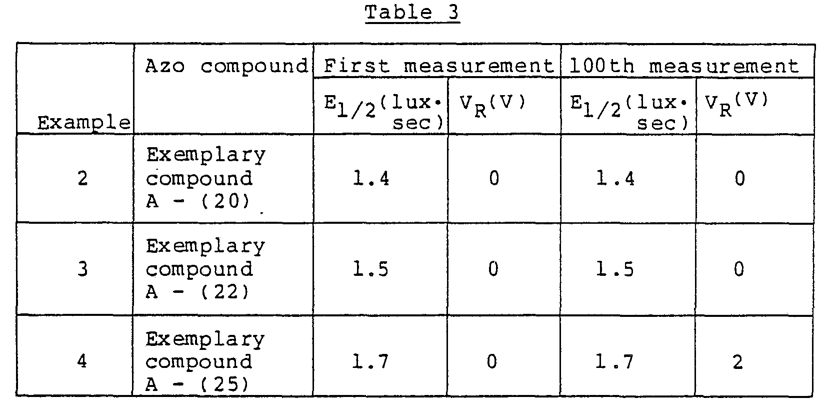

### Example 5

On an electroconductive support comprising a polyester film on which aluminum foil is laminated, an intermediate layer with a thickness of 0.05 pm comprising a vinyl chloride-vinyl acetate-maleic anhydride copolymer "Ethlec MF-10" (trade name, produced by Sekisui Kagaku K.K.) was provided, and on the intermediate layer was further formed a carrier generating layer by coating with a dispersion prepared by dispersing a mixture of 2 g of compound A-(5) and 110 ml of 1,2-dichloroethane in a ball mill for 24 hours to provide a dried film thickness of 0.5 µm. On the carrier generating layer, a solution of 6 g of 4-methyl-4'- styryl-triphenylamine and 10 g of a methacrylic resin "Acrypet" (trade name, produced by Mitsubishi Rayon K.K.) dissolved in 70 ml of 1,2-dichloroethane was applied to a dried film thickness of 10 µm to form a carrier transporting layer, thus preparing an electrophotographic photoreceptor of this invention.

For this photoreceptor, the same measurements as in Example 1 were conducted to obtain the results of E_{1/2} = 2.2 lux-sec and V_{R} = 0 V.

### Example 6

On the electroconductive support having provided thereon, the intermediate layer employed in . Example 5, a 1% solution of compound A-(32) in ethylenediamine was applied to provide a dried film thickness of 0.3 µm to form a carrier generating layer.

Subsequently, on the carrier generating layer was further applied a solution of 6 g of 1-phenyl-3-(p-diethylaminostyryl)-5-(p-diethylaminophenyl)pyrazoline (the compound K-(5) shown below) and 10 g of a polyester resin "Byron 200" (trade name, produced by Toyo Boseki K.K.) dissolved in 70 ml of 1,2-dichloroethane to provide a dried film thickness of 12 µm to form a carrier transporting layer. Thus, a photosensitive member of this invention was prepared.

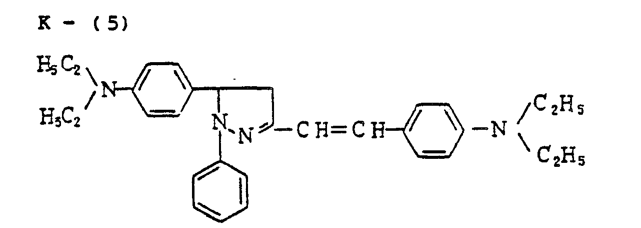

For this photoreceptor, the same measurements as in Example 1 were conducted to obtain the results as shown in Table 4.

### Comparative Example 2

Example 6 was repeated except for substituting the bisazo compound L-(2) of the formula shown below for compound A-(32) to prepare an electrophotographic photoreceptor for comparative purpose.

For this photoreceptor, the same measurements as in Example 1 were conducted to obtain the results as shown in Table 4.

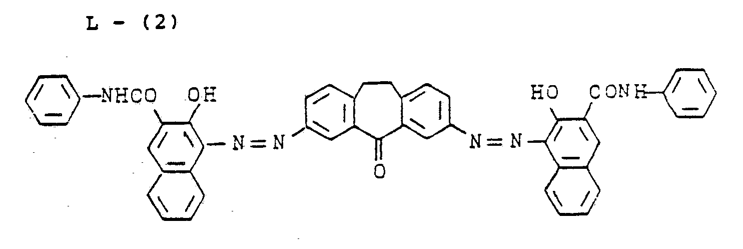

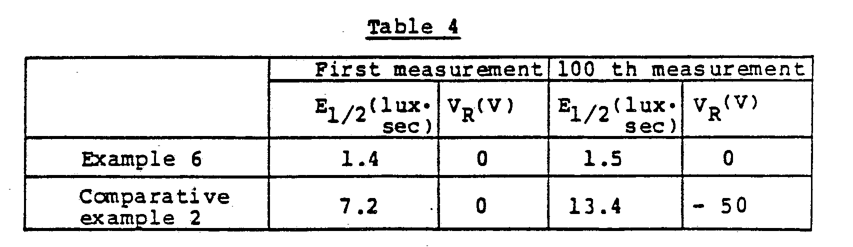

### Example 7

A carrier generating layer was formed in the same manner as in Example 5 except for employing compound A-(38) in place of compound A-(5). On this layer was applied a solution of 6 g of p-(N,N-diethylamino)benzaldehyde-1,1-diphenylhydrazone (Compound K-(6)) and 10 g of a polycarbonate "Panlite L-1250" (trade name, produced by Teijin Kasei K.K.) dissolved in 70 ml of 1,2-dichloroethane to provide a dried film thickness of 10 µm to form a carrier transporting layer, thus preparing a photoreceptor of this invention.

For this photoreceptor, the same measurements as in Example 1 were conducted to obtain the results of E_{1/2} = 1.8 lux.sec and V, = 0 V.

### Example 8

On the surface of an aluminium drum of 100 mm in diameter was provided an intermediate layer with a thickness of 0.05 µm made of a vinyl chloride-vinyl acetate-maleic anhydride copolymer "Ethlec MF-10" (trade name, produced by Sekisui Kagaku K.K.), followed by coating thereon with a dispersion prepared by dispersing a mixture of 4 of the exemplary compound A-(39) and 400 ml of 1,2-dichloroethane in a ball mill for 24 hours to provide a dried film thickness of 0.6 µm to form a carrier generating layer.

Further, on the carrier generating layer was applied a solution of 30 g of p-(N,N-diethylamino)benzaldehyde-1,1-diphenylhydrazone (the compound K―'(6) shown below) and 50 g of a polycarbonate resin "Copiron S-1000" (trade name, produced by Mitsubishi Gas Kagaku K.K.) dissolved in 400 ml of 1,2-dichloroethane to provide a dried film thickness of 13 µm to form a carrier transporting layer, thus preparing a drum-shaped electrophotographic photoreceptor.

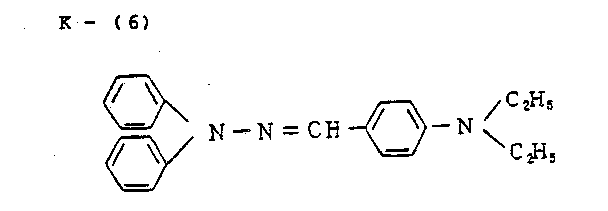

The photoreceptor thus prepared was mounted on a modified electrophotographic copying machine "U-Bix 1600 MR" (trade name, produced by Konishiroku Photo Industry Co., Ltd.) and images were copied to obtain copied images which are high in contrast, faithful or original image and also clear. The quality was not changed at all even when repeated for 10,000 times.

### Comparative Example 3

A drum-shaped photoreceptor for comparative purpose was prepared similarly as in Example 8, except for using the triazo compound L-(3) of the formula shown below in place of compound A-(39), and the copied images were evaluated similarly as in Example 8. Only images with much fogging were obtained. Further, as copying was repeated, the copied images were lowered in contrast, until substantially no copied image was obtained after repetition for 2,000 times.

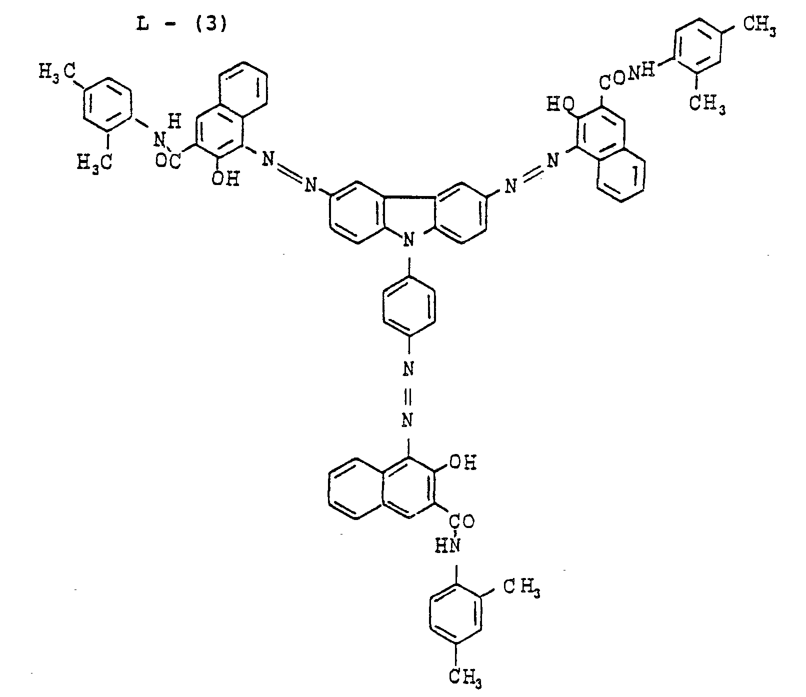

### Example 9

On an electroconductive support comprising a polyester film on which aluminium foil is laminated, an intermediate layer with a thickness of 0.05 µm comprising a vinyl chloride-vinyl acetate-maleic anhydride copolymer "Ethlec MF-10" (trade name, produced by Sekisui Kagaku K.K.) was provided, and on the intermediate layer was further formed a carrier generating layer by coating with a dispersion prepared by dispersing a mixture of 5 g of compound A-(4) and 3.3 g of a polycarbonate resin "Panlite L-1250" (trade name, produced by Teijin Kasei K.K.) in 100 ml of dichloromethane in a ball mill for 24 hours to provide a dried film thickness of 10 µm, to prepare a photoreceptor.

For the thus obtained photoreceptor, E_{1/2} and V_{R} were measured similarly as in Example 1 except for changing the charging voltage to +6 KV. The results of the first measurement were E_{1/2} = 21 lux.sec and V_{R} = +3 V.

### Example 10

On a polyester film on which aluminium was vapor deposited, a solution of 6 g of 1-[4-(N,N-di-(p-tolyl)amino)benzylidene-amino]indoline and 10 g of a polyester resin "Byron 200" (trade name, produced by Toyo Boseki K.K.) dissolved in 70 ml of 1,2-dichloroethane was applied as the carrier transporting layer to provide a dried film thickness of 10 µm.

Subsequently, on this layer was further formed a carrier generating layer by coating with a dispersion prepared by dispersing a mixture of 1 g of compound A-(16) and 1 g of compound A-(18) with 110 ml of 1,2-dichloroethane in a ball mill for 24 hours to provide a dried film thickness of 0.5 µm to prepare a photoreceptor of this invention.

The thus obtained photoreceptor was evaluated similarly as in Example 9 to obtain the results of E_{1/2} = 2.2 lux.sec and V_{R} = +5 V.

### Example 11

A 2% solution of compound A-(10) in ethylenediamine was applied on a polyester film laminated with aluminum to provide a dried film thickness of 0.5 pm to form a carrier generating layer. Further, a carrier transporting layer was formed on the carrier generating layer by coating with a solution of about 10 g of 6-methyl-1-(1-ethyl-4-carbazolyl)methylideneamino-1,2,3,4-tetrahydroquinoline (the compound K-(7) shown below) and 4-methoxy-4'-styryi-triphenylamine (the compound K-(8) shown below) or 4-methoxy- triphenylamine (the compond K-(9) shown below) dissolved separately together with 14 g of a polycarbonate resin (trade name, Panlite L-1250, produced by Teijin Kasei K.K.) in 140 ml of 1,2-dichloromethane to provide a dried film thickness of 12 pm, followed by drying, to prepare photoreceptors with three kinds of different carrier transporting materials.

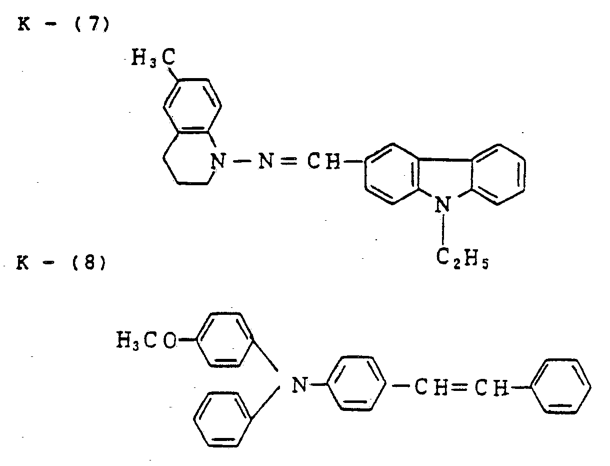

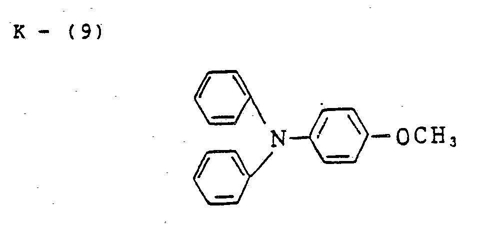

The three kinds of photoreceptors were subjected to the following characteristic evaluations by means of an electrical paper testing machine Model SP-428 produced by Kawaguchi Denki Seisakusho K.K. After charging at a charged voltage of -6 KV for 5 seconds, the member was left to stand in dark for 5 seconds and then irradiated with a halogen lamp light to the luminosity of 35 lux·on the surface of the photoreceptor, and the dose required for attenuating the surface potential to the half value (half-dosage) E_{1/2} was determined. The surface potential after exposure at a dose of 30 lux-sec (residual potential) V_{R} was also determined. The results are shown in Table 5, which shows that good results can be obtained in each combination with any one of the carrier transporting materials.

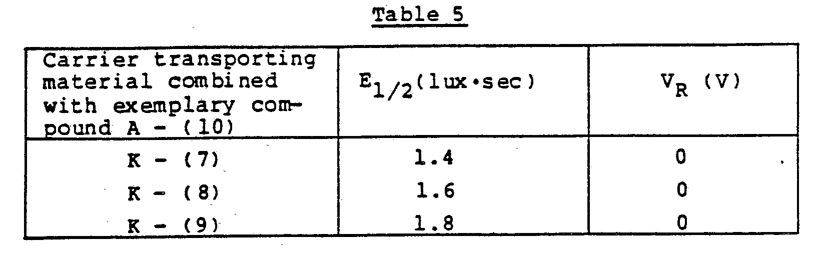

### Comparative Example 4

A comparative photoreceptor was prepared in the same manner as in Example 11 except for substituting the bisazo compound shown below (L-(4)) for compound A-(10) and then subjected to characteristic evaluation.

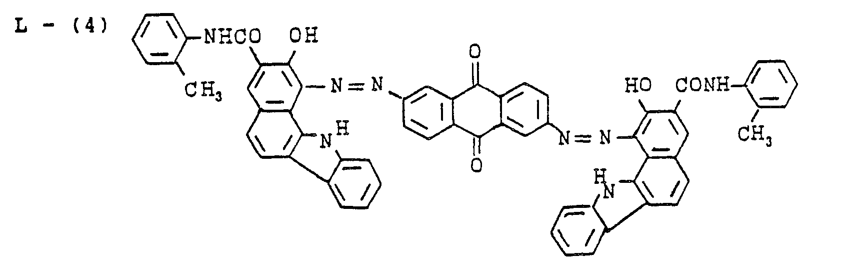

As shown in Table 6, the results were found to vary depending on the carrier transporting material.

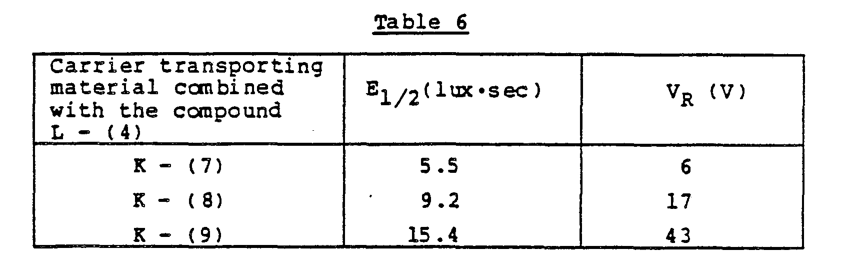

### Example 12

On the electroconductive support having an intermediate layer provided thereon as employed in Example 5, a dispersion prepared by mixing well 2 g of compound A-(12) and 100 ml of 1,2-dichloroethane was applied to provide a dried film thickness of 0.3 µm to prepare a carrier generating layer.

Subsequently, a carrier transporting layer was formed on the carrier generating layer by coating with a solution of carrier transporting materials of 6 g of 3-(p-methoxystyryl)-p-(p-methoxyphenyl)carbazole (the compound K-(10) shown below) and 10 g of a polycarbonate resin "Panlite L-1250" (trade name, produced by Teijin Kasei K.K.) dissolved in 90 g of 1,2-dichioroethane to provide a dried film thickness of 10 µm to prepare a photoreceptor of this invention.

For this photoreceptor, electrophotographic characteristics at room temperatures of 25°C and 60°C were measured similarly as in Example 7. The results are shown in Table 7.

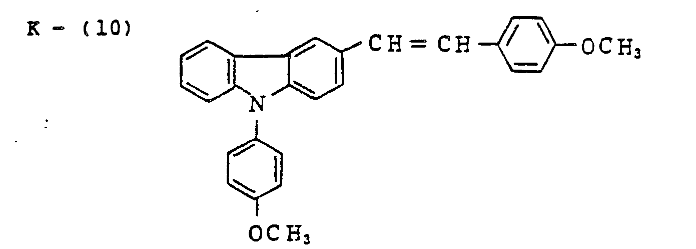

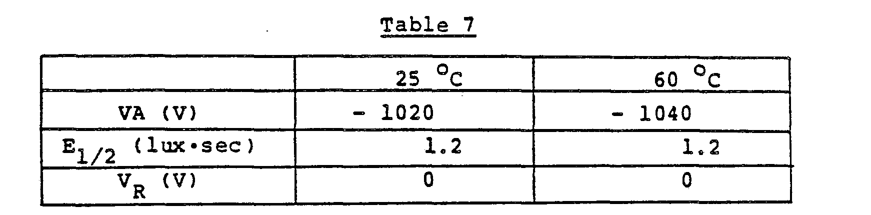

As seen from the above results, the electrophotographic photoreceptor has good sensitivity and residual potential characteristic even at higher temperature, indicating good stability to heat.

On the electroconductive support having an intermediate layer provided thereon as employed in Example 5, a dispersion prepared by mixing well 2 g of compound A-(8) with 110 ml of 1,2-dichloroethane was applied to provide a dried film thickness of 0.3 µm to prepare a carrier generating layer.

For testing the durability of the carrier generating layer against UV-rays, the layer was placed 30 cm from a ultra-high pressure mercury lamp (produced by Tokyo Shibaura Denki K.K.) and UV-ray was irradiated at 1500 cd/cm³ for 10 minutes.

Next, a carrier transporting layer was formed on the UV-ray irradiated by coating with a solution of carrier transporting materials of 7 g of 4,4'-dimethyl-4"-(4-chloro)-styryl-triphenylamine (the compound K―(11) shown below) and 10 g of a polycarbonate resin (Panlite L-1250, trade name, produced by Teijin Kasei K.K.) dissolved in 90 g of 1,2-dichloroethane to provide a dried film thickness of 12 µm to prepare a photoreceptor of this invention.

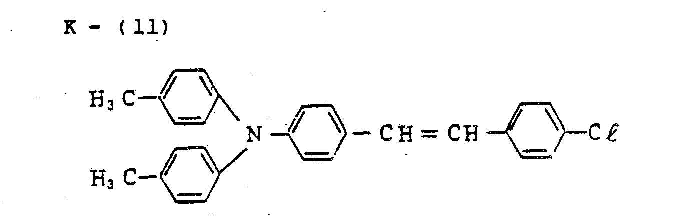

For this photoreceptor, measurements were conducted similarly as in Example 5. The results are shown in Table 8.

### Example 14

Example 13 was repeated except for effecting no irradiation of UV-ray after formation of the carrier generating layer to prepare a photoreceptor, for which the same measurements as in Example 5 were conducted. The results are shown in Table 8.

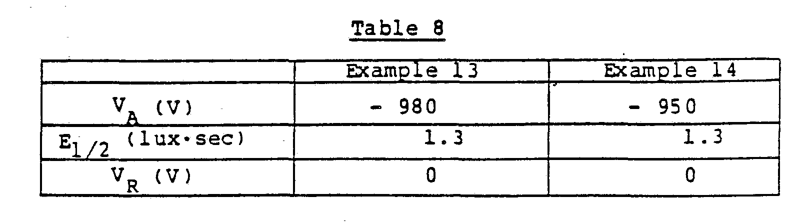

As seen from the above results, the electrophotographic photoreceptor of the present invention has excellent sensitivity and residual potential characteristics relative to UV-ray irradiation, with little variation of the receptor potential and is also stable to light.

### Comparative Example 5

Photoreceptors were prepared in the same manner as in Example 13 and Example 14, except for changing the compound A―(8) to the bisazo compound (L-(5)) as shown below, and the same measurements as in Example 5 were conducted.

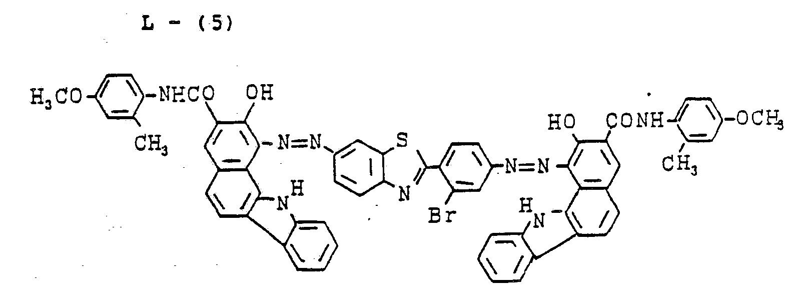

The results are shown in Table 9.

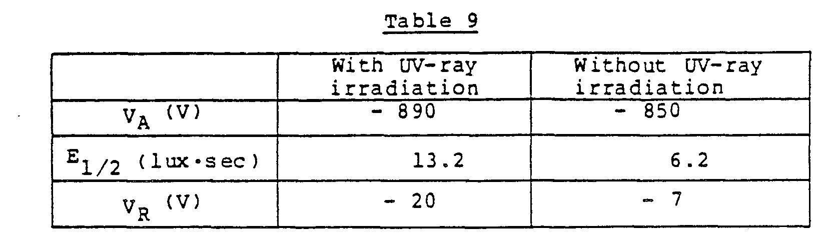

As seen from the above results, the photoreceptor prepared by use of the above compound has worse sensitivity and residual potential characteristics by UV-ray irradiation and a larger variation of the receptor potential.

### Example 15

A drum-shaped photoreceptor was prepared in the same manner as in Example 5 except for using compound A-(1) in place of compound A-(5). The photoreceptor was found to have a spectral sensitivity of 0.50 µJ/cm³ (half-reduction dosage). A practical copying test was conducted by means of a testing machine in which a semiconductor laser (780 nm) with a laser beam intensity of 0.85 mW on the surface of the photoreceptor of this invention was mounted.

After charging the surface of the photoreceptor to -6 KV, the member was exposed to laser beam and subjected to reversal development by a bias voltage of -250 V, whereby good images without fogging were obtained.

### Comparative Example 6

Example 14 was repeated except for employing the comparative bisazo compound L-(6) shown below in place of compound A-(1 ) to obtain a comparative photoreceptor.

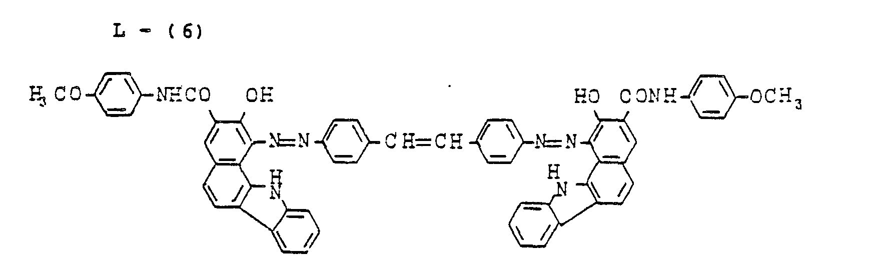

The photoreceptor was found to have a spectral sensitivity of 4.7 µJ/cm³ (half-reduction dosage). When practical copying test by the semiconductor laser was conducted similarly as in Example 14, much fogging occurred to give no good image.

### Example 16

Example 1 was repeated except that compound A-(14) was replaced with compound B―(8) and 4,4'-dimethyl-4"-styryi-triphenylamine was replaced with 1-methyl-3-(p-diethylaminostyryl)-5-(p-methoxystyryl)pyrazoline (having the formula K-(12) shown below).

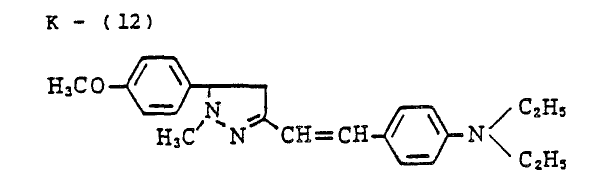

The results are shown in Table 10.

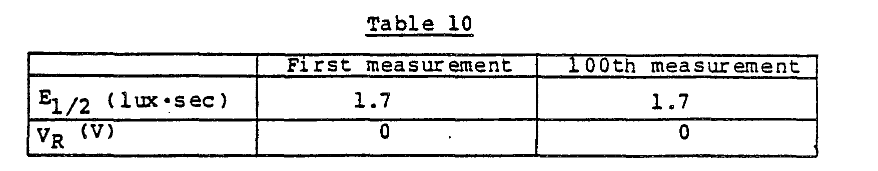

### Comparative Example 7

A photoreceptor for comparative purpose was prepared in the same manner as in Example 16 except for employing the bisazo compound L-(7) shown below as the carrier generating material.

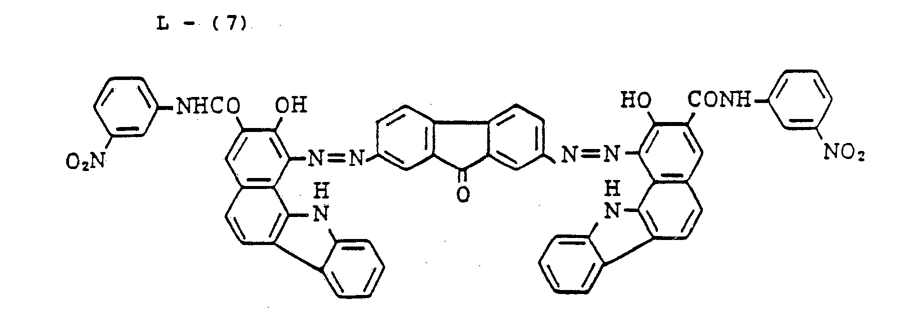

For this photoreceptor for comparative purpose, measurements were conducted similarly as in Example 1 to obtain the results as shown in Table·11.

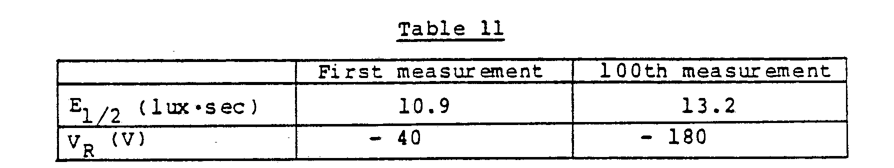

As seen from the above results, the photosensitive member of this invention is very superior to the photoreceptor for comparative purpose with respect to sensitivity, residual potential and stability in repeated uses.

### Examples 17-19

Using compounds B-(10), B-(12) and B-(12) as the carrier generating material, and 3-(p-methoxystyryl)-6-methoxy-9-(p-methoxyphenyl)carbazole (the compond K-(13) shown below), 3-(p-methoxystyryl)-9-(p-methoxyphenyl)carbazole (the compound K-(14) shown below) and 3-styryl-9-phenylcarbazole (the compound K-(15) shown below), respectively, as the carrier transporting material following otherwise the same procedure as described in Example 16, photoconductive members of this invention were prepared and subjected to similar measurements to obtain the results shown in Table 12.

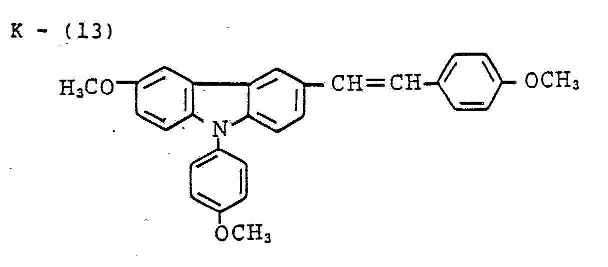

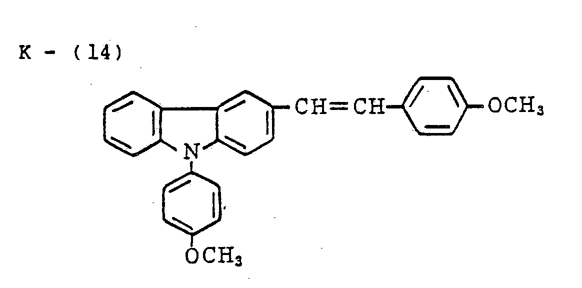

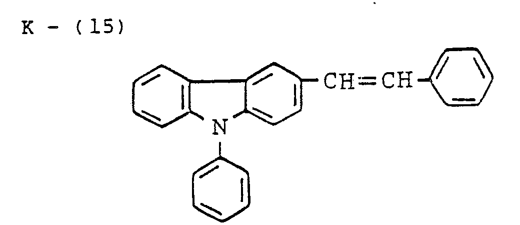

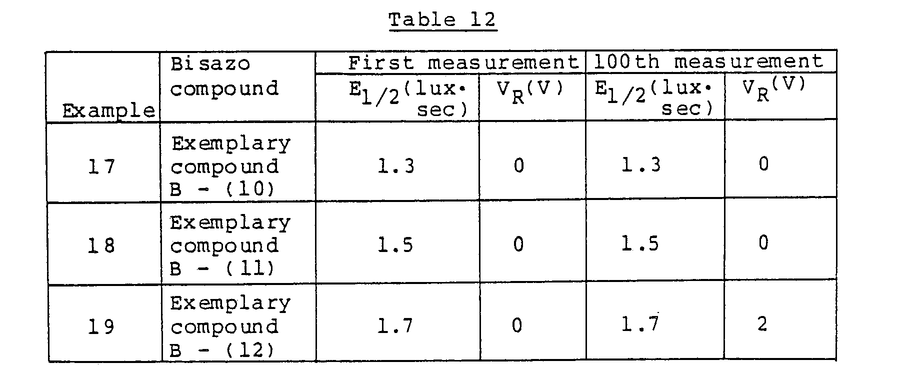

### Example 20

Example 5 was repeated except that compound A-(15) was replaced with compound B-(13), and 4-methyl-4'-styryl-triphenylamine with 4-methyltriphenylamine.

For this photoreceptor, the same measurements as in Example 1 were conducted to obtain the results of E_{1/2} = 2.2 lux-sec and V_{R} = 0 V.

### Example 21

Example 6 was repeated except that compound A-(32) was replaced with compound B-(22), and 1-phenyl-3-(p-diethylaminostyryl)-5-(p-diethylaminophenyl)pyrbzoline was replaced with 4-methoxy-4'- styryl-triphenylamine (the compound K-(16) shown below) to obtain the results shown in Table 13.

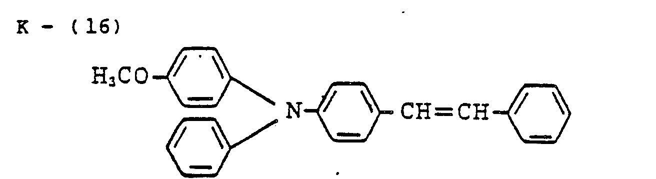

### Comparative Example 8

Example 21 was repeated except for substituting the bisazo compound L-(8) represented by the formula shown below for compound B-(22) to prepare an electrophotographic photoreceptor for comparative purpose.

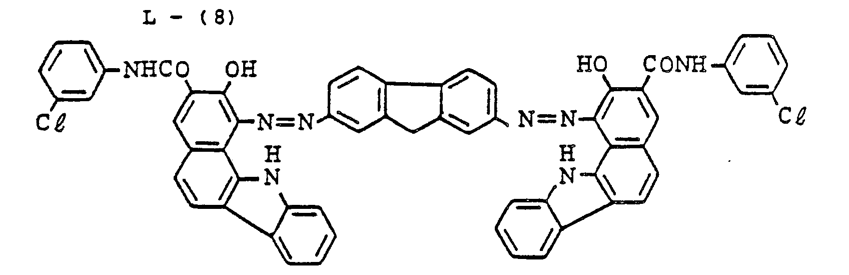

For this photoreceptor, the same measurements as in Example 1 were conducted to obtain the results as shown in Table 13.

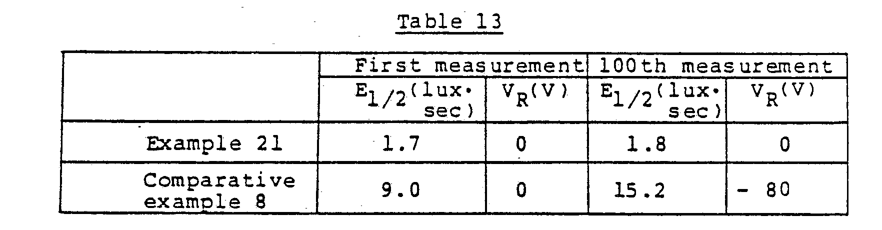

### Example 22

Example 7 was repeated except that compound A-(38) was replaced with compound B-(27) and p-(N,N-diethylamino)benzaldehyde-1,1-diphenylhydrazone was replaced with 4-methyl-4'-styryl- triphenylamine (the compound K-(17) shown below) to prepare a photoreceptor of this invention.

For this photoreceptor, the same measurements as in Example 16 were conducted to obtain the results of E_{1/2} = 1.9 lux-sec and V_{R} = 0 V.

### Example 23

Example 8 was repeated except that compound A-(39) was replaced with compound B-(30), and p-(N,N-diethylamino)benzaldehyde-1,1-diphenylhydrazone . was replaced with 4-methyl-4'-styryl- triphenylamine (the compound K-(17) shown below). Similar results as in Example 8 were obtained.

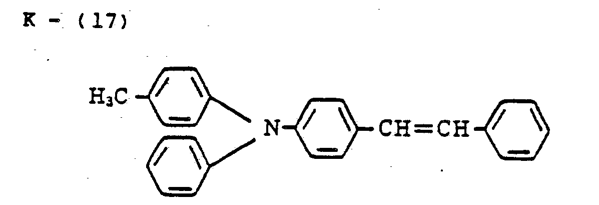

### Comparative Example 9

Example 23 was repeated except for using the bisazo compound L-(9) represented by the structural formula shown below in place of compound B-(30), and the copied images were evaluated similarly as in Example 23. Only images with much fogging were obtained. Further, as copying was repeated, the copied images were lowered in contrast, until substantially no copied image was obtained after repetition for 2,000 times.

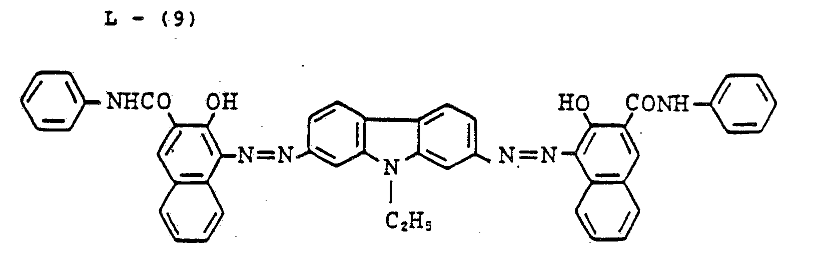

### Example 24

Example 9 was repeated except that compound A-(4) was replaced with compound B-(3) to prepare a photoreceptor.

For the thus obtained photoreceptor, E₁,₂ and V_{R} were measured similarly as in Example except for changing the charging voltage to +6 KV. The results of the first measurement were E_{1/2} = 2.5 lux.sec and V_{R}=0V.

### Example 25

Example 10 was repeated except that 1-[4-(N,N-di-(p-tolyl)amino)benzylidene-amino]indoline was replaced with 4,4'-dimethyltriphenylamine, and compounds A-(16) and A-(18) replaced with compounds B-(14) and B-(15), respectively.

The thus obtained photoreceptor was evaluated similarly as in Example 24 to obtain the results of E_{1/2} = 3.0 lux·sec and V_{R} = +10 V.

### Example 26

Example 11 was repeated except that compound A-(10) was replaced with compound B-(4), 6-methyl-1-(1-ethyl-4-carbazolyl)-methylideneamino-1,2,3,4-tetrahydroquinoline with 1-[4-(N,N-diethyl- amino)-benzylidene]-amino-1 ,2,3,4-tetrahydroquinoline (compound K-(18) shown below), 4-methoxy-4'- styryltriphenylamine with 4,4'-dimethyl-4"-styryltriphenylamine (compound K-(19) shown below) and 4-methoxy-triphenylamine with 4,4'-dimethyl-4'-(4-chloro)-styryl-triphenylamine (compound -(20) shown below) dissolved separately together with 14 g of to obtain the results shown in Table 14.

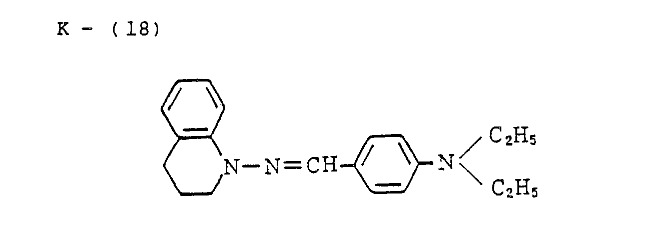

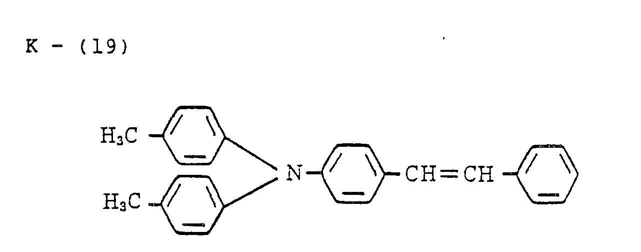

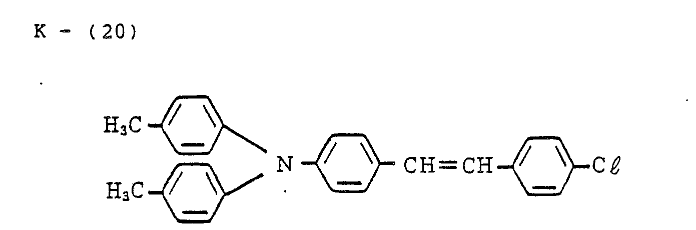

As shown in Table 14, good results can be obtained in each combination with any one of the carrier transporting materials.

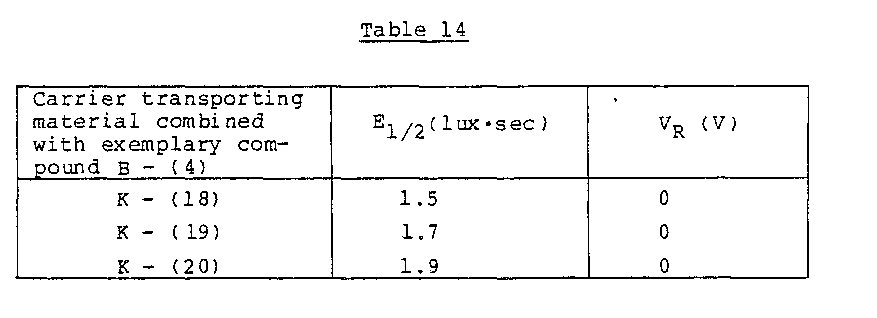

### Comparative Example 10

A comparative photoreceptor was prepared in the same manner as in Example 26 except for substituting the bisazo compound shown below (L-(10)) for compound B-(4) and subjected to characteristic evaluation.

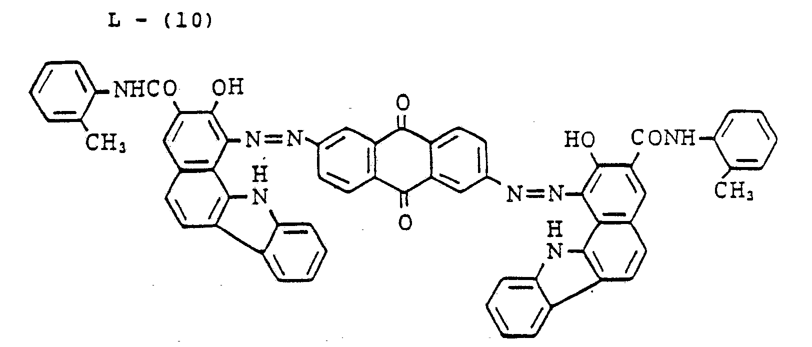

As shown in Table 15, the results were found to be varied depending on the carrier transporting material.

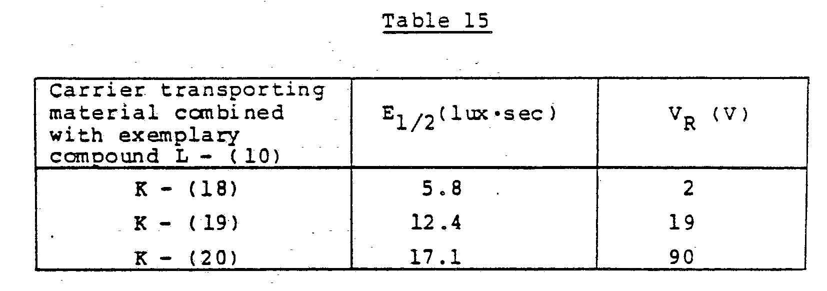

### Example 27

Example 12 was repeated except that compound A-(12) was replaced with compound B-(1), and 3-(p-methoxystyryl)-p-methoxyphenyl)carbazole with p-(N,N-diethylamino)benzaldehyde-1,1-diphenylhydrazone (compound K₋(21 ) shown below) to obtain the results shown in Table 16.

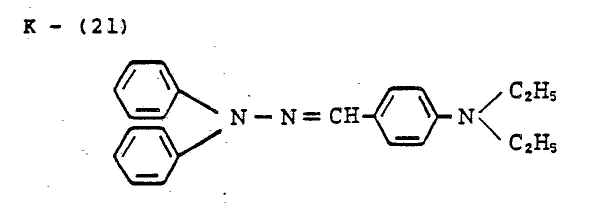

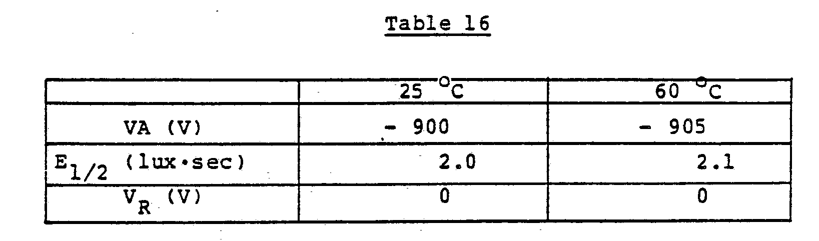

As seen from the above results, the electrophotographic photoreceptor has good sensitivity and residual potential characteristic even at higher temperatures, indicating good stability to heat.

### Example 28

Example 13 was repeated except that compound A-(8) was replaced with compound B-(3), and 4,4'-dimethyl-4"-(4-chloro)-styryltriphenylamine with 1-[1-(p-anisoyl)-4-carbazolyl]methylideneamino-indoline (the compound K-(22) shown below), to obtain the results shown in Table 17.

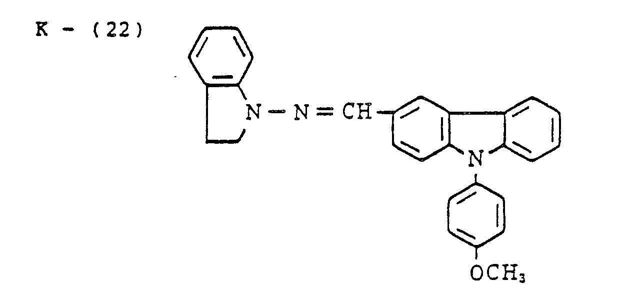

### Example 29

Example 28 was repeated except for effecting no irradiation of UV-ray after formation of the carrier generating layer to obtain the results shown in Table 17.

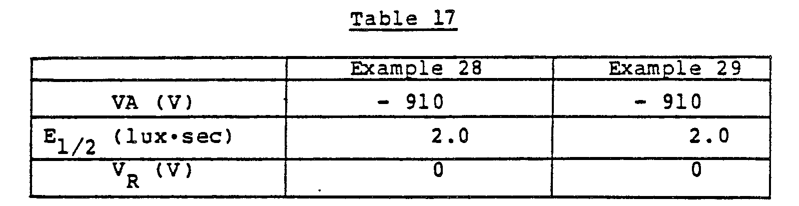

As seen from the above results, the electrophotographic photoreceptor of the present invention has excellent sensitivity and residual potential characteristics relative to UV-ray irradiation, a small variation of receptor potential is also stable to light.

### Comparative Example 11

Photoreceptors were prepared in the same manner as in Example 28 and Example 29, except for changing the compound B-(3) to the bisazo compound (L―(11)) as shown below, and the same measurements as in Example 5 were conducted.

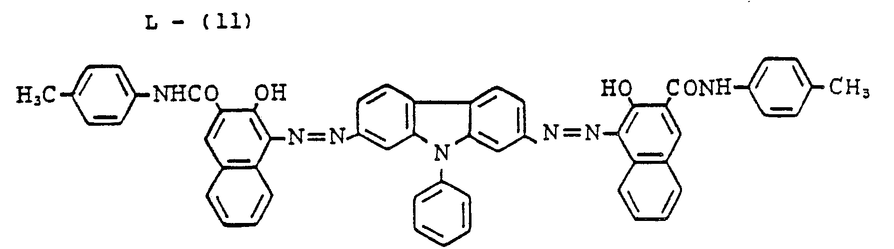

The results are shown in Table 18.

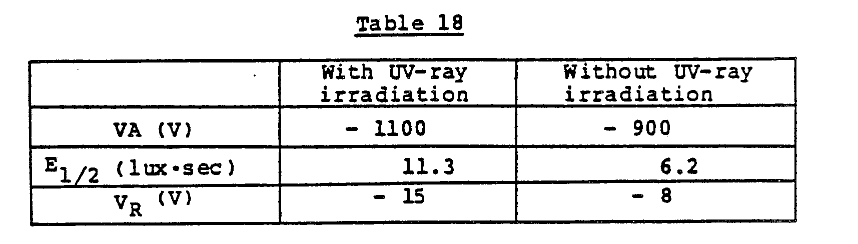

As seen from the above results, the photoreceptor prepared by use of the above compound has worst sensitivity and residual potential characteristics by UV-ray irradiation and a larger variation of receptor potential.

### Example 30

Example 15 was repeated except for using compound B―(2) in place of compound A-(1). Similar results as in Example 15 were obtained.

### Comparative Example 12

Example 30 was repeated except for employing comparative bisazo compound L-(12) shown below in place of compound B-(2) to obtain a comparative photoreceptor.

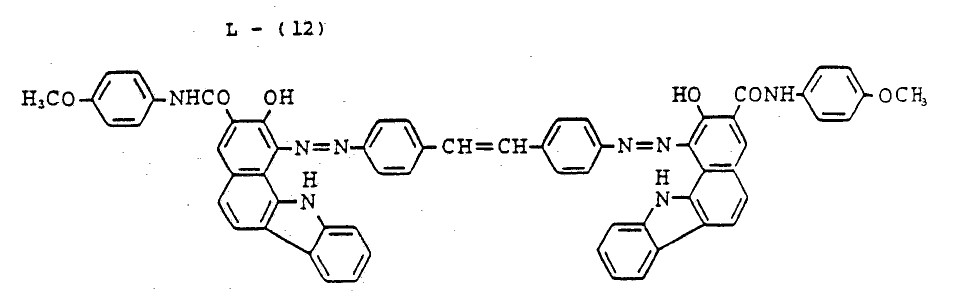

The photoreceptor was found to have a spectral sensitivity of 5.2 pJ/cm² (half-reduction dosage). When a practical copying test by the semiconductor laser was conducted similarly as in Example 30, much fogging occurred to give no good image.

### Example 31

Example 1 was repeated except that compound A―(14) was replaced with compound C-(21) and 4,4'-dimethyl-4"-styryl-triphenylamine with 1-phenyl-(p-methylstyryl)-5-(p-methoxyphenyl)-pyrazoline (having formula K-(23) shown below).

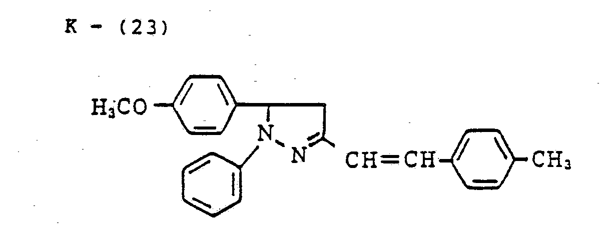

The results are shown in Table 19.

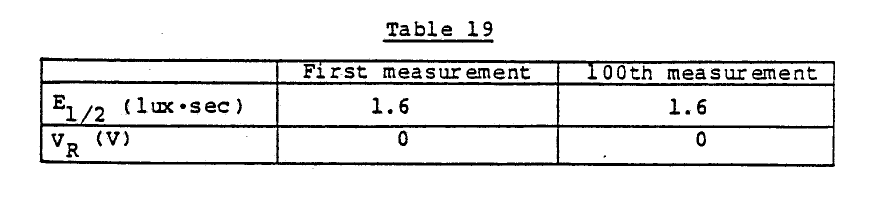

### Comparative Example 13

A photoreceptor for comparative purpose was prepared in the same manner as in Example 31 except for employing the bisazo compound L-(13) shown below as the carrier generating material. 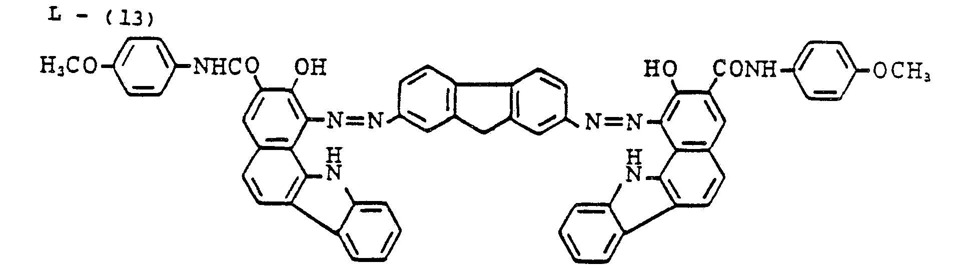 For this photoreceptor for comparative purpose, measurements were conducted similarly as in Example 31 to obtain the results as shown in Table 20.

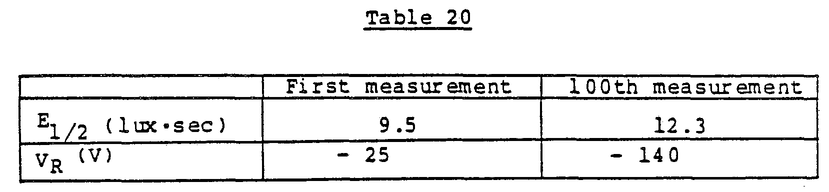

As seen from the above results, the photosensitive member of this invention is very superior to the photoreceptor for comparative purpose with respect to sensitivity, residual potential and stability in repeated uses.

### Examples 32-34

Using compounds C-(5), C-(6) and C-(6) as the carrier generating material, and 6-methyi-1-(1-ethyt-4-carbazolyl)methylideneamino-1,2,3,4-tetrahydroquinoline (compound K-(24) shown below), 1-(1-ethyl-4-carbazolyl)methylideneamino-1,2,3,4-tetrahydroquinoline (compound K-(25) shown below) and 4,4'-dimethyl-4"-(4-chloro)-styryltriphenylamine (compound K-(26) shown below), respectively, as the carrier transporting material following otherwise the same procedure as described in Example 31, photoconductive members of this invention were prepared and subjected to similar measurements to obtain the results shown in Table 21.

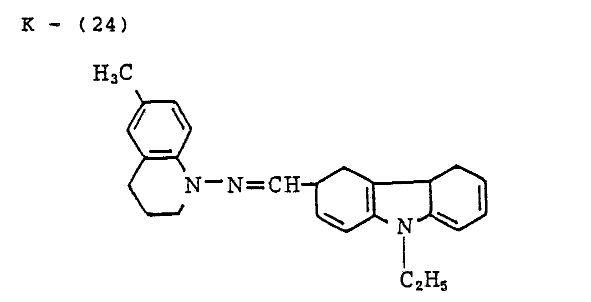

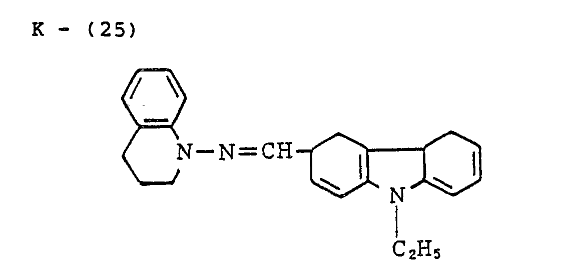

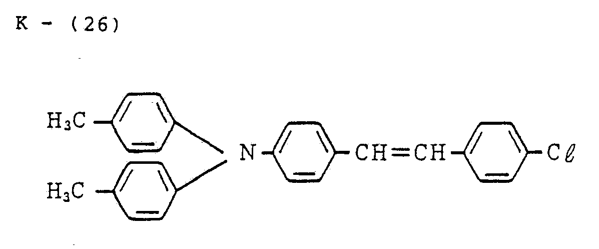

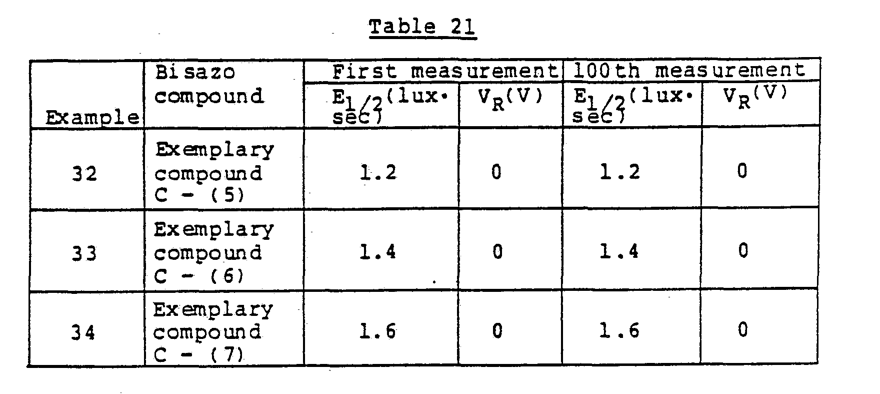

### Example 35

Example 5 was repeated except that compound A-(5) was replaced with compound C-(11), and 4-methyl-4'-styryi-triphenylamine with 3,3',4-trimethyl-triphenylamine.

For this photoreceotor, the same measurements as in Example 31 were conducted to obtain the results of E_{1/2} = 2.6 lux·sec and V, = 0 V.

### Example 36

Example 6 was repeated except that compound A-(32) was replaced with compound C-(33), and 1-phenyl-3-(p-diethylaminostyryl)-5-(p-diethylaminophenyl)pyrozoline replaced with 4-methoxy-4'-styryl- triphenylamine (the compound K-(16) shown above) to obtain the results shown in Table 22.

### Comparative Example 14

Example 36 was repeated except for substituting bisazo compound L-(14) of the formula shown below for compound C-(33) to prepare an electrophotographic photoreceptor for comparative purpose. 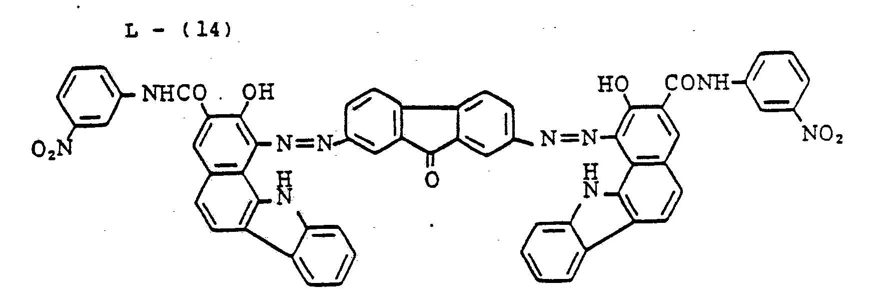 For this photoreceptor, the same measurements as in Example 31 were conducted to obtain the results as shown in Table 22.

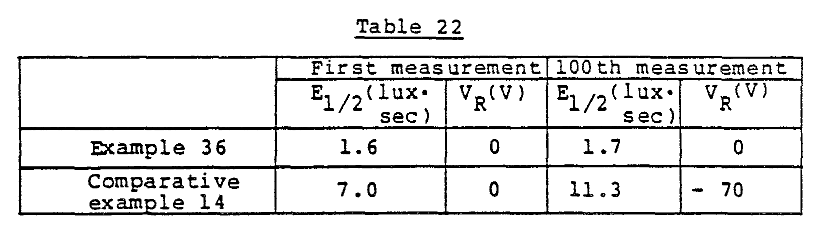

### Example 37

Example 7 was repeated except that compound A-(5) was replaced with compound C-(13) and p-(N,N-diethylamino)benzaldehyde-1,1-diphenylhydrazine with 3-(p-methoxystyryl)-9-(p-methoxyphenyl)carbazole (the compound K-(27) shown below) to prepare a photoreceptor of this invention.

For this photoreceptor, the same measurements as in Example 31 were conducted to obtain the results of E_{1/2} = 1.9 lux·sec and V_{R} = 0 V.

### Example 38

Example 8 was repeated except that compound A-(39) was replaced with compound C(39), and p-(N,N-diethylamino)benzaldehyde-1,1-diphenyl[hydrazone replaced with 3-(p-methoxystyryl)-9-(p-methoxyphenyl)carbazole (compound K-(27) shown below). Similar results as in Example 8 were obtained.

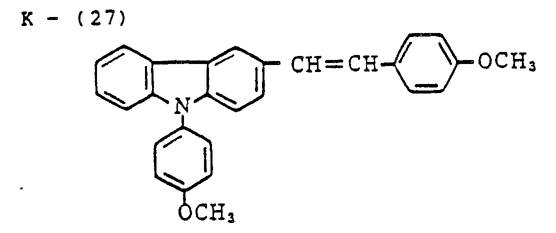

### Comparative Example 15 .

Example 38 was repeated except for using the bisazo compound L-(15) of the formula shown below in place of compound C-(39), and the copied images were evaluated similarly as in Example 38. Only images with much fogging were obtained. Further, as copying was repeated, the copied images were lowered in contrast, until substantially no copied image was obtained after repetition for 2,000 times.

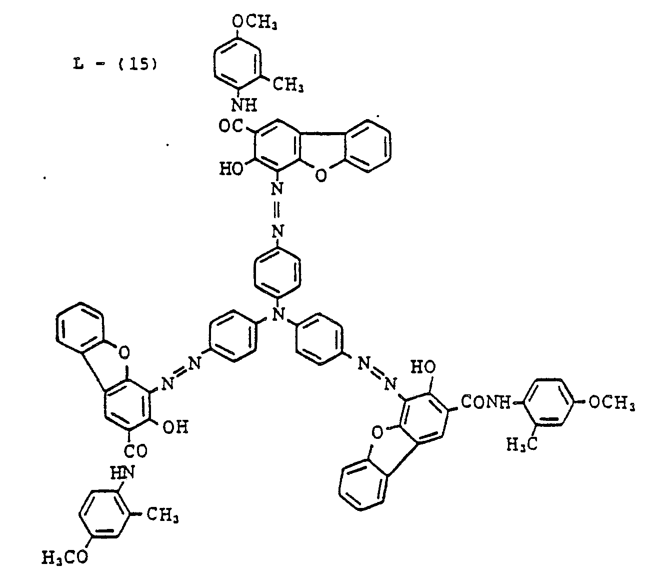

### Example 39

Example 9 was repeated except that compound A-(4) was replaced with compound C-(17) to prepare a photoreceptor.

For the thus obtained photoreceptor, E_{1/2} and VR were measured similarly as in Example 31 except for changing the charging voltage to + 6 KV. The results of the first measurement were E_{1/2} = 2.2 lux-sec and V_{R}=+2V.

### Example 40

Example 10 was repeated except that 1-[4-(N,N-di-[p-tolyl)amino)benzylidene-amino]indoline was replaced with 4-methoxytriphenylamine, and compounds A-(16) and A-(18) were replaced with compounds C-(12) and C-(14), respectively.

The thus obtained photoreceptor was evaluated similarly as in Example 39 to obtain the results of E_{1/2} = 2.5 lux-sec and V_{R} = + 7 V.

### Example 41

Example 11 was repeated except that compound A-(10) was replaced with compound C-(10), 6-methyl-1-(1-ethyl-4-carbazolyl)-methylideneamino-1,2,3,4-tetrahydroquinoline with 1-methyl-3-(p-diethylaminophenyl)-5-(p-diethylaminophenyl)pyrazoline (compound K-(28), 4-methoxy-4'-styryl-triphenylamine with 1-phenyl-(p-methoxystyryl)-5-(p-diethylaminophenyl)pyrazoline (compound K-(29) shown below) and 4-methoxy-triphenylamine with 1-phenyl-(p-methylstyryl)-5-(p-methylphenyl)-pyrazoline (compound K-(30) shown below) to obtain the results shown in Table 23.

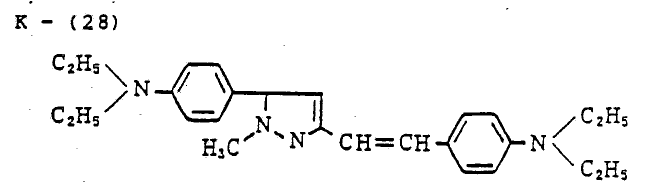

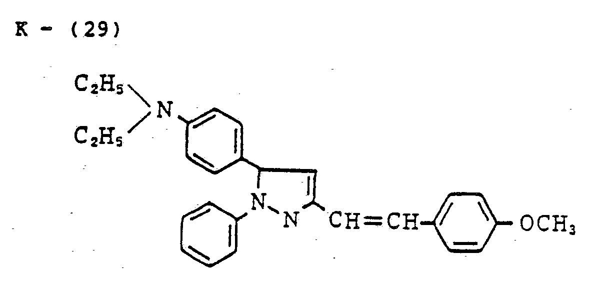

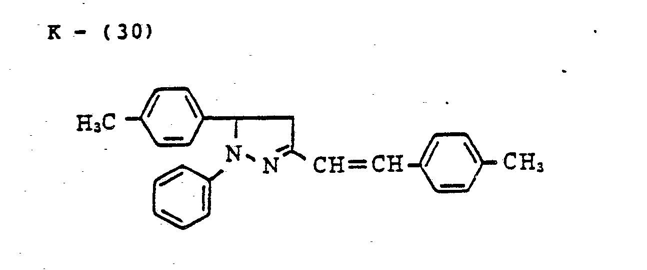

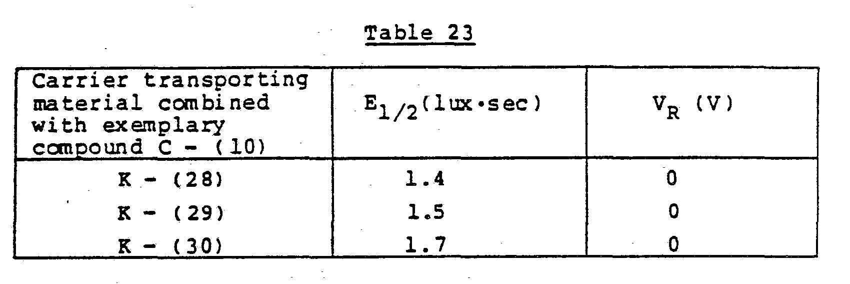

### Comparative Example 16

A comparative photoreceptor was prepared in the same manner as in Example 41 except for substituting the bisazo compound shown below (L-(16)) for compound C-(10) and subjected to characteristic evaluation.

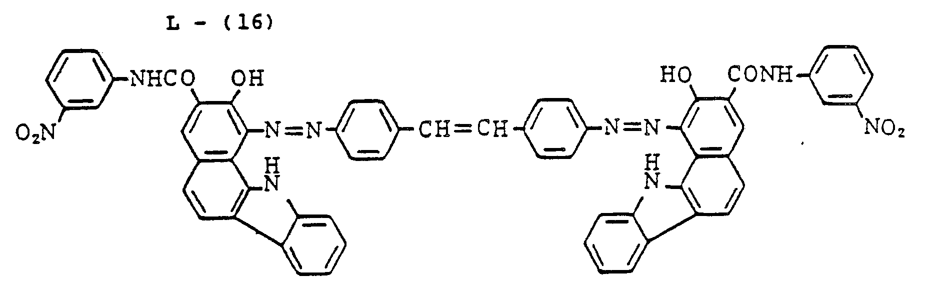

As shown in Table 24, the results were found to be varied depending on the carrier transporting material.

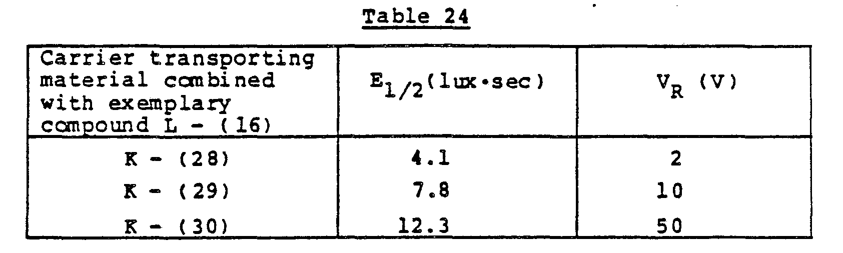

### Example 42

Example 12 was repeated except that compound A-(12) was replaced with compound C-(2), and 3-(p-methoxystyryl)-p-methoxyphenyl)carbazole with 4-methyl-4'-styryl-triphenylamine (compound K-(17) shown above) to obtain the results shown in Table 25.

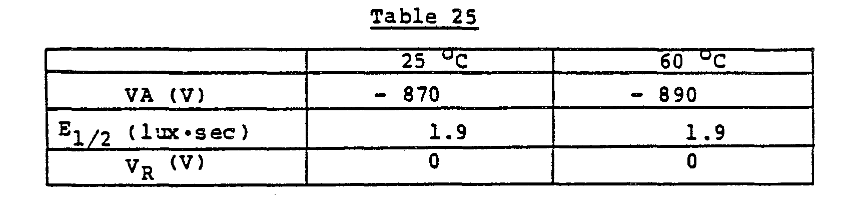

As seen from the above results, the electrophotograhic photoreceptor has good sensitivity and residual potential characteristic even at higher temperatures indicating good stability to heat.

### Example 43

Example 13 was repeated except that compound A-(8) was replaced with compound C-(3), and 4,4'-dimethyl-4"-(4-chloro)-styryl-triphenylamine with 4-methoxy-4'-(4-methylstyryl)-triphenylamine (compound K-(3) shown above), to obtain the results shown in Table 26.

### Example 44

Example 43 was repeated except for effecting no irradiation of UV-ray after formation of the carrier generating layer to obtain the results shown in Table 26.

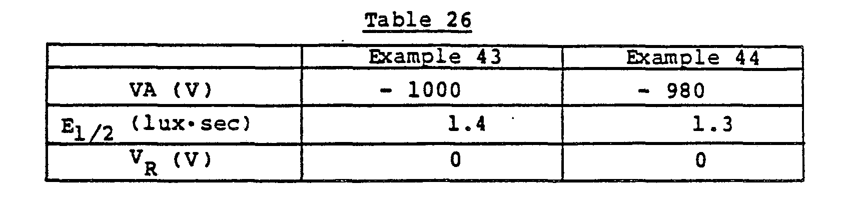

As seen from the above results, the electrophotographic photoreceptor of this invention has excellent sensitivity and residual potential characteristics relative to UV-ray irradiation, little variation of the receptor potential and is also stable to light.

### Comparative Example 17

Photoreceptors were prepared in the same manner as in Example 43 and Example 44, except for changing compound C-(1) to the bisazo compound (L-(17)) shown below, and the same measurements as in Example 35 were conducted. 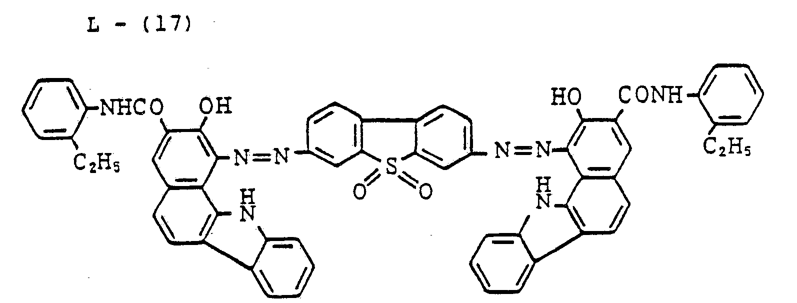 The results are shown in Table 27.

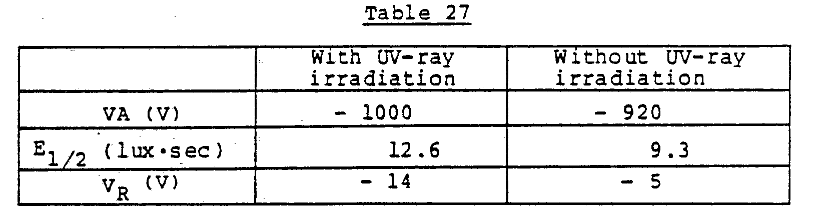

As seen from the above results, the photoreceptor prepared by use of the above compound has deteriorated sensitivity and residual potential characteristics by UV-ray irradiation and a large variation of the receptor potential.

### Example 45

Example 15 was repeated except for using compound C-(3) in place of compound A―(1) to obtain a photoreceptor having a spectral sensitivity of 0.47 µJ/cm² (half-reduction dosage) at 790 nm. Similar results as in Example 15 were obtained.

### Comparative Example 18

Example 45 was repeated except for employing the comparative bisazo compound L-(18) shown below in place of compound C-(3) to obtain a comparative photoreceptor. 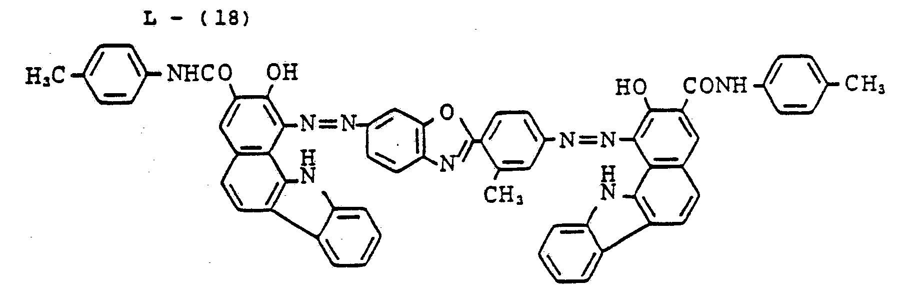 The photoreceptor was found to have a spectral sensitivity of 6.8 pJ/cm² (half-reduction dosage). When a practical copying test by semiconductor Iser was conducted similarly as in Example 30, much fogging occurred to give no good image.

### Example 46

Example 1 was repeated except that compound A-(14) was replaced with compound D-(105) and 4,4'-dimethyl-4"-styryl-triphenylamine with 4,4'-dimethyl-4"-(4-methyl)-styryl-triphenylamine (compound K-(32) shown below). 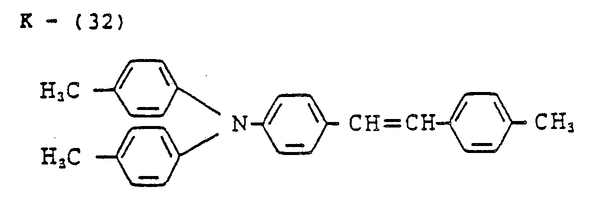 The results are shown in Table 28.

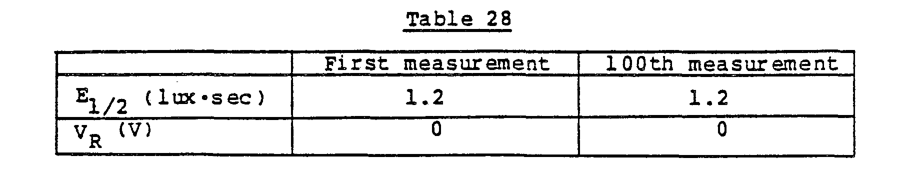

### Comparative Example 19

A photoreceptor for comparative purpose was prepared in the same manner as in Example 46 except for employing the bisazo compound L-(19) shown below as the carrier generating material. 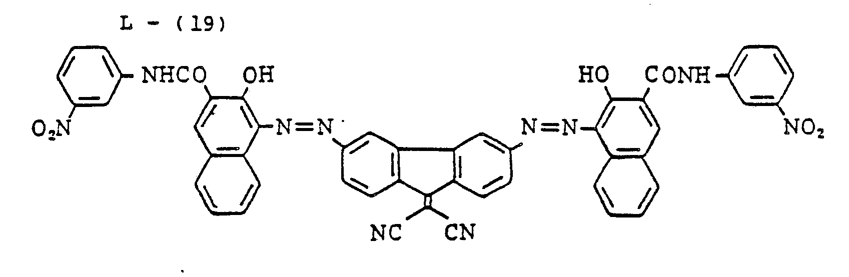 For this photoreceptor for comparative purpose, measurements were conducted similarly as in Example 46 to obtain the results as shown in Table 29.

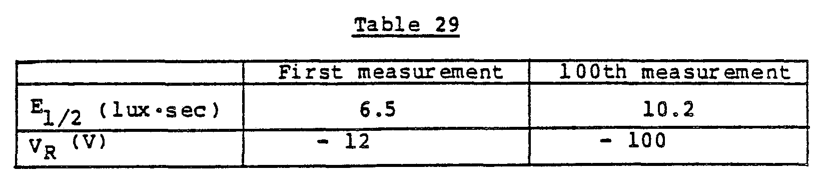

As seen from the above results, the photoreceptor of this invention is very superior to the photoreceptor for comparative purpose with respect to sensitivity, residual potential and stability in repeated uses.

### Example 47

Using compound D-(105) as the carrier generating material, and the compound shown below K-(33) as the carrier transporting material following otherwise the same procedure as described in Example 46, photoconductive members of this invention were prepared and subjected to similar measurements to obtain the results shown in Table 30.

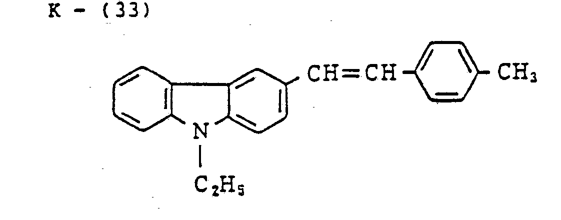

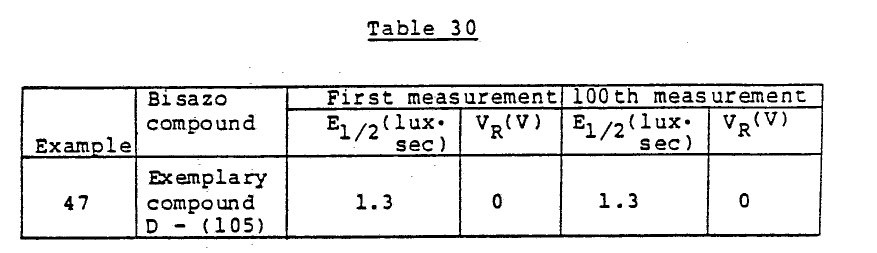

### Example 48

Example 5 was repeated except that compound A-(5) was replaced with compound D-(139), and the compound shown below K-(34) was employed as the carrier transporting material. 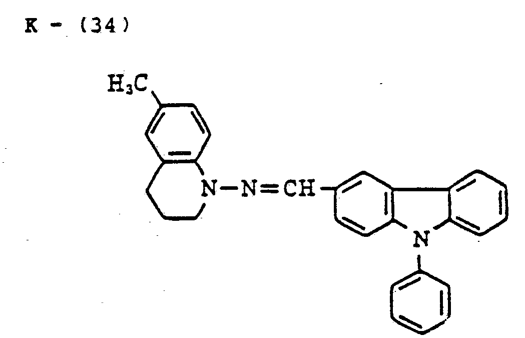 For this photoreceptor, the same measurements as in Example 1 were conducted to obtain the results of the first measurement of E_{1/2} = 1.5 lux-sec and V_{R} = 0 V.

### Example 49

Example 6 was repeated except that compound A-(32) was replaced with compound D-(78) and compound K-(35) shown below was employed as the carrier transporting material to obtain the results shown in Table 31.

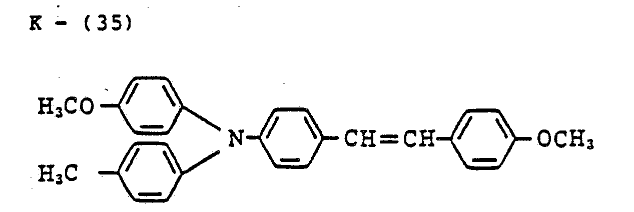

### Comparative Example 20

Example 49 was repeated except for substituting the bisazo compound L-(20) of the formula shown below for the exemplary compound D-(78) to prepare an electrophotographic photoreceptor for comparative purpose. 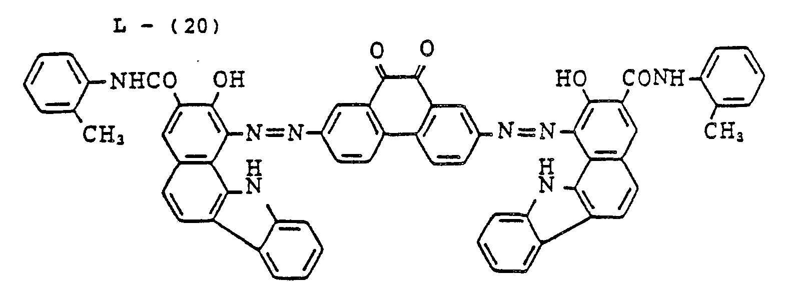 For this photoreceptor, the same measurements as in Example 49 were conducted to obtain the results as shown in Table 31.

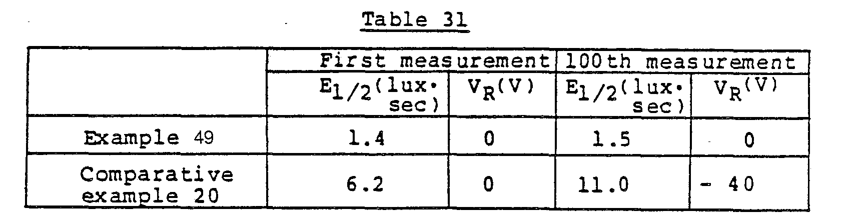

### Example 50

Example 8 was repeated except that compound A--(39) was replaced with compound D-(138), and the compound K-(36) shown below was employed as the carrier transporting material. Similar results as in Example 8 were obtained.

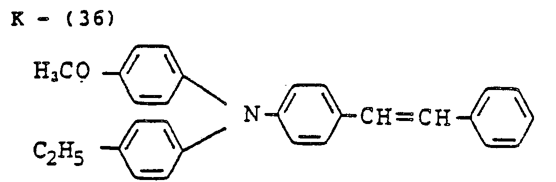

### Comparative Example 21

Example 50 was repeated except for using the bisazo compound L-(21) of the formula shown below in place of compound D-(138), and the copied images were evaluated similarly as in Example 50. As the result, only images with much fogging were obtained. Further, as copying was repeated, the copied images were lowered in contrasts, until substantially no copied image was obtained after repetition for 2,000 times.

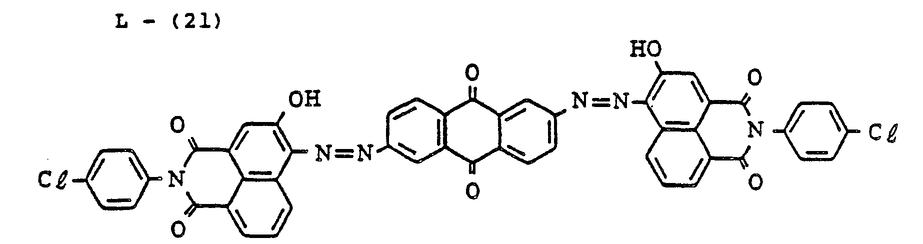

### Example 51

Example 9 was repeated except that compound A-(4) was replaced with compound D-(48) to prepare a photoreceptor.

For the thus obtained photoreceptor, E_{1/2} and V_{R} were measured similarly as in Example 9 except for changing the charging voltage to +6 KV. The results of the first measurement were E_{1/2} = 1.7 lux-sec and V_{R} = +3 V.

### Example 52

Example 10 was repeated except that compound K-(37) shown below was employed as the carrier transporting material, and compounds D-(93) and D-(94) were employed as the carrier generating materials, respectively. 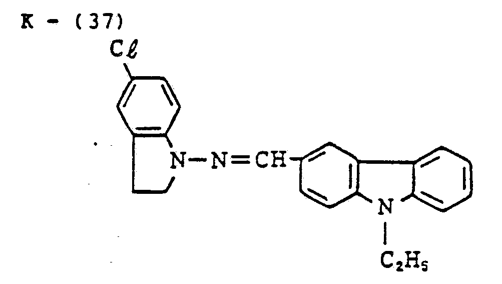 The thus obtained photoreceptor was evaluated similarly as in Example 51 to obtain the results of E_{1/2} = 1.9 lux·sec and V_{R} = +6 V.

### Example 53

On an electroconductive support having a laminated aluminium foil , a polyester film was provided with an intermediate layer with a thickness of 0.05 µm of a vinyl chloride-vinyl acetate-maleic anhydride copolymer "Ethlec MF-10" (trade name, produced by Sekisui Kagaku K.K.), followed by coating thereon with a dispersion prepared by dispersing a mixture of 4 g of compound D-(128) and 8 g of compound K-(38) (shown below), 3 g of a polycarbonate resin "Panlite L-1250" (trade name, produced by Teijin Kasei K.K.) in 100 ml of dichloroethane in a sand grinder for 24 hours to prepare a photoreceptor. 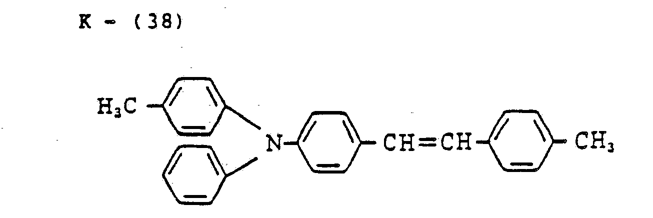 For this photoreceptor, E_{1/2} and V_{R} were measured in the same manner as in Example 46 except for changing the charged voltage to +6 KV to obtain the results of the first measurement of E_{1/2} = 1.0 lux-sec andVR=OV.

### Example 54

Example 11 was repeared except that compound A-(10) was replaced with compound D-(64), and the carrier transporting materials were changed to compounds K-(39), K-(40) and K-(41) shown below, respectively, to obtain the results shown in Table 32.

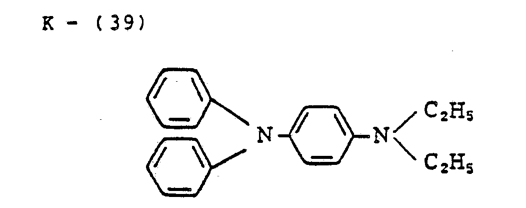

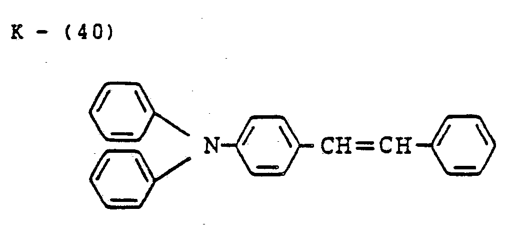

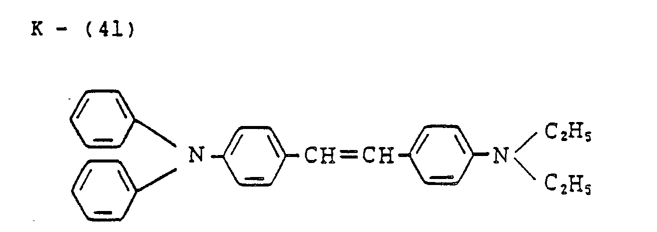

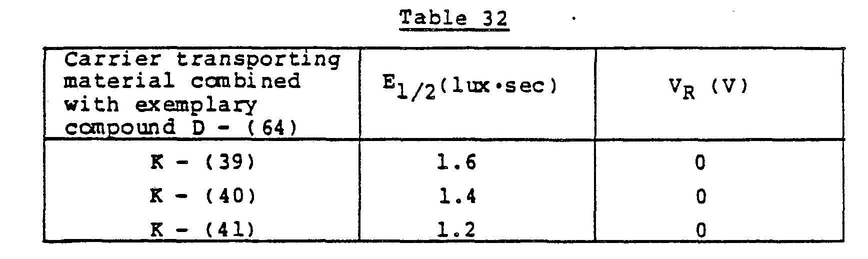

### Comparative Example 22

A comparative photoreceptor was prepared in the same manner as in Example 53 except for substituting the bisazo compound shown below (L-(22)) for compound D-(64) and subjected to characteristic evaluation. 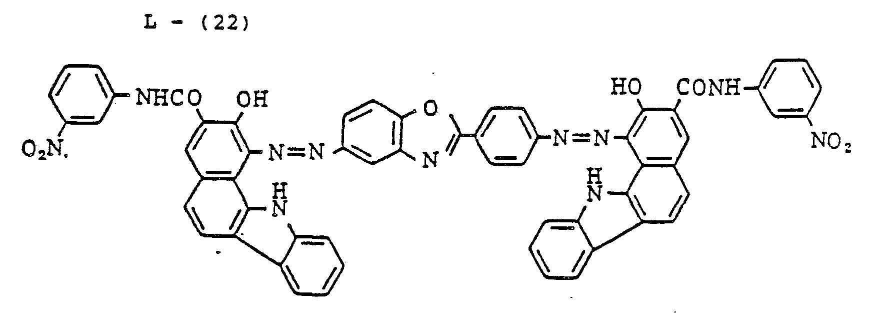 As shown in Table 33, the results were found to be varied depending on the carrier transporting material.

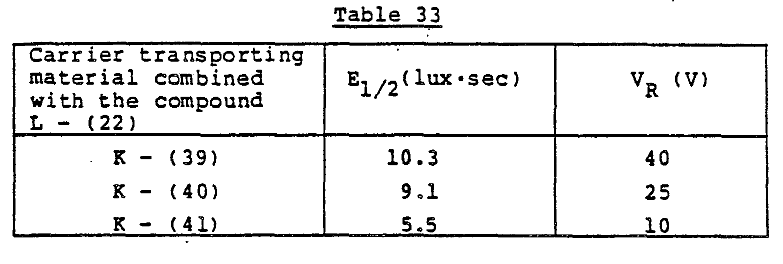

### Examples 55―63

In Example 48, the exemplary compound D-(139) (charge generating material) and the compound K-(34) (charge transporting material) were changed, respectively, to those as shown in Table 34, under otherwise the same conditions to prepare drum-shaped photoreceptors. These photoreceptors were found to have spectral sensitivities at 790 nm as shown in Table 34. In any of the copying tests conducted similarly as in Example 48 by use of these photoreceptors (Examples 53-63), good images without fog were obtained.

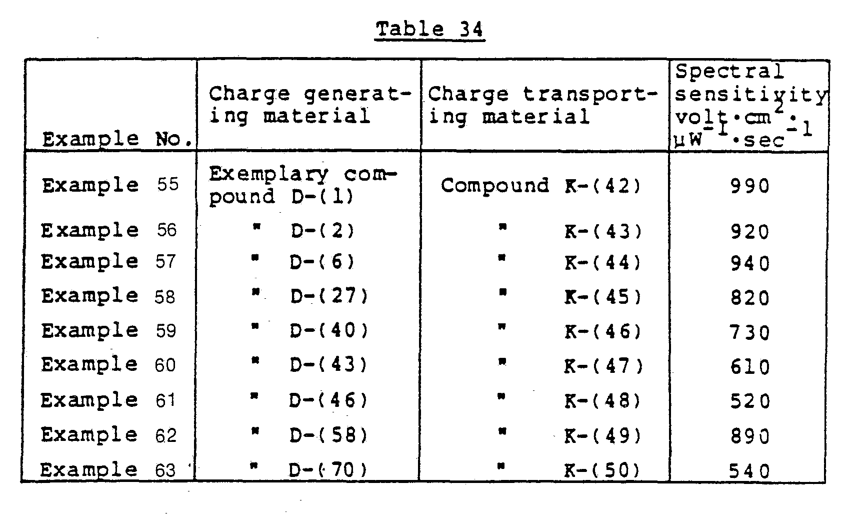

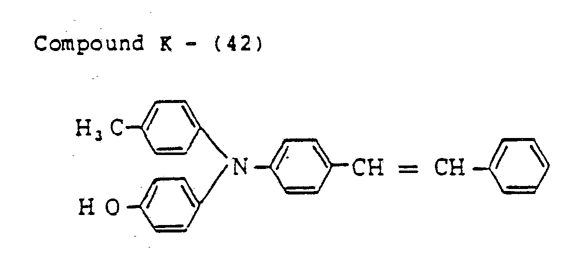

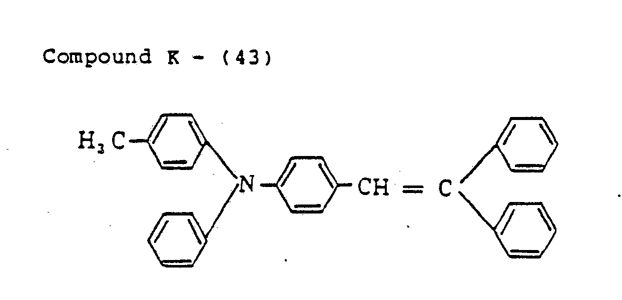

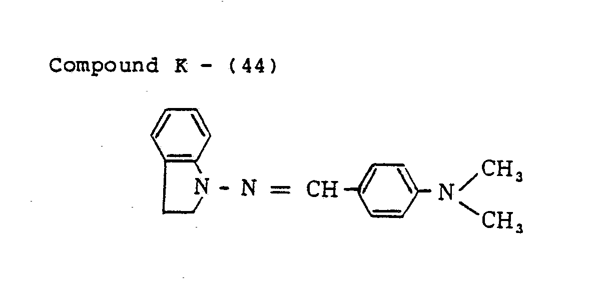

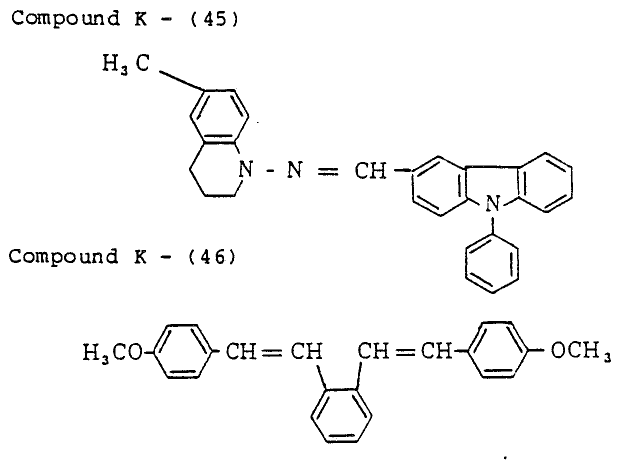

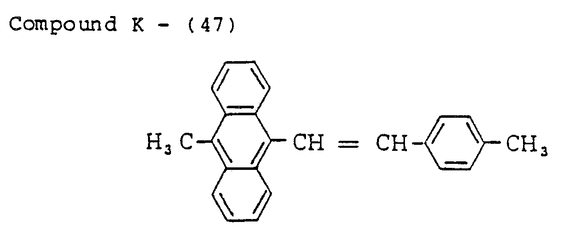

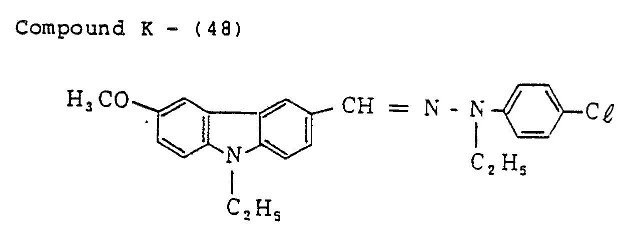

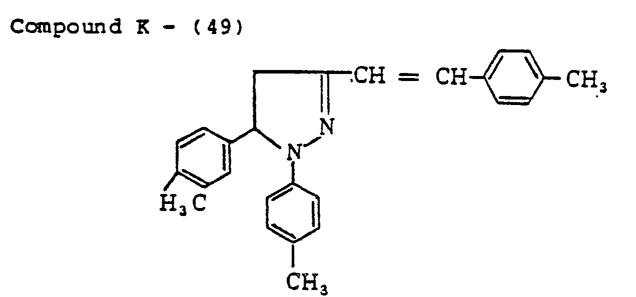

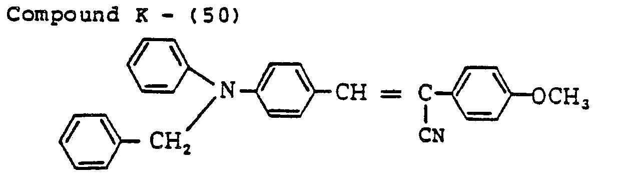

### Example 64

Example 1 was repeated except that compound A-(14) was replaced with compound E―(63) and 4,4'-dimethyl-4"-styryl-triphenylamine with the compound of the formula K-(51) shown below. 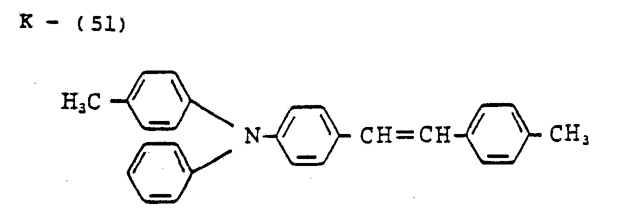 The results are shown in Table 35.

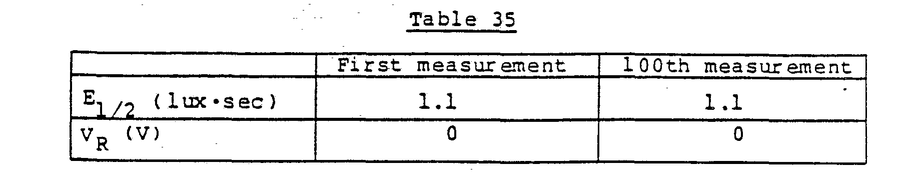

### Comparative Example 23

A photoreceptor for comparative purpose was prepared in the same manner as in Example 64 except for employing the bisazo compound L-(23) shown below as the carrier generating material. 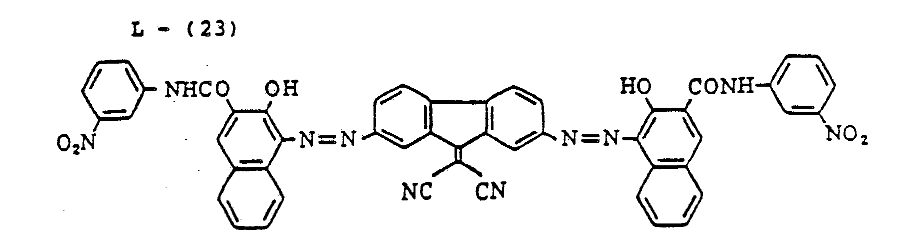 Forthis photoreceptor for comparative purpose, measurements were conducted similarly as in Example 64 to obtain the results as shown in Table 36.

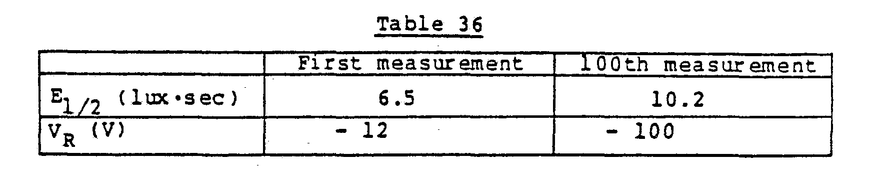

As seen from the above results, the photoreceptor of this invention is very superior to the photoreceptor for comparative purpose with respect to sensitivity, residual potential and stability in repeated uses.

### Example 65

Using the exemplary compound E-(128) as the carrier generating material, and the compound shown below (K-(52)) as the carrier transporting material following otherwise the same procedure as described in Example 46, photoconductive members of this invention were prepared and subjected to similar measurements to obtain the results shown in Table 37.

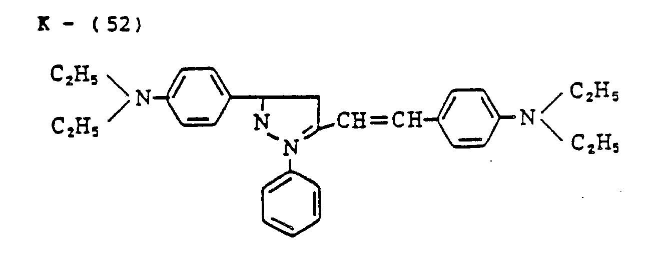

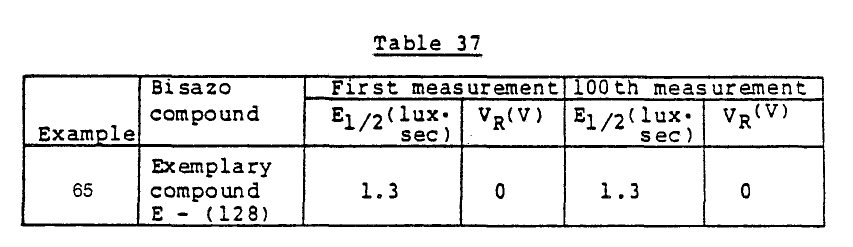

### Example 66

Example 5 was repeated except that compound A-(5) was replaced with compound E-(113), and compound K-(53) shown below was employed as the carrier transporting material. 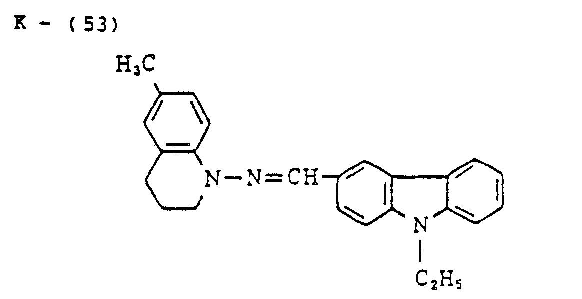 For this photoreceptor, the same measurements as in Example 1 were conducted to obtain the results of E_{1/2} = 1.7 lux.sec and VR = 0 V.

### Example 67

Example 6 was repeated except that compound A-(32) was replaced with compound E-(72) and compound K-(54) shown below was employed as the carrier transporting material to obtain the results shown in Table 38.

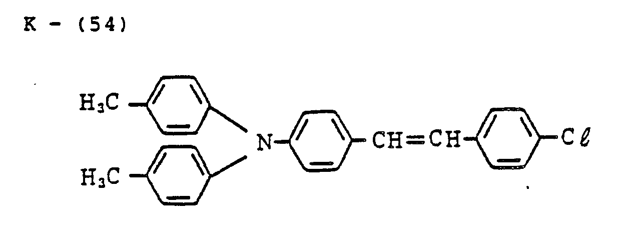

### Comparative Example 24

Example 67 was repeated except for substituting the bisazo compound L-(24) of the formula shown below for compound E-(72) to prepare an electrophotographic photoreceptor for comparative purpose. 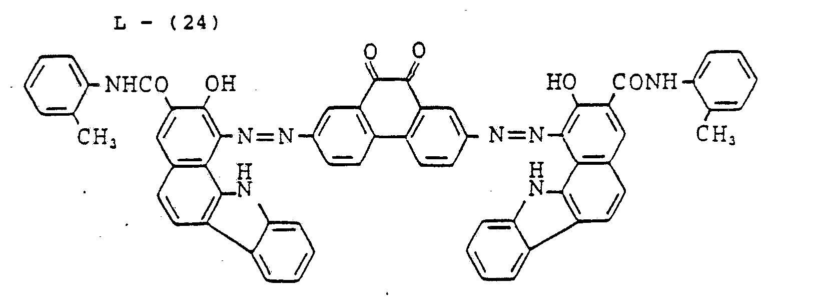 For this photoreceptor, the same measurements as in Example 1 were conducted to obtain the results as shown in Table 38.

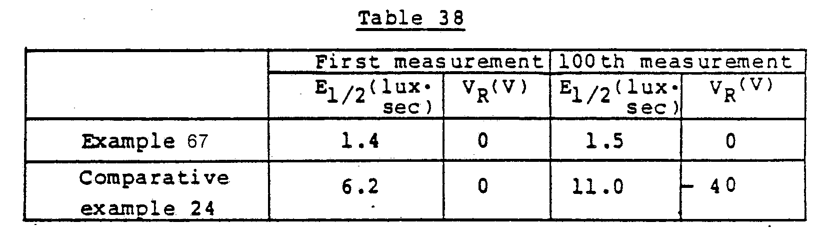

### Example 68

Example 7 was repeated except that compound A-(5) was replaced with compound E-(103) and compound K-(55) shown below was employed as the carrier transporting material to prepare a photoreceptor of. this invention. 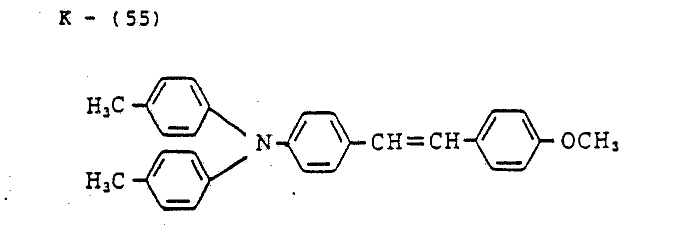 For this photoreceptor, the same measurements as in Example 1 were conducted to obtain the results of E_{1/2} = 1.6 lux.sec and V_{R} = 0 V.

### Example 69

Example 8 was repeated ecept that compound A-(39) was replaced with compound E-(109), and compound K-(56) shown below was employed as the carrier transporting material. Similar results as in Example 8 were obtained.

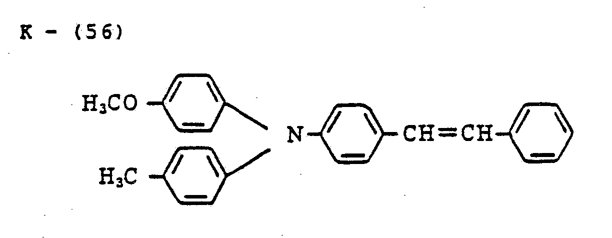

### Comparative Example 25

Example 69 was repeated except for using the bisazo compound L-(25) of the formula shown below in place of compound E-(109), and the copied images were evaluated similarly as in Example 69. Only images with much fogging were obtained. Further, as copying was repeated, the copied images were lowered in contrast, until substantially no copied image was obtained after repetition for 2,000 times.

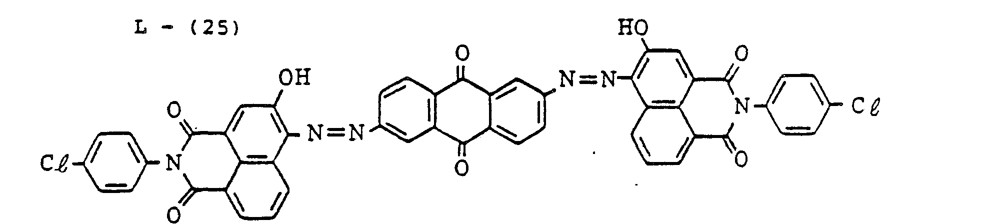

### Example 70

Example 10 was repeated except that compound K-(57) shown below was employed as the carrier transporting material, and compound E-(76) and the following bisazo compound were employed as the carrier generating materials. 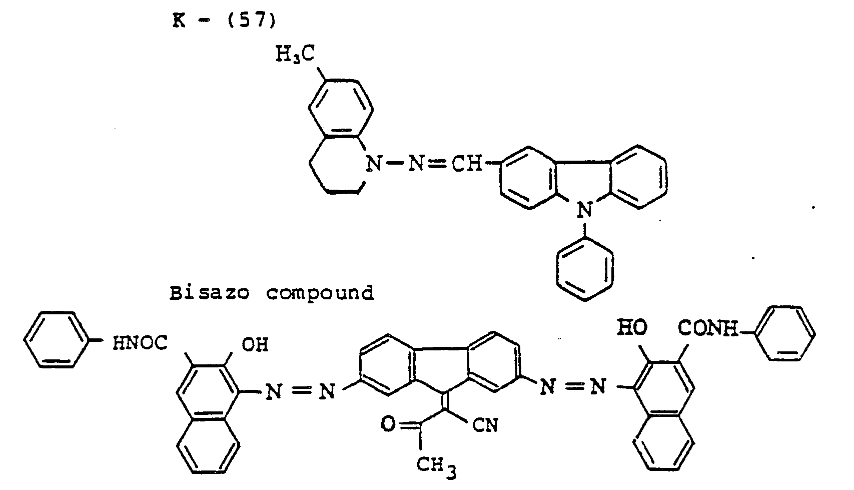 The thus obtained photoreceptor was evaluated similarly as in Example 69 to obtain the results of E_{1/2} = 2.0 lux-sec and V_{R} = + 7 V.

### Example 71

On an electroconductive support having aluminum foil laminated on a polyester film was provided an intermediate layer with a thickness of 0.05 pm made of a vinyl chloride-vinyl acetate-maleic anhydride copolymer "Ethlec MF-10" (trade name, produced by Sekisui Kagaku K.K.), followed by coating thereon with a dispersion prepared by dispersing a mixture of 4 g of compound E-(100) and 8 g of compound K-(58) shown below), 3 g of a polycarbonate resin "Panlite L-1250" (trade name, produced by Teijin Kasei K.K.) in 100 ml of dichloroethane in a sand grinder for 24 hours to prepare a photoreceptor. 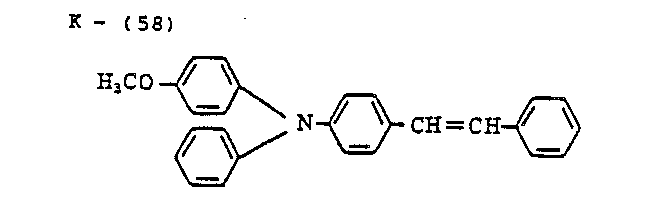 For this photoreceptor, E_{1/2} and V_{R} were measured in the same manner as in Example 1 except for changing the charging voltage to +6 KV to obtain the results of the first measurement of E_{1/2} = 1.5 lux.sec and V_{R} = 0 V.

### Example 72

Example 11 was repeated except that compound A-(10) was replaced with compound E-(52), and the carrier transporting materials were changed to the compound K-(59), K-(60) and K-(61) shown below, respectively, to obtain the results shown in Table 39.

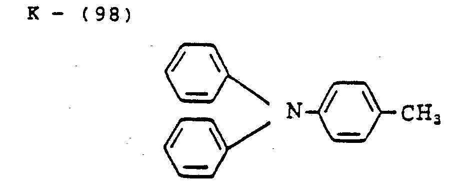

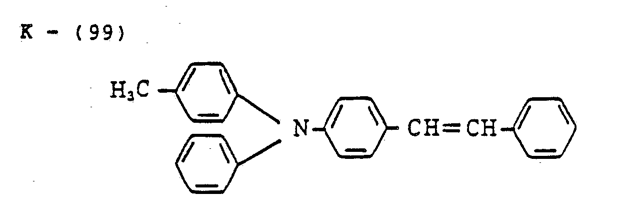

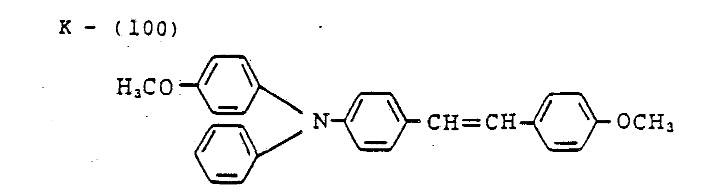

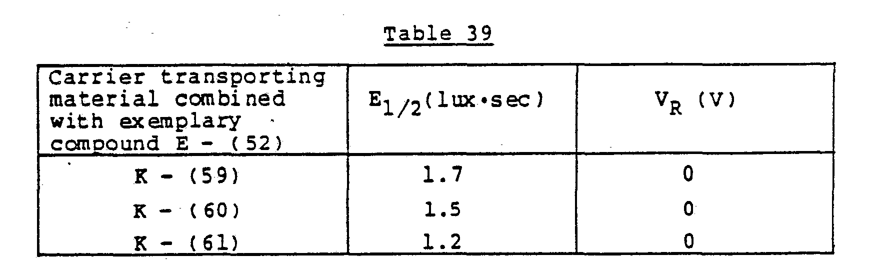

### Comparative Example 26

A comparative photoreceptor was prepared in the same manner as in Example 72 except for substituting the bisazo compound shown below (L-(26)) for compound E-(52) and subjected to characteristic evaluation. 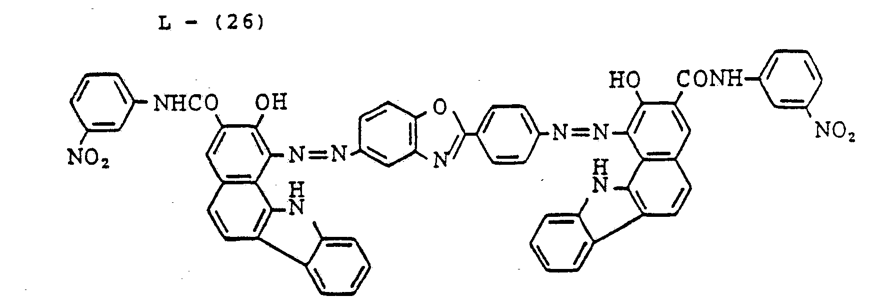 As shown in Table 40, the results varied depending on the carrier transporting material.

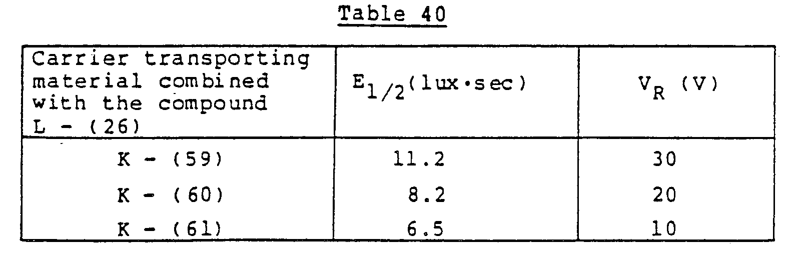

### Example 73

Example 12 was repeated except that compound A-(12) was replaced with compound E(105) and compound K-(62) shown below was used as the carrier transporting material to obtain the results shown in Table 41.

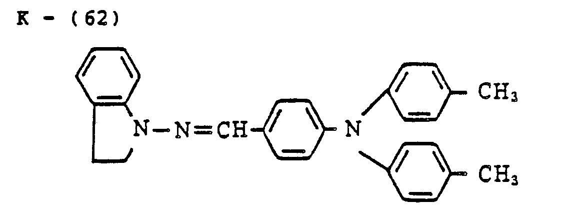

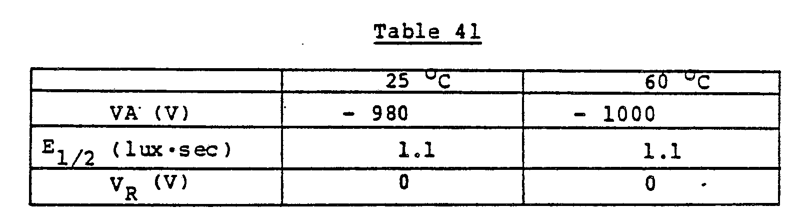

As seen from the above results, the electrophotographic photoreceptor has good sensitivity and residual potential characteristics even at higher temperatures, indicating good stability to heat.

### Example 74

Example 13 was repeated except that compound A-(8) was replaced with compound E-(102) and compound K-(63) shown below was employed as the carrier transporting material to obtain the results as shown in Table 42.

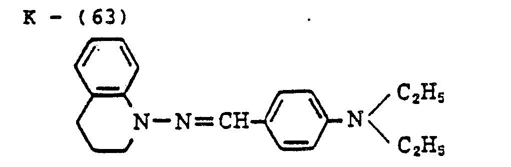

### Example 75

Example 74 was repeated except for effecting no irradiation with UV-rays after formation of the carrier generating layer to obtain the results shown in Table 42.

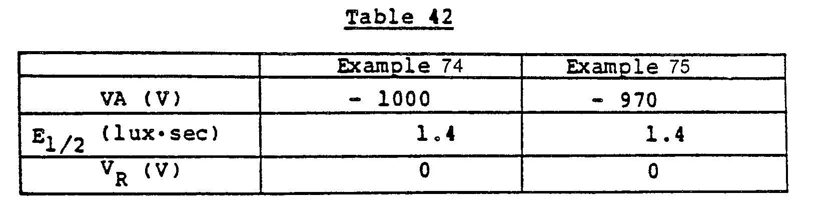

As seen from the above results, the electrophotographic photoreceptor of this invention has excellent sensitivity and residual potential characteristics relative to UV-ray irradiation, a little variation of the receptor potential and is also stable to light.

### Comparative Example 27

Photoreceptors were prepared in the same manner as in Examples 74 and 75, except for changing compound E-(102) to the bisazo compound (L-(27)) as shown below, and the same measurements as in Example 5 were conducted. 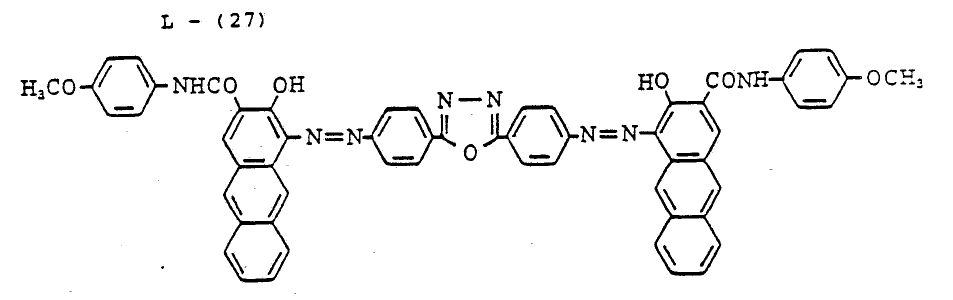 The results are shown in Table 43

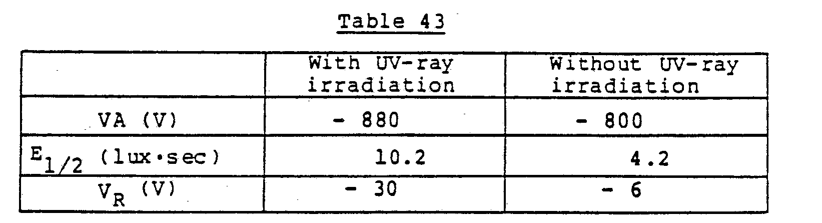

As seen from the above results, the photoreceptor prepared by use of the above compound has deteriorated sensitivity and residual potential characteristics by UV-ray irradiation and a larger variation of the receptor potential.

### Example 76

Example 66 was repeated except for using compound E·(1) in place of compound E-(72). The drum-shaped photoreceptor obtained was found to have a spectral sensitivity at 790 nm of 920 volt.cm².µW⁻¹.sec⁻¹ (half-reduction rate). A copying test was conducted by means of a testing machine in which a semiconductor laser (790 nm) was mounted to give a laser beam intensity of 0.85 mW on the surface of the photoreceptor of this invention.

After charging the surface of the photoreceptor to -6KV, the member was subjected to exposure to laser beam, followed by reversal development with a bias voltage of -250 V, whereby good images without fogging were obtained.

### Comparative Example 28

Example 76 was repeated except for employing the comparative bisazo compound L-(28) shown below in place of compound E-(1) to obtain a comparative photoreceptor. 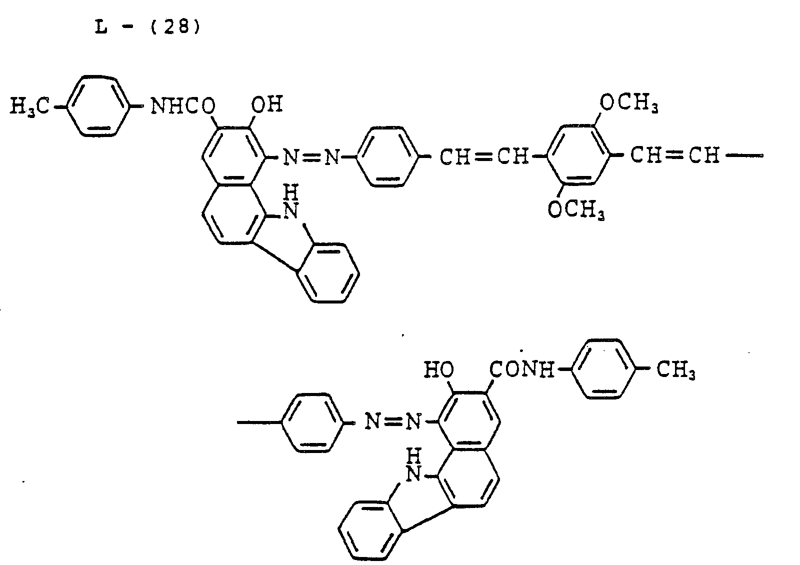 The photoreceptor was found to have a spectral sensitivity as 790 nm of 70 volt·cm²·µW⁻¹·sec⁻¹ (half-reduction rate). When a copying test by the semiconductor laser was conducted similarly as in Example 76, much fogging occurred to give no good image.

### Examples 77-86

In Example 66, compound E-(72) (charge generating material) and compound K-(53) (charge transporting material) were changed, respectively, to those as shown in Table 44, under otherwise the same conditions to prepare drum-shaped photoreceptors. These photoreceptors were found to have spectral sensitivities at 790 nm as shown in Table 44. In any of the copying tests conducted similarly as in Example 76 by use of these photoreceptors (Examples 77-86), good images without fog were obtained.

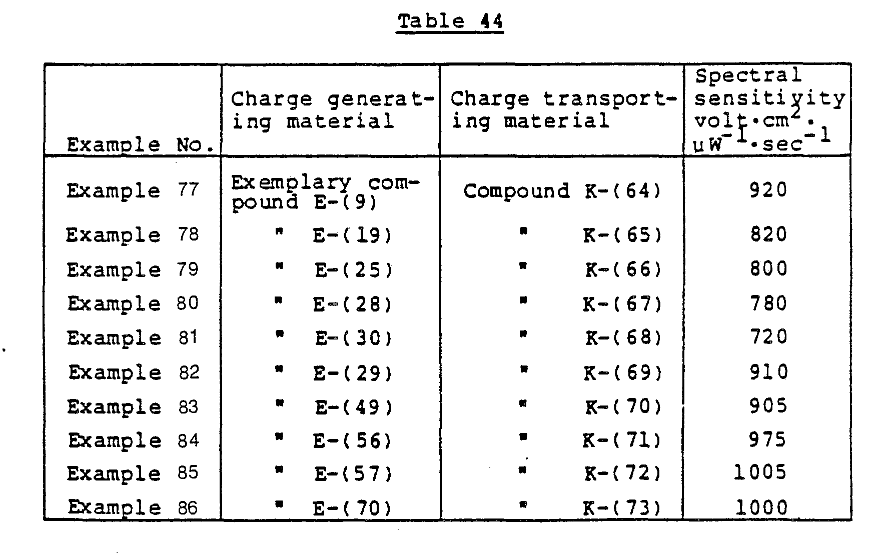

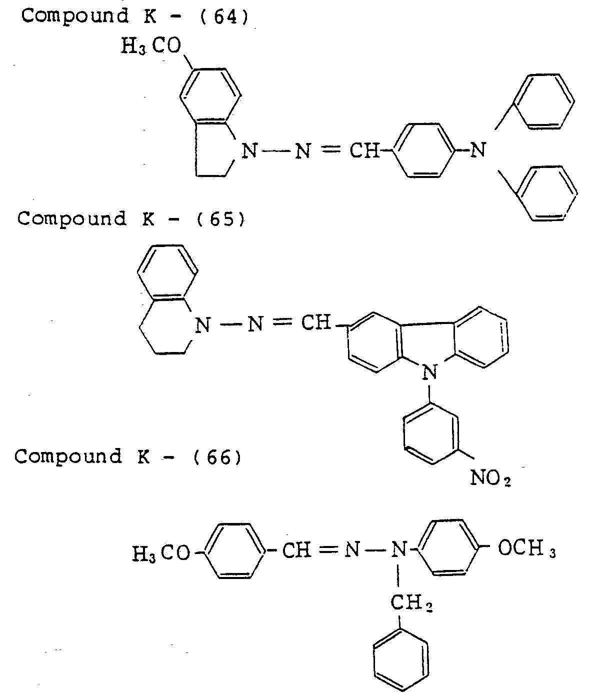

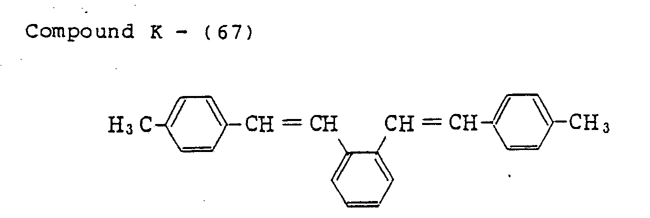

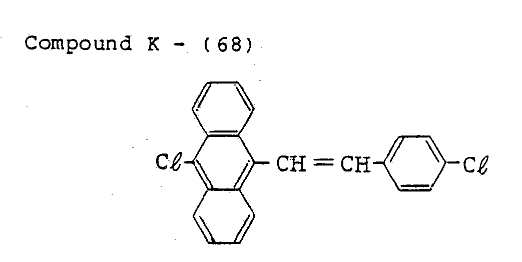

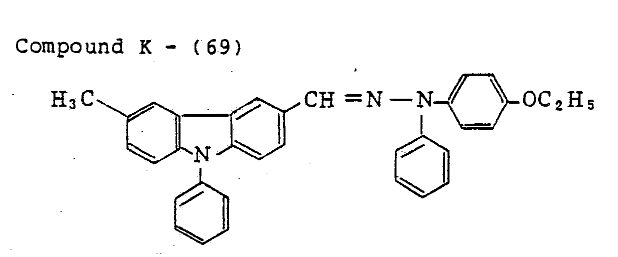

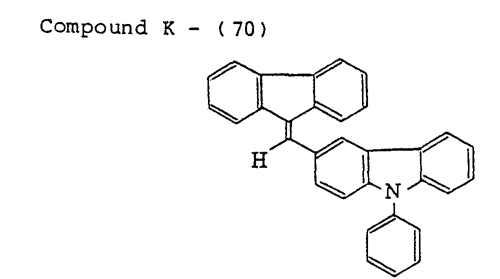

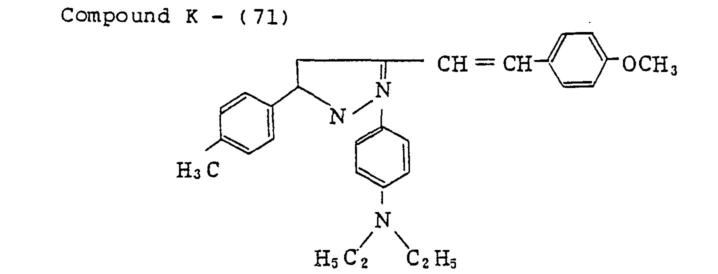

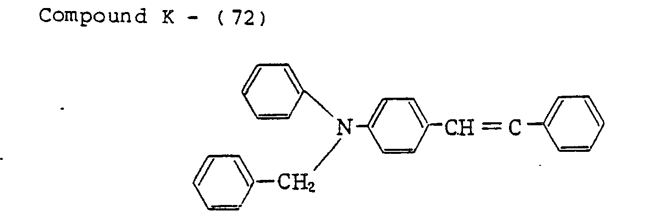

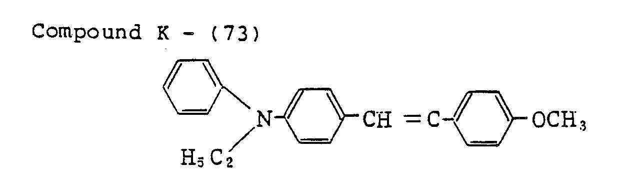

### Example 87

Example 1 was repeated except that compound A-(14) was replaced with compound F-(65) and 4,4'-dimethyl-4"-styryl-triphenylamine with the compound of formula K-(74) shown below. 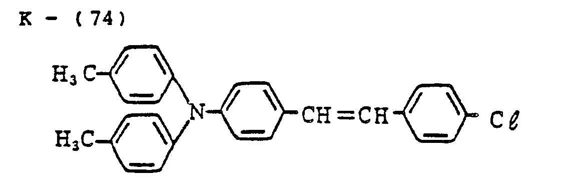 The results are shown in Table 45.

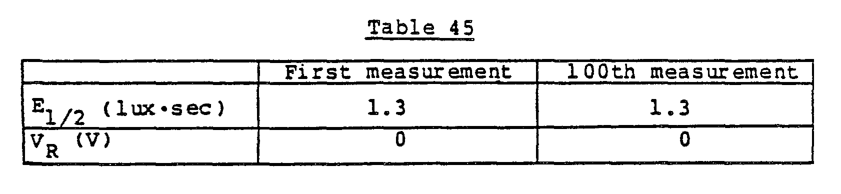

### Comparative Example 29

A photoreceptor for comparative purpose was prepared in the same manner as in Example 87 except for employing the bisazo compound L―(29) shown below as the carrier generating material. 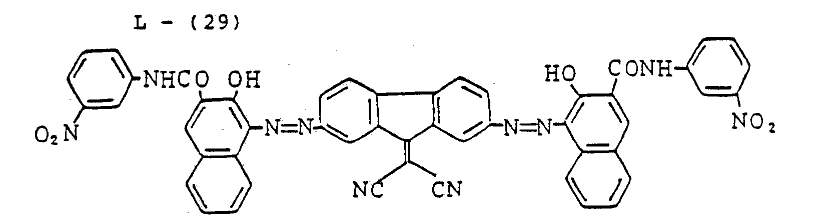 For this photoreceptor for comparative purpose, measurements were conducted similarly as in Example 87 to obtain the results as shown in Table 46.

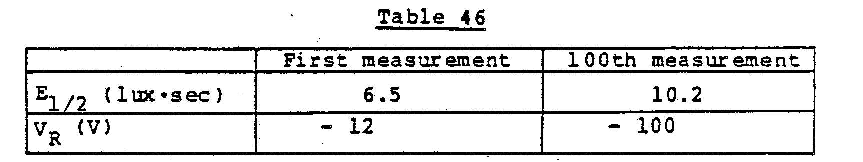

As seen from the above results, the photoreceptor of this invention is very superior to the photoreceptor for comparative purpose with respect to sensitivity, residual potential and stability in repeated uses.

### Example 88-90

Using compounds F-(150), F-(85) and F-(19) as the carrier generating material, and compounds K-(75), K-(76) and K-(77) shown below, respectively, as the carrier transporting material following otherwise the same procedure as described in Example 87, photoconductive members of this invention were prepared and subjected to similar measurements to obtain the results shown in Table 47.

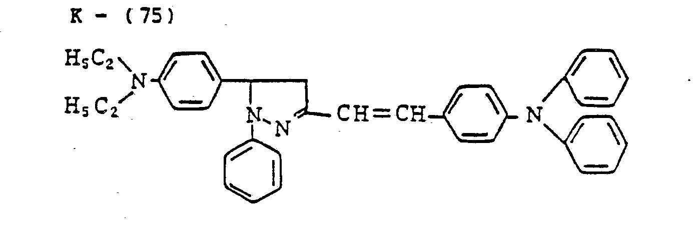

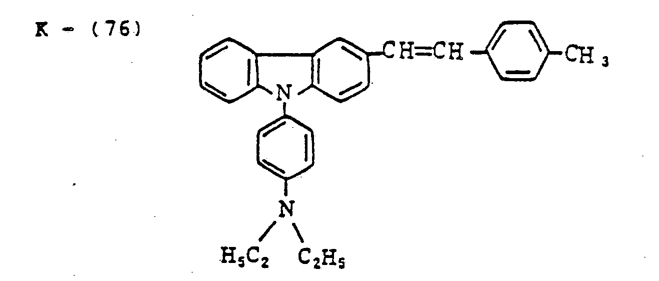

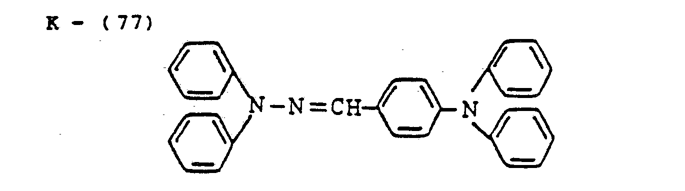

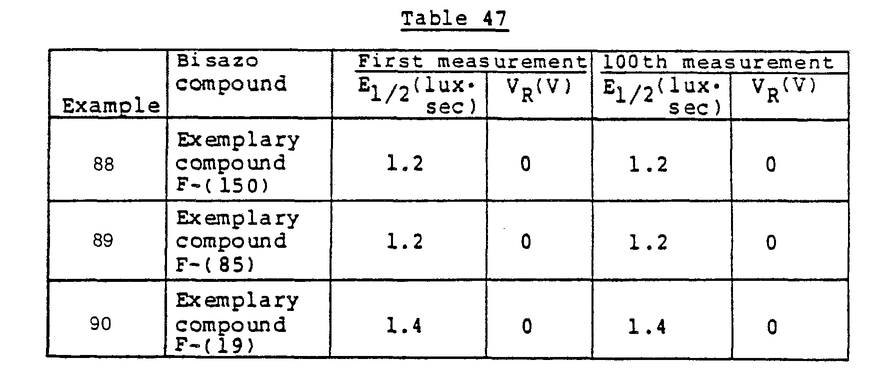

### Example 91

Example 5 was repeated except that compound A-(5) was replaced with compound F-(126), and compound K-(78) shown below was employed as the carrier transporting material. 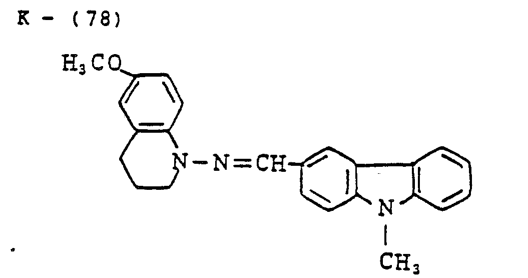 For this photoreceptor, the same measurements as in Example 1 were conducted to obtain the results of E_{1/2} = 1.6 lux·sec and V_{R} = 0 V.

### Example 92

Example 6 was repeated except that compound A-(32) was replaced with F-(71) and compound K-(79) shown below was employed as the carrier transporting material to obtain the results shown in Table 48.

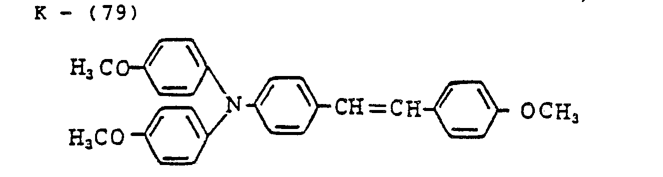

### Comparative Example 30

Example 92 was repeated except for substituting the bisazo compound L-(30) of the formula shown below for compound F-(71) to prepare an electrophotographic photoreceptor for comparative purpose. 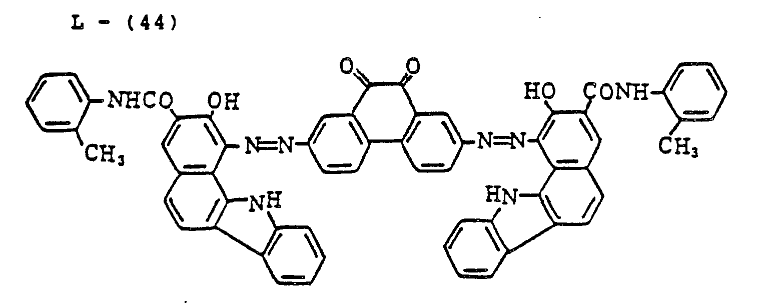 For this photoreceptor, the same measurements as in Example 1 were conducted to obtain the results as shown in Table 48.

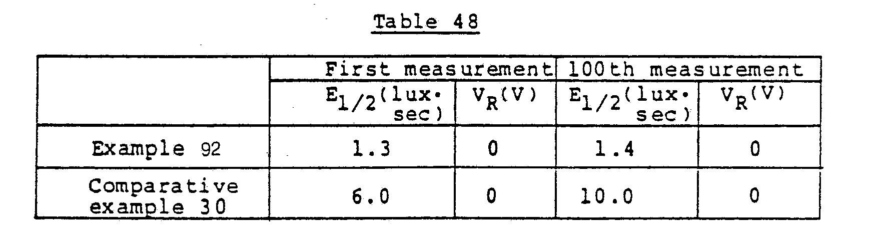

### Example 93

Example 7 was repeated except that compound A-(5) was replaced with compound F-(119) and the compound K-(80) shown below was employed as the carrier transporting material to prepare a photoreceptor of this invention. 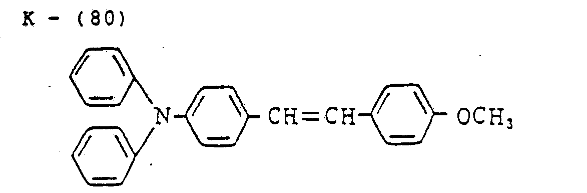 For this photoreceptor, the same measurements as in Example 1 were conducted to obtain the results of E_{1/2} = 1.7 lux·sec and V_{R} = 0 V.

### Example 94

Example 8 was repeated except that compound A-(39) was replaced with compound F-(97), and the compound K-(81) shown below was employed as the carrier transporting material. Similar results as in Example 8 were obtained.

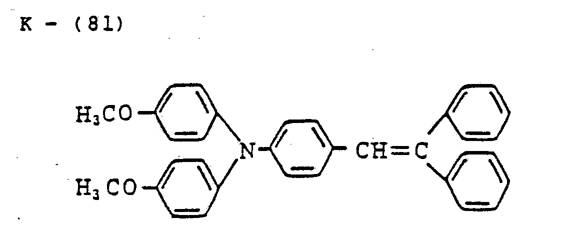

### Comparative Example 31

Example 94 was repeated except for using the bisazo compound L-(31) of the formula shown below in place of compound F-(97), and the copied images were evaluated similarly as in Example 94. Only images with much fogging were obtained. Further, as copying was repeated, the copied images were lowered in contrast, until substantially no copied image was obtained after repetition for 2,000 times.

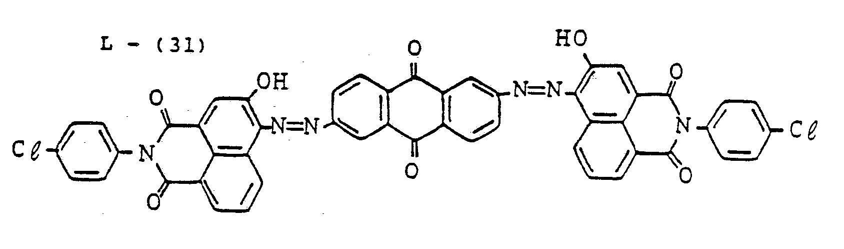

### Example 95

Example 10 was repeated except that the compound K-(78) shown below was employed as the carrier transporting material, and compounds F-(78) and F-(78) were employed as the carrier generating materials, respectively. 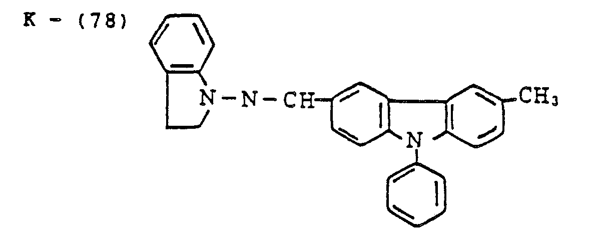 The thus obtained photoreceptor was evaluated similarly as in Example 10 to obtain the results of E_{1/2} = 2.1 lux-sec and V_{R} = + 10 V.

### Example 96

On an electroconductive support having aluminum foil laminated on a polyester film was provided an intermediate layer with a thickness of 0.05 pm made of a vinyl chloride-vinyl acetate-maleic anhydride copolymer "Ethlec MF-10" (trade name, produced by Sekisui Kagaku K.K.), followed by coating thereon with a dispersion prepared by dispersing a mixture of 4 g of compound F-(118) and 8 g of the compound K-(79) shown below), 3 g of a polycarbonate resin "Panlite L-1250" (trade name, produced by Teijin Kasei K.K.) in 100 ml of dichloroethane in a sand grinder for 24 hours to prepare a photoreceptor. 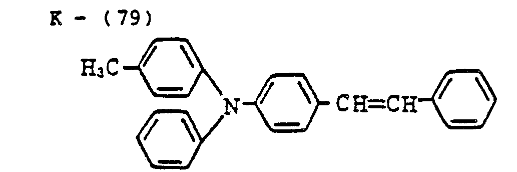 For this photoreceptor, E_{1/2} and V_{R} were measured in the same manner as in Example 1 except for changing the charged voltage to +6 KV to obtian the results of the first measurement of E_{1/2} = 1.4 lux·sec and V_{R} = 0 V.

### Example 97

Example 91 was repeated except for using compound F―(1) in place of compound F-(127). The drum-shaped photoreceptor obtained was found to have a spectral sensitivity at 790 nm of 920 volt·cm². µW⁻¹·sec⁻¹ (half-reduction rate). A copying test was conducted by means of a testing machine in which a semiconductor laser (790 nm) was mounted to give a laser beam intensity of 0.85 mW on the surface of the photoreceptor of this invention.

After charging the surface of the photoreceptor to -6KV, the member was subjected to exposure to laser beam, followed by reversal development with a bias voltage of -250 V, whereby good images without fogging were obtained.

### Comparative Example 32

Example 97 was repeated except for employing the comparative bisazo compound L-(32) shown below in place of compound F-(1) to obtain a comparative photoreceptor. 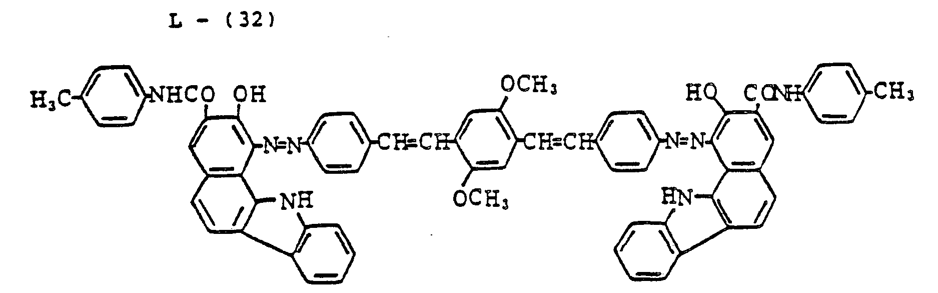 The photoreceptor was found to have a spectral sensitivity at 790 nm of 50 volt·cm²·µW⁻¹·sec⁻¹ (half-reduction rate). When a copying test by the semiconductor laser was conducted similarly as in Example 97, much fogging occurred to give no good image.

### Examples 98-106

In Example 91, compound F-(127) (charge generating material) and compound K-(78) (charge transporting material) were changed, respectively, to those as shown in Table 49, under otherwise the same conditions to prepare drum-shaped photoreceptors. These photoreceptors were found to have spectral sensitivities at 790 nm as shown in Table 49. In any of the copying tests conducted similarly as in Example 97 by use of these photoreceptors (Examples 98-106), good images without fog were obtained.

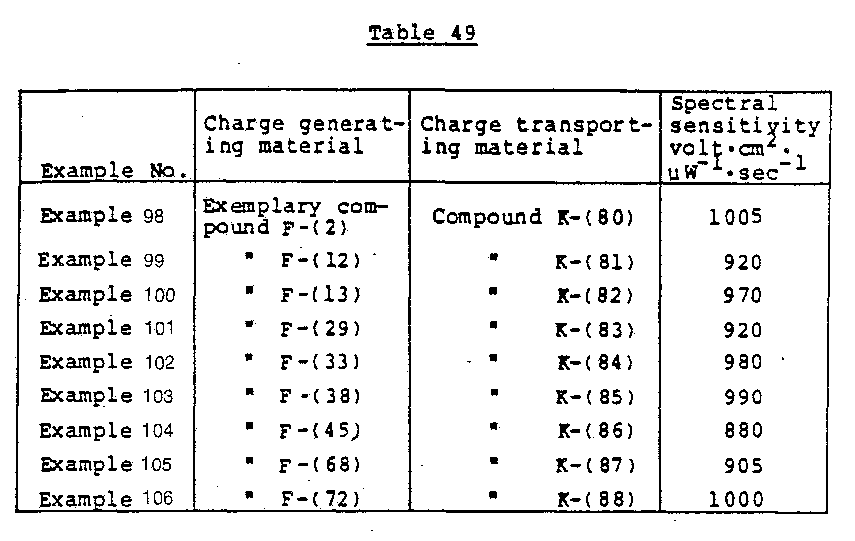

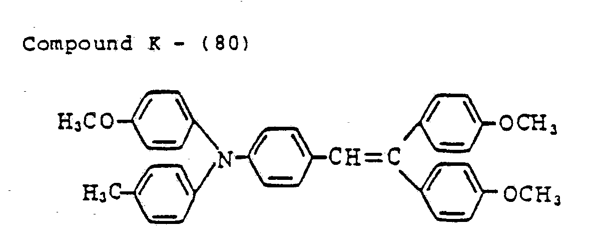

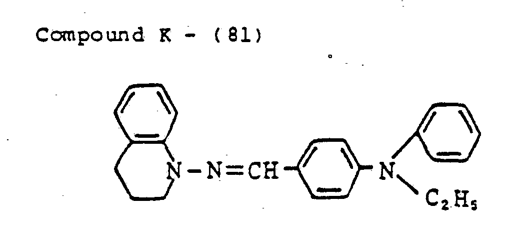

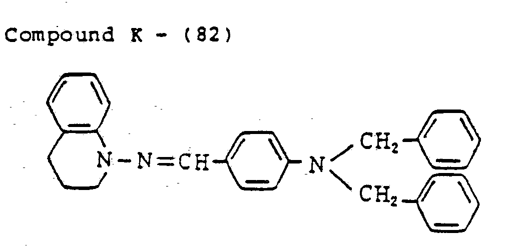

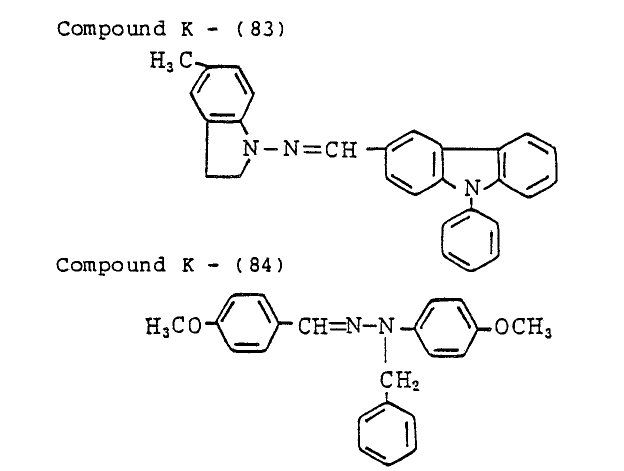

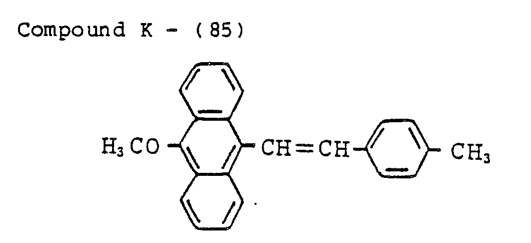

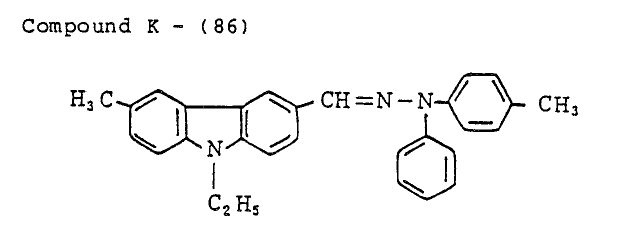

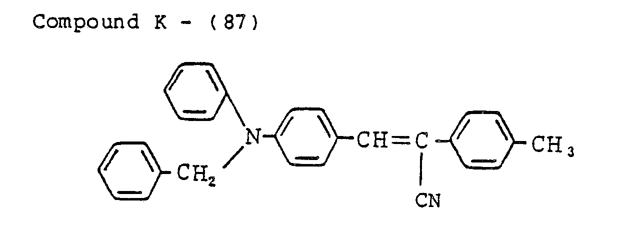

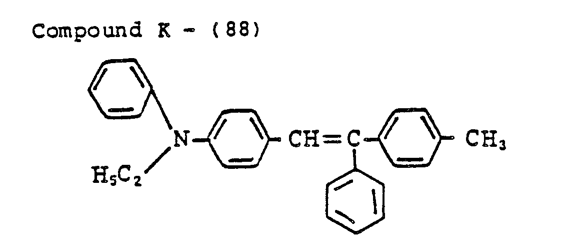

As seen from the Examples and Comparative examples, the photoreceptors of this invention are markedly excellent in characteristics such as stability, sensitivity, durability, and in the ability to be in combination with a wide variety of carrier transporting materials.

By the use of the azo compounds of formula [I] in the photoconductive material constituting the photosensitive layer of the photoreceptor according to this invention, it is possible to prepare a photoreceptor as intended by this invention, which is stable to heat and light, excellent in electrophotographic characteristics such as charge retentive force, sensitivity, residual potential, and which also has little fatigue deterioration when used repeatedly, and which further has sufficient sensitivity in the long wavelength region of 780 nm or longer.

## Claims

1. A photoreceptor comprising a support and a photosensitive layer which comprises an azo compound of formula [1]: 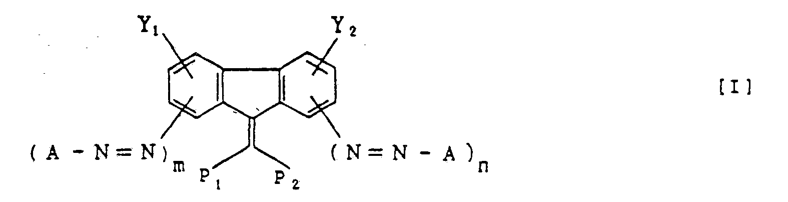 wherein
P, and P₂ are independently a halogen atom, a hydrogen atom, an alkyl group, an alkoxy group, an aryl group, an acetylamido group, an alkylsulfonyl group, 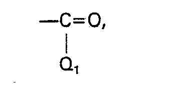 wherein Q₁ is an alkyl group, an alkoxy group, a phenyl group, an amino group, a hydroxy group or a hvdroaen atom, or 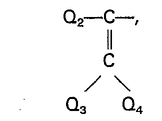 wherein Q₂, Q₃ and Q₄ independently are a halogen atom, a hydrogen atom, an alkyl group, an alkoxy group, a phenyl group, an acyl group, an ester group, a hydroxy group or a vinyl group, wherein any one or more of said alkyl group, alkoxy group, aryl group, amino group, acetylamido group, alkylsulphonyl group and vinyl group may have a substituent;
Y₁ and Y2 independently are a hydrogen atom, a halogen atom, a cyano group, a hydroxy group, an alkyl group or an alkoxy group;
m and n each independently represents an integer of from 0 to 2 with the proviso that m and n cannot be both 0;
each A independently represents a group of formula: 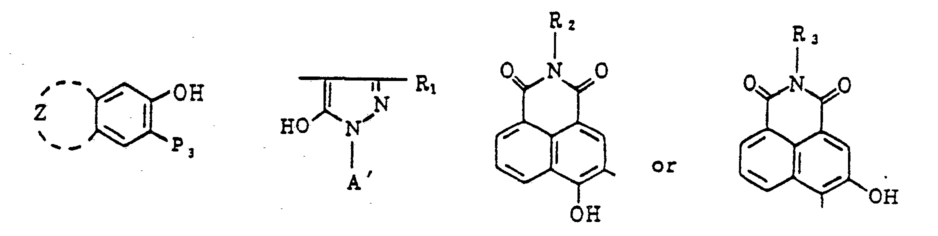 wherein
Z is a group which, together with the carbons to which it is attached, forms a substituted or unsubstituted aromatic hydrocarbon ring or a substituted or unsubstituted aromatic heterocyclic ring, P₃ is a substituted or unsubstituted carbamoyl group or a substituted or unsubstituted sulfamoyl group, R₁ is a hydrogen atom, a substituted or unsubstituted alkyl group, a substituted or unsubstituted amino group, a substituted or unsubstituted carbamoyl group, a carboxyl group or an ester group thereof or a cyano group, A' is a substituted or unsubstituted aryl group, and R₂ and R₃ independently are a substituted or unsubstituted alkyl group, a substituted or unsubstituted aralkyl group or a substituted or unsubstituted aryl group.

2. A photoreceptor according to Claim 1, wherein the azo compound is of formula [IA]: 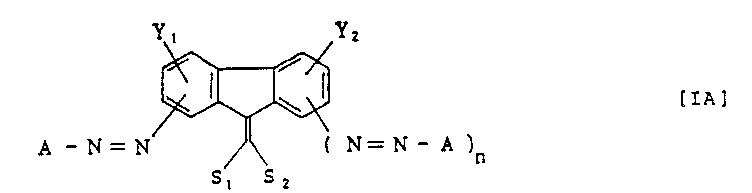 wherein S₁ and S₂ independently are an alkyl group, an ester group or a substituted or unsubstituted benzene ring; and Y₁, Y₂, n and A are as defined in Claim 1.

3. A photoreceptor according to Claim 2, wherein the azo compound is of formula [IA]―II: 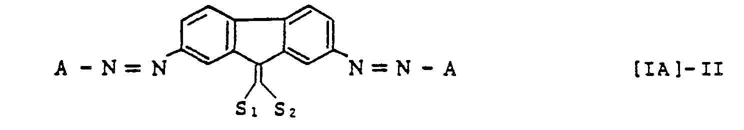 wherein S₁, S₂ and A are as defined in Claim 2.

4. A photoreceptor according to Claim 1, wherein the azo compound is of formula [IB]: 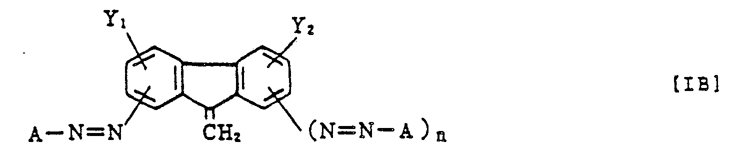 wherein Y₁, Y₂, n and A are as defined in Claim 1.

5. A photoreceptor according to Claim 4, wherein the azo compound is of formula [IB]―II: 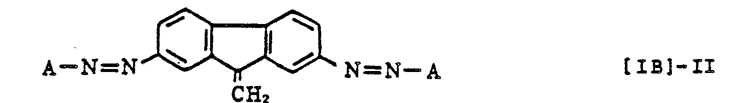 wherein A is as defined in Claim 4.

6. A photoreceptor according to Claim 1, wherein the azo compound is of formula [IC]: 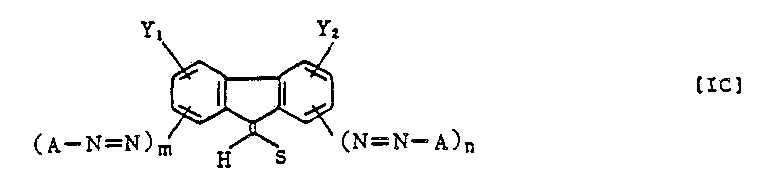 wherein S is a substituted or unsubstituted benzene ring or an alkyl group; and Y₁, Y₂, m, n and A as defined in Claim 1.

7. A photoreceptor according to Claim 6, wherein the azo compound is of formula [IC]-II: 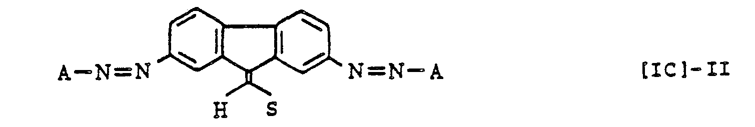 wherein S and A are as defined in Claim 6.

8. A photoreceptor according to Claim 1, wherein the azo compound is of formula [ID]: 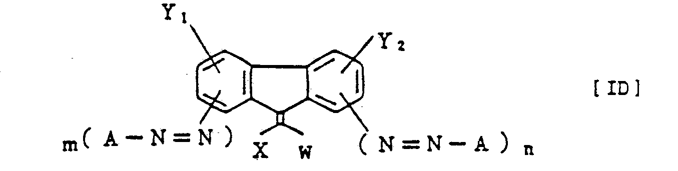 wherein X is a halogen atom; W is a halogen atom, a hydrogen atom, an alkyl group, an unsubstituted or substituted phenyl group, an alkoxy group, an ester group, an acyl group, an acetylamido group, an alkylsulfone group or a vinyl group; and Y₁, Y₂, m, n and A are as defined in Claim 1.

9. A photoreceptor according to Claim 8, wherein the azo compound is of formula [ID]―II: 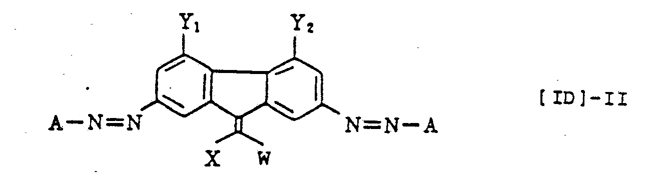 wherein X, W, Y₁, Y and A are as defined in Claim 8.

10. A photoreceptor according to Claim 1, wherein the azo compound is of formula [IE]: 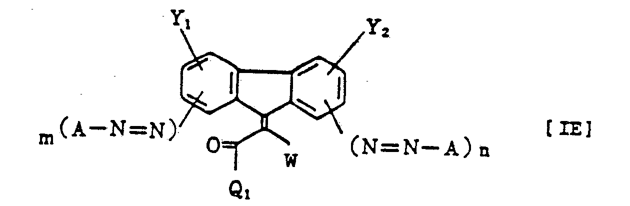 wherein W is a halogen atom, a hydrogen atom, an alkyl group, an unsubstituted or substituted phenyl group, an ester group, an acyl group, an acetylamido group, an alkylsulfone group or a vinyl group; and Q,, Y₁, Y₂, m, n and A are as defined in Claim 1.

11. A photoreceptor according to Claim 10, wherein the azo compound is of formula [IE]-II: 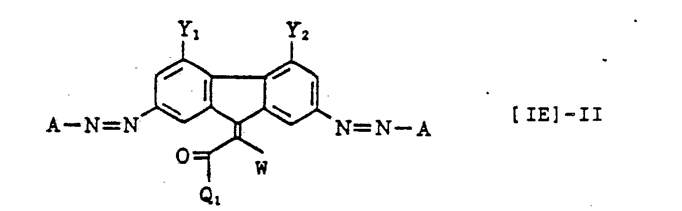 wherein Q₁, W, Y₁, Y₂ and A are as defined in Claim 10.

12. A photoreceptor according to Claim 1, wherein the azo compound is of formula [IF]: 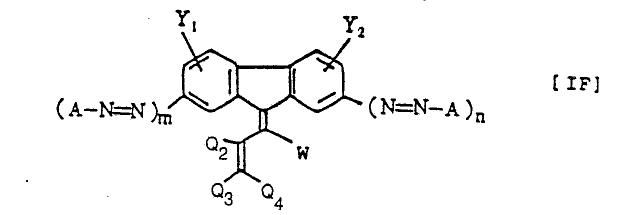 wherein W is a halogen atom, a hydrogen atom, an alkyl group, an unsubstituted or substituted phenyl group, an ester group, an acyl group, an acetylamido group, an alkylsulfone group or a vinyl group; and Q₂, Q₃, Q₄, Y₁, Y₂, m, n and A are as defined in Claim 1.

13. A photoreceptor according to Claim 12, wherein the azo compound is of formula [IF]-II: 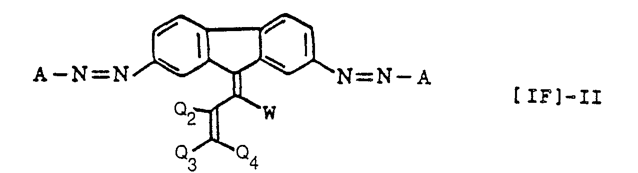 wherein Q₂, Q₃, Q₄, W and A are as defined in Claim 12.

14. A photoreceptor according to any one of Claims 1 to 13, wherein said photosensitive layer comprises a carrier transporting material and said azo compound as a carrier generating material.

15. A photoreceptor according to Claim 14, wherein said photosensitive layer comprises a carrier transport layer which comprises said carrier transporting material and a carrier generation layer which comprises said carrier generating material.

16. A photoreceptor according to Claim 15, wherein said carrier generation layer has a thickness of from 0.01 µm to 20 µm.

17. A photoreceptor according to any one of Claims 14 to 16, wherein said carrier transporting material is an electron acceptor of trinitrofluorenone or tetranitrofluorenone or electron donor of a polymer having heterocyclic groups as side chains, which is poly-N-vinylcarbazole, a triazole derivative, an oxadiazole derivative, an imidazole derivative, a pyrazoline derivative, a polyarylalkane derivative, a phenylenediamine derivative, a hydrazone derivative, an amino-substituted chalcone derivative, a triarylamine derivative, a carbazole derivative, a stilbene derivative or a phenothiazine derivative.

18. A photoreceptor according to Claim 14, wherein said photosensitive layer is a single layer in which said carrier generating material and carrier transporting material are dispersed.

19. A photoreceptor according to any one of Claims 1 to 18, which has an intermediate layer between said photosensitive layer and said support.

20. A photoreceptor according to any one of Claims 1 to 19, wherein said support is a plate or drum of a metal or alloy, or a paper or plastic film made electroconductive by coating, vapor deposition or lamination of a metal thin film or a thin film of a electroconductive compound or alloy thereon.

## Patentansprüche

1. Photorezeptor mit einem Träger und einer photoempfindlichen Schicht, die eine Azoverbindung der Formel (I) aufweist: 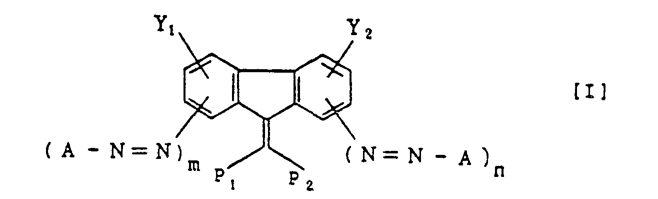 worin
P, und P₂ unabhängig voneinander ein Halogenatom, ein Wasserstoffatom, eine Alkylgruppe, eine Alkoxygruppe, eine Arylgruppe, eine Acetylamidogruppe, eine Alkylsulfonylgruppe, eine 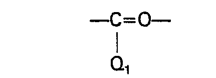 Gruppierung, worin Q₁ eine Alkylgruppe, eine Alkoxygruppe, eine Phenylgruppe, eine Aminogruppe, eine Hydroxygruppe oder ein Wasserstoffatom ist, oder eine 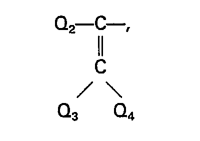 Gruppierung bedeuten, worin Q₂, Q₃ und Q₄ unabhängig voneinander eine Halogenatom, ein Wasserstoffatom, eine Alkylgruppe, eine Alkoxygruppe, eine Phenylgruppe, eine Acylgruppe, eines Estergruppe, eine Hydroxygruppe oder eine Vinylgruppe darstellen, wobei irgendeine oder mehrere der erwähnten Alkylgruppen, Alkoxygruppen, Arylgruppen, Aminogruppen, Acetylamidogruppen, Alkylsulfonylgruppen und Vinylgruppen einen Substituenten aufweisen können;
Y, und Y₂ unabhängig voneinander einer Wasserstoffatom, ein Halogenatom, eine Cyanogruppe, eine Hydroxygruppe, eine Alkylgruppe oder eine Alkoxygruppe bedeuten;
m und n jeweils unabhängig voneinander eine ganze Zahl von 0 bis 2 bedeuten mit der Maßgabe, daß m und n nicht beide 0 sein können;
jedes A für sich eine Gruppe nachstehender Formel bedeuten: 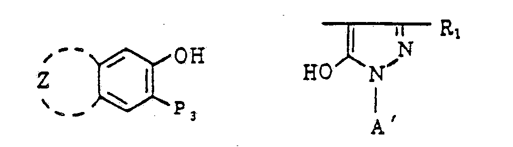 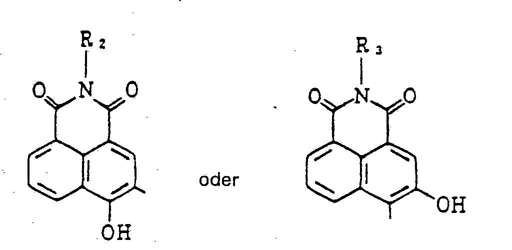 worin Z für eine Gruppe steht, die, zusammen mit den Kohlenstoffatomen, an welche sie gebunden ist, einen substituierten oder unsubstituierten aromatischen Kohlenwasserstoffring oder einen substituierten oder unsubstituierte aromatischen heterocyklischen Ring bildet, P₃ eine substituierte oder unsubstituierte Carbamoylgruppe oder eine substituierte oder unsubstituierte Sulfamoylgruppe bedeutet, R₁ für ein Wasserstoffatom, eine substituierte oder unsubstituierte Alkylgruppe, eine substituierte oder unsubstituierte Aminogruppe, eine substituierte oder unsubstituierte Carbamoylgruppe, eine Carboxylgruppe oder eine hiervon abgeleitete Estergruppe oder eine Cyanogruppe steht, A' eine substituierte oder unsubstituierte Arylgruppe ist, und R2 und R₃ unabhängig voneinander eine substituierte oder unsubstituierte Alkylgruppe, eine substituierte oder unsubstituierte Aralkylgruppe oder eine substituierte oder unsubstituierte Arylgruppe bedeuten.

2. Photorezeptor nach Anspruch 1, wobei die Azogruppe die nachstehende Formel (lA) aufweist: 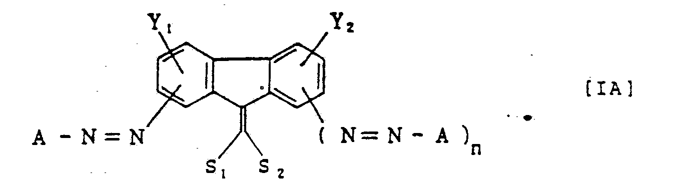 worin S₁ und S₂ unabhängig voneinander eine Alkylgruppe, eine Estergruppe oder einen substituierten oder unsubstituierten Benzolring bedeuten und Yᵢ, Y₂, n und A die in Anspruch 1 angegebene Bedeutung besitzen.

3. Photorezeptor nach Anspruch 2, wobei die Azoverbindung die nachstehende Formel (IA)―II aufweist: 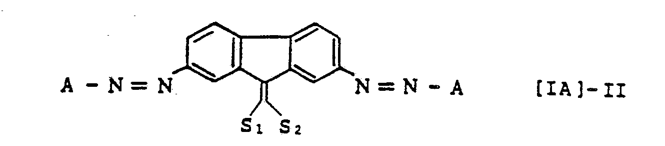 wobei S₁, S_{z} und A die im Anspruch 2 angegebene Bedeutung haben.

4. Photorezeptor nach Anspruch 1, wobei die Azogruppe die nachstehende Formel (IB) aufweist: 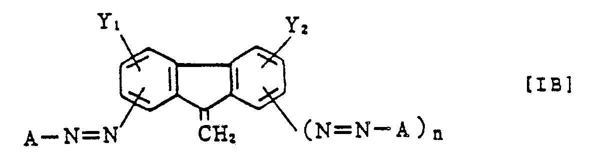 wobei Y₁, Y₂, n und A die in Anspruch 1 angegebene Bedeutung haben.

5. Photorezeptor nach Anspruch 4, wobei die Azoverbindung die nachstehende Formel (IB)―II aufweist: 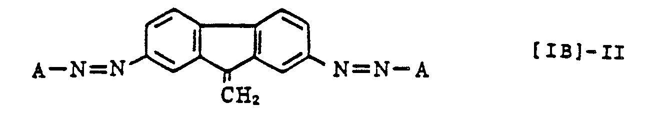 worin A die im Anspruch 4 angegebene Bedeutung hat.

6. Photorezeptor nach Anspruch 1, wobei die Azoverbindung die nachstehende Formel (IC) aufweist: 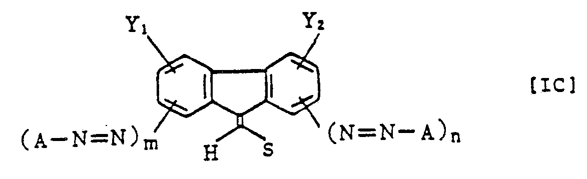 worin S für einen substituierten oder unsubstituierten Benzolring oder eine Alkylgruppe steht und Y_{I}, Y₂, m, n und A die in Anspruch 1 angegebene Bedeutung haben.

7. Photorezeptor nach Anspruch 6, wobei die Azoverbindung die nachstehende Formel (IC)―II aufweist: 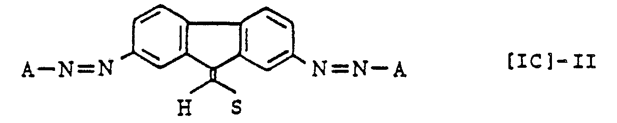 worin S und A_{'}die im Anspruch 6 angegebene Bedeutung haben.

8. Photorezeptor nach Anspruch 1, wobei die Azoverbindung die nachstehende Formel (ID) aufweist: 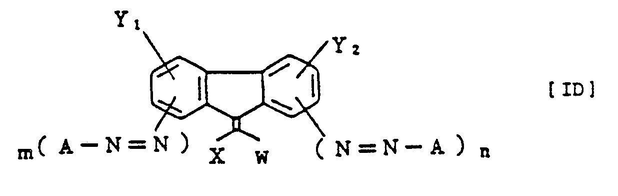 worin X ein Halogenatom ist; W für ein Halogenatom, ein Wasserstoffatom, eine Alkylgruppe, eine unsubstituierte oder substituierte Phenylgruppe, eine Alkoxygruppe, eine Estergruppe, eine Acylgruppe, eine Acetylamidogruppe, eine Alkylsulfongruppe oder eine Vinylgruppe steht; und Y₁, Y₂, m, n und A die im Anspruch 1 angegebene Bedeutung haben.

9. Photorezeptor nach Anspruch 8, wobei die Azoverbindung die nachstehende Formel (ID)―II aufweist: 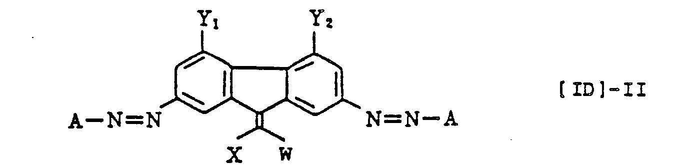 worin X, W, Y₁, Y und A die in Anspruch 8 angegebene Bedeutung haben.

10. Photorezeptor nach Anspruch 1, wobei die Azoverbindung die nachstehende Formel (lE) aufweist: 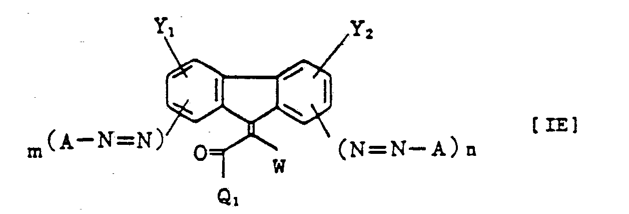 worin W ein Halogenatom, ein Wasserstoffatom, eine Alkylgruppe, eine unsubstituierte oder substituierte Phenylgruppe, eine Estergruppe, eine Acylgruppe, eine Acetylamidogruppe, eine Alkylsulfongruppe oder eine Vinylgruppe bedeuten; und Q₁, Yᵢ, Y₂, m, n und A die in Anspruch 1 angegebene Bedeutung haben.

11. Photorezeptor nach Anspruch 10, wobei die Azoverbindung die nachstehende Formel (IE)―II aufweist: 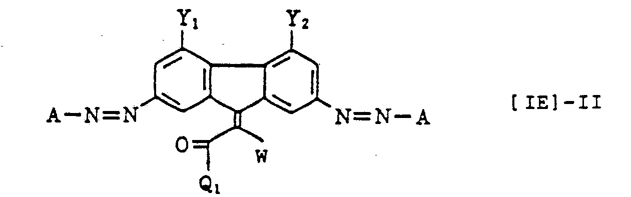 worin Q₁, W, Y₁, Y₂ und A die in Anspruch 10 angegebene Bedeutung haben.

12. Photorezeptor nach Anspruch 1, wobei die Azoverbindung die nachstehende Formel (IF) aufweist: 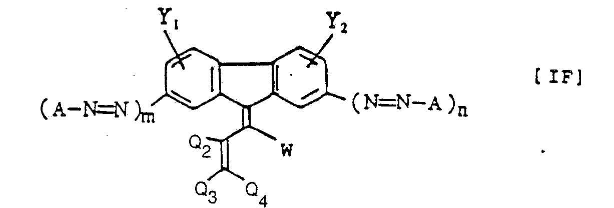 worin W ein Halogenatom, ein Wasserstoffatom, eine Alkylgruppe, eine unsubstituierte oder substituierte Phenylgruppe, eine Estergruppe, eine Acylgruppe, eine Acetylamidogruppe, eine Alkylsulfongruppe oder eine Vinylgruppe bedeuten; und Q₂, Q₃, Q₄, Y_{I}, Y₂, m, n und A die in Anspruch 1 definierte Bedeutung haben.

13. Photorezeptor nach Anspruch 12, wobei die Azoverbindung die nachstehende Formel (IF)―II aufweist: 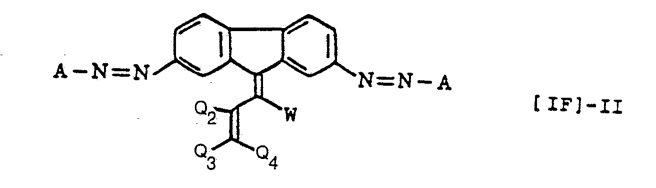 worin Q₂, Q₃, Q₄, W und A die in Anspruch 12 angegebene Bedeutung haben.

14. Photorezeptor nach einem der vorhergehenden Ansprüche 1 bis 13, wobei die photoempfindliche Schicht ein Träger transportierendes Material und die genannte Azoverbindung als Träger erzeugendes Material aufweist.

15. Photorezeptor nach Anspruch 14, wobei die erwähnte photoempfindliche Schicht eine Träger-Transport-Schicht aufweist, die das erwähnte Träger transportierende Material und eine Trägererzeugungsschicht umfaßt, welche das Träger erzeugende Material enthält.

16. Photorezeptor nach Anspruch 15, wobei die erwähnte Trägererzeugungsschicht eine Dicke von 0.01 µm bis 20 µm aufweist.

17. Photorezeptor nach einem der Ansprüche 14 bis 16, wobei das erwähnte Träger transportierende Material ein Elektonenakzeptor aus Trinitrofluorenon oder Tetranitrofluorenon oder ein Elektronendonator aus einem Polymer mit heterocyclischen Gruppe als Seitenketten ist, nämlich: Poly-N-Vinylcarbazol, ein Triazolderivat, ein Oxadiazolderivat, ein Imidazolderivat, ein Pyrazolinderivat, ein Polyarylalkanderivat, ein Phenylendiaminderivat, ein Hydrazonderivat, ein Amino-substituiertes Chalconderivat, ein Triarylaminderivat, ein Carbazolderivat, ein Stilbenderivat oder ein Phenothiazinderivat.

18. Photorezeptor nach Anspruch 14, wobei die erwähnte photoempfindliche Schicht die alleinige Schicht darstellt, in welcher das erwähnte, Träger erzeugende Material und Träger transportierende Material dispergiert sind.

19. Photorezeptor nach einem der Ansprüche 1 bis 18 mit einer Zwischenschicht zwischen der erwähnten photoempfindlichen Schicht und dem erwähnten Träger.

20. Photorezeptor nach einem der Ansprüche 1 bis 19, wobei der Träger eine Platte oder Trommel aus einem Metall oder einer Legierung ist oder von einer Papier- oder Kunststoffolie gebildet ist, die durch Aufbringen einer dünnen Metallfolie oder einer dünnen Folie einer elektrisch leitfähigen Substanz oder Legierung im Wege eines Überzugsverfahrens, einer Dampfabscheidung oder Laminierung elektrisch leitend gemacht wurde.

## Revendications

1. Photorécepteur comprenant un support et une couche photosensible qui contient un composé azo de formule [1]: 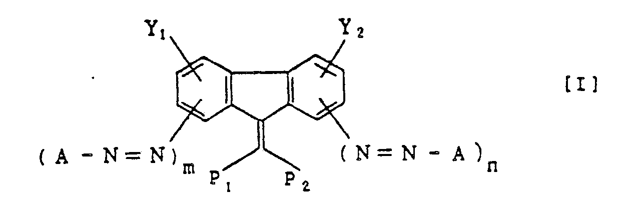 dans laquelle
P_{I} et P₂ représentent indépendamment un atome d'halogène, un atome d'hydrogène, un groupe. alkyle, un groupe alcoxy, un groupe aryle, un groupe acétylamido, un groupe alkylsulfonyle, 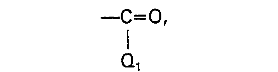 où Q_{I} est un groupe alkyle, un groupe alcoxy, un groupe phényle, un groupe amino, un groupe hydroxy ou un atome d'hydrogène, ou 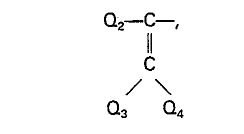 où Q₂, Q₃ et Q₄ représentent indépendamment un atome d'halogène, un atome d'hydrogène, un groupe alkyle, un groupe alcoxy, un groupe phényle, un groupe acyle, un groupe ester, un groupe hydroxy ou un groupe vinyle, dans lesquels l'un ou plusieurs desdits groupes alkyle, alcoxy, aryle, amino, acétylamido, alkylsulfonyle et vinyle peuvent avoir un substituant;
Y, et Y₂ représentent indépendamment un atome d'hydrogène, un atome d'halogène, un groupe cyano, un groupe hydroxy, un groupe alkyle ou un groupe alcoxy;
m et n représentent chacun indépendamment un nombre entier de 0 à 2, à condition que m et n ne soient pas tous deux égaux à 0;
chaque A représente indépendamment un groupe de formule: 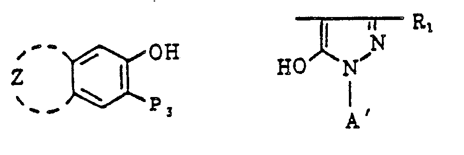 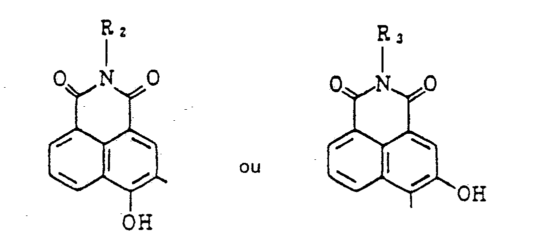 où Z est un groupe qui, en commun avec les carbones auxquels il est attaché, forme un noyau hydrocarboné aromatique substitué ou non substitué ou un hétérocycle aromatique, substitué ou non substitué, P₃ est un groupe carbamoyle, substitué ou non substitué ou un groupe sulfamoyle substitué ou non substitué, R₁ est un atome d'hydrogène, un groupe alkyle, substitué ou non substitué, un groupe amino substitué ou non substitué, un groupe carbamoyle substitué ou non substitué, un groupe carboxyle ou un groupe ester de ce dernier, ou un groupe cyano, A' est un groupe aryle, substitué ou non substitué, et R₂ et R₃ sont indépendamment un groupe alkyle substitué ou non substitué, un groupe aralkyle, substitué ou non substitué, ou un groupe aryle substitué ou non substitué.

2. Photorécepteur selon la revendication 1, dans lequel le composé azo est un composé de formule [IA]: 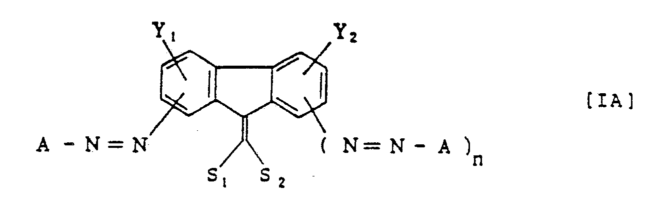 dans laquelle S₁ et S₂ sont indépendamment un groupe alkyle, un groupe ester ou un cycle benzènique substitué ou non substitué; et Y₁, Y₂, n et A sont définis comme dans la revendication 1.

3. Photorécepteur selon la revendication 2, dans lequel le composé azo répond à la formule [IA]―II: 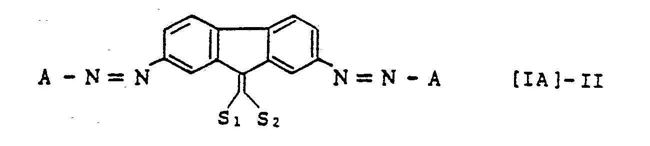 dans laquelle S₁, S₂ et A sont définis comme dans la revendication 2.

4. Photorécepteur selon la revendication 1, dans lequel le composé azo répond à la formule [IB]: 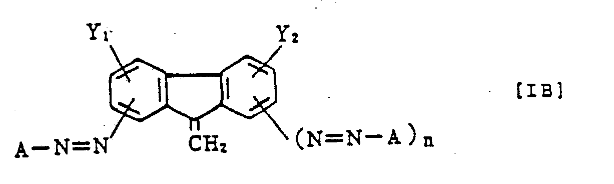 dans laquelle Y₁, Y₂, n et A sont définis comme dans la revendication 1.

5. Photorécepteur selon la revendication 4, dans lequel le composé azo répond à la formule [IB]―II: 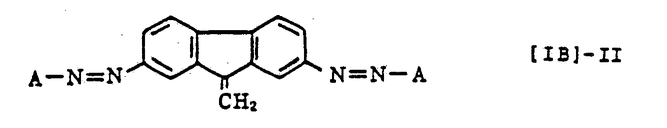 dans laquelle A est défini comme dans la revendication 4.

6. Photorécepteur selon la revendication 1, dans lequel le composé azo répond à la formule [IC]: 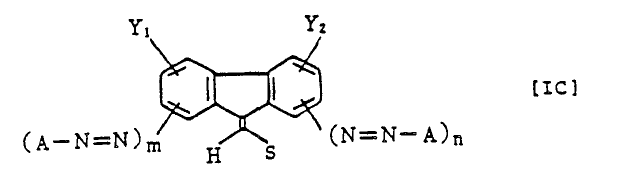 dans laquelle S est un cycle benzénique, substitué ou non substitué, ou un groupe alkyle; et Y₁, Y₂, m, n et A sont définis comme dans la revendication 1.

7. Photorécepteur selon la revendication 6, dans lequel le composé azo répond à la formule [IC]―II: 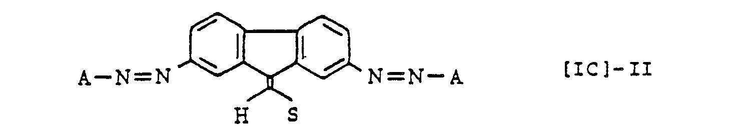 dans laquelle S et A sont définis comme dans la revendication 6.

8. Photorécepteur selon la revendication 1, dans lequel le composé azo répond à la formule [ID]: 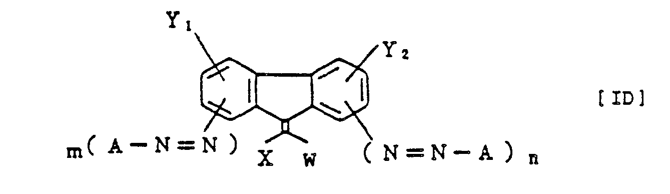 dans laquelle X est un atome d'halogène; W est un atome d'halogène, un atome d'hydrogène, un groupe alkyle, un groupe phényle substitué ou non substitué, un groupe alcoxy, un groupe ester, un groupe acyle, un groupe acétylamido, un groupe alkylsulfone, ou un groupe vinyle; et Y_{I}, Y₂, m, n et A sont définis come dans la revendication 1.

9. Photorécepteur selon la revendication 8, dans lequel le composé azo répond à la formule [ID]-II: 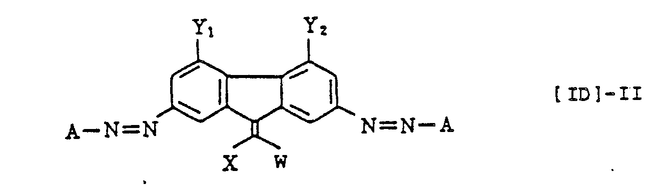 dans laquelle X, W, Y₁, Y et A sont définis comme dans la revendication 8.

10. Photorécepteur selon la revendication 1, dans lequel le composé azo répond à la formule [IE]: 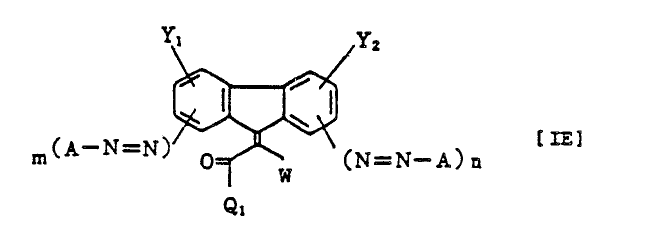 dans laquelle W est un atome d'halogène, un atome d'hydrogène, un groupe alkyle, un groupe phényle substitué ou non substitué, un groupe ester, un groupe acyle, un groupe acétylamido, un groupe alkylsulfone ou un groupe vinyle; et Q₁, Y₁, Y₂, m, n et A sont définis comme dans la revendication 1.

11. Photorécepteur selon la revendication 10, dans lequel le composé azo répond à la formule [IE]-II: 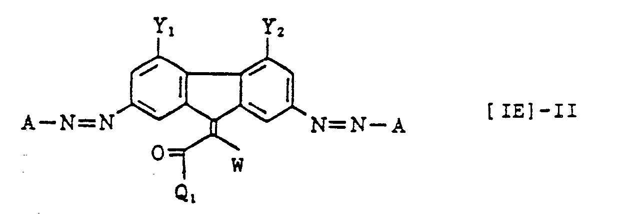 dans laquelle Q_{1'} W, Y₁, Y₂ et A sont définis comme dans la revendication 10.

12. Photorécepteur selon la revendication 1, dans lequel le composé azo répond à la formule [IF]: 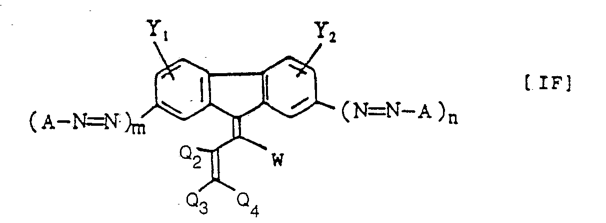 dans laquelle W est un atome d'halogène, un atome d'hydrogène, un groupe alkyle, un groupe phényle substitué ou non substitué, un groupe ester, un groupe acyle, un groupe acétylamido, un groupe alkylsulfone ou un groupe vinyle; et Q₂, Q₃, Q₄, Y₁, Y₂, m, n et A sont définis comme dans la revendication 1.

13. Photorécepteur selon la revendication 12, dans lequel le composé azo répond à la formule [IF]-II: 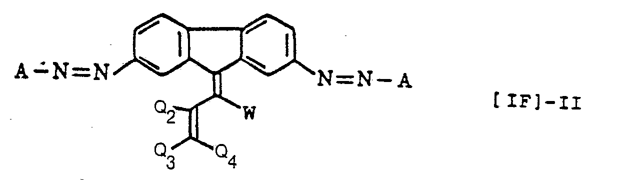 dans laquelle Q₂, Q₃, Q₄, W et A sont définis comme dans la revendication 12.

14. Photorécepteur selon l'une quelconque des revendications 1 à 13, dans lequel ladite couche photosensible comprend une matière vectrice de support et ledit composé azo comme matière génératrice de support.

15. Photorécepteur selon la revendication 14, dans lequel ladite couche photosensible comprend une couche vectrice de support qui comprend ladite matière vectrice de support et une couche génératrice de support qui comprend ladite matière génératrice de support.

16. Photorécepteur selon la revendication 15, dans lequel ladite couche génératrice de support présente une épaisseur de 0,01 à 20 µm.

17. Photorécepteur selon l'une quelconque des revendications 1 à 16, dans lequel ladite matière vectrice de support est un accepteur d'électrons de trinitrofluorénone ou de tétranitrofluorénone ou un donneur d'électrons de polymère ayant des groupes hétérocycliques comme chaînes latérales, qui est le poly-N-vinylcarbazole, un dérivé de triazole, un dérivé d'oxadiazole, un dérivé d'imidazole, un dérivé de pyrazoline, un dérivé de polyarylalcane, un dérivé de phénylènediamine, un dérivé d'hydrazone, un dérivé de chalcone amino-substitué, un dérivé de triarylamine, un dérivé de carbazole, un dérivé de stilbène ou un dérivé de phénothiazine.

18. Photorécepteur selon la revendication 14, dans lequel ladite couche photosensible est une couche simple dans laquelle ladite matière génératrice de support et ladite matière vectrice de support sont dispersées.

19. Photorécepteur selon l'une quelconque des revendications 1 à 18, qui comprend une couche intermédiaire entre ladite couche photosensible et ledit support.

20. Photorécepteur selon l'une quelconque des revendications 1 à 19, dans lequel ledit support est une plaque ou cylindre en métal ou en alliage, ou un papier ou un film plastique rendu électroconducteur par enduction, revêtement en phase vapeur ou application par laminage d'un film mince métallique d'un composé électroconducteur ou d'un alliage sur ce film.
